(19) Europäisches Patentamt
European Patent Office
Office européen des brevets

(11) EP 4 632 037 A1

(12) EUROPEAN PATENT APPLICATION

(43) Date of publication:
**15.10.2025 Bulletin 2025/42**

(21) Application number: **25172587.5**

(22) Date of filing: **16.11.2021**

(51) International Patent Classification (IPC):
***C09K 19/30*** *(2006.01)* ***C09K 19/34*** *(2006.01)*
***C09K 19/04*** *(2006.01)* ***C09K 19/12*** *(2006.01)*

(52) Cooperative Patent Classification (CPC):
**C09K 19/3048; C09K 19/3098; C09K 19/3491;**
C09K 2019/0448; C09K 2019/0466;
C09K 2019/122; C09K 2019/124; C09K 2019/3004;
C09K 2019/301; C09K 2019/3016;
C09K 2019/3019; C09K 2019/3025;
C09K 2019/3027; C09K 2019/3422

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.11.2020 EP 20208629**

(62) Document number(s) of the earlier application(s) in accordance with Art. 76 EPC:
**21807126.4 / 4 247 914**

(71) Applicant: **Merck Patent GmbH**
**64293 Darmstadt (DE)**

(72) Inventors:
- **LIU, Yu Tong**
**SHANGHAI, 201206 (CN)**
- **CHOI, Chang-Suk**
**SHANGHAI, 201206 (CN)**

(74) Representative: **Merck Patent Association**
**Merck Patent GmbH**
**64271 Darmstadt (DE)**

Remarks:
This application was filed on 25.04.2025 as a divisional application to the application mentioned under INID code 62.

# (54) LIQUID CRYSTAL MEDIUM

(57) The present invention relates to liquid-crystalline (LC) media having positive dielectric anisotropy and to liquid-crystal displays (LCDs) containing these media, especially to displays addressed by an active matrix and in particular to LC displays of the TN, PS-TN, STN, TN-TFT, OCB, IPS, PS-IPS, FFS, HB-FFS, XB-FFS, PS-FFS, SA-HB-FFS, SA-XB-FFS, polymer stabilised SA-HB-FFS, polymer stabilised SA-XB-FFS, positive VA or positive PS-VA type.

EP 4 632 037 A1

## Description

The present invention relates to liquid-crystalline (LC) media having positive dielectric anisotropy and to liquid-crystal displays (LCDs) containing these media, especially to displays addressed by an active matrix and in particular to LC displays of the TN, PS-TN, STN, TN-TFT, OCB, IPS, PS-IPS, FFS, HB-FFS, PS-HB-FFS, SA-HB-FFS, polymer stabilised SA-HB-FFS, positive VA or positive PS-VA type.

Liquid-crystal displays (LCDs) are used in many areas for the display of information. LCDs are used both for direct-view displays and for projection-type displays. The electro-optical modes used are, for example, the twisted nematic (TN), super twisted nematic (STN), optically compensated bend (OCB) and electrically controlled birefringence (ECB) modes together with their various modifications, as well as others. All these modes utilise an electric field which is generated substantially perpendicular to the substrates and the liquid-crystal layer.

Besides these modes, there are also electro-optical modes that utilise an electric field which is substantially parallel to the substrates or the liquid-crystal layer. For example, WO 91/10936 discloses a liquid-crystal display in which the electric signals are generated in such a way that the electric fields have a significant component parallel to the liquid-crystal layer, and which has since then become known as in-plane switching IPS) display. The principles of operating such a display are descried, for example, by R.A. Soref in Journal of Applied Physics, Vol. 45, No. 12, pp. 5466-5468 (1974).

IPS displays contain an LC layer between two substrates with planar orientation, where the two electrodes are arranged on only one of the two substrates and preferably have interdigitated, comb-shaped structures. On application of a voltage to the electrodes an electric field with a significant component parallel to the LC layer is generated between them. This causes realignment of the LC molecules in the layer plane.

EP 0 588 568, for example, discloses various possibilities for the design of the electrodes and for addressing an IPS display. DE 198 24 137 likewise describes various embodiments of such IPS displays.

Liquid-crystalline materials for IPS displays of this type are described, for example, in DE 195 28 104.

Furthermore, so-called "fringe-field switching" (FFS) displays have been reported (see, inter alia, S.H. Jung et al., Jpn. J. Appl. Phys., Volume 43, No. 3, 2004, 1028), which contain two electrodes on the same substrate, one of which is structured in a comb-shaped manner and the other is unstructured. A strong, so-called "fringe field" is thereby generated, *i.e.* a strong electric field close to the edge of the electrodes, and, throughout the cell, an electric field which has both a strong vertical component and also a strong horizontal component. FFS displays have a low viewing-angle dependence of the contrast. FFS displays usually contain an LC medium with positive dielectric anisotropy, and an alignment layer, usually of polyimide, which provides planar alignment to the molecules of the LC medium.

Liquid-crystal displays of the IPS and FFS electro-optical mode are in particular suitable for use in modern desktop monitors, TV sets and multimedia applications. The liquid-crystalline media according to the present invention are preferably used in displays of this type. In general, dielectrically positive liquid-crystalline media having rather lower values of the dielectric anisotropy are used in FFS displays, but in some cases liquid-crystalline media having a dielectric anisotropy of only about 3 or even less are also used in IPS displays.

A further improvement has been achieved by the so-called HB-FFS mode. One of the unique features of the HB-FFS mode in contrast to the traditional FFS technology is that it enables higher transmittance which allows operation of the panel with less energy consumption.

Liquid-crystal compositions which are suitable for LCDs and especially for FFS and IPS displays are known in prior art, for example, from JP 07-181 439 (A), EP 0 667 555, EP 0 673 986, DE 195 09 410, DE 195 28 106, DE 195 28 107, WO 96/23 851 and WO 96/28 521. However, these compositions have certain disadvantages. Amongst other deficiencies, most of them result in disadvantageously long addressing times, have inadequate values of the resistivity and/or require excessively high operating voltages. Both an improvement in the operating properties and also in the shelf life are necessary here.

**FFS and IPS** displays can be operated as active-matrix displays (AMD) or passive-matrix displays (PMD). In the case of active-matrix displays individual pixels are usually addressed by integrated, non-linear active elements such as, for example, thin-film transistors (TFTs), while in the case of passive-matrix displays individual pixels are usually addressed by the multiplex method as known from the prior art.

The displays according to the present invention are preferably addressed by an active matrix, preferably by a matrix of TFT. However, the liquid crystals according to the invention can also advantageously be used in displays having other known addressing means.

Typical applications of in-plane switching (IPS) and fringe field switching (FFS) technologies are monitors, notebooks, televisions, mobile telephones, tablet PCs, etc.

Both the IPS and the FFS technology have certain advantages over other LCD technologies, such as, for example, the vertical alignment (VA) technology, e.g. a broad viewing angle dependency of the contrast.

The provision of further liquid-crystalline media and the use thereof in a display having high transmission, a good black state and a high contrast ratio is a central challenge for modern FFS and IPS applications. In addition, modern applications also require good low-temperature stability and fast addressing times.

In particular it is desirable to have media with low birefringence that have low birefringence and at the same time have sufficient stability at low temperatures. Such media are useful for mobile use, for example in automotive applications where exposure to harsh environmental conditions such as very low temperatures may occur.

This was achieved by providing liquid-crystalline media as described and claimed hereinafter.

It was observed that a high brightness in displays like those of the HB-FFS mode can be achieved by using liquid-crystalline media having positive dielectric anisotropy and also having an increased dielectric constant $\varepsilon_\perp$ perpendicular to the longitudinal axes of the liquid-crystalline molecules. This can be achieved by adding a limited amount of liquid-crystalline compounds with negative dielectric anisotropy, which have high $\varepsilon_\perp$ properties, to the liquid-crystalline medium whilst maintaining a positive dielectric anisotropy of the entire medium. However, the addition of compounds with high $\varepsilon_\perp$ have some drawbacks. For example this can lead to higher values of the rotational viscosity $\gamma_1$, and consequently to higher values of the ratio $\gamma_1$ /$K_{22}$ of the rotational viscosity $\gamma_1$ and the elastic constant $K_{22}$ for twist deformation, which leads to higher response times. Since $K_{22}$ is approximately proportional to the elastic constant $K_{11}$ for splay deformation (the value of $K_{22}$ is typically about half the value of $K_{11}$), this can easily be determined by measuring $\gamma_1$ and $K_{11}$.

Another disadvantage is that the reliability (VHR) of HB-FFS mixtures can be worse compared to conventional FFS mixtures.

The invention has the object of providing liquid-crystalline media, preferably for FFS and IPS displays, in particular for HB-FFS displays, but also for TN, positive VA or STN displays, and in particular for active-matrix displays like those addressed by TFTs, which do not exhibit the disadvantages indicated above or only do so to a lesser extent and preferably have high specific resistance, low threshold voltage, high dielectric anisotropy, a good low temperature stability (LTS), fast response times and low rotational viscosities, and enable high brightness.

It is another object of the present invention to provide improved liquid-crystal media suitable for the use in HB-FFS displays that have improved reliability while keeping high transmittance compared to media from the prior art.

To solve the problem, the present invention provides a liquid-crystalline medium according to claim 1.

Advantageous embodiments of the invention are subject of the dependent claims or can also be taken from the description.

The present invention relates to a liquid-crystal medium with positive dielectric anisotropy, comprising

a) one or more compounds of formula I

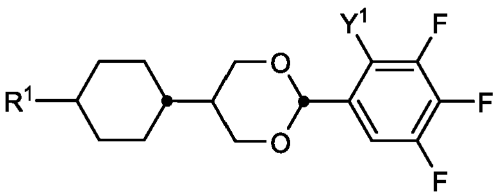

I

in which

$R^1$ denotes H, an alkyl or alkoxy radical having 1 to 12 C atoms, in which one or more $CH_2$ groups in these radicals are optionally replaced by

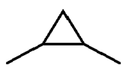,

-CH=CH-, -C≡C-,

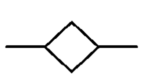, 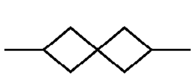, 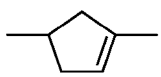, 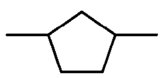,

-O-, -CO-O- or -O-CO- in such a way that O atoms are not linked directly to one another, and in which one or more H atoms may be replaced by halogen, preferably alkyl having 1 to 7 C atoms or alkenyl having 2 to 7 C atoms or cyclic alkyl having 3 to 9 C atoms in which one or more H atoms may be replaced by F, and

$Y^1$ denotes H or $CH_3$, preferably H;

b) one or more compounds selected from the group of compounds of the formulae II and III

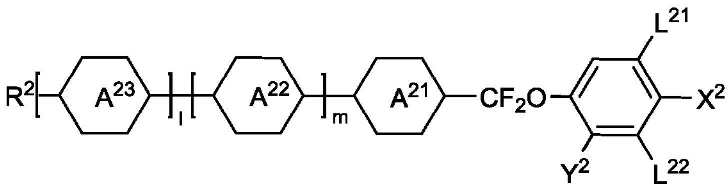

II

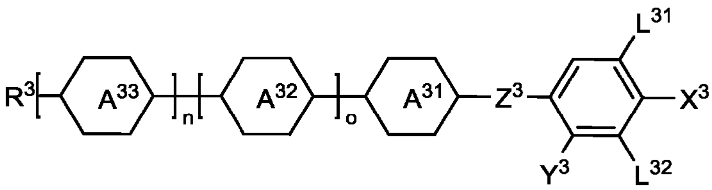

III

in which

$R^2$ and $R^3$ have the meanings given above for $R^1$

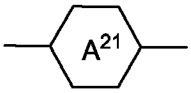, 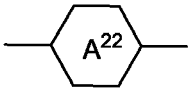, 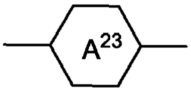 and , 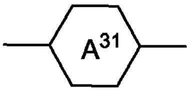

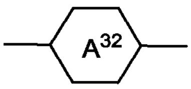 and 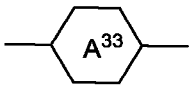,

independently of one another denote

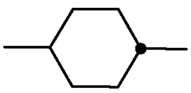, 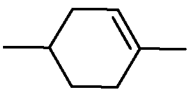, 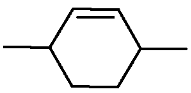, 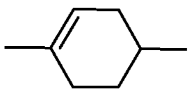, 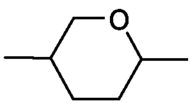,

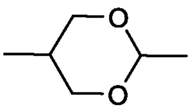, 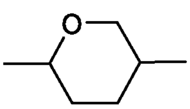, 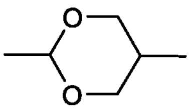, 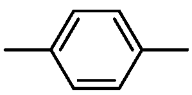, 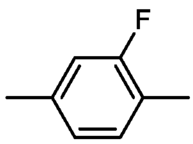,

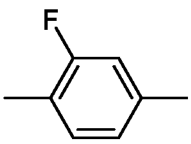, 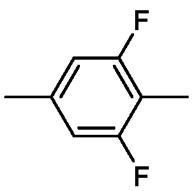 or 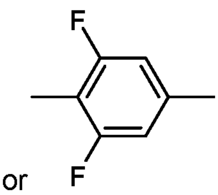,

$L^{21}$, $L^{22}$,
$L^{31}$ and $L^{32}$ independently of each other, denote H or F,
$Y^2$ and $Y^3$ identically or differently, denote H or $CH_3$,
$X^2$ and $X^3$ independently of each other, denote halogen, halogenated alkyl or halogenated alkoxy with 1 to 3 C-atoms or halogenated alkenyl or halogenated alkenyloxy with 2 or 3 C-atoms, preferably F, Cl, $CF_3$, $OCF_3$ or $OCHF_2$, more preferably F or $OCF_3$,
$Z^3$ denotes $-CH_2CH_2-$, $-CF_2CF_2-$, -COO-, *trans*- -CH=CH-, trans-CF=CF-, $-CH_2O-$ or a single bond, and
l, m, n and o are, independently of each other, 0 or 1, where the compounds of formula I are excluded from formula III; and

c) one or more compounds of the formula LY in which

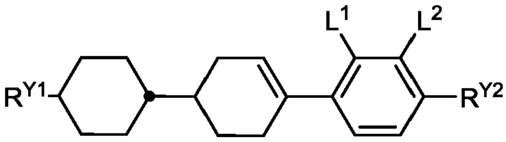

LY

$R^{Y1}$ and $R^{Y2}$ have the meanings given above for $R^1$, and $L^1$ and $L^2$ denote F or Cl.

The combination of compounds of formula I with compounds of formula II and/or III, and additionally with a compound of the formula LY enables liquid-crystalline media which show a moderately positive dielectric anisotropy and at the same time an increased dielectric constant $\varepsilon_\perp$ perpendicular to the longitudinal axes of the liquid-crystalline molecules, while maintaining a low rotational viscosity and a low value of the ratios of $\gamma_1/K_{22}$ and $\gamma_1/K_{11}$. This enables liquid-crystalline displays, especially of the HB-FFS, FFS and IPS mode, with high brightness and transmission and fast response times.

In particular, the low-temperature stability (LTS) of the medium according to the invention is remarkably high. The medium is sufficiently stable at temperatures as low as -40°C which is why the medium is particularly suitable for mobile applications, for example in automotive applications.

The liquid-crystalline media according to the invention are suitable for mobile applications and TFT applications, such as, for example, mobile telephones and PDAs. Furthermore, the liquid-crystalline media according to the invention are particularly suitably for use in FFS, HB-FFS and IPS displays based on dielectrically positive liquid crystals.

The liquid-crystal media according to the present invention are likewise suitable for use in liquid-crystal displays of the FFS, HB-FFS and IPS mode, based on dielectrically positive liquid crystals, and polymer stabilised variants thereof, for large size TV applications.

The invention further relates to the use of a liquid-crystalline medium as described above and below for electro-optical purposes, in particular for the use in liquid-crystal displays, shutter glasses, LC windows, 3D applications, preferably in TN, PS-TN, STN, TN-TFT, OCB, IPS, PS-IPS, FFS, HB-FFS, PS-HB-FFS, SA-HB-FFS, polymer stabilised SA-HB-FFS, positive VA and positive PS-VA displays, very preferably in FFS, HB-FFS, IPS, PS-HB-FFS and PS-IPS displays.

The invention further relates to an electro-optical liquid-crystal display containing a liquid-crystalline medium as described above and below, in particular a TN, PS-TN, STN, TN-TFT, OCB, IPS, PS-IPS, FFS, HB-FFS, PS-HB-FFS, SA-HB-FFS, polymer stabilised SA-HB-FFS, positive VA or positive PS-VA display, preferably a FFS, HB-FFS, IPS, PS-HB-FFS or PS-IPS display.

In the present application, all atoms also include their isotopes. In particular, one or more hydrogen atoms (H) may be replaced by deuterium (D), which is particularly preferred in some embodiments; a high degree of deuteration enables or simplifies analytical determination of compounds, in particular in the case of low concentrations.

Herein, an alkyl radical and/or an alkoxy radical is taken to mean straight-chain or branched or cyclic alkyl. It is preferably straight-chain, has 2, 3, 4, 5, 6 or 7 C atoms and accordingly preferably denotes ethyl, propyl, butyl, pentyl, hexyl, heptyl, ethoxy, propoxy, butoxy, pentoxy, hexyloxy or heptyloxy, furthermore methyl, octyl, nonyl, decyl, undecyl, dodecyl, tridecyl, tetradecyl, pentadecyl, methoxy, octyloxy, nonyloxy, decyloxy, undecyloxy, dodecyloxy, tridecyloxy or tetradecyloxy.

Herein, branched alkyl is preferably isopropyl, s-butyl, isobutyl, isopentyl, 2-methylbutyl, 2-methylhexyl or 2-ethylhexyl.

As used herein, cyclic alkyl is taken to mean straight-chain or branched alkyl or alkenyl having up to 12 C atoms, preferably alkyl having 1 to 7 C atoms, in which a group $CH_2$ is replaced with a carbocyclic ring having 3 to 5 C atoms, very preferably selected from the group consisting of cyclopropylalkyl, cyclobutylalkyl, cyclopentylalkyl and cyclopentenylalkyl, wherein alkyl is straight chain alkyl having 1 to 5 C atoms.

Herein, oxaalkyl preferably denotes straight-chain 2-oxapropyl (= methoxymethyl), 2-(= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxadecyl.

Herein, alkenyl, i.e. an alkyl radical in which one $CH_2$ group has been replaced by -CH=CH- , may be straight-chain or branched. It is preferably straight-chain and has 2 to 10 C atoms. Accordingly, it denotes, in particular, vinyl, prop-1- or -2-enyl, but-1-, -2- or -3-enyl, pent-1-, -2-, -3- or -4-enyl, hex-1-, -2-, -3-, -4- or -5-enyl, hept-1-, -2-, -3-, -4-, -5- or -6-enyl, oct-1-, -2-, -3-, -4-, -5-, -6- or -7-enyl, non-1-, -2-, -3-, -4-, -5-, -6-, -7- or -8-enyl, dec-1-, -2-, -3-, -4-, -5-, -6-, -7-, -8- or -9-enyl.

Herein, an alkyl or alkenyl radical which is at least monosubstituted by halogen, is preferably straight-chain, and halogen is preferably F or Cl. In the case of polysubstitution, halogen is preferably F. The resultant radicals also include perfluorinated radicals. In the case of monosubstitution, the fluorine or chlorine substituent may be in any desired position, but is preferably in the $\omega$-position.

Herein, a mono- or polyfluorinated alkyl or alkoxy radical having 1, 2 or 3 C atoms or a mono- or polyfluorinated

alkenyl radical having 2 or 3 C atoms is particularly preferably F, Cl, $CF_3$, $CHF_2$, $OCF_3$, $OCHF_2$, $OCFHCF_3$, $OCFHCHF_2$, $OCFHCHF_2$, $OCF_2CH_3$, $OCF_2CHF_2$, $OCF_2CHF_2$, $OCF_2CF_2CHF_2$, $OCF_2CF_2CHF_2$, $OCFHCF_2CF_3$, $OCFHCF_2CHF_2$, $OCF_2CF_2CF_3$, $OCF_2CF_2CClF_2$, $OCClFCF_2CF_3$, $OCH{=}CF_2$ or $CH{=}CF_2$, very particularly preferably F or $OCF_3$, furthermore $CF_3$, $OCF{=}CF_2$, $OCHF_2$ or $OCH{=}CF_2$.

The compounds of formula I are preferably selected from the group of compounds of the formulae I-1 to I-10

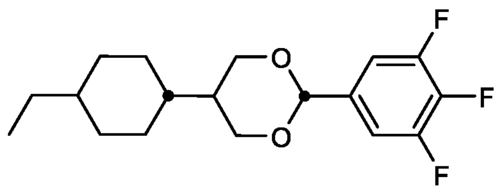

I-1

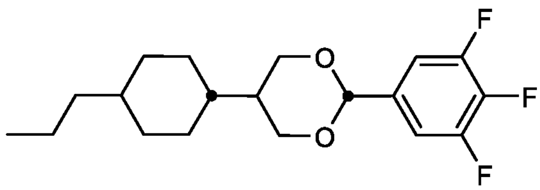

I-2

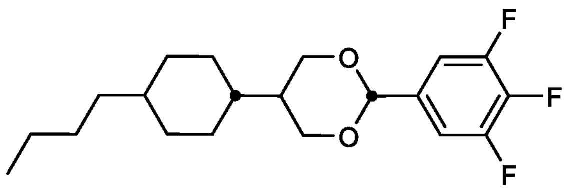

I-3

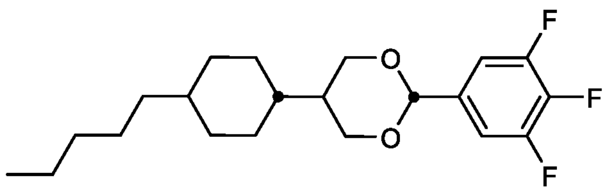

I-4

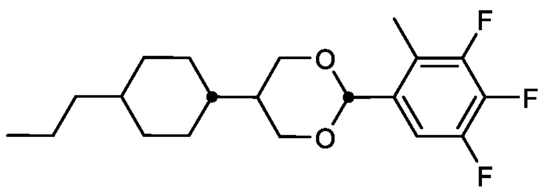

I-5

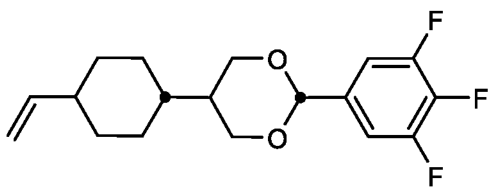

I-6

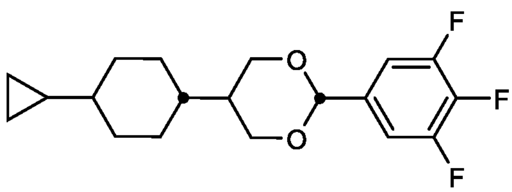

I-7

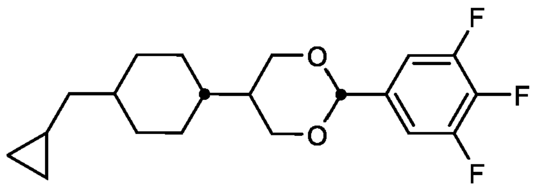

I-8

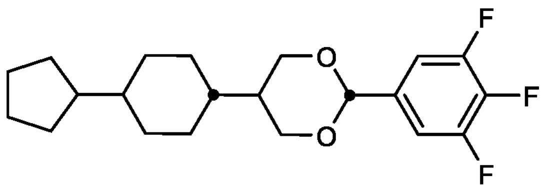

I-9

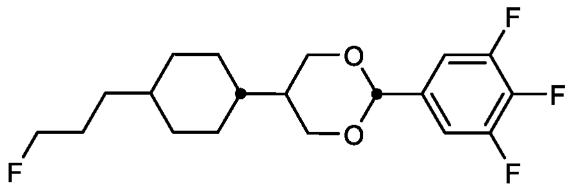

I-10

Preferably, the medium comprises one or more compounds of formula II, preferably selected from the group of compounds of formulae II-1 to II-3, very preferably from the group of compounds of the formulae II-1 and II-3

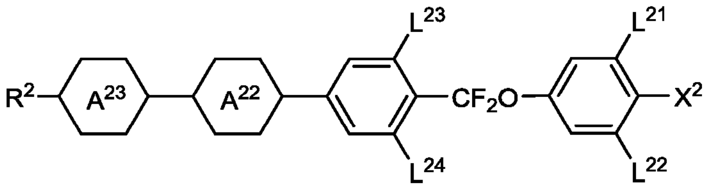

II-1

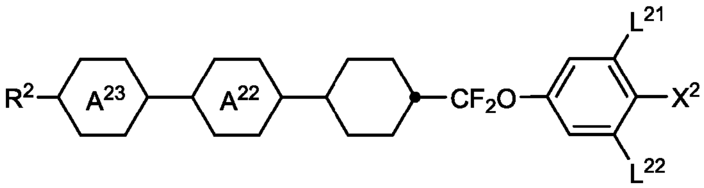

II-2

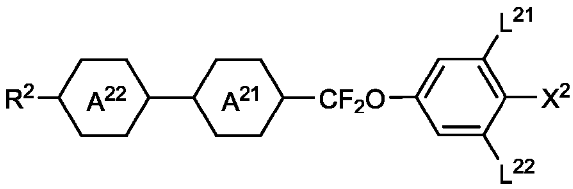

II-3

in which the occurring groups have the respective meanings given under formula II above and in formula II-1 the radicals $L^{23}$ and $L^{24}$ denote, independently of each other and of the other parameters, H or F and in formula II-2 preferably

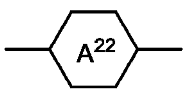 and 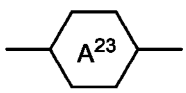,

independently of each other, denote

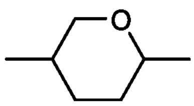
or
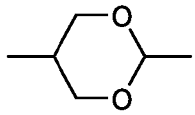
.

In formulae II-1, II-2 and II-3, $L^{21}$ and $L^{22}$ or $L^{23}$ and $L^{24}$ are preferably both F.

In another preferred embodiment in formulae II-1 and II-2, all of $L^{21}$, $L^{22}$, $L^{23}$ and $L^{24}$ denote F.

The compounds of formula II-1 are preferably selected from the group of compounds of the formulae II-1a to II-1h

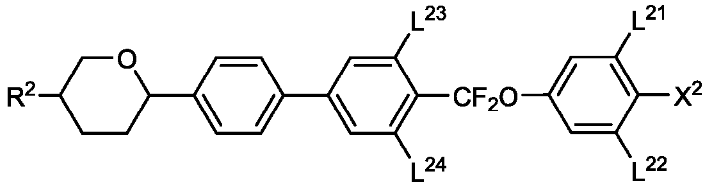
II-1a

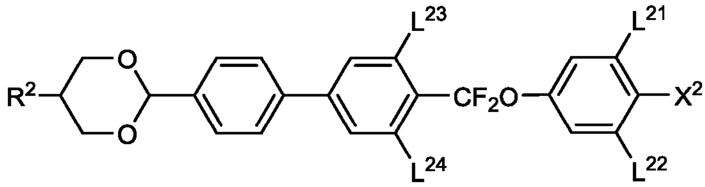
II-1b

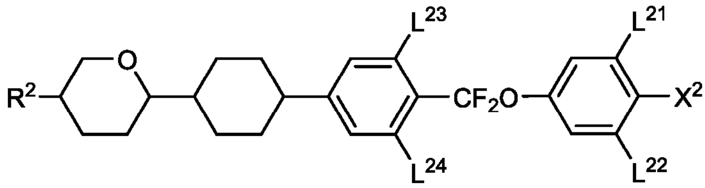
II-1c

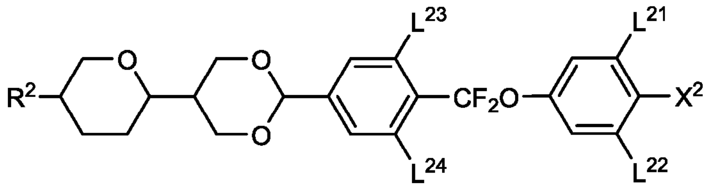
II-1d

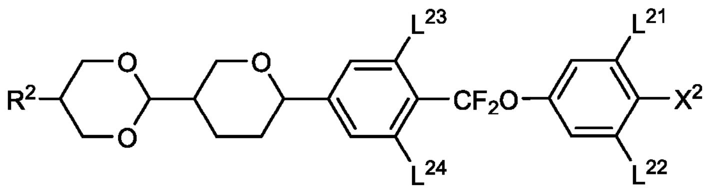
II-1e

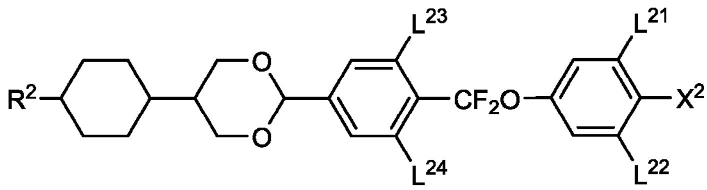
II-1f

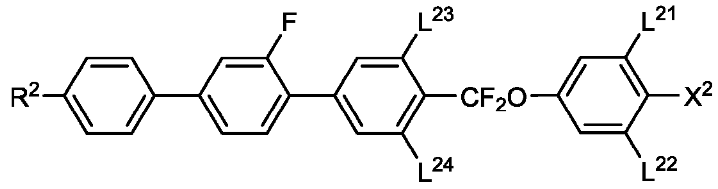

II-1g

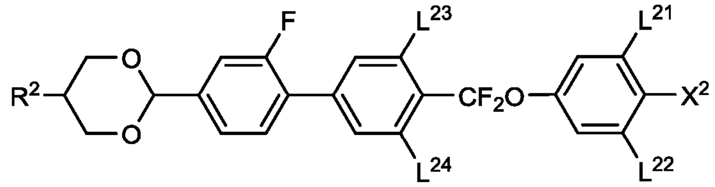

II-1h

in which the occurring groups have the respective meanings given above.

In a preferred embodiment of the present invention the medium comprises one or more compounds selected from the group of compounds of the formulae II-1a to II-1h wherein $L^{21}$ and $L^{22}$, and/or $L^{23}$ and $L^{24}$ are both F, respectively.

In another preferred embodiment the medium comprises compounds selected from the group of compounds of formulae II-1a to II-1h, wherein $L^{21}$, $L^{22}$, $L^{23}$ and $L^{24}$ all are F.

Especially preferred compounds of formula II-1 are

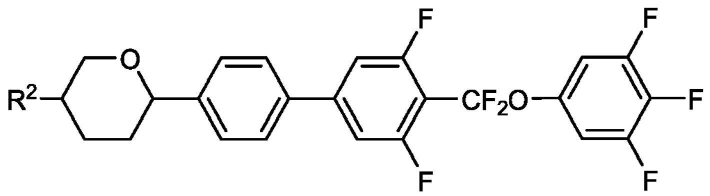

II-1a-1

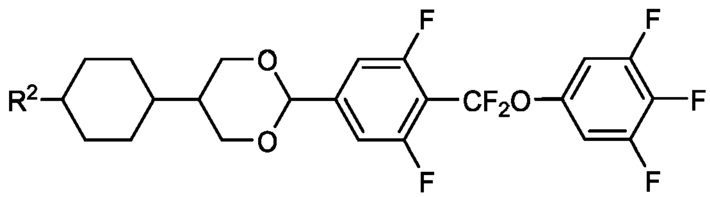

II-1f-1

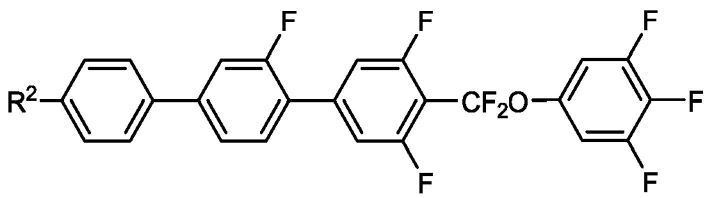

II-1g-1

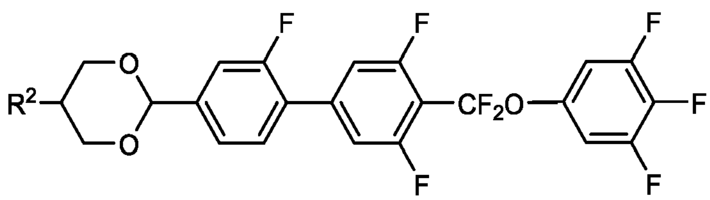

II-1h-1

in which $R^2$ has the meaning given above.

Preferably the compounds of formula II-2 are selected from the group of compounds of formulae II-2a to II-2c

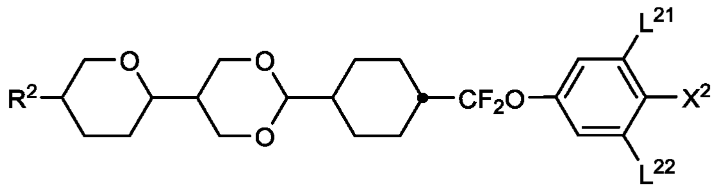

II-2a

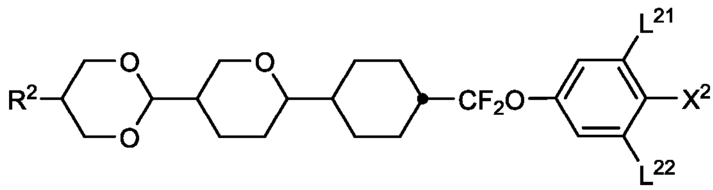

II-2b

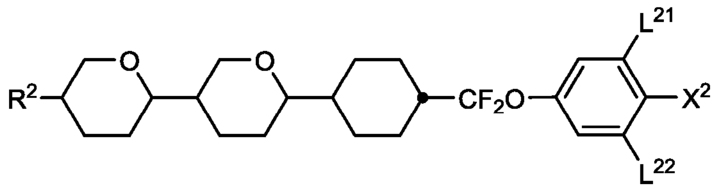

II-2c

in which the occurring groups have the respective meanings given above and preferably $L^{21}$ and $L^{22}$ are both F.

Preferably the compounds of formula II-3 are selected from the group of compounds of formulae II-3a to II-3e

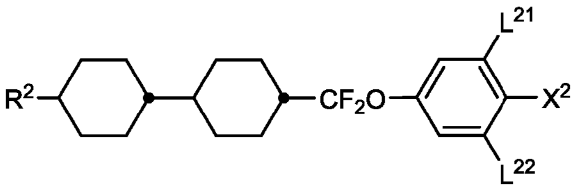

II-3a

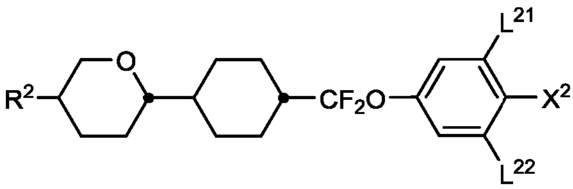

II-3b

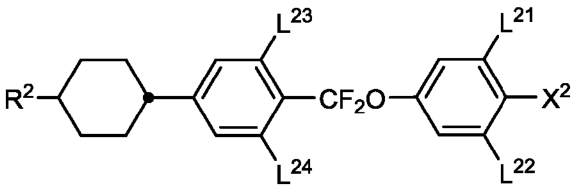

II-3c

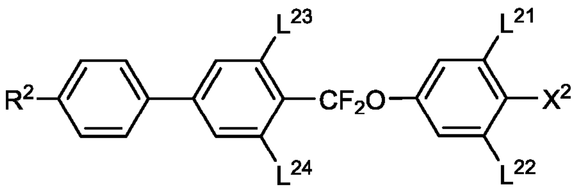

II-3d

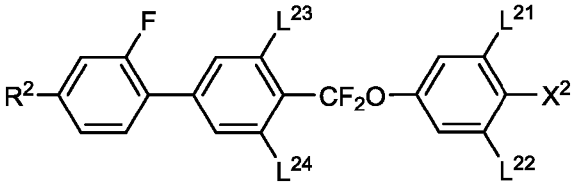

II-3e

in which the occurring groups have the respective meanings given above and preferably

$L^{21}$ and $L^{22}$ are both F and $L^{23}$ and $L^{24}$ are both H or
$L^{21}$, $L^{22}$, $L^{23}$ and $L^{24}$ are all F.

Especially preferred compounds of formula II-3 are

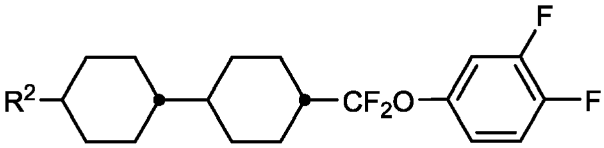

II-3a-1

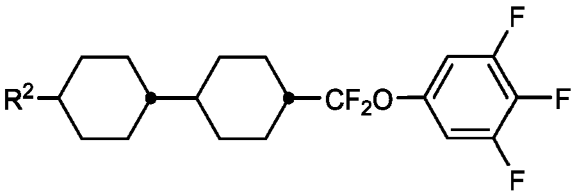

II-3a-2

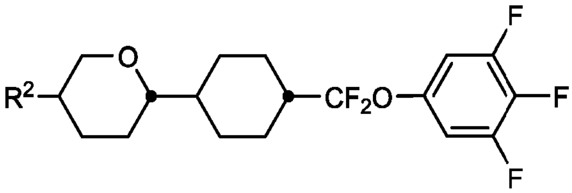

II-3b-1

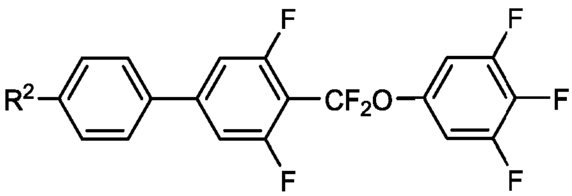

II-3d-1

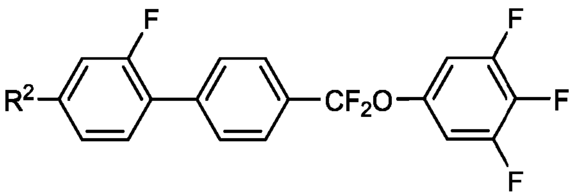

II-3e-1

in which $R^2$ has the meaning given above.

In addition to the preferred compounds of formula II above the medium optionally comprises one or more compounds of formula II selected from the compounds of the formulae IIA1 to IIA7:

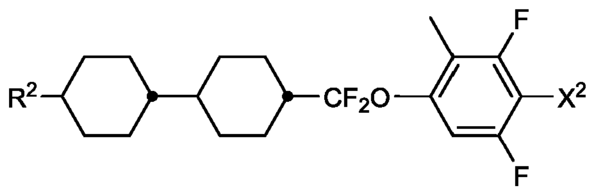

IIA1

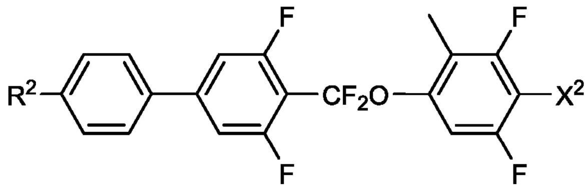

IIA2

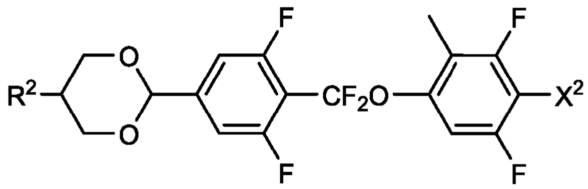

IIA3

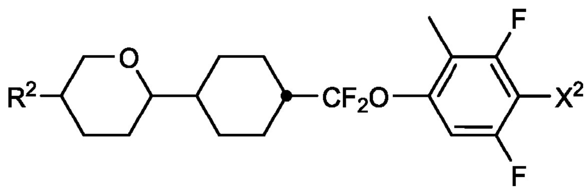

IIA4

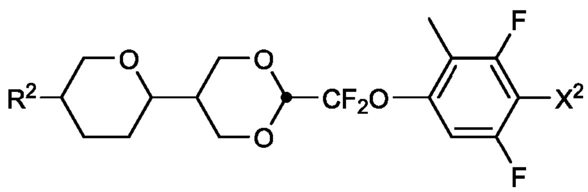

IIA5

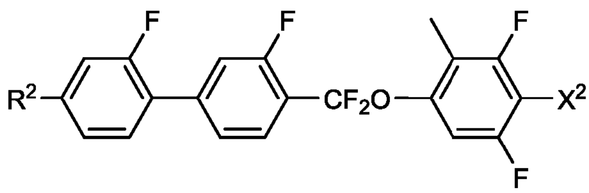

IIA6

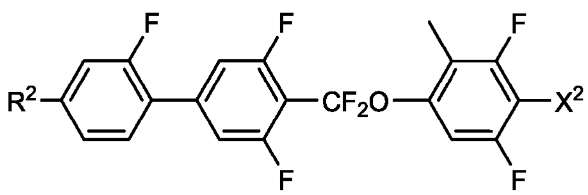

IIA7

in which $R^2$ and $X^2$ have the meanings given in formula II or one of the preferred meanings given above and below.

Preferred compounds are those of formula IIA1, IIA2 and IIA3, very preferred those of formula IIA1 and IIA2.

In the compounds of formulae IIA1 to IIA7, $R^2$ preferably denotes alkyl having 1 to 6 C atoms, very preferably ethyl or n-propyl, and $X^2$ preferably denotes F or $OCF_3$, very preferably F.

In another preferred embodiment of the present invention the medium comprises one or more compounds of formula III preferably selected from the group of formulae III-1 and III-2, preferably of formula III-2:

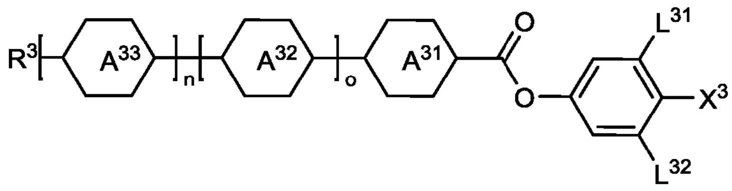

III-1

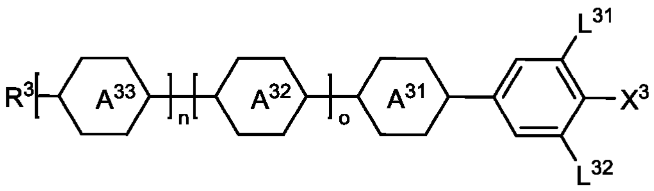

III-2

in which the occurring groups and parameters have the respective meanings given under formula III above.

Preferably the compounds of formula III-1 are selected from the group of compounds of formulae III-1a and III-1b

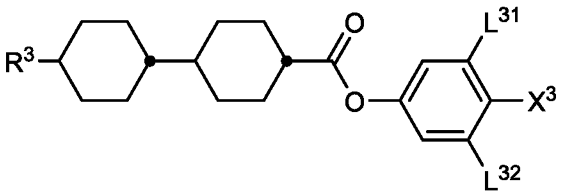

III-1a

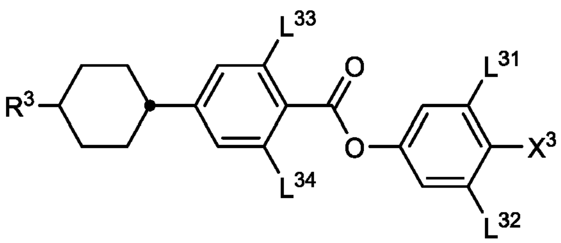

III-1b

in which the occurring groups have the respective meanings given above and $L^{33}$ and $L^{34}$, independently of each other, denote H or F.

The compounds of formula III-1a are preferably selected from the group of compounds of formulae III-1a-1 to III-1a-6

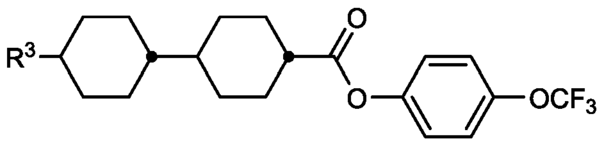

III-1a-1

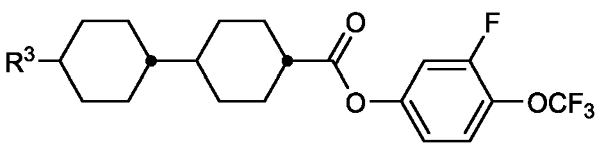

III-1a-2

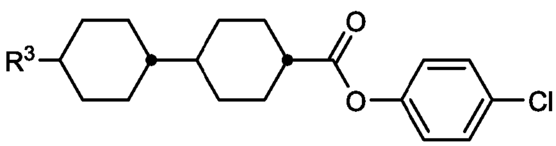

III-1a-3

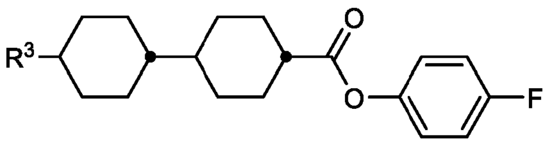

III-1a-4

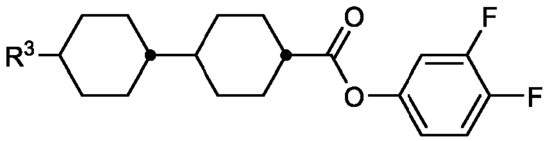

III-1a-5

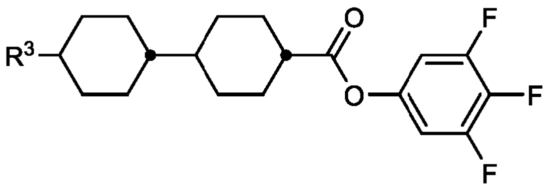

III-1a-6

in which $R^3$ has the meaning given above.

Preferably the compounds of formula III-2 are selected from the group of compounds of formulae III-2a to III-2m

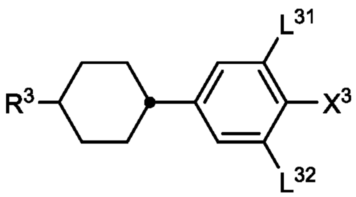

III-2a

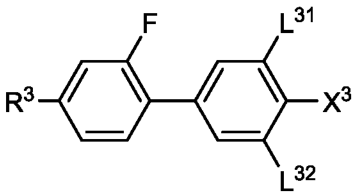

III-2b

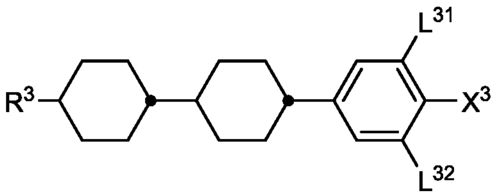

III-2c

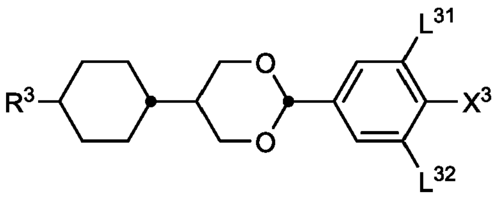

III-2d

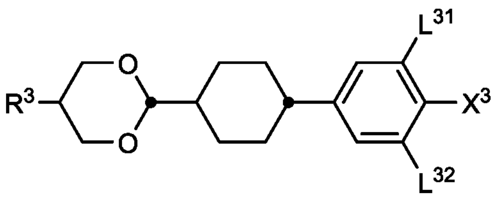

III-2e

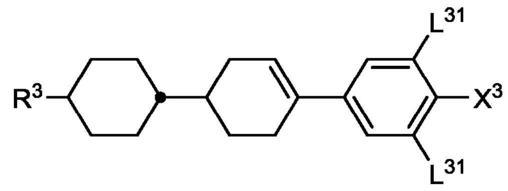

III-2f

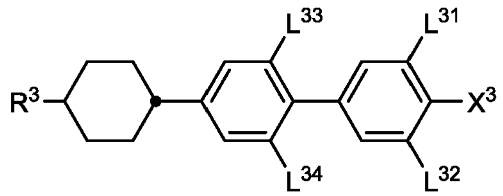

III-2g

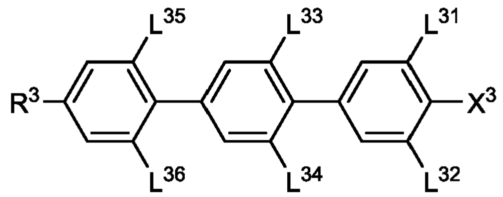

III-2h

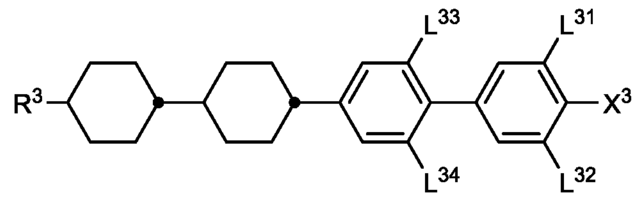

III-2i

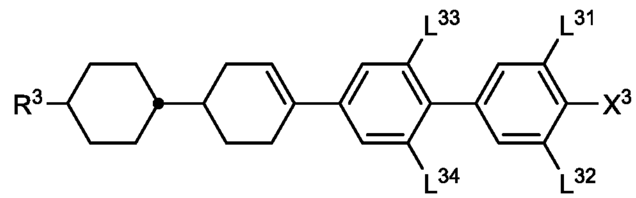

III-2j

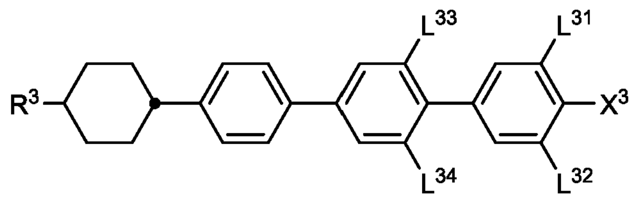

III-2k

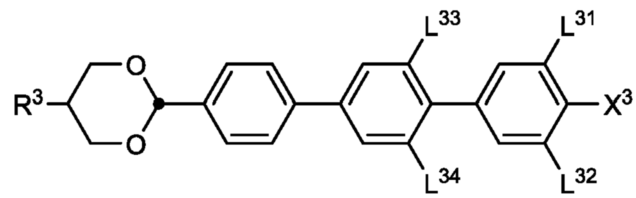

III-2l

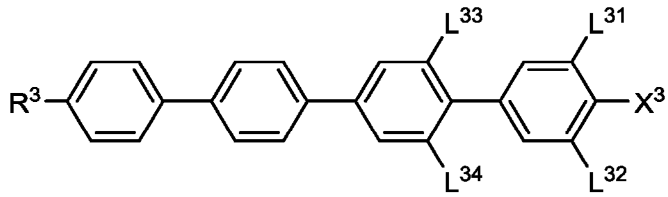

III-2m

in which the occurring groups have the respective meanings given above and $L^{35}$ and $L^{36}$, independently of one another, denote H or F.

Preferably, the compounds of formula II-2a are selected from the group of compounds of formulae III-2a-1 to III-2a-4

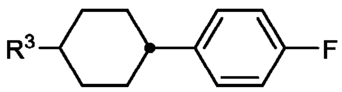

III-2a-1

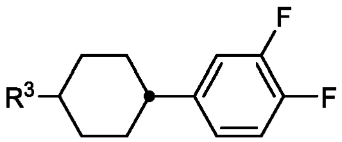

III-2a-2

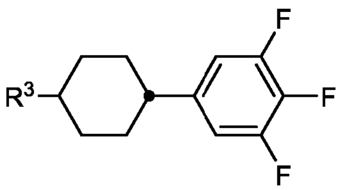

III-2a-3

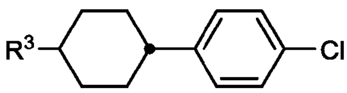

III-2a-4

in which $R^3$ has the meaning given above.

The compounds of formula III-2b are preferably selected from the group of compounds of formulae III-2b-1 and III-2b-2, preferably III-2b-2

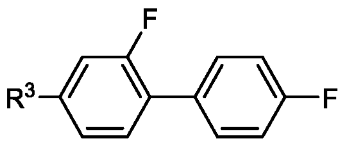

III-2b-1

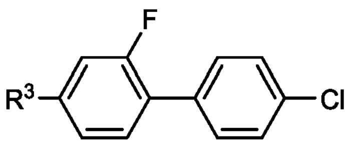

III-2b-2

in which $R^3$ has the meaning given above.

The compounds of formula II-2c, are preferably selected from the group of compounds of formulae III-2c-1 to III-2c-5

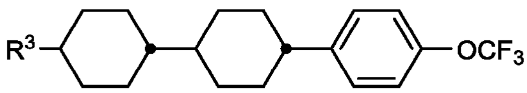

III-2c-1

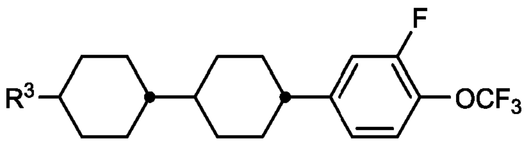

III-2c-2

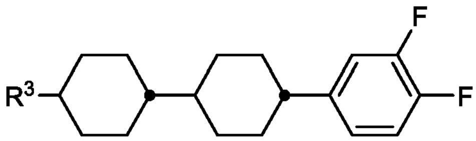

III-2c-3

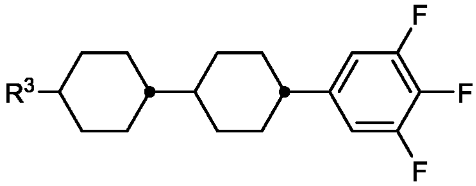

III-2c-4

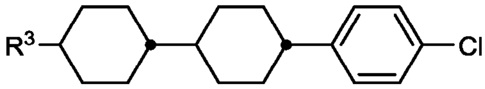

III-2c-5

in which $R^3$ has the meaning given above.

The compounds of formulae III-2d and III-2e are preferably selected from the group of compounds of formulae III-2d-1 and III-2e-1

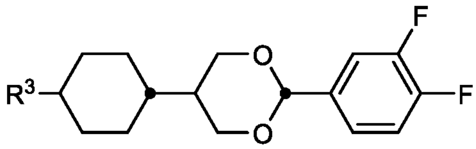

III-2d-1

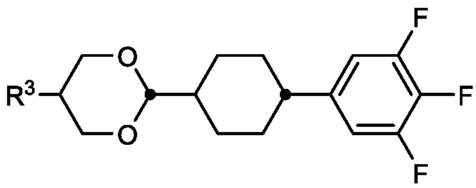

III-2e-1

in which $R^3$ has the meaning given above.

The compounds of formula III-2f are preferably selected from the group of compounds of formulae III-2f-1 to III-2f-7

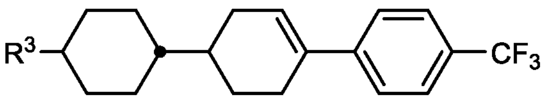

III-2f-1

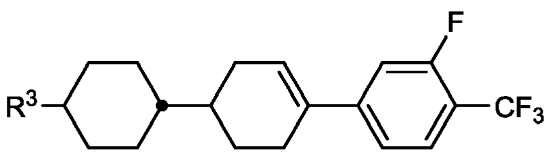

III-2f-2

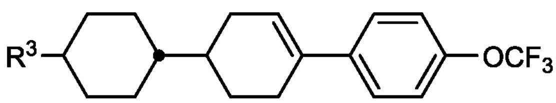

III-2f-3

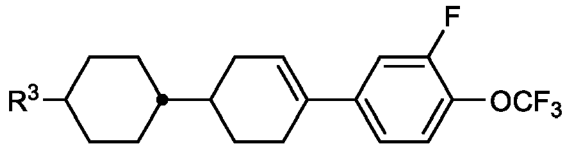

III-2f-4

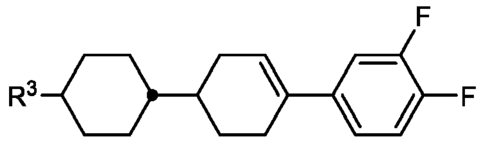

III-2f-5

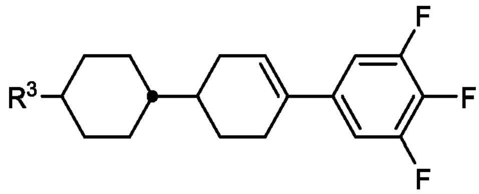

III-2f-6

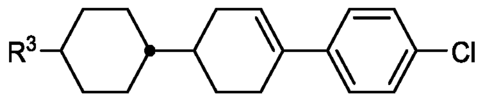

III-2f-7

in which $R^3$ has the meaning given above.

The compounds of formula III-2g are preferably selected from the group of compounds of formulae III-2g-1 to III-2g-7

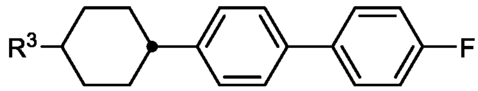

III-2g-1

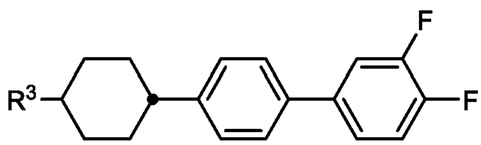

III-2g-2

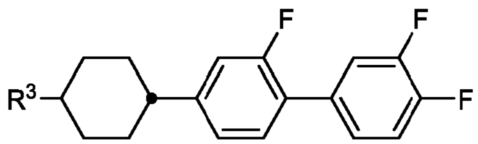

III-2g-3

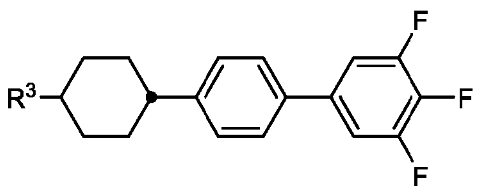

III-2g-4

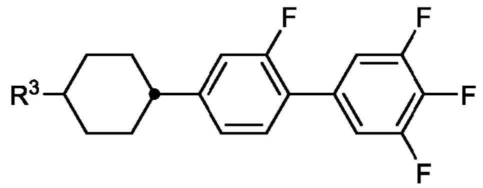

III-2g-5

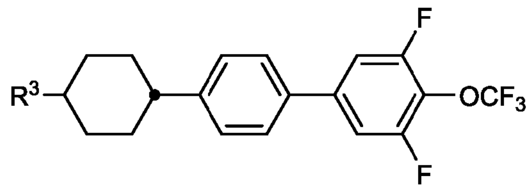

III-2g-6

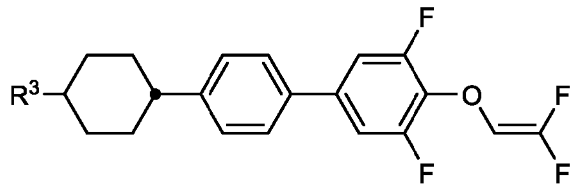

III-2g-7

in which $R^3$ has the meaning given above.

The compounds of formula III-2h are preferably selected from the group of compounds of formulae III-2h-1 to III-2h-5

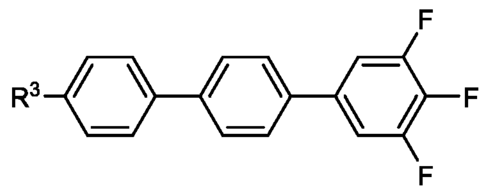

III-2h-1

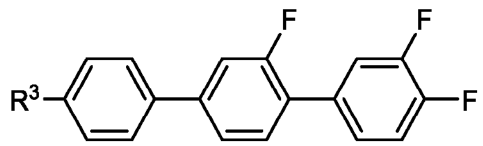

III-2h-2

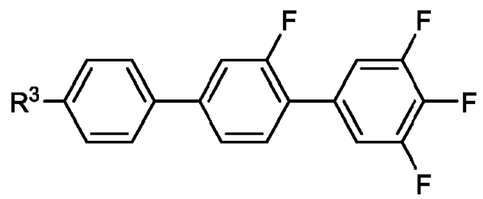

III-2h-3

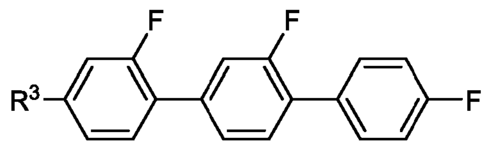

III-2h-4

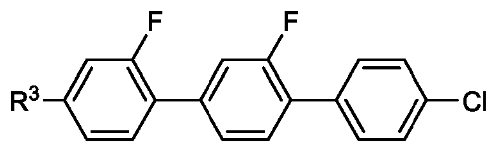

III-2h-5

in which $R^3$ has the meaning given above.

The compounds of formula III-2i are preferably selected from the group of compounds of formulae III-2i-1 to III-2i-3

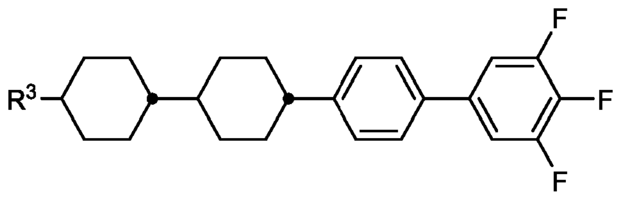

III-2i-1

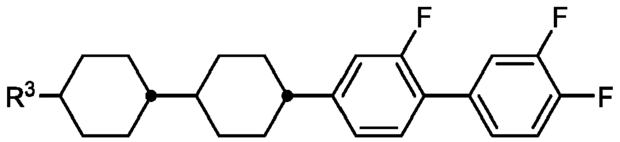

III-2i-2

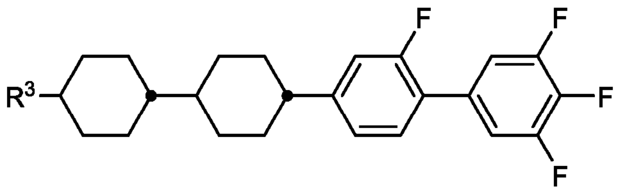

III-2i-3

in which $R^3$ has the meaning given above.

The compounds of formula III-2j are preferably selected from the group of compounds of formulae III-2j-1 to III-2j-3

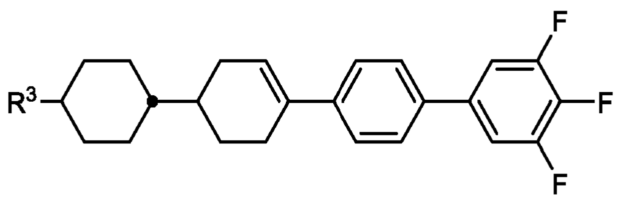

III-2j-1

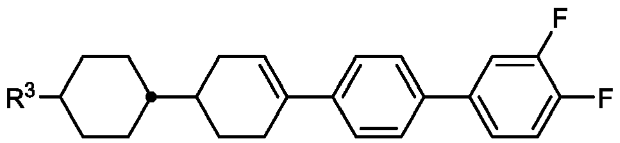

III-2j-2

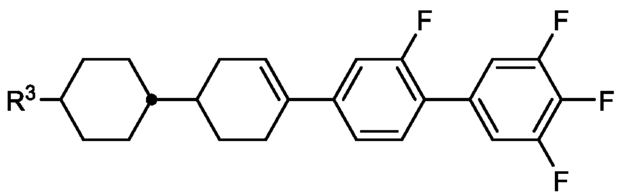

III-2j-3

in which $R^3$ has the meaning given above.

The compounds of formula III-2k are preferably selected from the group of compounds of formulae III-2k-1 to III-2k-6

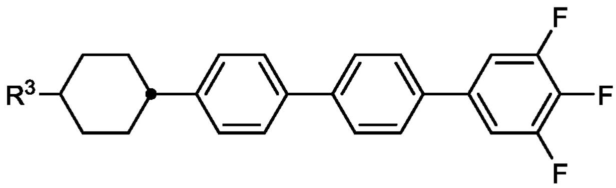

III-2k-1

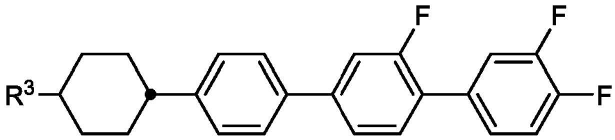

III-2k-2

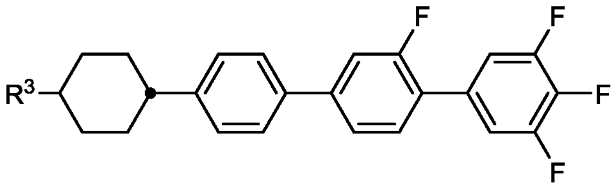

III-2k-3

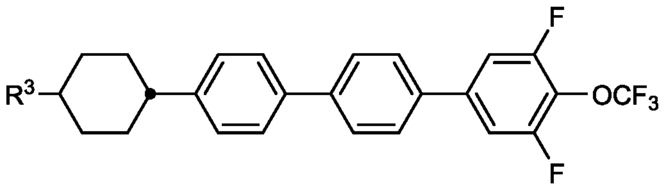

III-2k-4

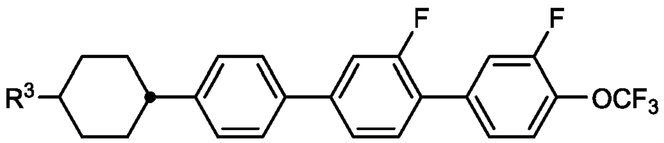

III-2k-5

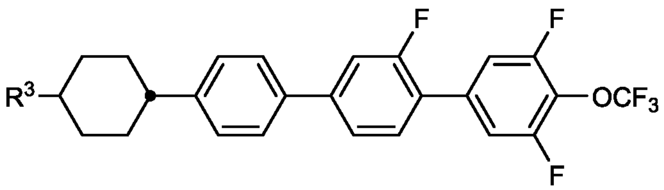

III-2k-6

in which $R^3$ has the meaning given above.

The compounds of formula III-2l are preferably selected from the group of compounds of formulae III-2l-1 to III-2l-6

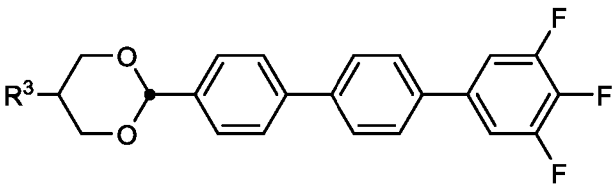

III-2l-1

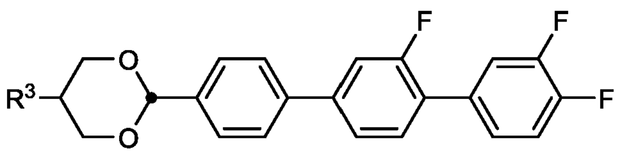

III-2l-2

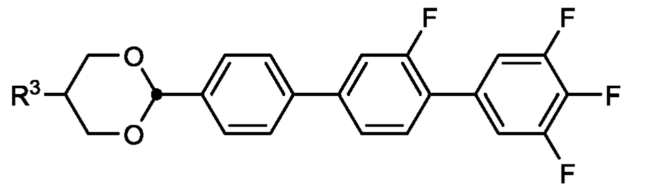

III-2l-3

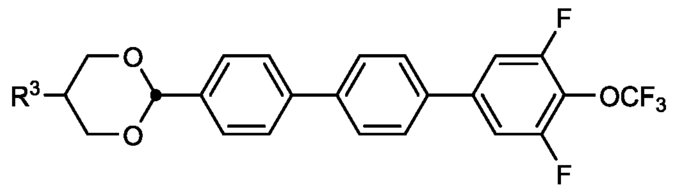

III-2l-4

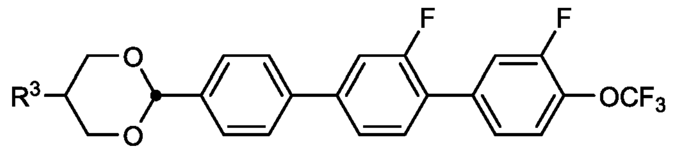

III-2l-5

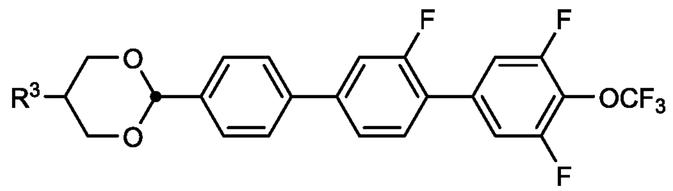

III-2l-6

in which $R^3$ has the meaning given above.

The compounds of formula III-2m are preferably selected from the compounds of formula III-2m-1

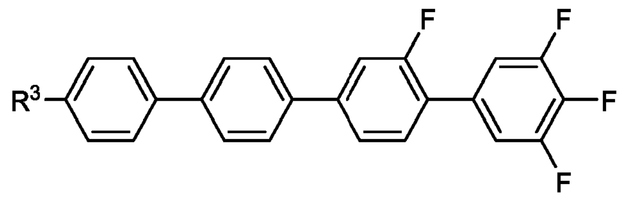

III-2m-1.

Alternatively or in addition to the compounds of the formulae III-1 and/or III-2 the media according to the present invention optionally comprise one or more compounds of formula III-3,

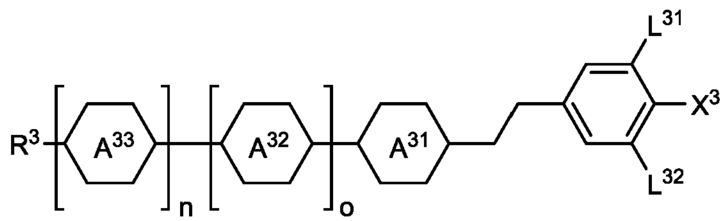

III-3

in which the groups and parameters have the respective meanings given under formula III above, preferably of formula III-3a

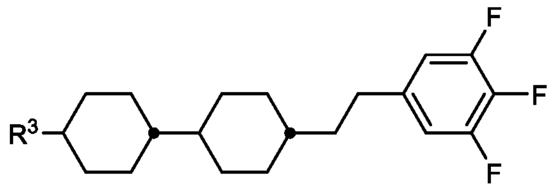

III-3a

in which the $R^3$ has the meaning given above.

In addition to the preferred compounds of formula III above the medium optionally comprises one or more compounds selected from the group consisting of the formulae IIIA-1 to IIIA-21:

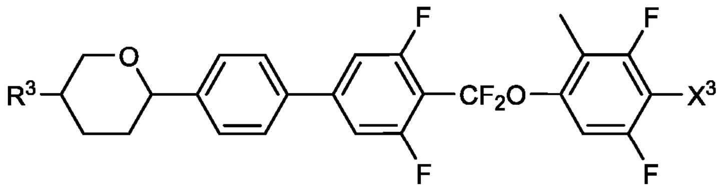

IIIA1

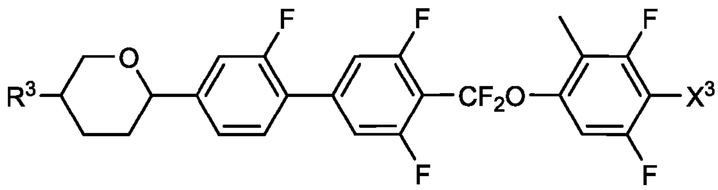

IIIA2

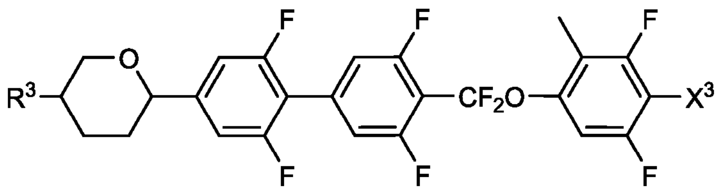

IIIA3

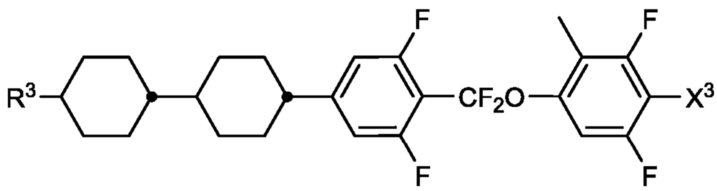

IIIA4

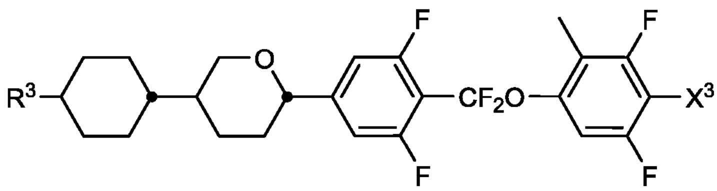

IIIA5

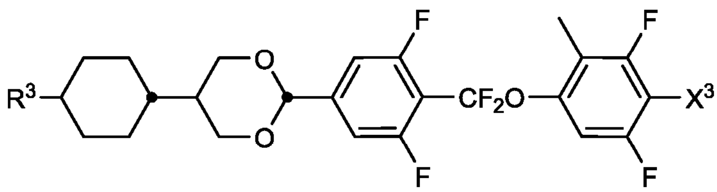

IIIA6

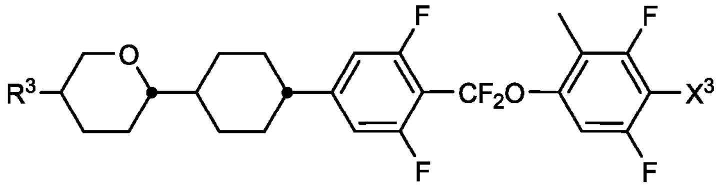

IIIA7

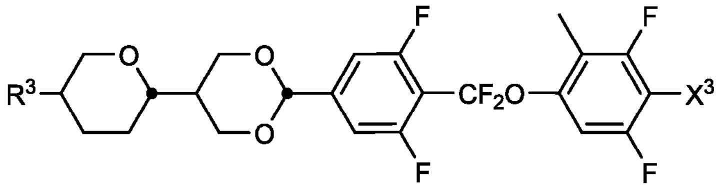

IIIA8

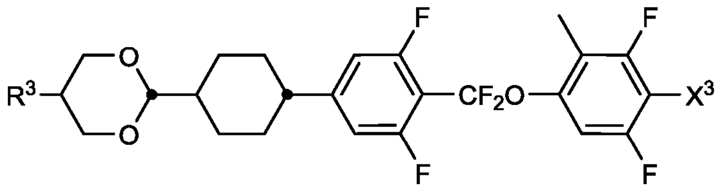

IIIA9

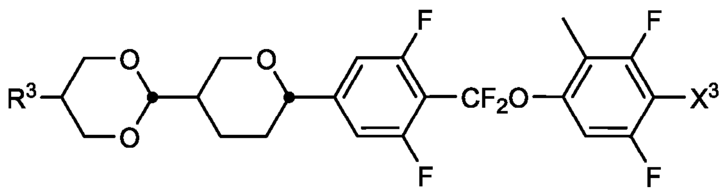

IIIA10

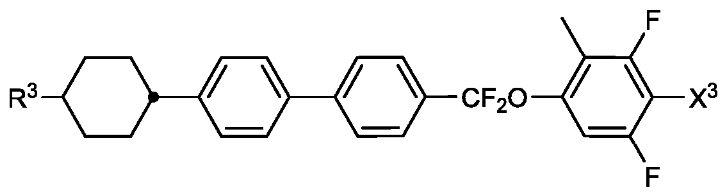

IIIA11

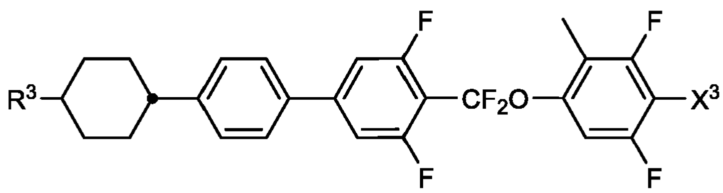

IIIA12

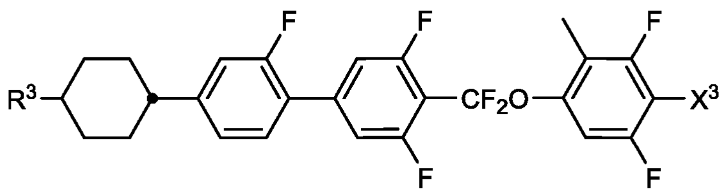

IIIA13

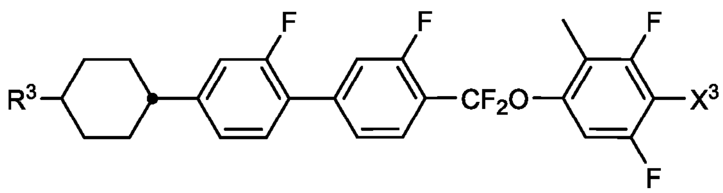

IIIA14

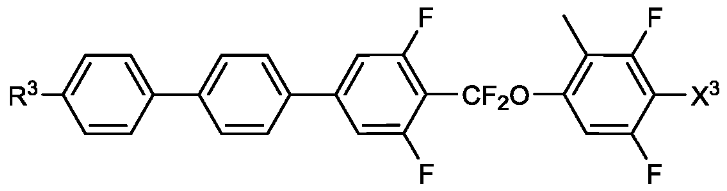

IIIA15

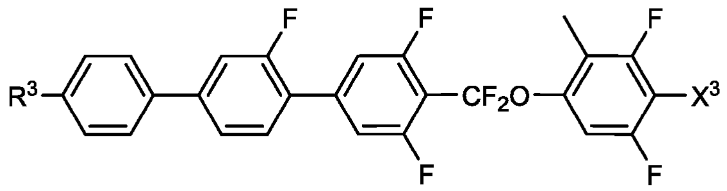

IIIA16

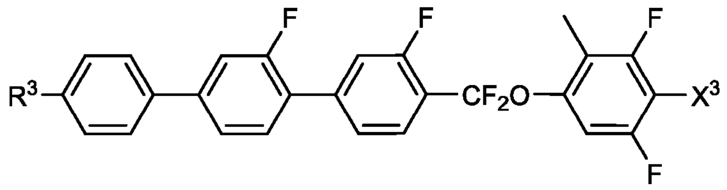

IIIA17

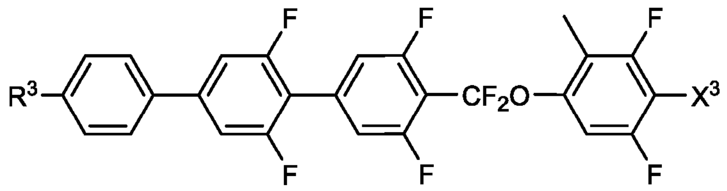

IIIA18

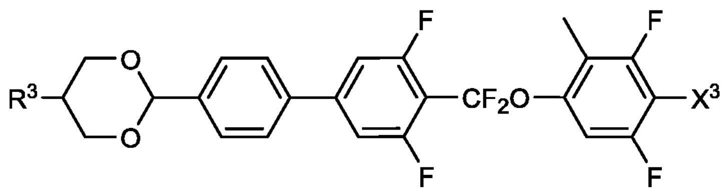

IIIA19

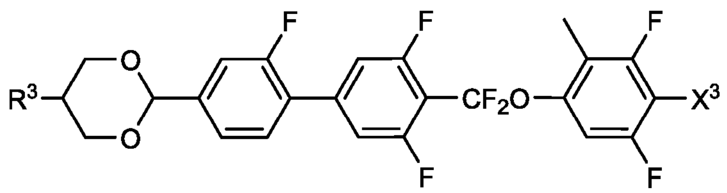

IIIA20

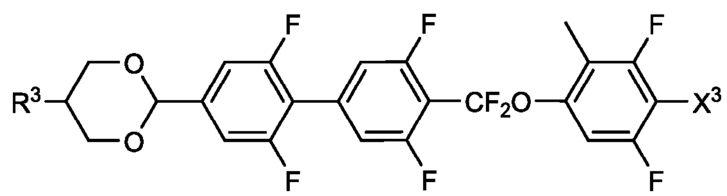

IIIA21

in which $R^3$ and $X^3$ have the meanings given in formula III or one of the preferred meanings given above and below. Preferred compounds are those of formula IIIA1, IIIA4, IIIA6, IIIA16, IIIA19 and IIIA20.

In the compounds of formulae IIIA1 to IIIA21 $R^3$ preferably denotes alkyl having 1 to 6 C atoms, very preferably ethyl or propyl, $X^3$ preferably denotes F or $OCF_3$, very preferably F.

The compounds of the formula LY are preferably selected from the group consisting of the formulae LY-1, LY-2 and LY-3, very preferably from the formula LY-1:

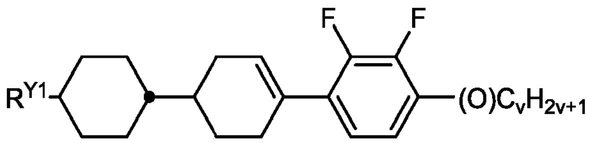

LY-1

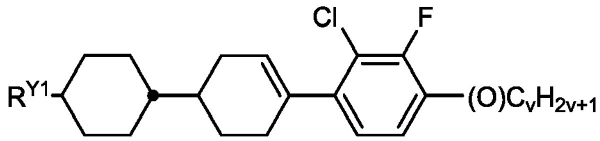

LY-2

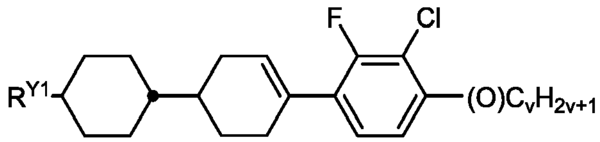

LY-3

in which $R^{Y1}$ has one or the meanings given above for formula LY and preferably denotes optionally fluorinated alkyl or cyclic alkyl having 1 to 7 C-atoms, preferably alkyl having 1 to 7 C atoms, (O) denotes O or a single bond, and v is 1, 2, 3, 4, 5, 6 or 7.

Particularly preferred compounds of the formula LY-1 are selected from the following group:

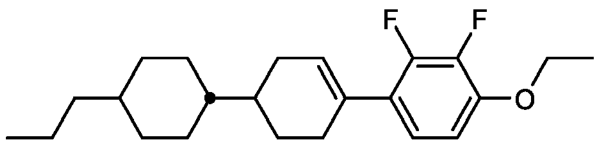

LY-1-1

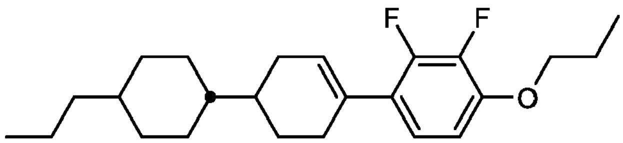

LY-1-2

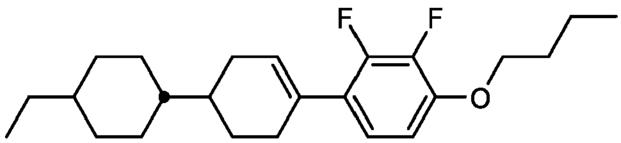

LY-1-3

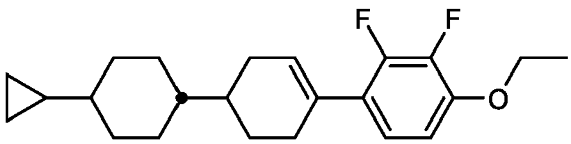

LY-1-4

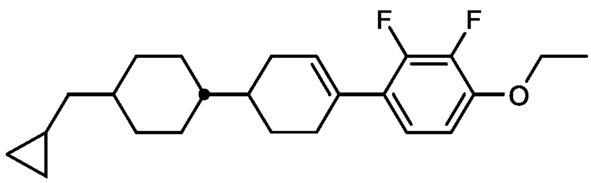

LY-1-5

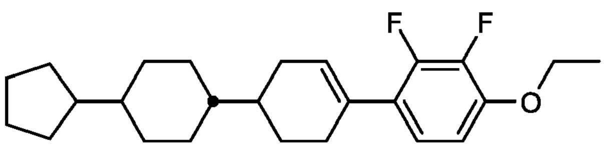

LY-1-6

Alternatively or additionally, the medium comprises the compound LYA-1, LYA-2 and/or LYA-3

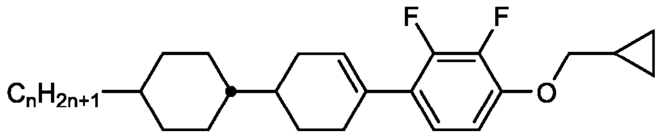

LYA-1

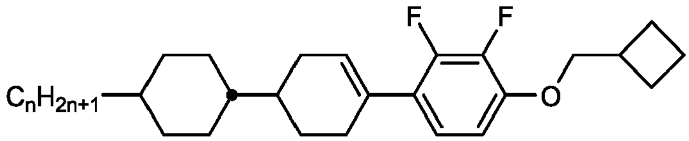

LYA-2

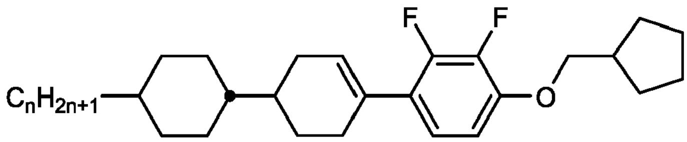

LYA-3

In which n is an integer from 1 to 7.

Preferably, the medium according to the invention comprises one or more compounds of the formula IV

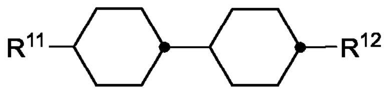

IV

in which

$R^{11}$ denotes a straight chain alkyl radical having 1 to 12 C atoms or a branched or cyclic alkyl radical having 3 to 12 C atoms, or a straight chain alkenyl radical having 2 to 12 C atoms or a branched alkenyl radical having 3 to 12 C atoms or a cyclic alkenyl radical having 5 to 12 C atoms, wherein one or more H atoms are optionally replaced by fluorine, preferably a straight chain alkenyl radical having 2 to 12 C atoms,

$R^{12}$ denotes a straight chain alkyl or alkoxy radical having 1 to 12 C atoms or a branched or cyclic alkyl or alkoxy radical having 3 to 12 C atoms, or a straight chain alkenyl radical having 2 to 12 C atoms or a branched alkenyl radical having 3 to 12 C atoms or a cyclic alkenyl radical having 5 to 12 C atoms, wherein one or more H atoms are optionally replaced by fluorine, preferably a straight chain alkyl radical having 1 to 12 C atoms, very preferably having 1 to 7 C atoms.

The compounds of the formula IV are preferably selected from the group of the compounds of the formulae IV-1 to IV-4, very preferably of the formula IV-3

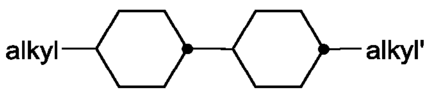

IV-1

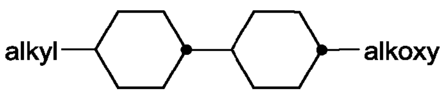

IV-2

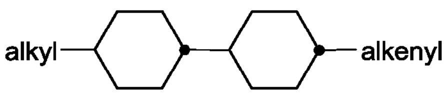

IV-3

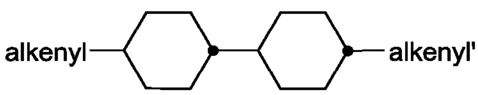

IV-4

in which

alkyl and alkyl', independently of one another, denote alkyl having 1 to 7 C atoms, preferably having 2 to 5 C atoms,
alkoxy denotes alkoxy having 1 to 5 C atoms, preferably having 2 to 4 C atoms,
alkenyl denotes an alkenyl radical having 2 to 5 C atoms, preferably having 2 to 4 C atoms, particularly preferably 2 C atoms, and
alkenyl' denotes an alkenyl radical having 2 to 5 C atoms, preferably having 2 to 4 C atoms, particularly preferably having 2 to 3 C atoms.

In a preferred embodiment, the medium according to the invention comprises one or more compounds of formula IV selected from the compounds of the formulae IV-1 to IV-4 in combination with one or more compounds selected from the group of compounds of the formulae IVA-1 to IVA-18:

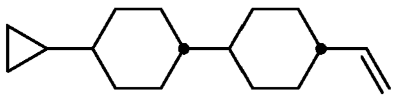

IVA-1

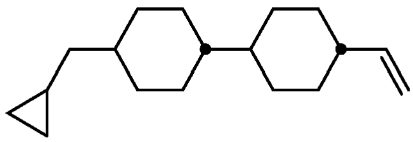

IVA-2

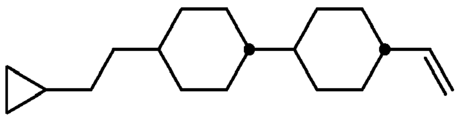

IVA-3

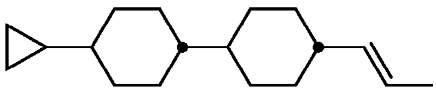

IVA-4

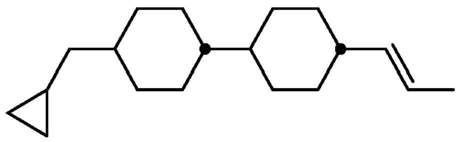

IVA-5

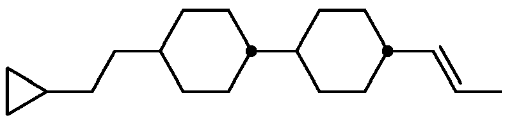

IVA-6

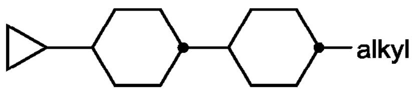

IVA-7

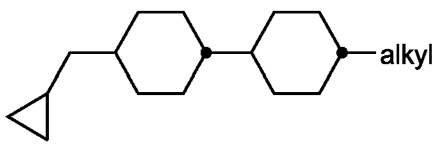

IVA-8

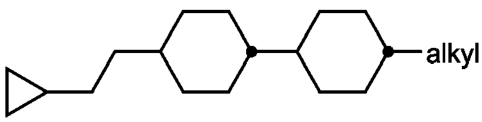

IVA-9

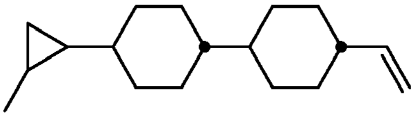

IVA-10

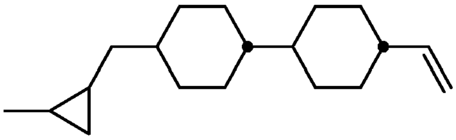

IVA-11

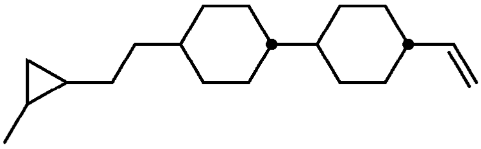

IVA-12

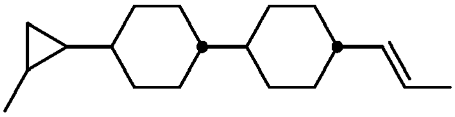

IVA-13

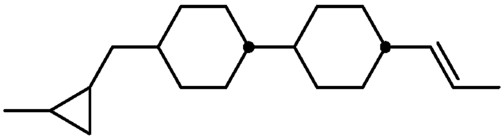

IVA-14

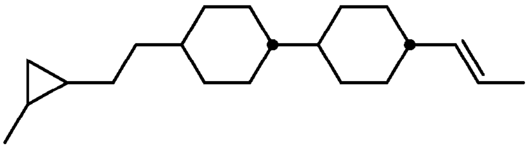

IVA-15

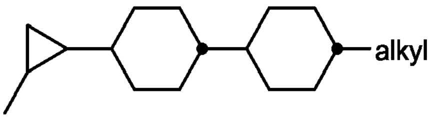

IVA-16

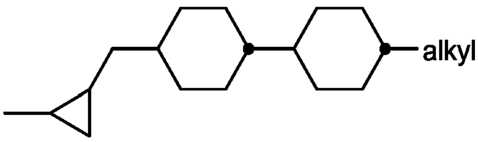

IVA-17

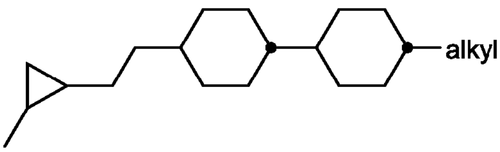

IVA-18

in which alkyl denotes methyl, ethyl, n-propyl, isopropyl, n-butyl, isobutyl, or n-pentyl.

Preferably, the medium comprises one or more compounds of formula IV-1, preferably selected from the compounds of the formulae IV-1-1 to IV-1-6

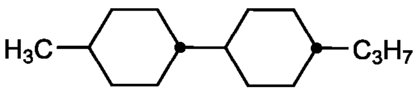

IV-1-1

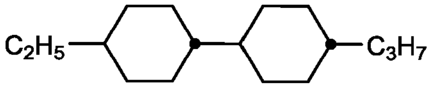

IV-1-2

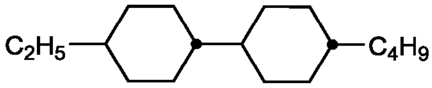

IV-1-3

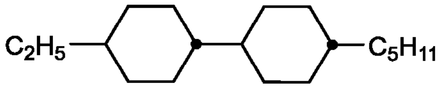

IV-1-4

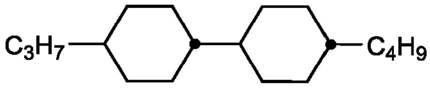

IV-1-5

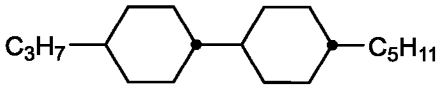

IV-1-6

Preferably, the medium according to the invention comprises one or more compounds of the formulae IV-2-1 and/or IV-2-2

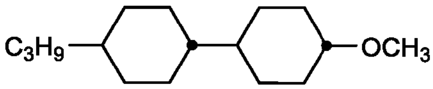

IV-2-1

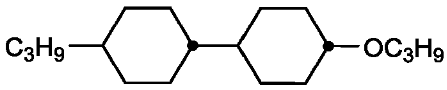

IV-2-2

Preferably, the medium according to the invention comprises a compound of formula IV-3, very preferably selected from the compounds of the formulae IV-3-1 to IV-3-6, in particular the compound of formula IV-3-2 and/or IV-3-6:

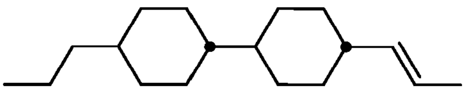

IV-3-1

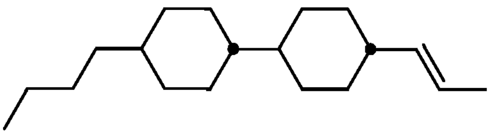

IV-3-2

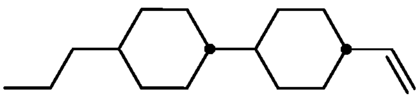

IV-3-3

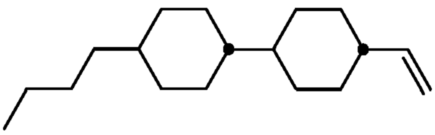

IV-3-4

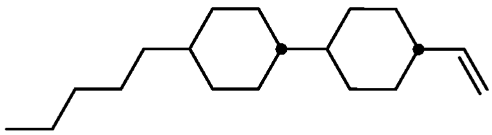

IV-3-5

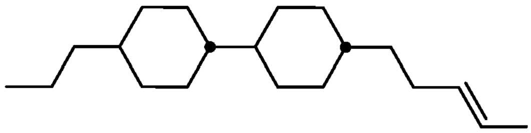

IV-3-6

Preferably, the medium according to the invention comprises a compound of formula IV-4, in particular selected from the compounds of the formulae IV-4-1 and IV-4-2:

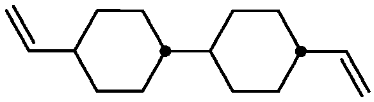

IV-4-1

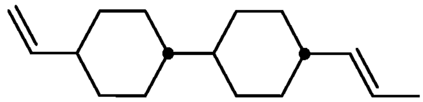

IV-4-2

Preferably, the medium according to the invention comprises one or more compounds of the formula IVa and/or IVb

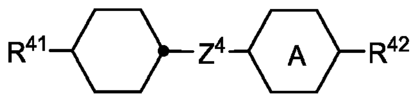

IVa

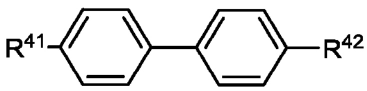

IVb

in which

$R^{41}$ and $R^{42}$ each, independently of one another, denote a straight-chain alkyl, alkoxy, alkenyl, alkoxyalkyl or alkenyloxy radical having up to 12 C atoms, and

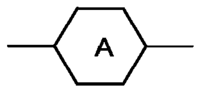

denotes

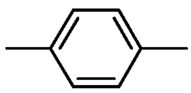 , 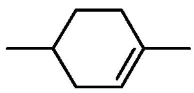 , 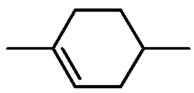 , 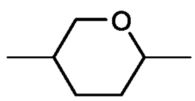

or

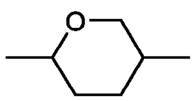 ,

$Z^4$ denotes a single bond, $-CH_2CH_2-$, -CH=CH-, $-CF_2O-$, $-OCF_2-$, $-CH_2O-$, $-OCH_2-$, -COO-, -OCO-, $-C_2F_4-$, $-C_4H_8-$, or -CF=CF-.

Preferred compounds of the formula IVa are selected from the compounds of the formulae IVa-1 to IVa-4:

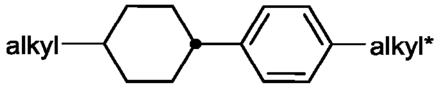

IVa-1

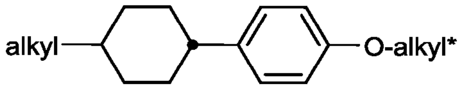

IVa-2

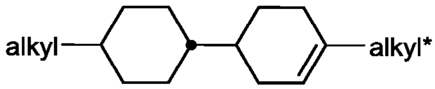

IVa-3

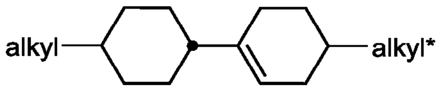

IVa-4

in which

alkyl and alkyl* each, independently of one another, denote a straight-chain alkyl radical having 1 to 6 C atoms.

The medium according to the invention preferably comprises at least one compound of the formula IVa-2.
Preferred compounds of the formula IVb are selected from the compounds of the formulae IVb-1 to IVb-3:

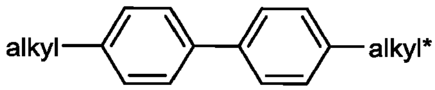

IVb-1

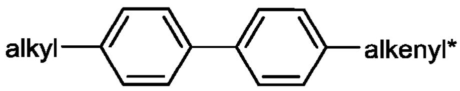

IVb-2

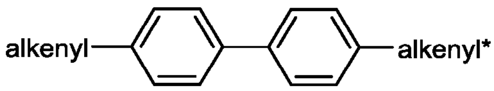

IVb-3

in which

alkyl and alkyl* each, independently of one another, denote a straight-chain alkyl radical having 1 to 6 C atoms, and
alkenyl and alkenyl* each, independently of one another, denote a straight-chain alkenyl radical having 2 to 6 C atoms.

Of the compounds of the formulae IVb-1 to IVb-3, the compounds of the formula IVb-2 are particularly preferred.
Particularly preferred compounds of the formulae IVb are selected from the following compounds:

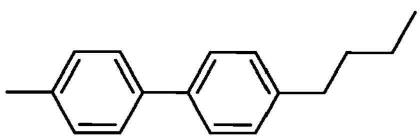

IVb-1-1

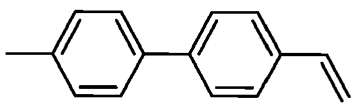

IVb-2-1

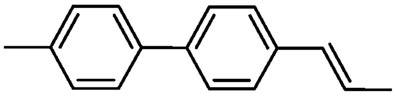

IVb-2-2

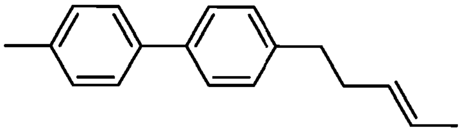

IVb-2-3

The medium according to the invention particularly preferably comprises the compound IVb-2-3.

Preferably, the medium according to the invention comprises one or more compounds of the formula V

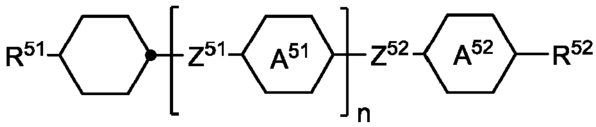

V

in which

$R^{51}$, $R^{52}$ denote alkyl having 1 to 7 C atoms, alkoxy having 1 to 7 C atoms, or alkoxyalkyl, alkenyl or alkenyloxy having 2 to 7 C atoms,

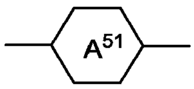
,
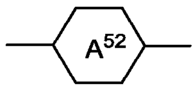
,

identically or differently, denote

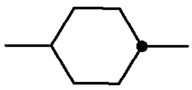
,
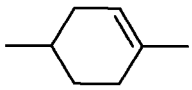
,
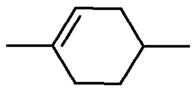
,

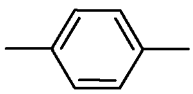
,
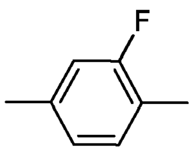
or
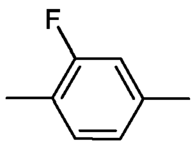
,

$Z^{51}$, $Z^{52}$ each, independently of one another, denote $-CH_2-CH_2-$, $-CH_2-O-$, $-CH=CH-$, $-C\equiv C-$, $-COO-$ or a single bond, and

n is 1 or 2.

The compounds of formula V are preferably selected from the compounds of the formulae V-1 to V-17:

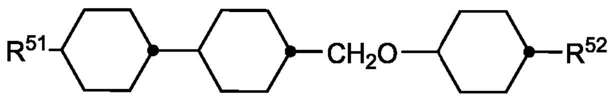

V-1

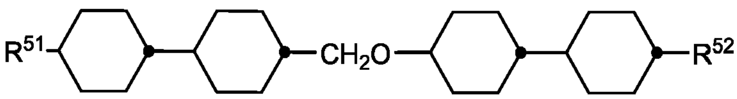

V-2

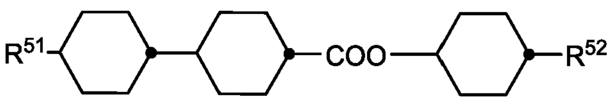

V-3

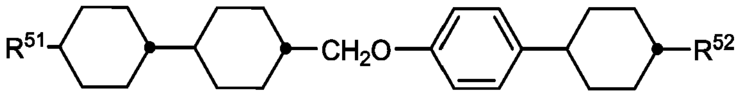

V-4

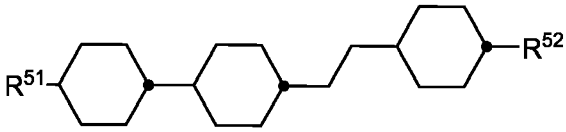

V-5

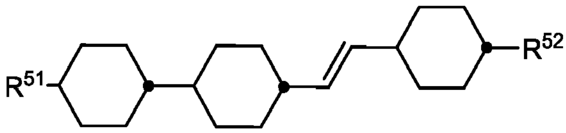

V-6

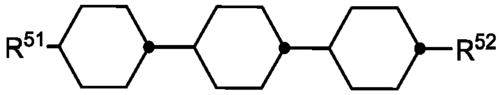

V-7

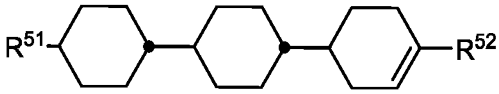

V-8

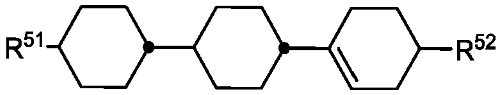

V-9

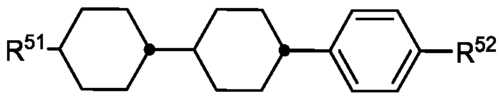

V-10

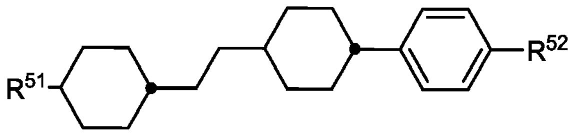

V-11

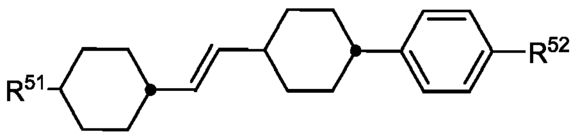

V-12

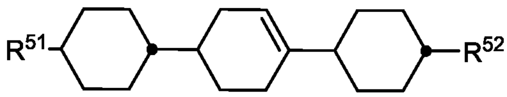

V-13

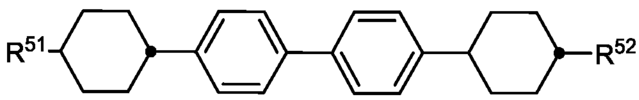

V-14

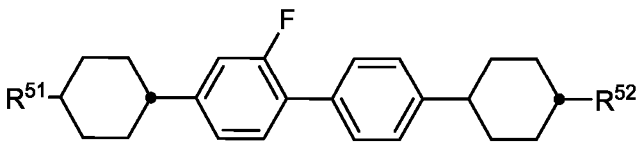

V-15

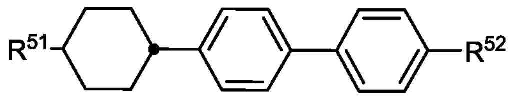

V-16

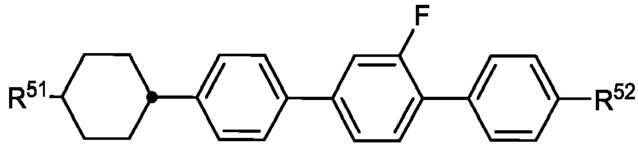

V-17

in which $R^{51}$ and $R^{52}$ have the meanings indicated above for formula V.

$R^{51}$ and $R^{51}$ preferably each, independently of one another, denote straight-chain alkyl having 1 to 7 C atoms or alkenyl having 2 to 7 C atoms.

Preferred media comprise one or more compounds of the formulae V-1, V-3, V-4, V-6, V-7, V-10, V-11, V-12, V-14, V-15, V-16 and/or V-17. Very preferably, the medium comprises one or more compounds of the formulae V-6, V-10, V-16 and/or V-17, in particular V-6 and V-10 and V-17.

In a preferred embodiment of the present invention the medium additionally comprises one or more compounds of the formulae VI-1 to VI-9

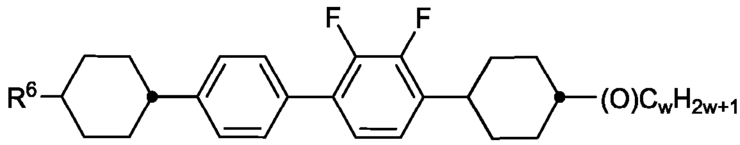

VI-1

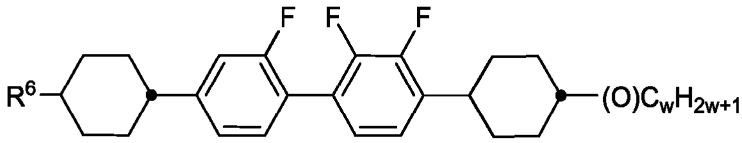

VI-2

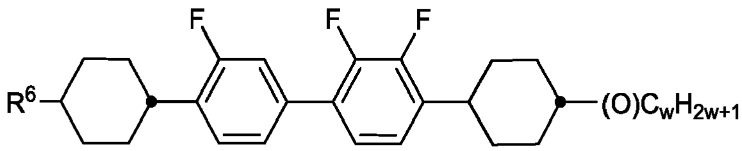

VI-3

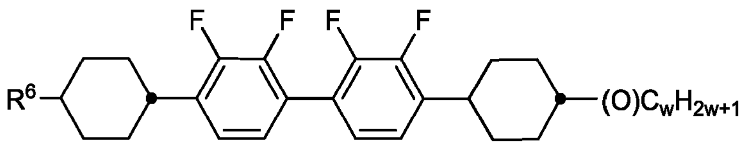

VI-4

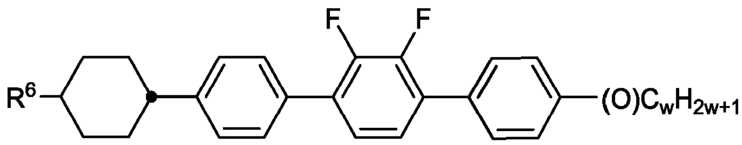

VI-5

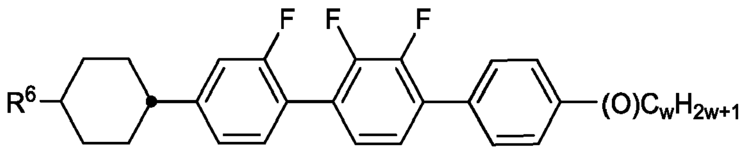

VI-6

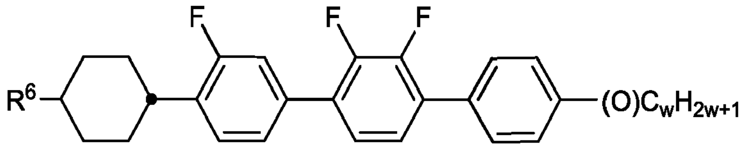
VI-7

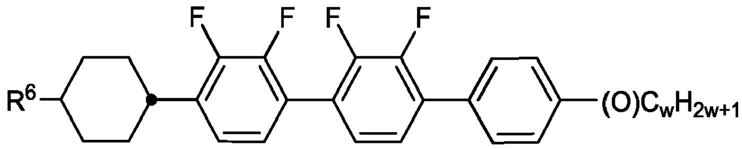
VI-8

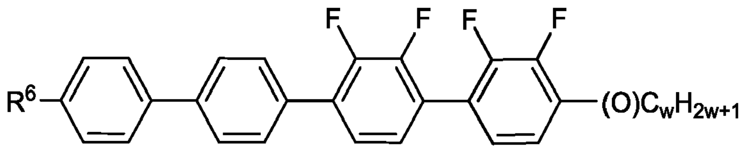
VI-9

in which

$R^6$ each, independently of one another, have one of the meanings indicated for $R^1$ in Claim 1, and
w each, independently of one another, denote an integer from 1 to 6.

In a preferred embodiment of the present invention the medium additionally comprises one or more compounds of the formulae VII-1 to VII-21,

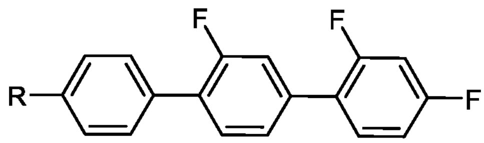
VII-1

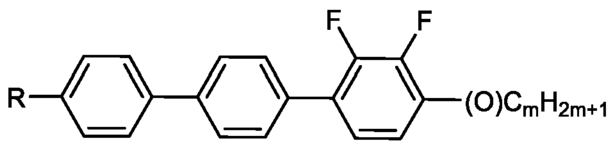
VII-2

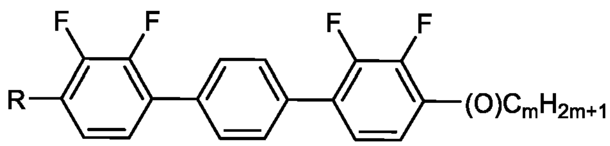
VII-3

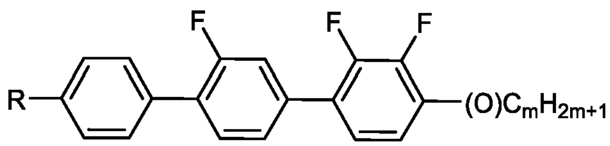
VII-4

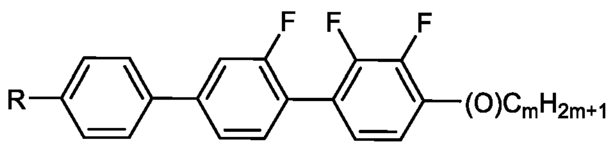
VII-5

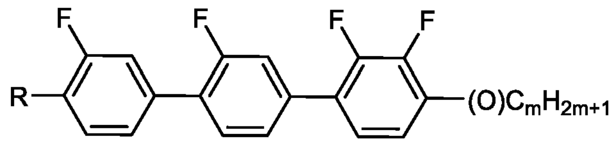

VII-6

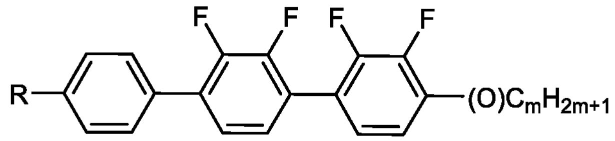

VII-7

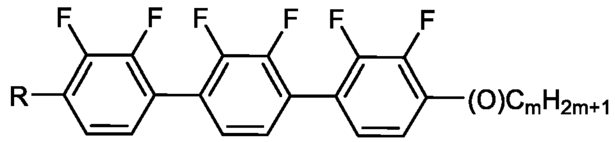

VII-8

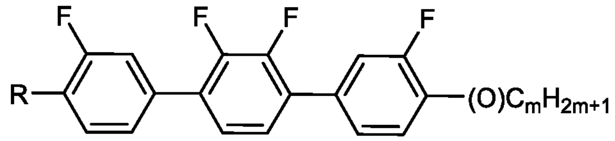

VII-9

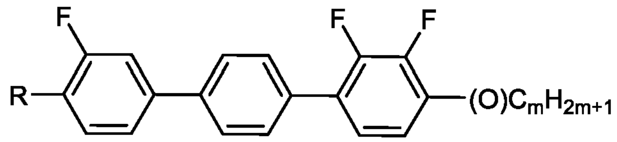

VII-10

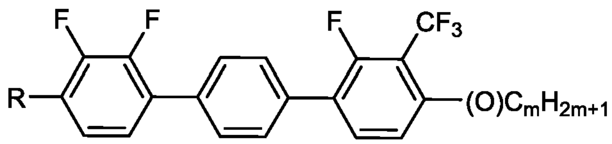

VII-11

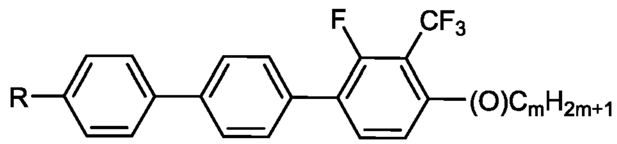

VII-12

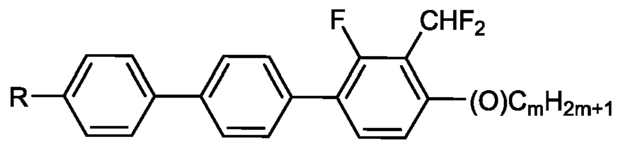

VII-13

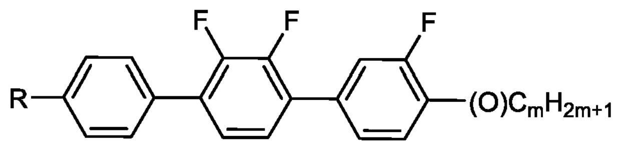

VII-14

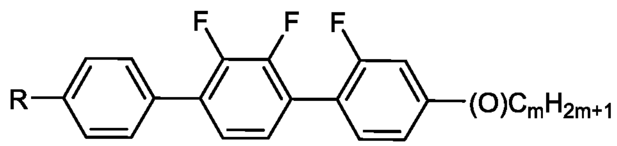

VII-15

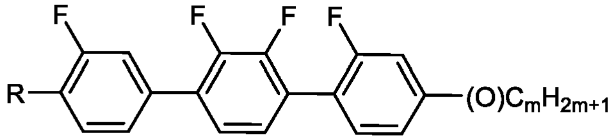

VII-16

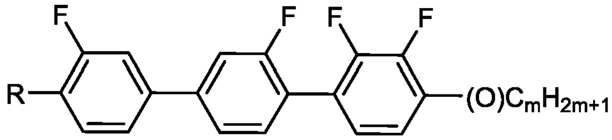

VII-17

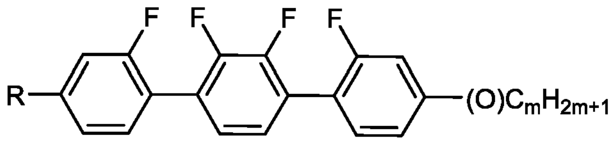

VII-18

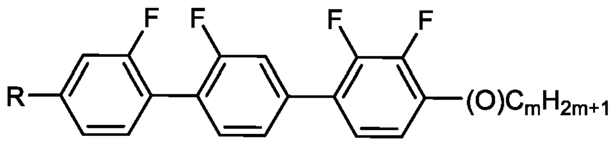

VII-19

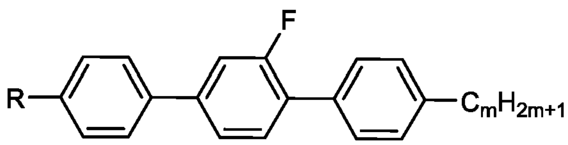

VII-20

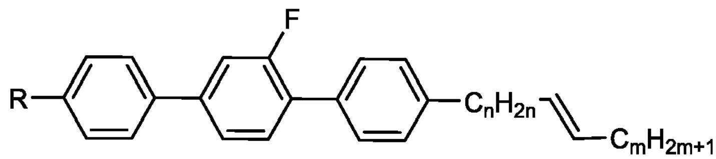

VII-21

in which

R denotes a straight-chain alkyl or alkoxy radical having 1 to 6 C atoms, (O) denotes -O- or a single bond, and m is 0, 1, 2, 3, 4, 5 or 6 and n is 0, 1, 2, 3 or 4, and
R preferably denotes methyl, ethyl, propyl, butyl, pentyl, hexyl, methoxy, ethoxy, propoxy, butoxy, pentoxy.

Particular preference is given to compounds of the formulae VII-1, VII-2, VII-4, VII-20 and VII-21. In these compounds, R preferably denotes alkyl, furthermore alkoxy, each having 1 to 5 C atoms. In the compounds of the formula VII-20, R preferably denotes alkyl or alkenyl, in particular alkyl. In the compound of the formula VII-21, R preferably denotes alkyl.

Preferably, the medium according to the invention comprises one or more compounds with negative dielectric anisotropy in addition to the compound of formula LY, selected from the group consisting of the formulae YA, YB, YC and YD, B, BA-1 and BA-2 below:

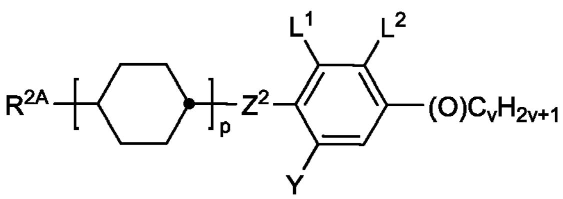

YA

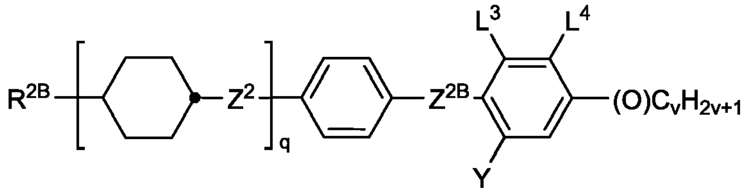

YB

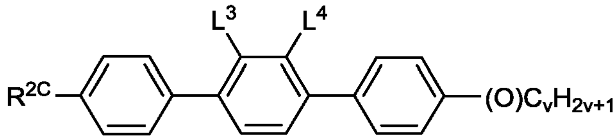

YC

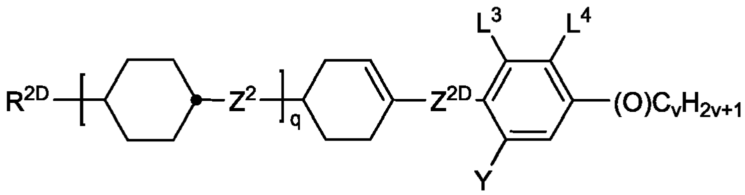

YD

in which

| | |
|---|---|
| $R^{2A}$, $R^{2B}$, $R^{2C}$ and $R^{2D}$ | each, independently of one another, denote H, an alkyl or alkenyl radical having up to 15 C atoms which is unsubstituted, monosubstituted by CN or $CF_3$ or at least monosubstituted by halogen, where, in addition, one or more $CH_2$ groups in these radicals may be replaced by -O-, -S-, |

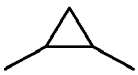, 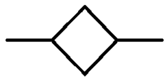, 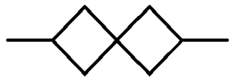, 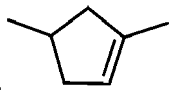, 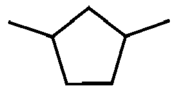,

| | |
|---|---|
| | -C≡C-, $-CF_2O-$, $-OCF_2-$, -OC-O- or -O-CO- in such a way that O atoms are not linked directly to one another, |
| $L^1$ to $L^4$ | each, independently of one another, denote F, Cl, $CF_3$ or $CHF_2$, |
| Y | denotes H, F, Cl, $CF_3$, $CHF_2$ or $CH_3$, preferably H or $CH_3$, very preferably H, |
| $Z^2$, $Z^{2B}$ and $Z^{2D}$ | each, independently of one another, denote a single bond, $-CH_2CH_2-$, -CH=CH-, $-CF_2O-$, $-OCF_2-$, $-CH_2O-$, $-OCH_2-$, -COO-, -OCO-, $-C_2F_4-$, -CF=CF- or $-CH=CHCH_2O-$, |
| p | denotes 0, 1 or 2, |
| q | denotes 0 or 1, and |
| v | denotes 1, 2, 3, 4, 5, or 6, |

where the compounds of formula LY are excluded from formula YD.

Preferred compounds of the formulae YA, YB, YC and YD are indicated below:

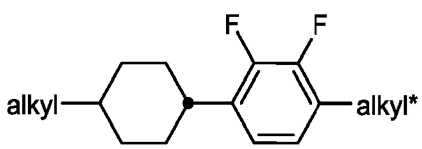

YA-1

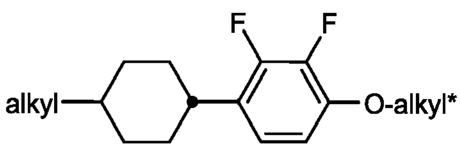

YA-2

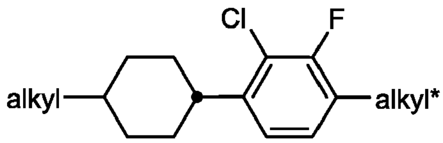

YA-3

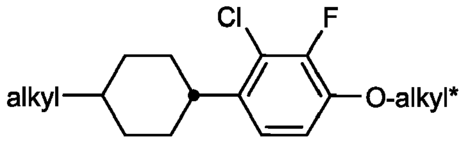

YA-4

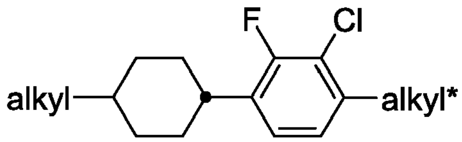

YA-5

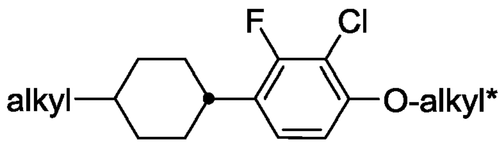

YA-6

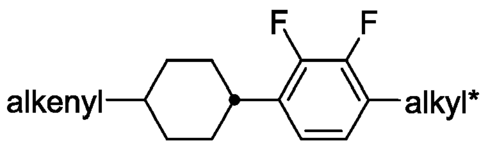

YA-7

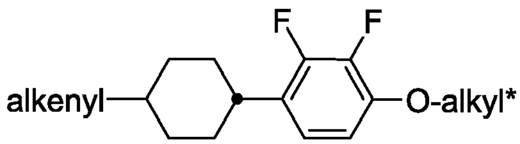

YA-8

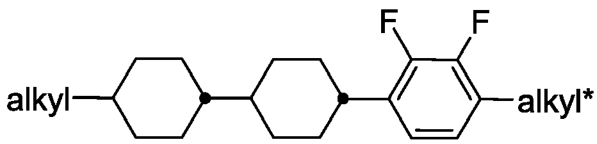

YA-9

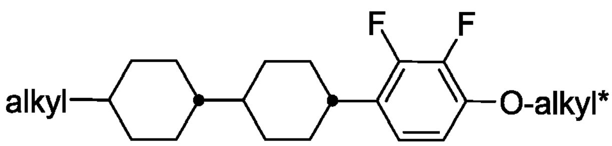

YA-10

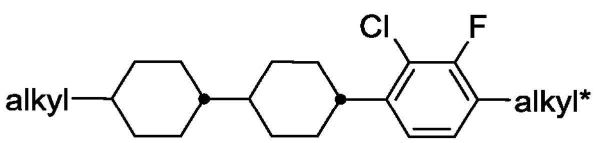

YA-11

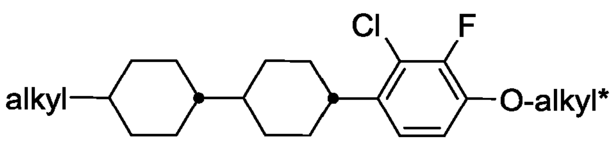

YA-12

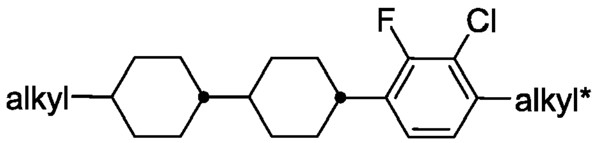

YA-13

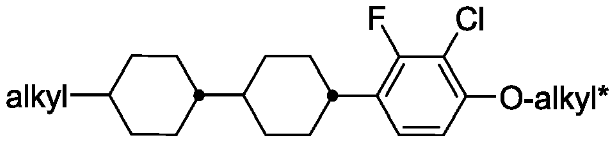

YA-14

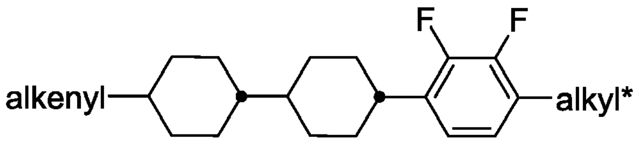

YA-15

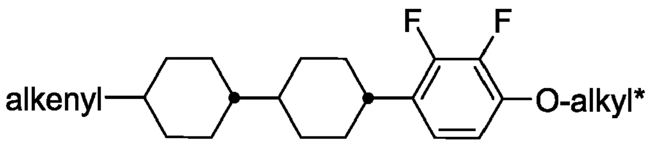

YA-16

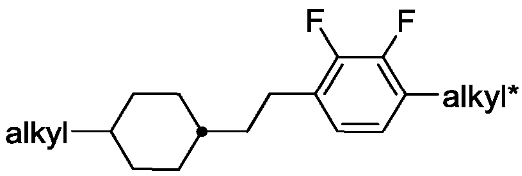

YA-17

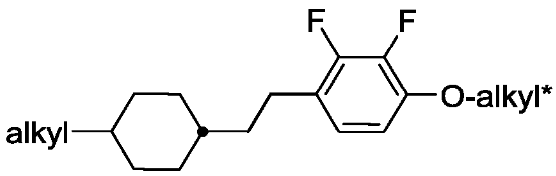

YA-18

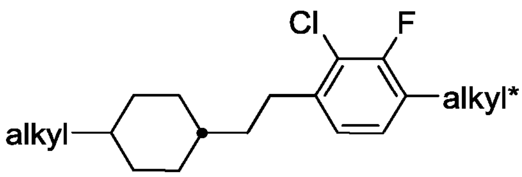

YA-19

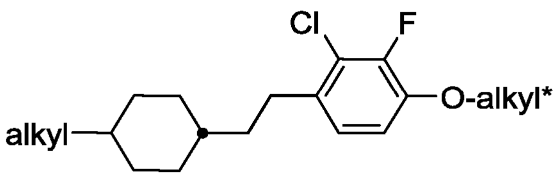

YA-20

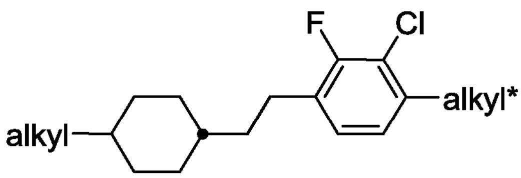

YA-21

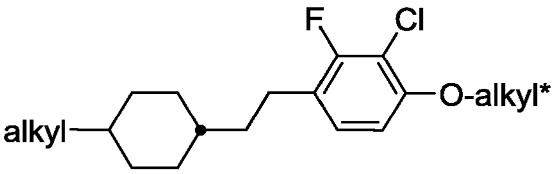

YA-22

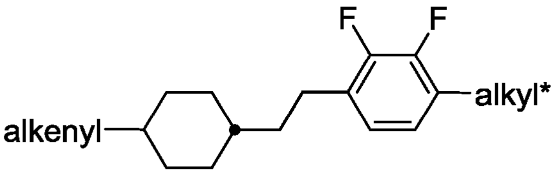

YA-23

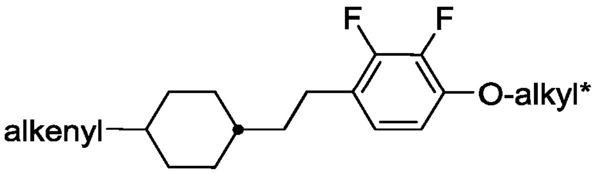

YA-24

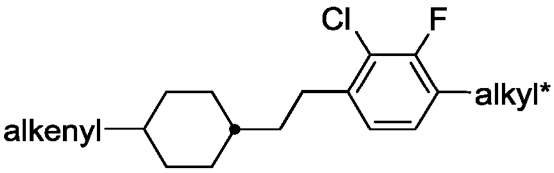

YA-25

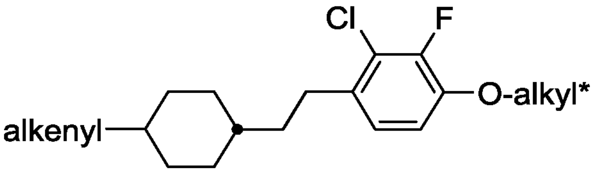

YA-26

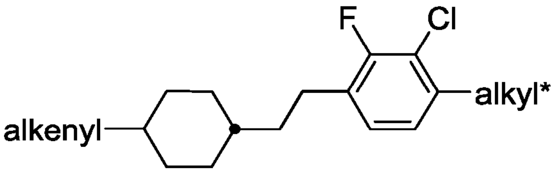

YA-27

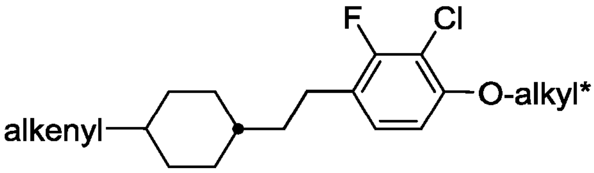

YA-28

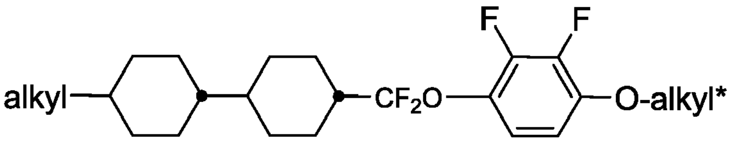

YA-29

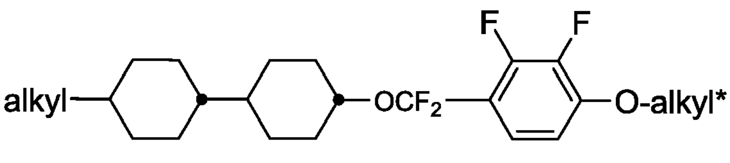

YA-30

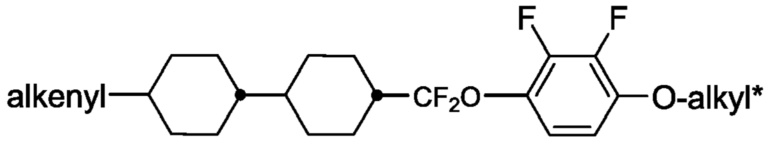
YA-31

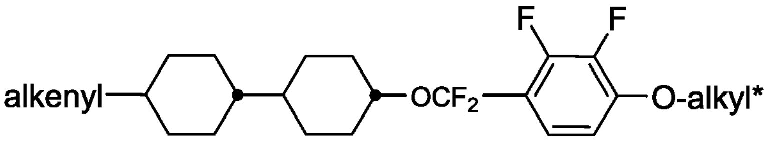
YA-32

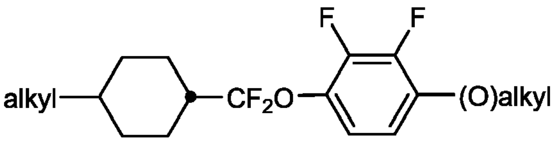
YA-33

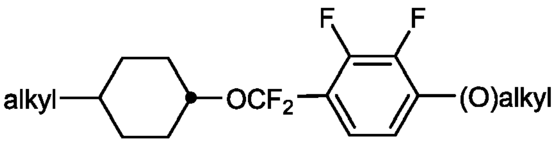
YA-34

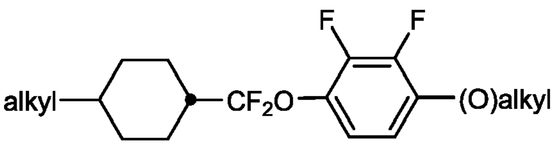
YA-35

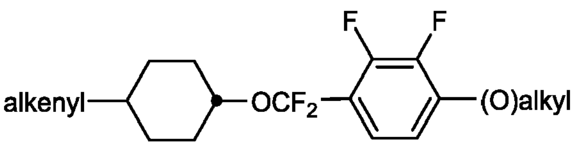
YA-36

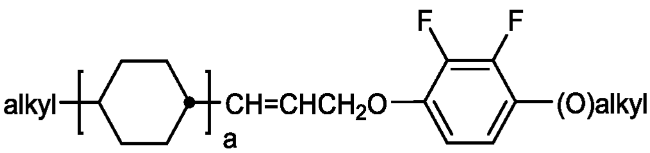
YA-37

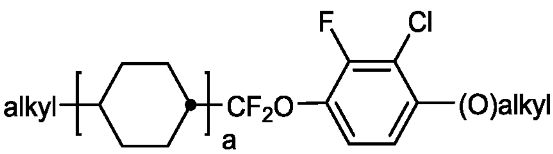
YA-38

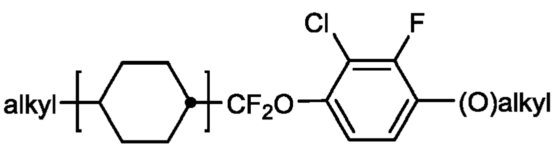
YA-39

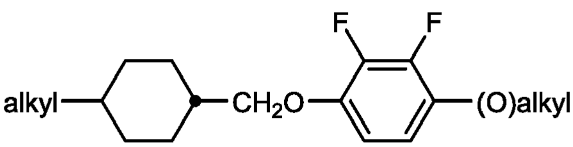
YA-40

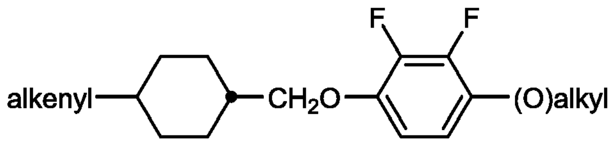
YA-41

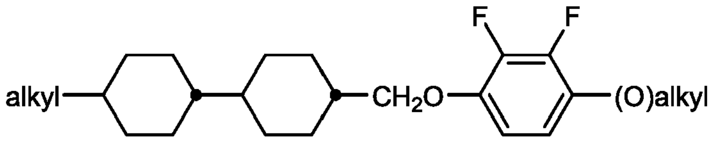
YA-42

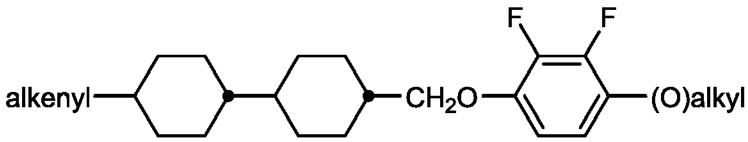
YA-43

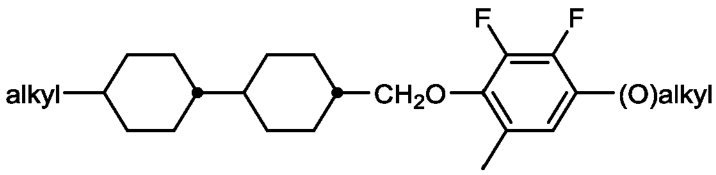
YA-44

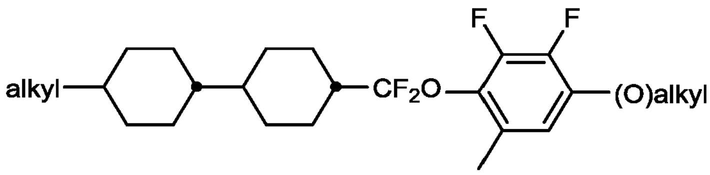
YA-45

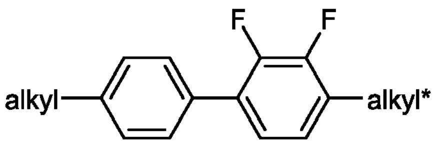
YB-1

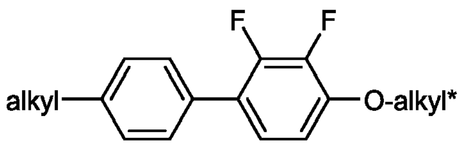
YB-2

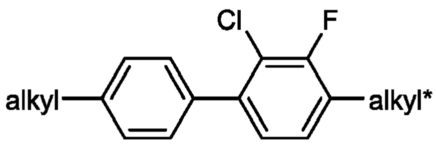
YB-3

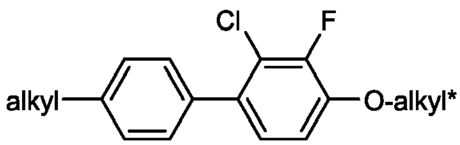
YB-4

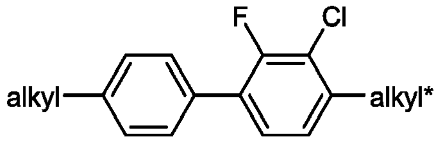

YB-5

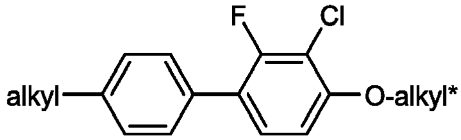

YB-6

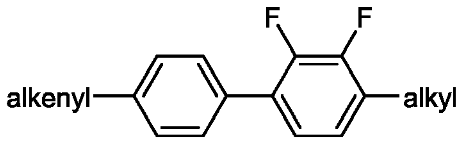

YB-7

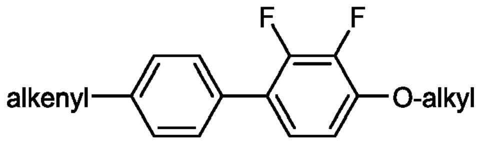

YB-8

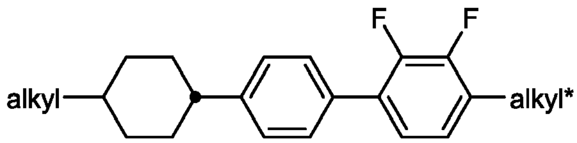

YB-9

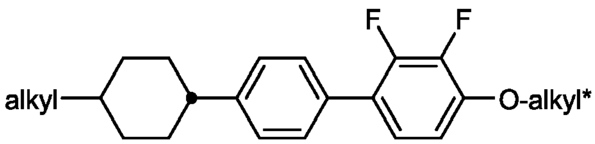

YB-10

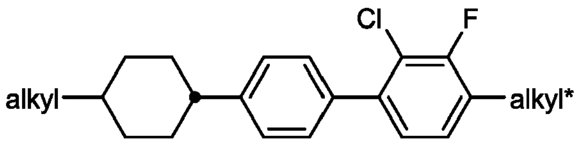

YB-11

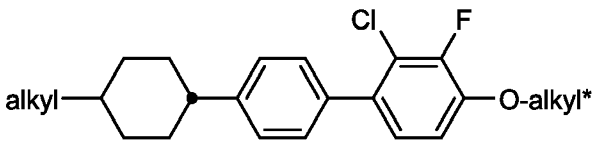

YB-12

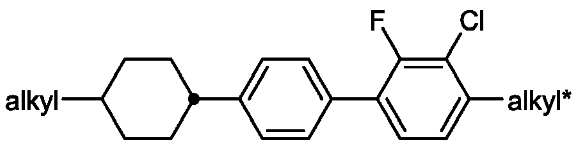

YB-13

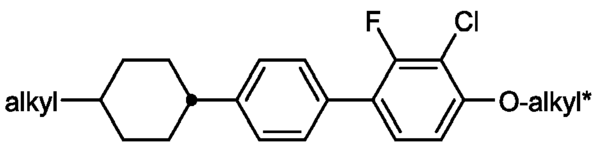

YB-14

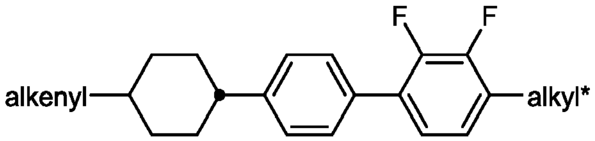

YB-15

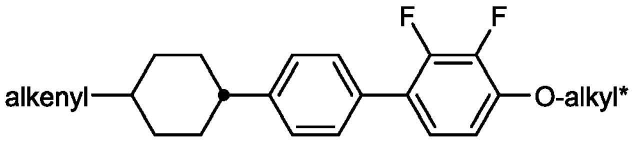

YB-16

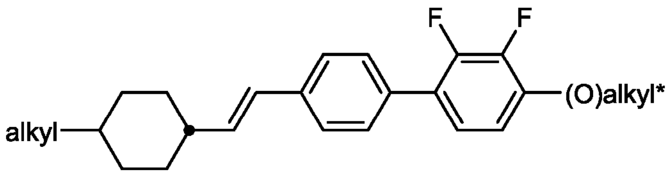

YB-17

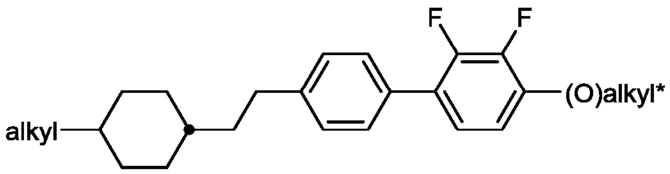

YB-18

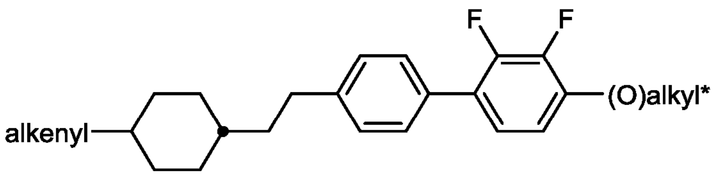

YB-19

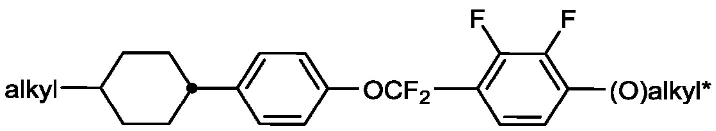

YB-20

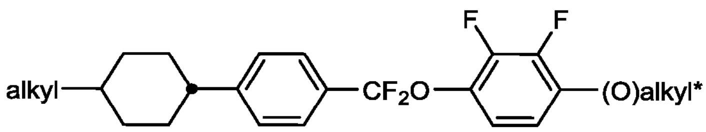

YB-21

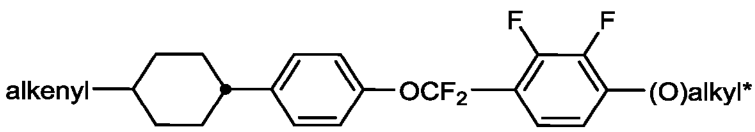

YB-22

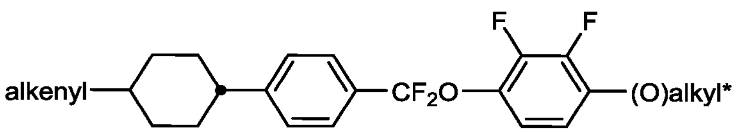

YB-23

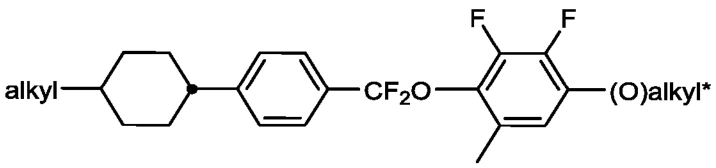
YB-24

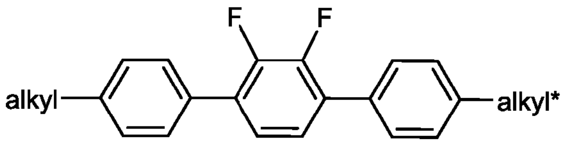
YC-1,

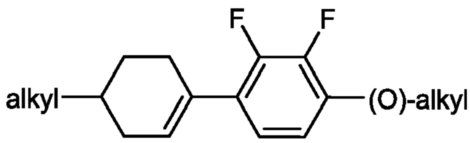
YD-1

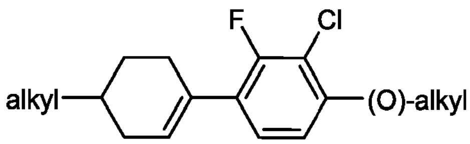
YD-2

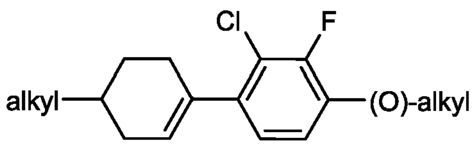
YD-3

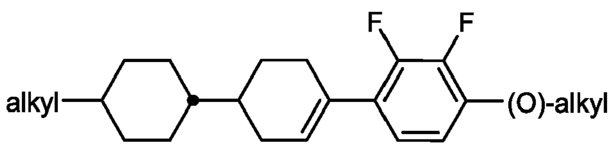
YD-4

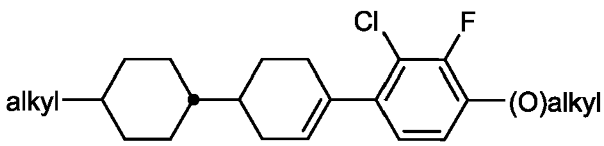
YD-5

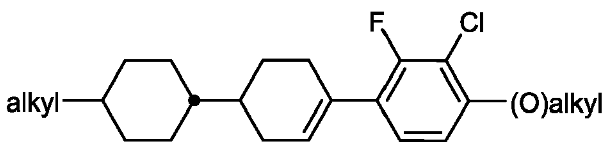
YD-6

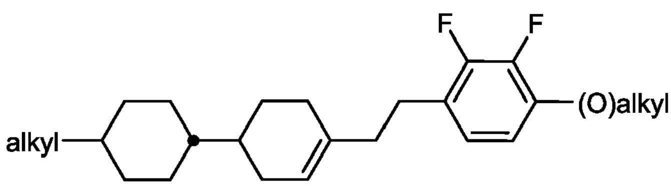
YD-7

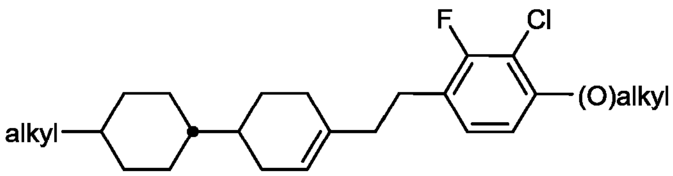

YD-8

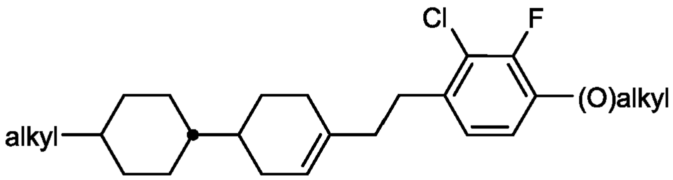

YD-9

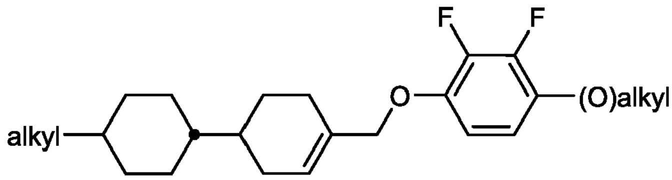

YD-10

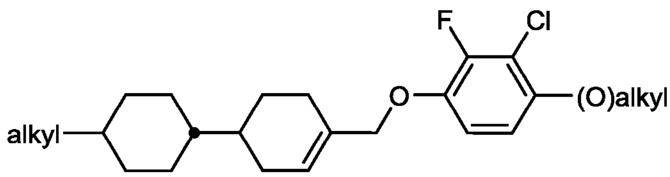

YD-11

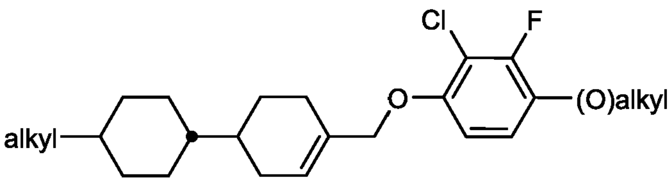

YD-12

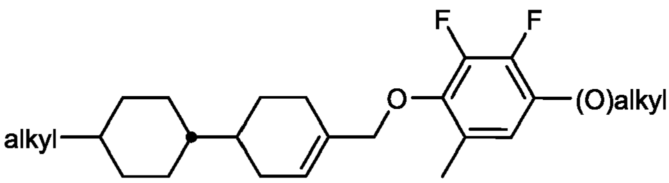

YD-13

in which the parameter a denotes 1 or 2, alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred mixtures according to the invention comprise one or more compounds of the formulae YA-2, YA-8, YA-10, YA-16, YA-18, YA-40, YA-41, YA-42, YA-43, YB-2, YB-10, YB-16, YC-1, YD-4 and YD-10.

The proportion of compounds of the formulae YA and/or YB in the mixture as a whole is preferably at least 20 % by weight.

Preferred media according to the invention comprise at least one compound of the formula YC-1,

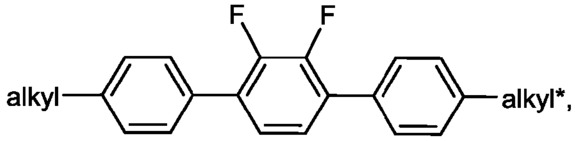

in which alkyl and alkyl* have the meanings indicated above, preferably in amounts of < 5 % by weight, in particular > 3 % by

weight.

In particular, the medium comprises one or more compounds of the formula YA-2 selected from the following sub-formulae:

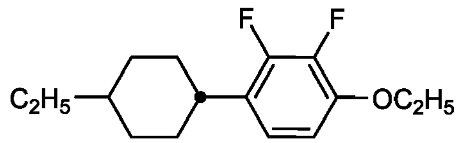

YA-2-1

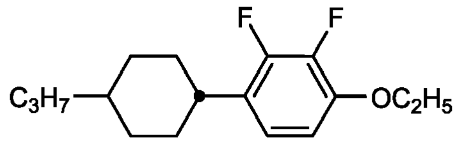

YA-2-2

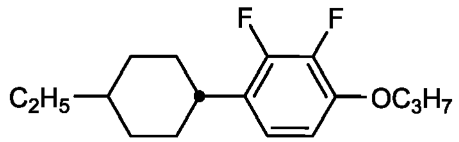

YA-2-3

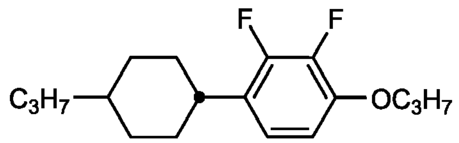

YA-2-4

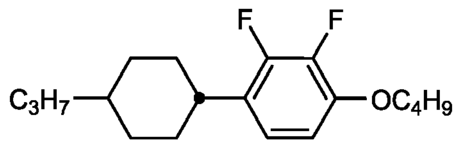

YA-2-5

Alternatively, preferably in addition to the compounds of the formulae YA-2-1 to YA-2-5, the medium comprises one or more compounds of the formulae YA-2a-1 to YA-2a-5:

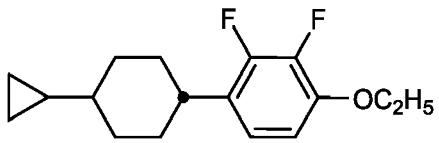

YA-2a-1

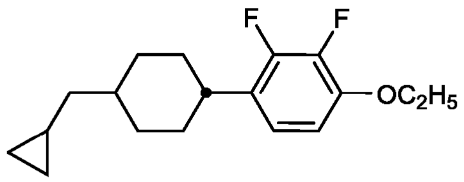

YA-2a-2

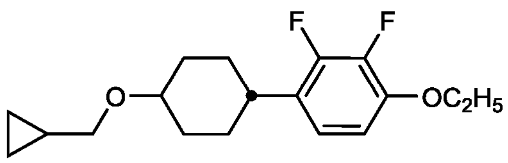

YA-2a-3

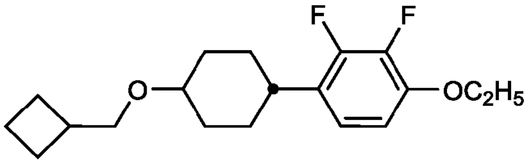

YA-2a-4

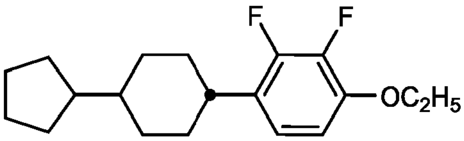

YA-2a-5

In particular, the medium comprises one or more compounds of the formula YA-10 selected from the following sub-formulae:

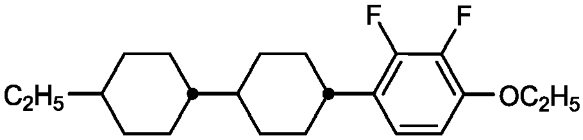

YA-10-1

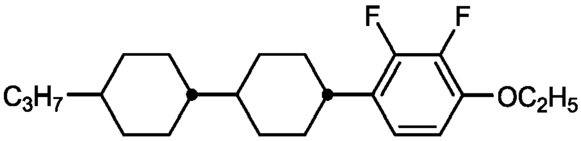

YA-10-2

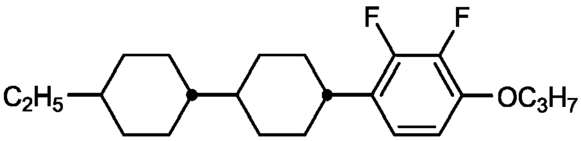

YA-10-3

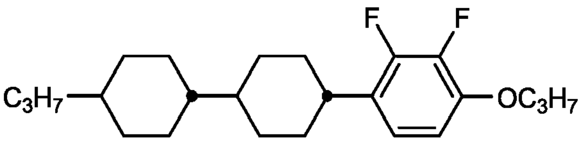

YA-10-4

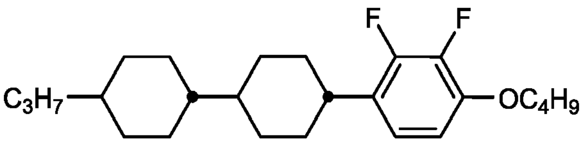

YA-10-5

Alternatively, preferably in addition to the compounds of the formulae YA-10-1 to YA-10-5, the medium comprises one or more compounds of the formulae YA-10a-1 to YA-10a-5:

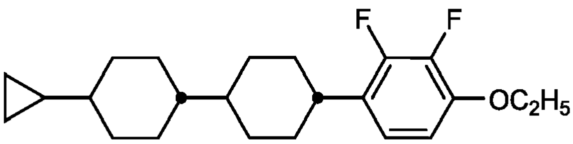

YA-10a-1

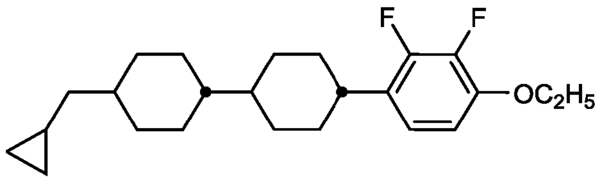

YA-10a-2

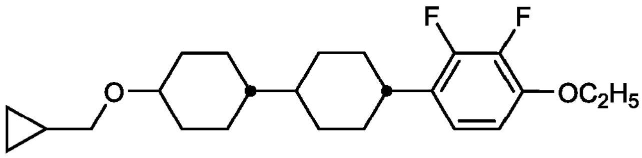

YA-10a-3

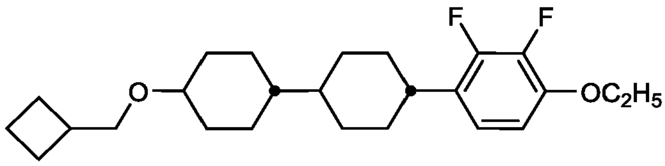

YA-10a-4

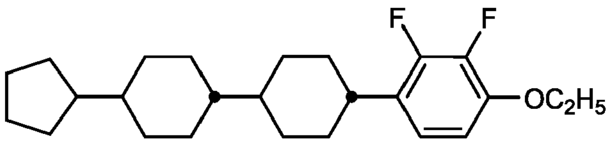

YA-10a-5

In particular, the medium comprises one or more compounds of the formula YB-10 selected from the following sub-formulae:

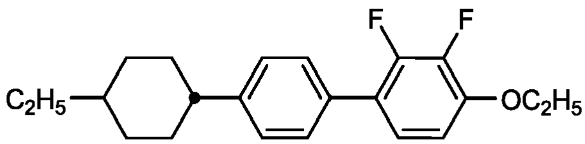

YB-10-1

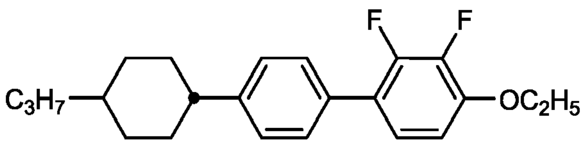

YB-10-2

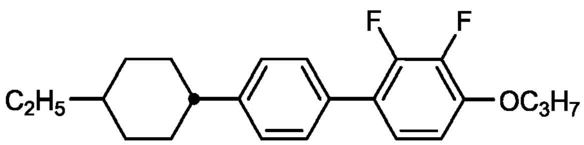

YB-10-3

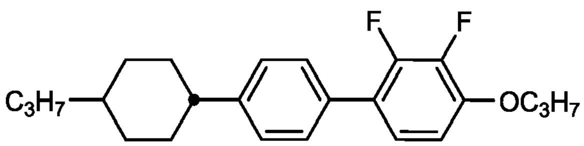

YB-10-4

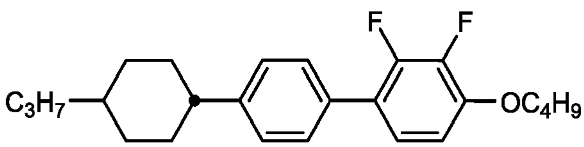

YB-10-5

Alternatively, preferably in addition to the compounds of the formulae YB-10-1 to YB-10-5, the medium comprises one or more compounds of the formulae YB-10a-1 to YB-10a-5:

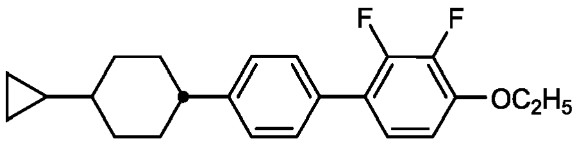

YB-10a-1

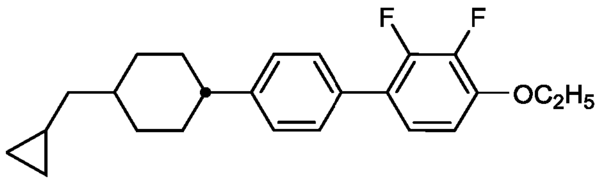

YB-10a-2

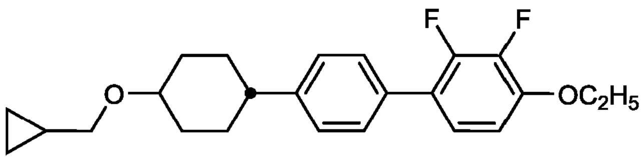

YB-10a-3

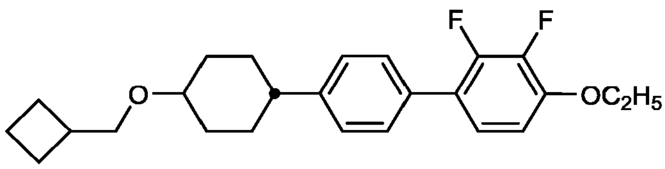

YB-10a-4

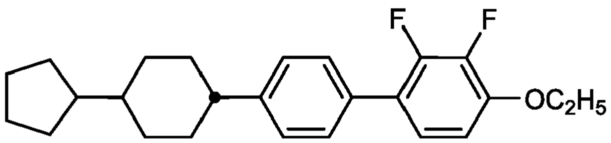

YB-10a-5

The medium according to the invention optionally comprises one or more compounds of formula B

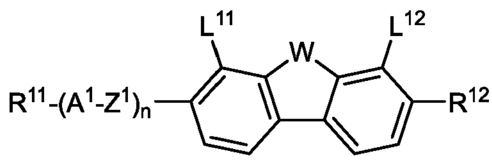

B

in which

$R^{11}$ and $R^{12}$ each, independently of one another, denote H, an alkyl or alkoxy radical having 1 to 15 C atoms, where one or more $CH_2$ groups in these radicals may each be replaced, independently of one another, by

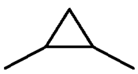, 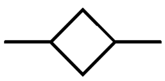, 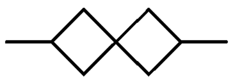, 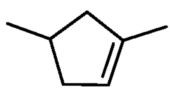, 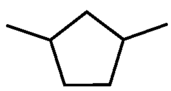,

-C≡C-, $-CF_2O-$, $-OCF_2-$, -CH=CH-, by -O-, -CO-O- or -O-CO- in such a way that O atoms are not linked directly to one another, and in which one or more H atoms may be replaced by halogen,

$A^1$ on each occurrence, independently of one another, denotes a) 1,4-cyclohexenylene or 1,4-cyclohexylene radical, in which one or two non-adjacent $CH_2$ groups may be replaced by -O- or -S-, b) a 1,4-phenylene radical, in which one or two CH groups may be replaced by N, or c) a radical from the group spiro[3.3]heptane-2,6-diyl, 1,4-bicyclo-[2.2.2]octylene, naphthalene-2,6-diyl, decahydronaphthalene-2,6-diyl, 1,2,3,4-tetrahydronaphthalene-2,6-diyl, phenanthrene-2,7-diyl and fluorene-2,7-diyl, where the radicals a), b) and c) may be mono- or polysubstituted by halogen atoms,

n denotes 0, 1 or 2, preferably 0 or 1,

$Z^1$ on each occurrence independently of one another denotes -CO-O-, -O-CO-, $-CF_2O-$ , $-OCF_2-$, $-CH_2O-$, $-OCH_2-$, $-CH_2-$, $-CH_2CH_2-$, $-(CH_2)_4-$, $-CH=CH-CH_2O-$, $-C_2F_4-$, $-CH_2CF_2-$, $-CF_2CH_2$ -, -CF=CF-, -CH=CF-, -CF=CH-, -CH=CH-, -C≡C- or a single bond, and

$L^{11}$ and $L^{12}$ each, independently of one another, denote F, Cl, $CF_3$ or $CHF_2$, preferably H or F, most preferably F, and

W denotes O or S.

The compounds of formula B are preferably selected from the compounds of the formula B-1 and/or B-2

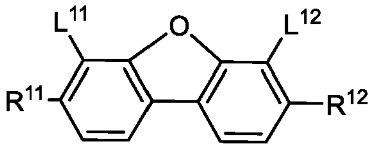

B-1

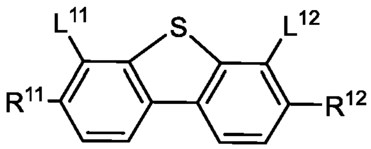

B-2

in which the occurring groups have the same meanings as given under formula B above and preferably

$R^{11}$ and $R^{12}$ each, independently of one another, an alkyl, alkenyl or alkoxy radical having up to 15 C atoms, more preferably one or both of them denote an alkoxy radical and

$L^{11}$ and $L^{12}$ each preferably denote F.

Preferably, the compounds of the formula B-1 selected from the group of compounds of formulae B-1-1 to B-1-11, preferably of formula B-1-6,

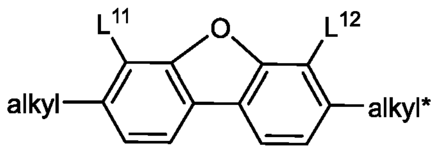

B-1-1

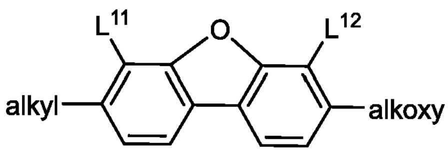

B-1-2

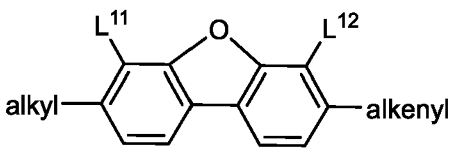

B-1-3

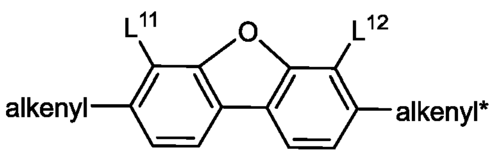

B-1-4

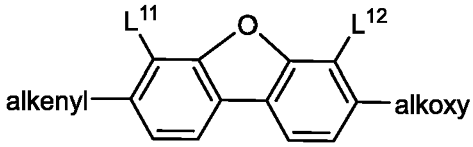

B-1-5

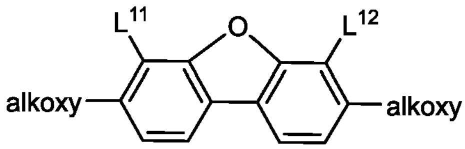

B-1-6

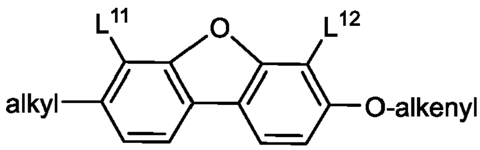

B-1-7

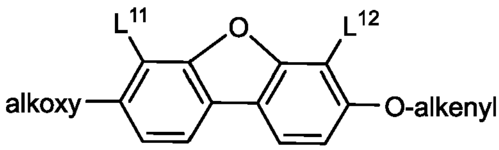

B-1-8

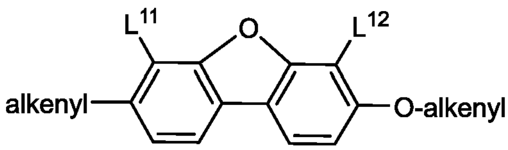

B-1-9

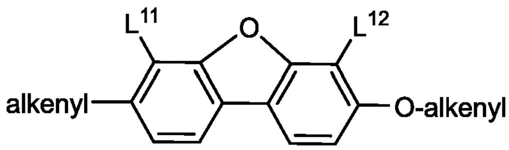

B-1-10,

in which

alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and $L^{11}$ and $L^{12}$ each, independently of one another, denote F or Cl, preferably both F.

Preferably, the compounds of the formula B-2 are selected from the group of compounds of formulae B-2-1 to B-2-10, preferably of formula B-2-6,

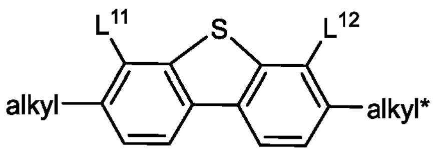

B-2-1

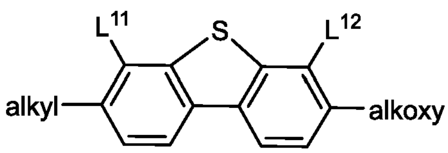

B-2-2

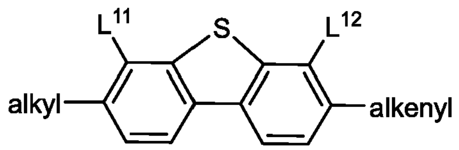

B-2-3

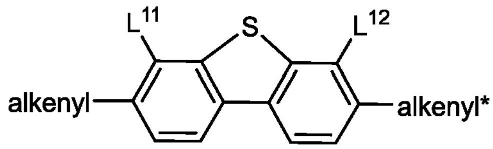

B-2-4

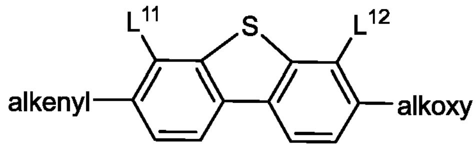

B-2-5

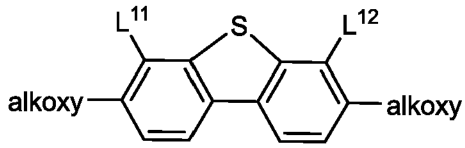

B-2-6

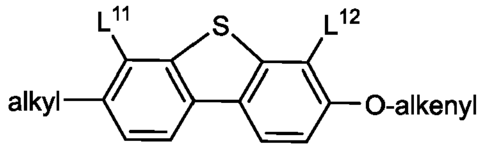

B-2-7

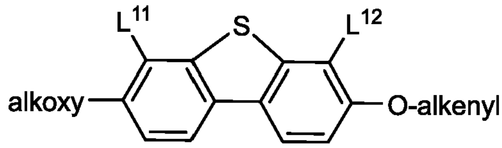

B-2-8

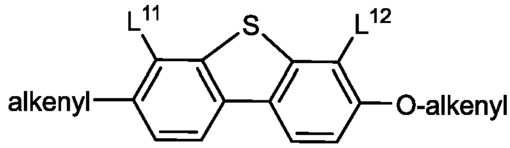

B-2-9

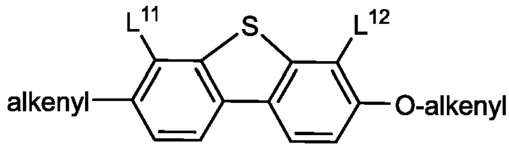

B-2-10,

in which
alkyl and alkyl* each, independently of one another, denote a straight-chain alkyl radical having 1-6 C atoms, alkenyl and alkenyl* each, independently of one another, denote a straight-chain alkenyl radical having 2-6 C atoms, alkoxy and alkoxy* each, independently of one another, denote a straight-chain alkoxy radical having 1-6 C atoms, and $L^1$ and $L^2$ each, independently of one another, denote F or Cl, preferably both F.

Optionally the medium comprises one or more compounds of the formula BA-1 and/or BA-2

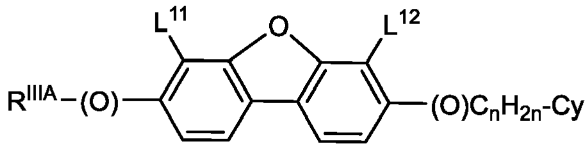

BA-1

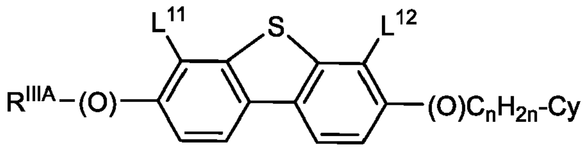

BA-2

in which $L^{11}$ and $L^{12}$ have the same meanings as given under formula B, (O) denotes O or a single bond,

$R^{IIIA}$ denotes alkyl or alkenyl having up to 7 C atoms or a group Cy-$C_mH_{2m+1}$-, m and n are, identically or differently, 0, 1, 2, 3, 4, 5 or 6, preferably 1, 2 or 3, very preferably 1,

Cy denotes a cycloaliphatic group having 3, 4 or 5 ring atoms, which is optionally substituted with alkyl or alkenyl each having up to 3 C atoms, or with halogen or CN, and preferably denotes cyclopropyl, cyclobutyl or cyclopentyl.

The compounds of formula BA-1 and/or BA-2 are contained in the medium either alternatively or in addition to the compounds of formula B, preferably additionally.

Very preferred compounds of the formulae BA-1 and BA-2 are the following:

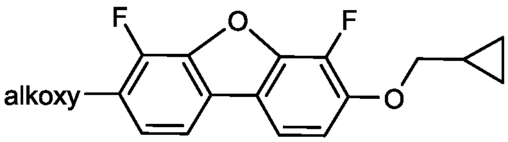

BA-1-1

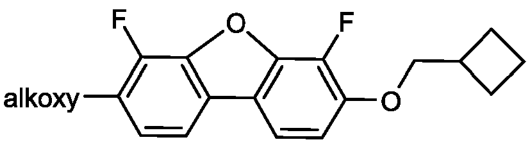

BA-1-2

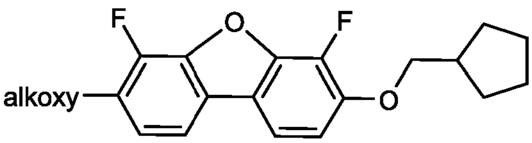

BA-1-3

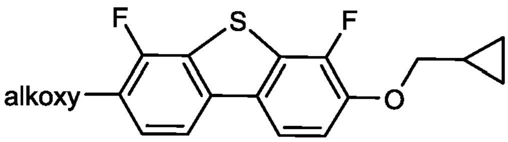

BA-1-1

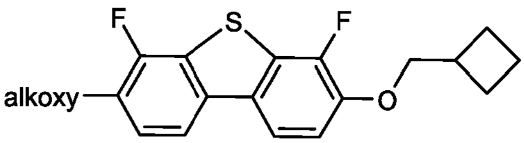

BA-1-2

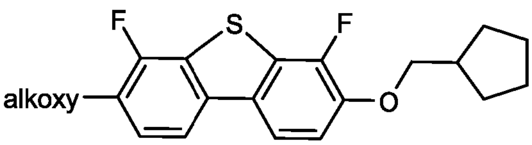

BA-1-3

in which alkoxy denotes a straight-chain alkoxy radical having 1-6 C atoms or alternatively $-(CH_2)_nF$ in which n is 2,3,4, or 5, preferably $C_2H_4F$.

In a preferred embodiment of the present invention, the medium comprises one or more compounds of formula B-3

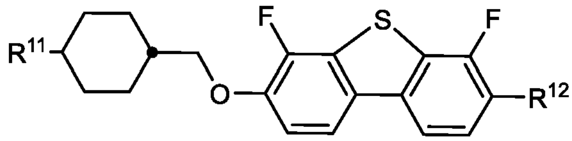

B-3

in which

$R^{11}$, $R^{12}$ identically or differently, denote H, an alkyl or alkoxy radical having 1 to 15 C atoms, in which one or more $CH_2$ groups in these radicals are optionally replaced, independently of one another, by -C≡C-, $-CF_2O-$, $-OCF_2-$, -CH=CH-,

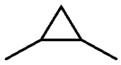 , 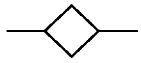 ,

-O-, -CO-O- or -O-CO- in

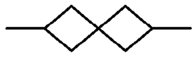 , 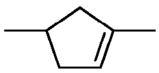 , 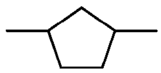 ,-

such a way that O atoms are not linked directly to one another, and in which, in addition, one or more H atoms may be replaced by halogen.

The compounds of formula B-3 are preferably selected from the group of compounds of the formulae B-3-1 to B-3-10:

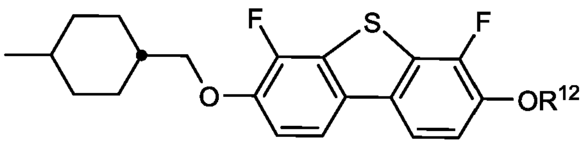

B-3-1

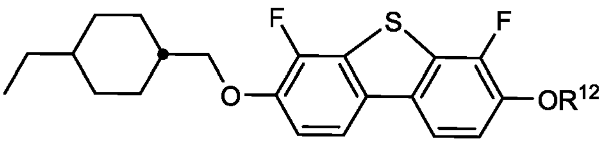

B-3-2

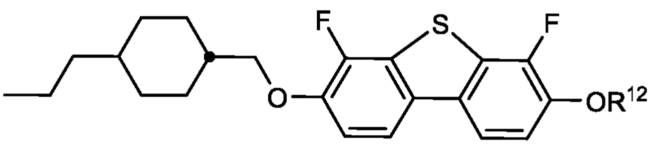

B-3-3

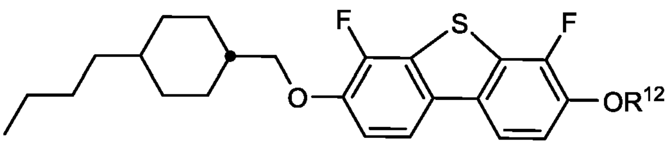

B-3-4

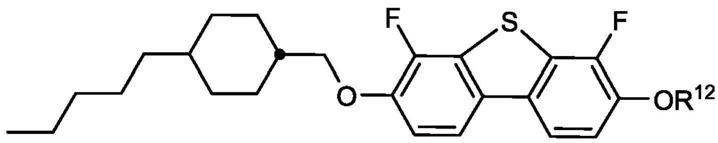

B-3-5

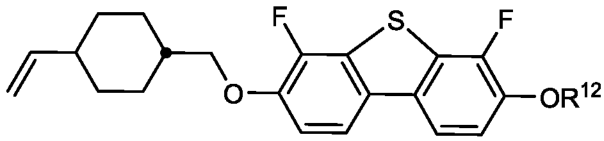

B-3-6

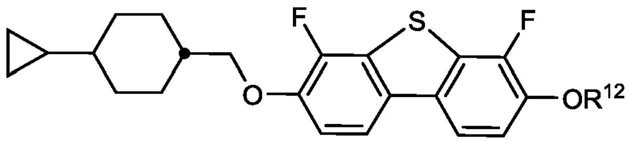

B-3-7

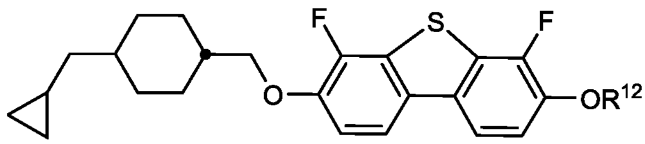

B-3-8

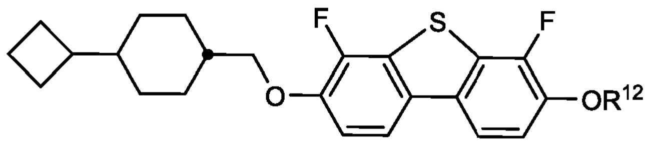

B-3-9

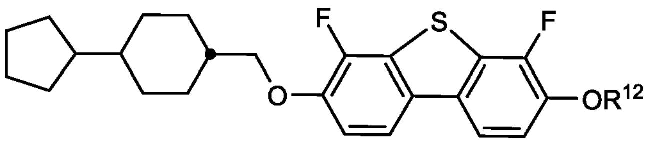

B-3-10

in which $R^{12}$ denotes alkyl having 1 to 7 C-atoms, preferably ethyl, n-propyl or n-butyl, or alternatively cyclopropylmethyl, cyclobutylmethyl or cyclopentylmethyl or alternatively $-(CH_2)_nF$ in which n is 2,3,4, or 5, preferably $C_2H_4F$.

In a preferred embodiment of the present invention, the medium comprises one or more compounds of the formulae B-4 to B-6, preferably of formula B-5,

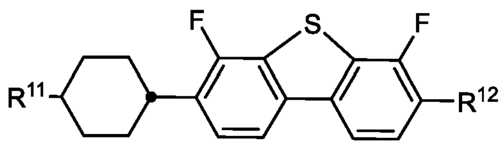

B-4

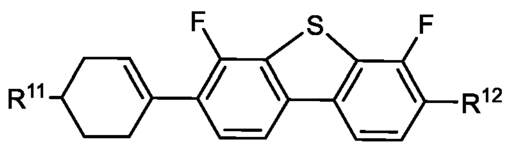

B-5

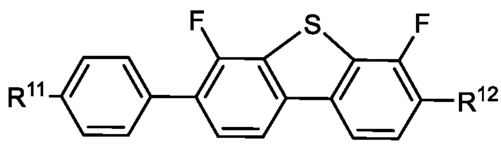

B-6

in which the occurring groups have the meanings given above, $R^{11}$ preferably denotes straight-chain alkyl and $R^{12}$

preferably denotes alkoxy, each having 1 to 7 C atoms.

In a preferred embodiment the media comprise one or more compounds of the formula I selected from the group of compounds of formulae B-7 to B-9, preferably of formula B-8,

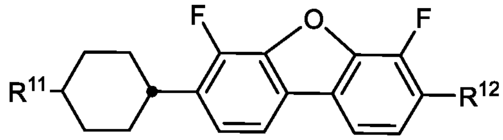
B-7

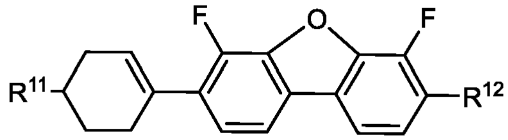
B-8

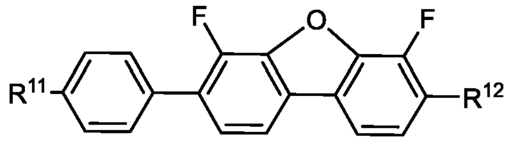
B-9

in which the parameters have the meanings given above, $R^{11}$ preferably denotes straight-chain alkyl and $R^{12}$ preferably denotes alkoxy each having 1 to 7 C atoms.

Further preferred embodiments are listed below:

a) Liquid-crystalline medium comprising at least one compound of the formulae Z-1 to Z-7,

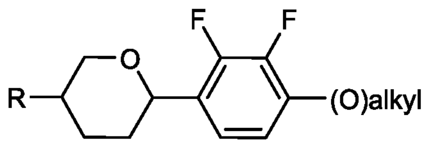
Z-1

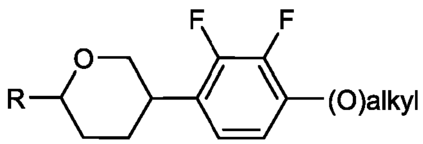
Z-2

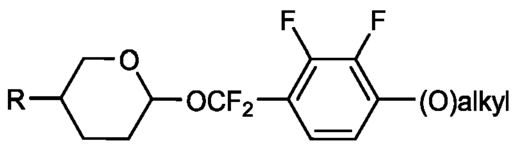
Z-3

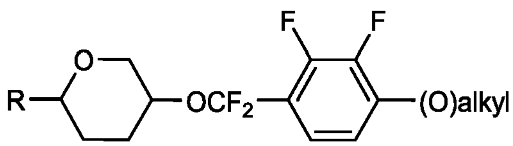
Z-4

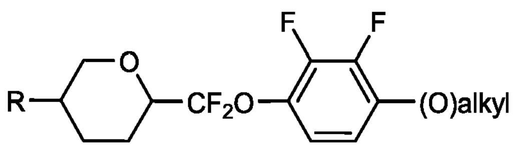
Z-5

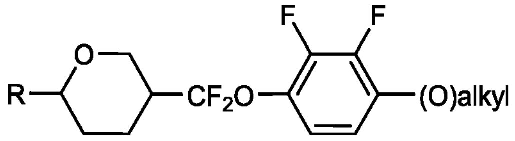

Z-6

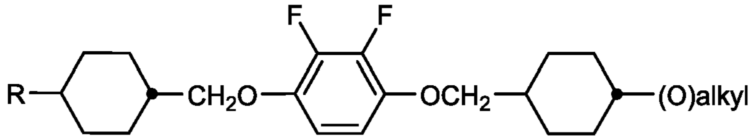

Z-7

in which R and alkyl have the meanings indicated above for formula B.

b) Preferred liquid-crystalline media according to the invention comprise one or more substances which contain a tetrahydronaphthyl or naphthyl unit, such as, for example, the compounds of the formulae N-1 to N-5,

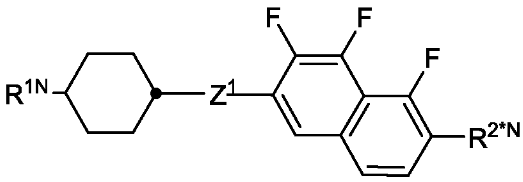

N-1

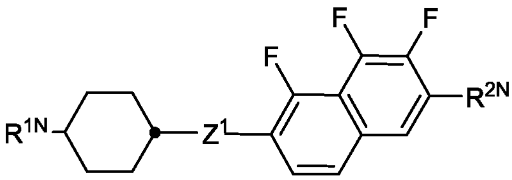

N-2

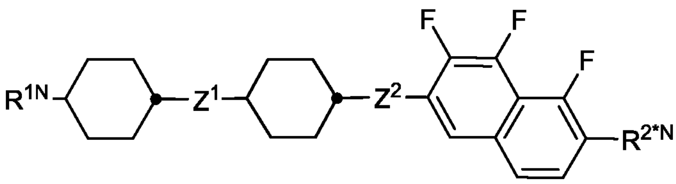

N-3

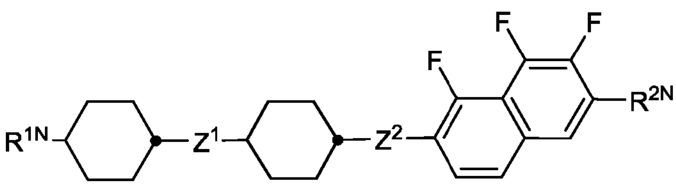

N-4

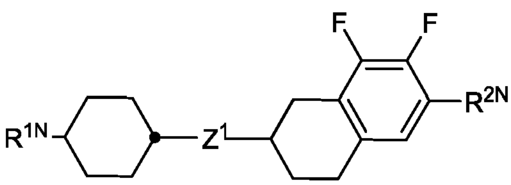

N-5

in which $R^{1N}$ and $R^{2N}$ each, independently of one another, have the meanings indicated for $R^{2A}$, preferably denote straight-chain alkyl, straight-chain alkoxy or straight-chain alkenyl, and

$Z^1$ and $Z^2$ each, independently of one another, denote $-C_2H_4-$, -CH=CH-, $-(CH_2)_4-$, $-(CH_2)_3O-$, $-O(CH_2)_3-$, $-CH=CHCH_2CH_2-$, $-CH_2CH_2CH=CH-$, $-CH_2O-$, $-OCH_2-$, -COO-, -OCO-, $-C_2F_4-$, -CF=CF-, -CF=CH-, -CH=CF-, $-CF_2O-$, $-OCF_2-$, $-CH_2-$ or a single bond.

c) Preferred mixtures comprise one or more compounds selected from the group of the difluorodibenzochroman compounds of the formula BC, chromans of the formula CR, and fluorinated phenanthrenes of the formulae PH-1 and PH-2,

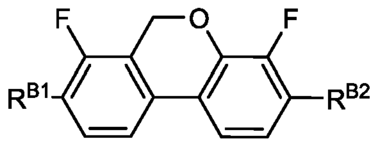

BC

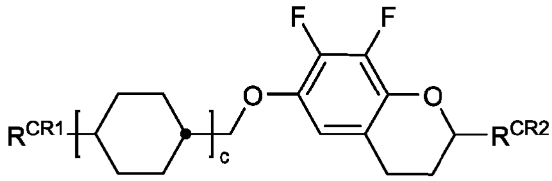

CR

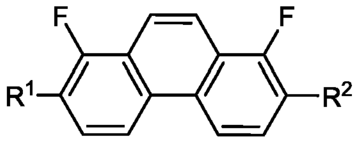

PH-1

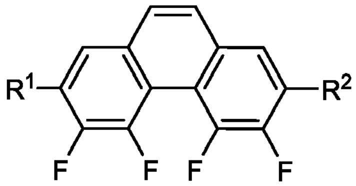

PH-2

in which

$R^{B1}$, $R^{B2}$, $R^{CR1}$, $R^{CR2}$, $R^1$, $R^2$ each, independently of one another, have the meaning of $R^{2A}$. c is 0, 1 or 2. $R^1$ and $R^2$ preferably, independently of one another, denote alkyl or alkoxy having 1 to 6 C atoms.

Particularly preferred compounds of the formulae BC and CR are the compounds BC-1 to BC-7 and CR-1 to CR-5,

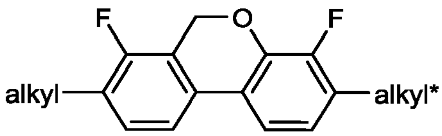

BC-1

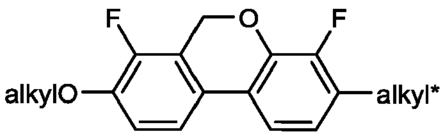

BC-2

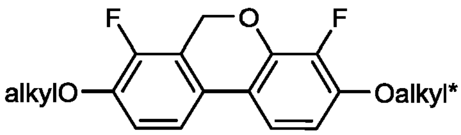

BC-3

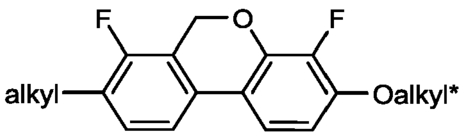

BC-4

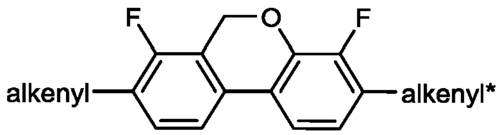

BC-5

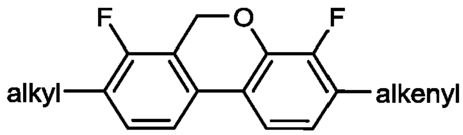

BC-6

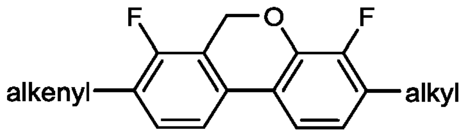

BC-7

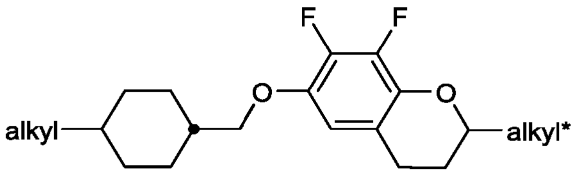

CR-1

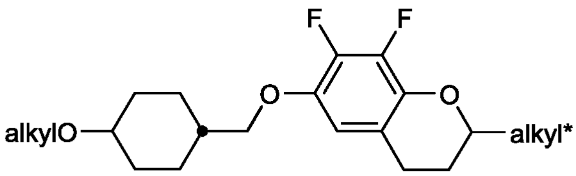

CR-2

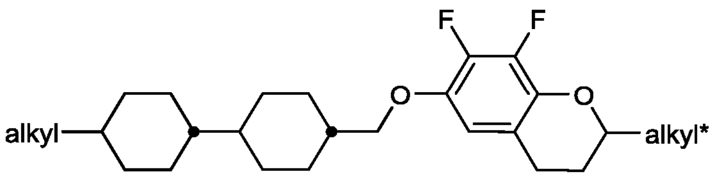

CR-3

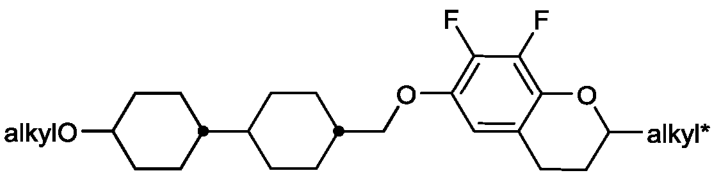

CR-4

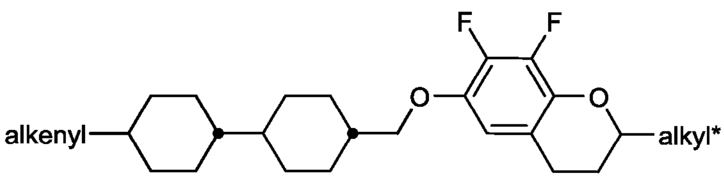

CR-5

in which

alkyl and alkyl* each, independently of one another, denote a straight-chain alkyl radical having 1 to 6 C atoms, and

alkenyl and alkenyl* each, independently of one another, denote a straight-chain alkenyl radical having 2 to 6 C atoms.

Very particular preference is given to mixtures comprising one, two or three compounds of the formula BC-2, BF-1 and/or BF-2.

d) Preferred mixtures comprise one or more indane compounds of the formula In,

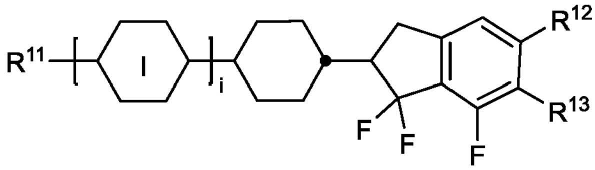

In

in which

$R^{11}$, $R^{12}$ and
$R^{13}$ each, independently of one another, denote a straight-chain alkyl, alkoxy, alkoxyalkyl or alkenyl radical having 1 to 6 C atoms,
$R^{12}$ and $R^{13}$ alternatively denote halogen, preferably F,

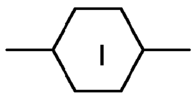

denotes

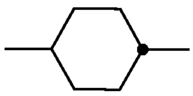 , 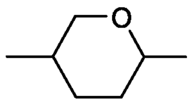 , 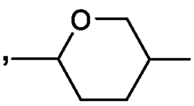 , 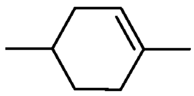 ,

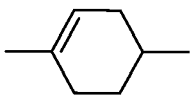 , 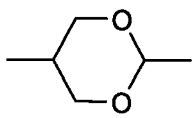 , 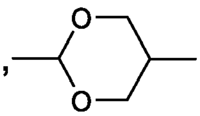 , 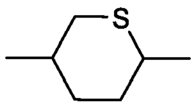 ,

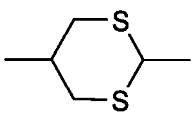 , 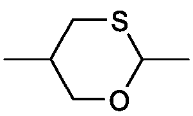 ,

i denotes 0, 1 or 2.
Preferred compounds of the formula In are the compounds of the formulae In-1 to In-16 indicated below:

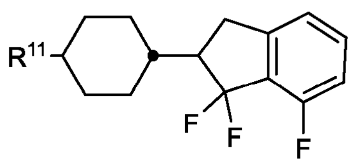

In-1

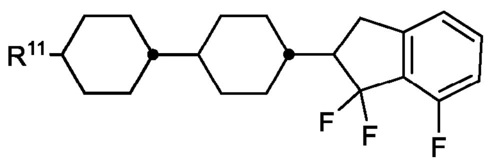

In-2

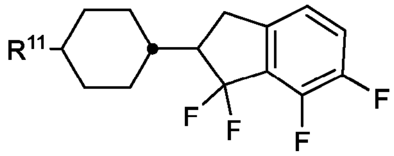
In-3

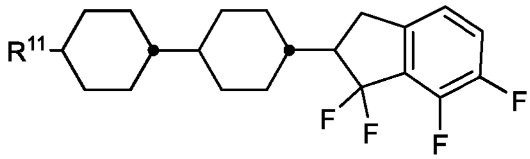
In-4

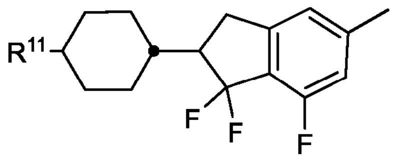
In-5

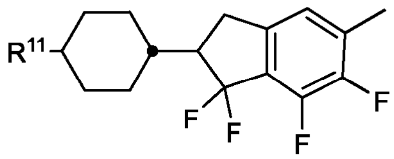
In-6

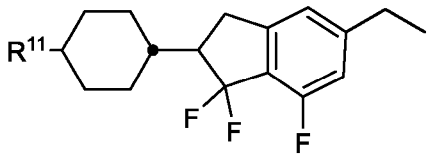
In-7

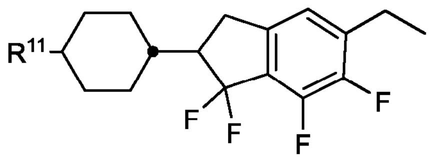
In-8

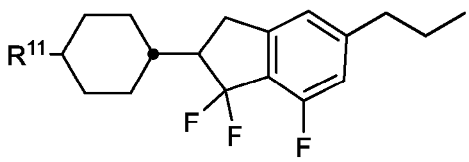
In-9

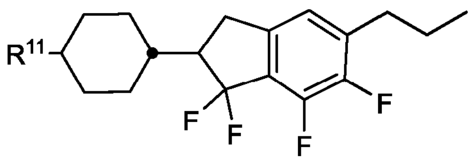
In-10

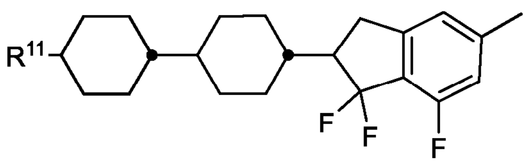
In-11

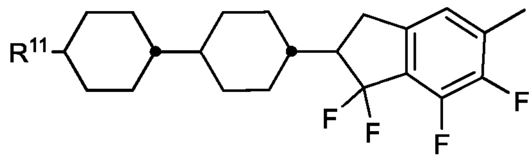

In-12

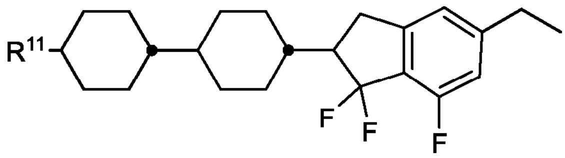

In-13

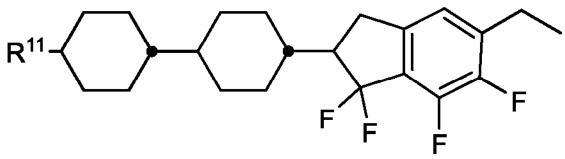

In-14

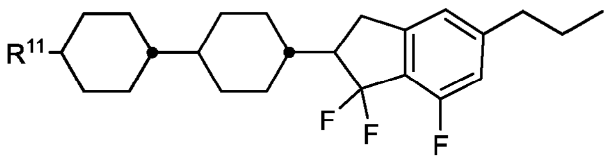

In-15

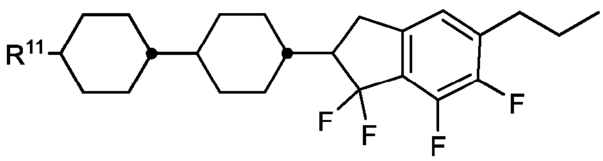

In-16.

Particular preference is given to the compounds of the formulae In-1, In-2, In-3 and In-4.

e) Preferred mixtures additionally comprise one or more compounds of the formulae L-1 to L-8,

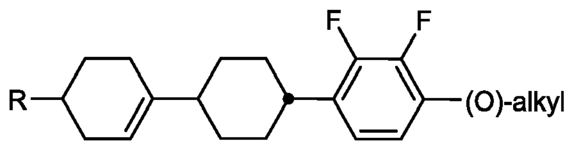

L-1

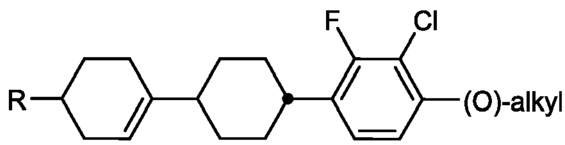

L-2

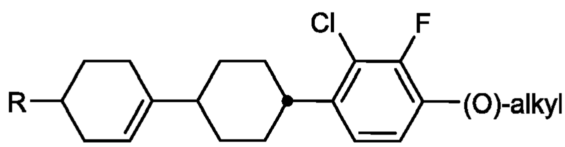

L-3

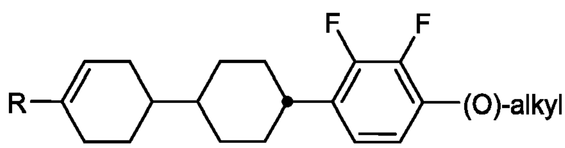

L-4

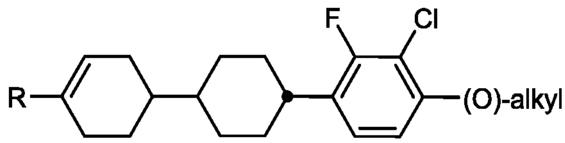

L-5

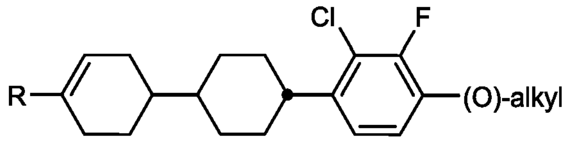

L-6

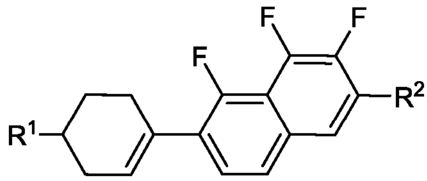

L-7

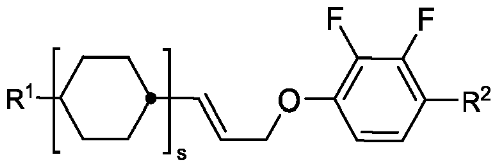

L-8,

in which

R, $R^1$ and $R^2$ each, independently of one another, have the meanings indicated for $R^{2A}$ in formula YA above, and alkyl denotes an alkyl radical having 1 to 6 C atoms. The parameter s denotes 1 or 2.
The compounds of the formulae L-1 to L-9 are preferably employed in concentrations of 5 to 15 % by weight, in particular 5 to 12 % by weight and very particularly preferably 8 to 10 % by weight.

f) Preferred mixtures additionally comprise one or more compounds of formula IIA-Y

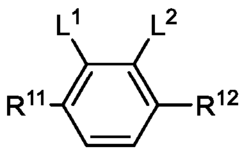

IIA-Y

in which $R^{11}$ and $R^{12}$ have one of the meanings given for $R^{2A}$ in formula IIA above, and $L^1$ and $L^2$, identically or differently, denote F or Cl.

Preferred compounds of the formula YA-Y are selected from the group consisting of the following sub-formulae

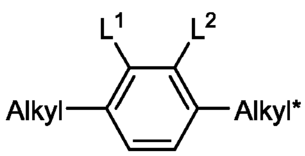

YA-Y1

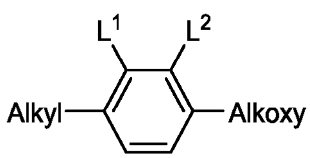

YA-Y2

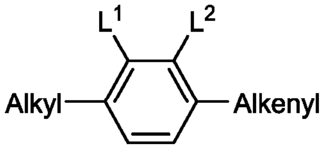

YA-Y3

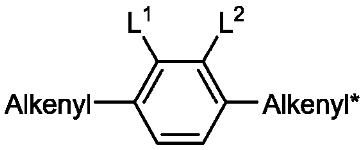

YA-Y4

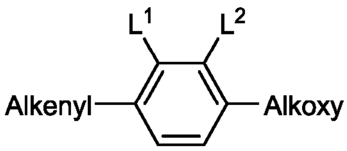

YA-Y5

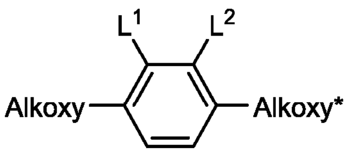

YA-Y6

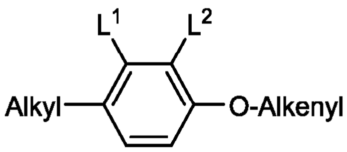

YA-Y7

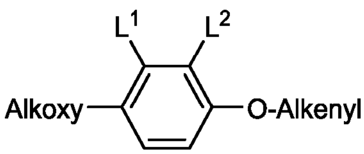

YA-Y8

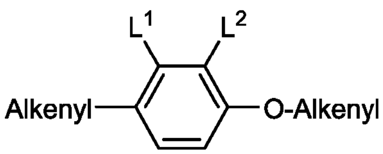

YA-Y9

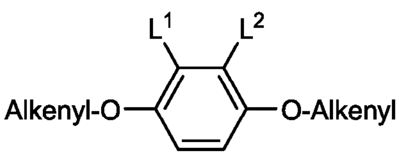

YA-Y10

in which, Alkyl and Alkyl* each, independently of one another, denote a straight-chain alkyl radical having 1-6 C atoms, Alkoxy denotes a straight-chain alkoxy radical having 1-6 C atoms, Alkenyl and Alkenyl* each, independently of one another, denote a straight-chain alkenyl radical having 2-6 C atoms, and O denotes an oxygen atom or a single bond. Alkenyl and Alkenyl* preferably denote $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred compounds of the formula YA-Y are selected from the group consisting of following sub-formulae:

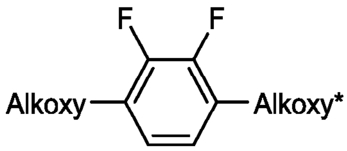

YA-Y6a

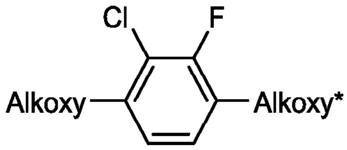

YA-Y6b

in which Alkoxy and Alkoxy* have the meanings defined above and preferably denote methoxy, ethoxy, n-propyloxy, n-butyloxy or n-pentyloxy.

Preferably, the media according to the invention, comprise a stabilizer selected from the group of compounds of the formulae ST-1 to ST-19.

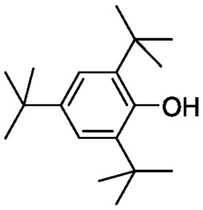

ST-1

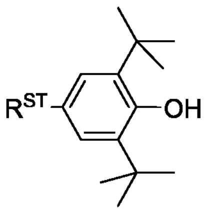

ST-2

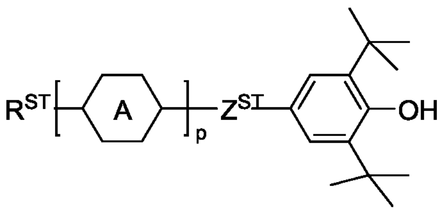

ST-3

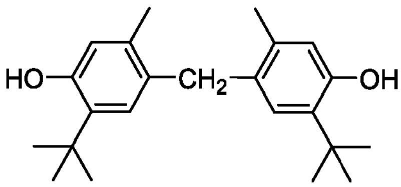

ST-4

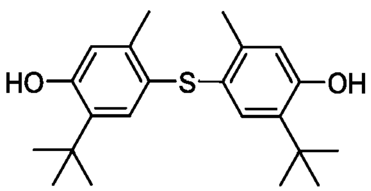

ST-5

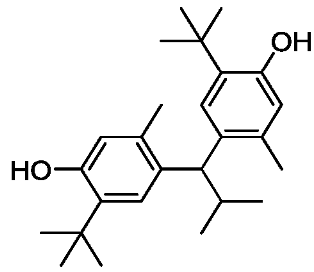

ST-6

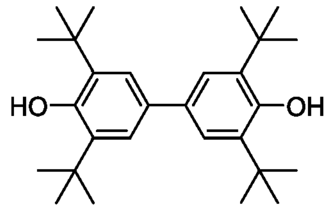

ST-7

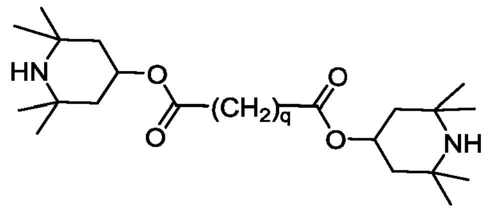

ST-8

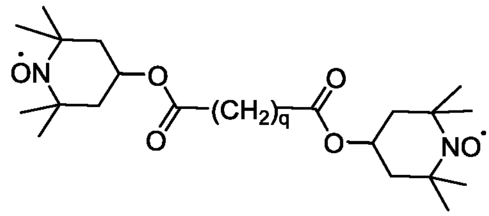

ST-9

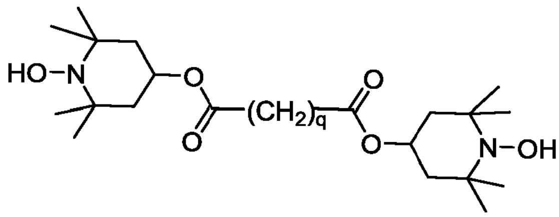

ST-10

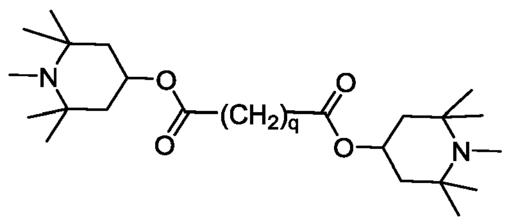

ST-11

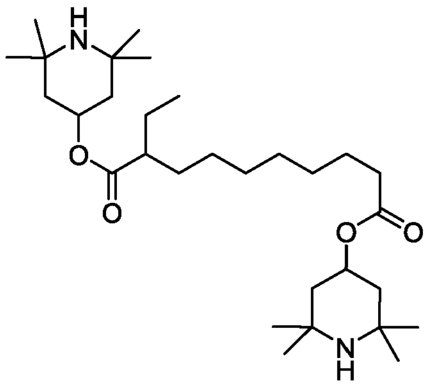
ST-12

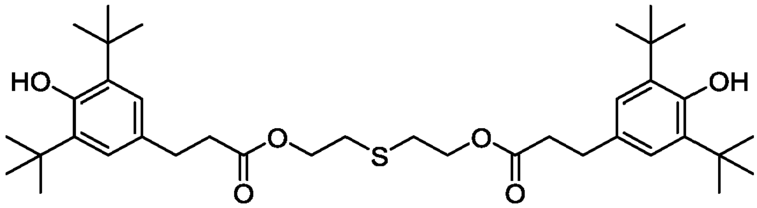
ST-13

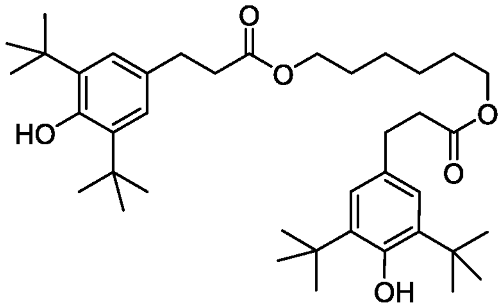
ST-14

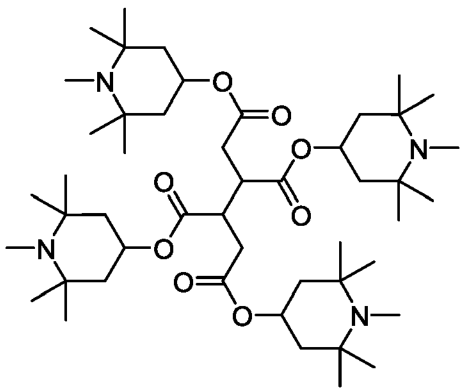
ST-15

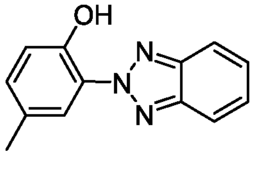
ST-16

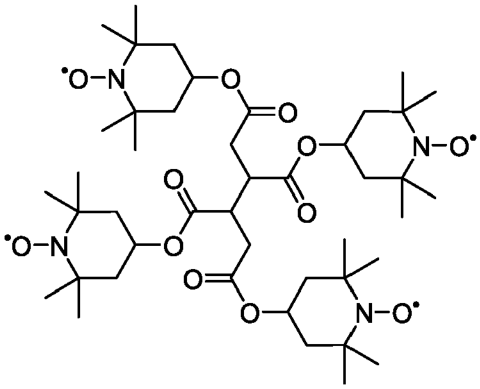

ST-17

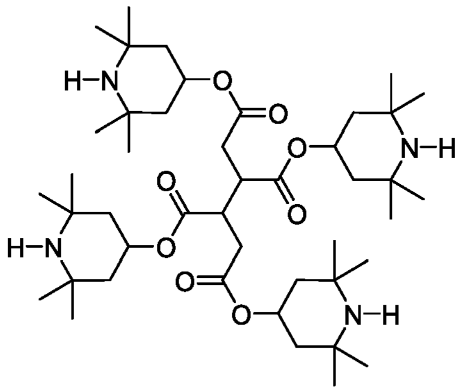

ST-18

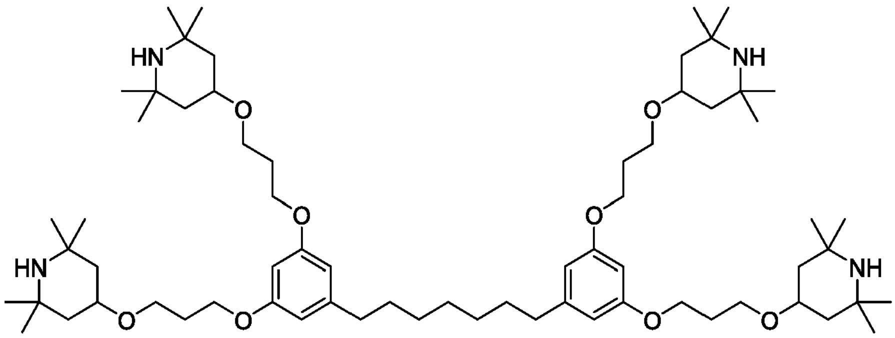

ST-19

in which

$R^{ST}$ denotes H, an alkyl or alkoxy radical having 1 to 15 C atoms, where, in addition, one or more $CH_2$ groups in these radicals may each be replaced, independently of one another, by -C≡C-, $-CF_2O-$, $-OCF_2-$, -CH=CH-, -O-, -CO-O-, -O-CO- in such a way

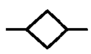 , 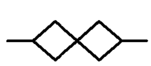 , .

that O atoms are not linked directly to one another, and in which, in addition, one or more H atoms may be replaced by halogen,

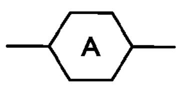

denotes

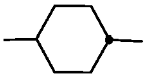 , 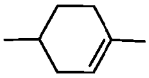 , 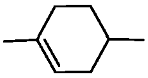 , 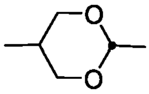 ,

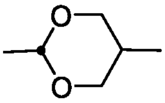 , 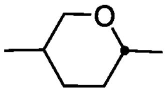 , 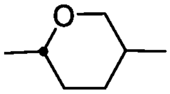 , 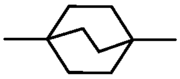 ,

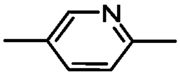 , 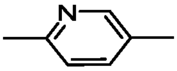 ; 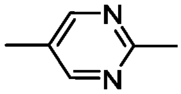 , 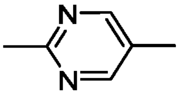 ,

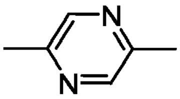 , 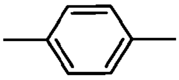 , 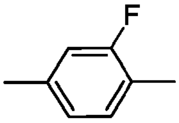 , 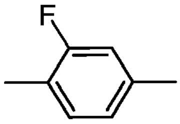 ,

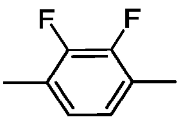 , 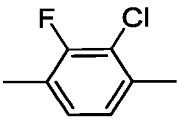 , 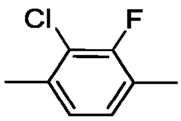 , 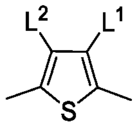 ,

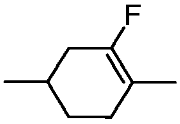 , 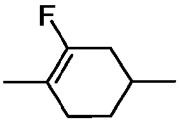 , 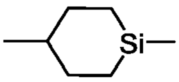 , 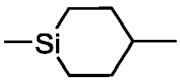 ,

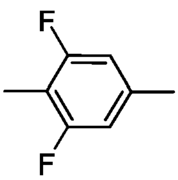 , 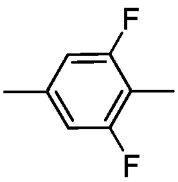 , 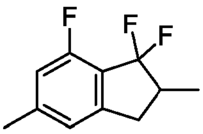 , 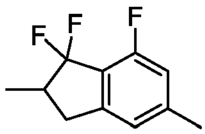 ,

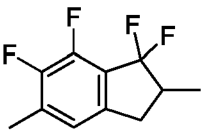 , 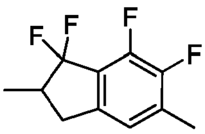 , 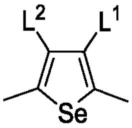 , 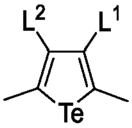 ,

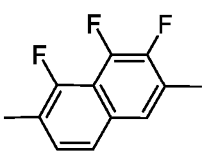 , 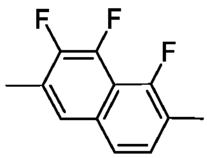 ,

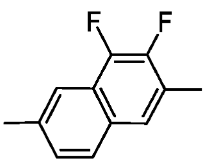 , 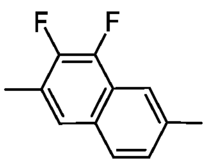 , 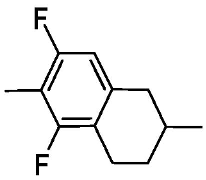

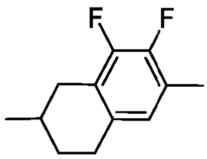, 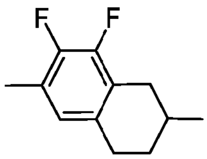, 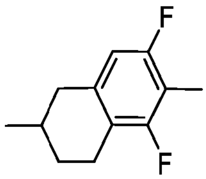

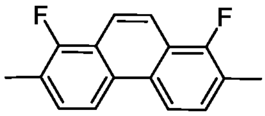, 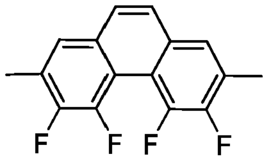, 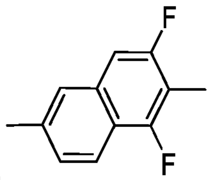

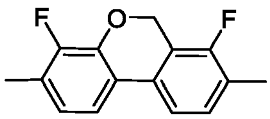, 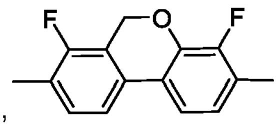,

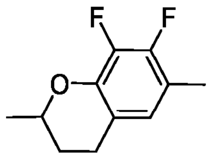, 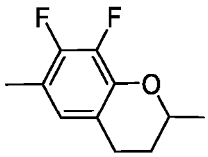, 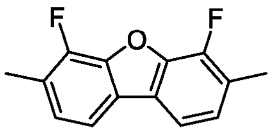

$Z^{ST}$ each, independently of one another, denote -CO-O-, -O-CO-, $-CF_2O-$, $-OCF_2-$, $-CH_2O-$, $-OCH_2-$, $-CH_2-$, $-CH_2CH_2-$, $-(CH_2)_4-$, -CH=CH-, $-CH_2O-$, $-C_2F_4-$, $-CH_2CF_2-$, $-CF_2CH_2-$, -CF=CF-, -CH=CF-, -CF=CH-, -CH=CH-, -C≡C- or a single bond,

$L^1$ and $L^2$ each, independently of one another, denote F, Cl, $CF_3$ or $CHF_2$,

p denotes 1 or 2,

q denotes 1, 2, 3, 4, 5, 6, 7, 8, 9 or 10.

Of the compounds of the formula ST, special preference is given to the compounds of the formulae

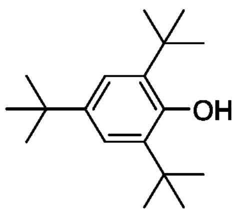

ST-1

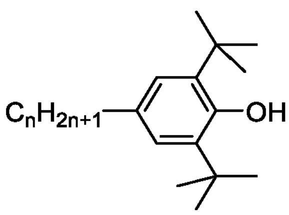

ST-2a

in which n = 1, 2, 3, 4, 5, 6 or 7, preferably n = 1 or 7

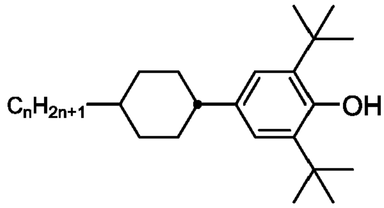

ST-3a

in which n = 1, 2, 3, 4, 5, 6 or 7, preferably n = 3

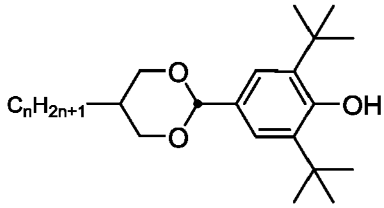

ST-3b

in which n = 1, 2, 3, 4, 5, 6 or 7, preferably n = 3

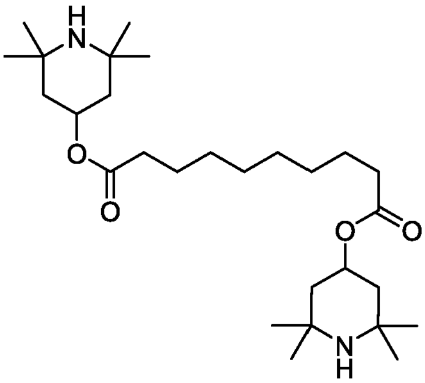

ST-8-1

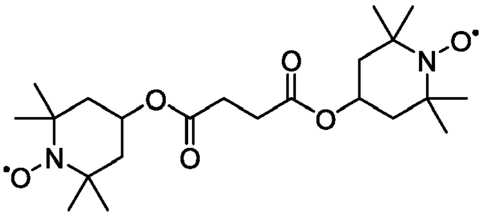

ST-9-1

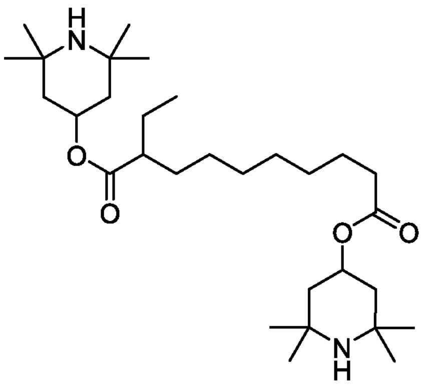

ST-12

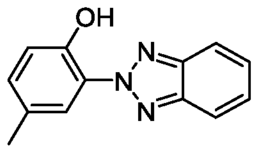

ST-16

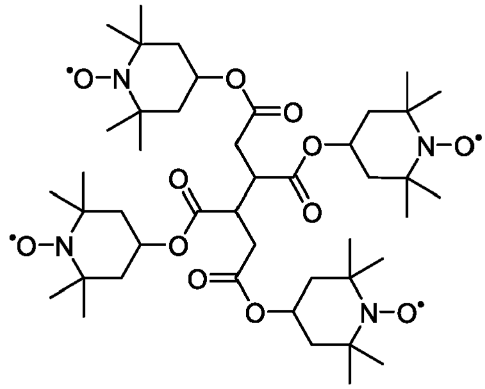

ST-17

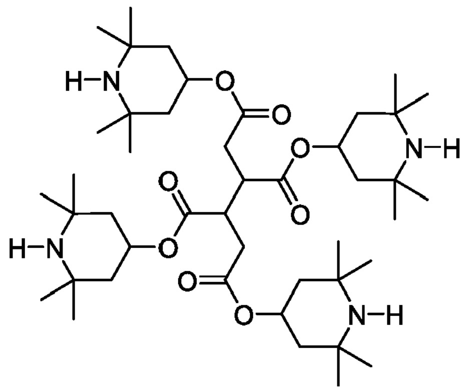

ST-18

In the compounds of the formulae ST-3a and ST-3b, n preferably denotes 3. In the compounds of the formula ST-2a, n preferably denotes 7.

Very particularly preferred mixtures according to the invention comprise one or more stabilizers from the group of the compounds of the formulae ST-2a-1, ST-3a-1, ST-3b-1, ST-8-1, ST-9-1 and ST-12:

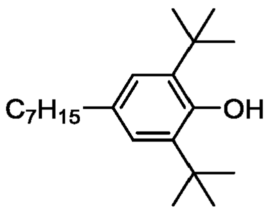

ST-2a-1

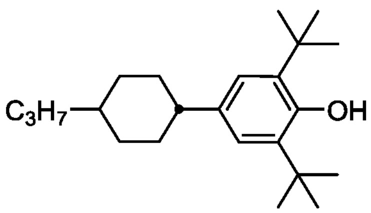

ST-3a-1

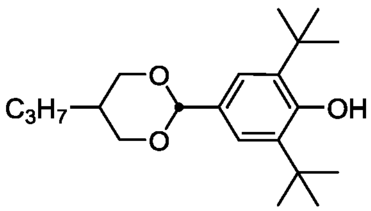

ST-3b-1

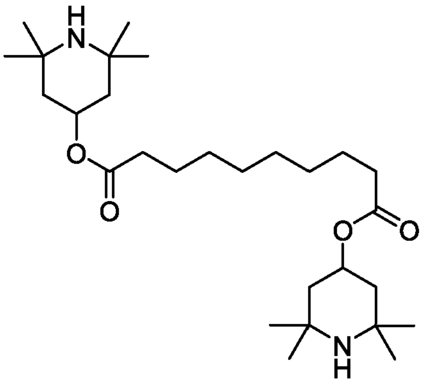

ST-8-1

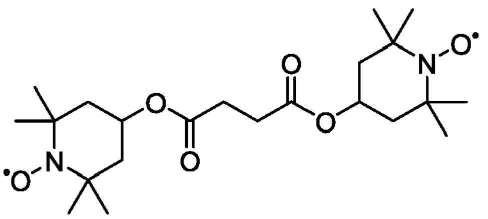

ST-9-1

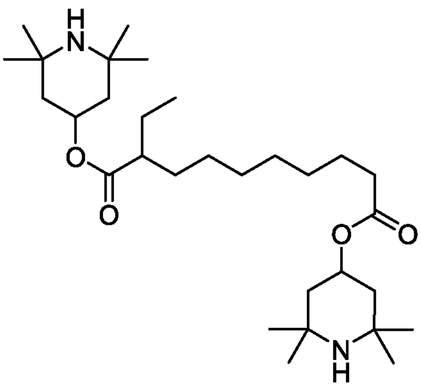

ST-12

The compounds of the formulae ST-1 to ST-19 are preferably each present in the liquid-crystal mixtures according to the invention in amounts of 0.005 - 0.5%, based on the mixture.

If the mixtures according to the invention comprise two or more compounds from the group of the compounds of the formulae ST-1 to ST-18, the concentration correspondingly increases to 0.01 - 1% in the case of two compounds, based on the mixtures.

However, the total proportion of the compounds of the formulae ST-1 to ST-18, based on the mixture according to the invention, should not exceed 2%.

In another preferred embodiment of the present invention the liquid-crystalline medium additionally comprises one or more polymerisable compounds. The polymerisable compounds are preferably selected from formula M

$$R^a\text{-}B^1\text{-}(Z^b\text{-}B^2)_m\text{-}R^b \qquad M$$

in which the individual radicals, on each occurrence identically or differently, and each, independently of one another, have the following meaning:

$R^a$ and $R^b$ P, P-Sp-, H, F, Cl, Br, I, -CN, $-NO_2$, -NCO, -NCS, -OCN, -SCN, $SF_5$ or straight-chain or branched alkyl having 1 to 25 C atoms, in which, in addition, one or more non-adjacent $CH_2$ groups may each be replaced, independently of one another, by $-C(R^0)=C(R^{00})-$, -C≡C-, $-N(R^{00})-$, -O-, -S-, -CO-, -CO-O-, -O-CO-, -O-CO-O- in such a way that O and/or S atoms are not linked directly to one another, and in which, in addition, one or more H atoms may be replaced by F, Cl, Br, I, CN, P or P-Sp-, where, if $B^1$ and/or $B^2$ contain a saturated C atom, $R^a$ and/or $R^b$ may also denote a radical which is spiro-linked to this saturated C atom,

wherein at least one of the radicals $R^a$ and $R^b$ denotes or contains a group P or P-Sp-,

P a polymerisable group,

Sp a spacer group or a single bond,

$B^1$ and $B^2$ an aromatic, heteroaromatic, alicyclic or heterocyclic group, preferably having 4 to 25 ring atoms, which may also contain fused rings, and which is unsubstituted, or mono- or polysubstituted by L,

$Z^b$ -O-, -S-, -CO-, -CO-O-, -OCO-, -O-CO-O-, $-OCH_2-$, $-CH_2O-$, $-SCH_2-$, $-CH_2S-$, $-CF_2O-$, $-OCF_2-$, $-CF_2S-$, $-SCF_2-$, $-(CH_2)_{n1}-$, $-CF_2CH_2-$, $-CH_2CF_2-$, $-(CF_2)_{n1}-$, -CH=CH-, -CF=CF-, -C≡C-, -CH=CH-COO-, -OCO-CH=CH-, $CR^0R^{00}$ or a single bond,

$R^0$ and $R^{00}$ each, independently of one another, denote H or alkyl having 1 to 12 C atoms,

m denotes 0, 1, 2, 3 or 4,

n1 denotes 1, 2, 3 or 4,

L P, P-Sp-, OH, $CH_2OH$, F, Cl, Br, I, -CN, $-NO_2$, -NCO, -NCS, -OCN, -SCN, $-C(=O)N(R^x)_2$, $-C(=O)Y^1$, $-C(=O)R^x$, $-N(R^x)_2$, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-,

P and Sp have the meanings indicated above,

$Y^1$ denotes halogen,

$R^x$ denotes P, P-Sp-, H, halogen, straight-chain, branched or cyclic alkyl having 1 to 25 C atoms, in which, in addition, one or more non-adjacent $CH_2$ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl, P or P-Sp-, an optionally substitutedaryl or aryloxy group having 6 to 40 C atoms, or an optionally substituted heteroaryl or heteroaryloxy group having 2 to 40 C atoms.

Particularly preferred compounds of the formula I are those in which $B^1$ and $B^2$ each, independently of one another, denote 1,4-phenylene, 1,3-phenylene, naphthalene-1,4-diyl, naphthalene-2,6-diyl, phenanthrene-2,7-diyl, 9,10-dihydro-phenanthrene-2,7-diyl, anthracene-2,7-diyl, fluorene-2,7-diyl, coumarin, flavone, where, in addition, one or more CH groups in these groups may be replaced by N, cyclohexane-1,4-diyl, in which, in addition, one or more non-adjacent $CH_2$ groups may be replaced by O and/or S, 1,4-cyclohexenylene, bicycle[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L as defined above.

Particularly preferred compounds of the formula M are those in which $B^1$ and $B^2$
each, independently of one another, denote 1,4-phenylene, 1,3-phenylene, naphthalene-1,4-diyl or naphthalene-2,6-diyl,

Very preferred compounds of formula M are selected from the following formulae:

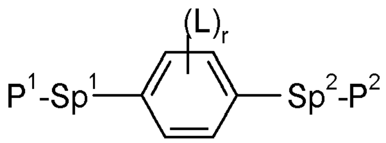

M1

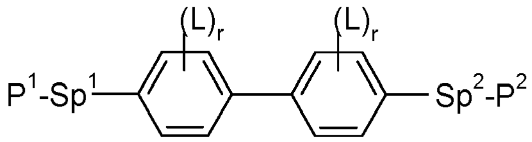

M2

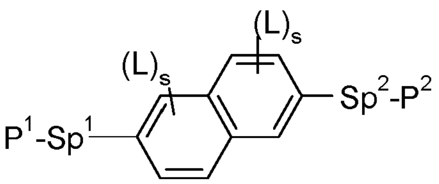

M3

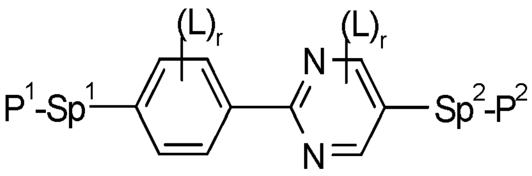

M4

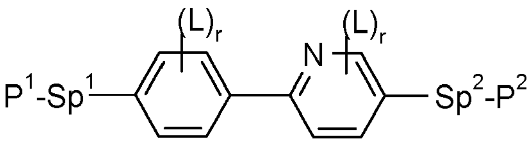

M5

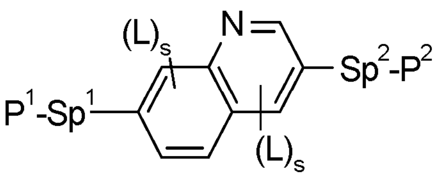

M6

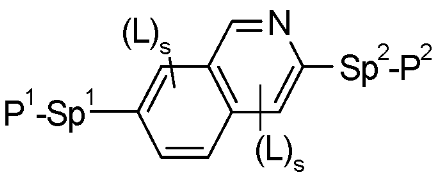

M7

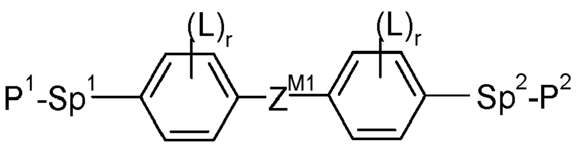

M8

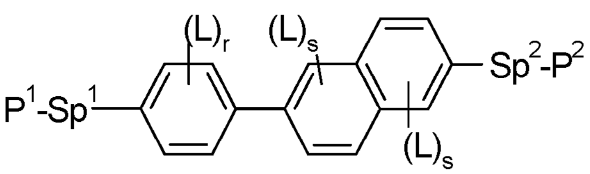

M9

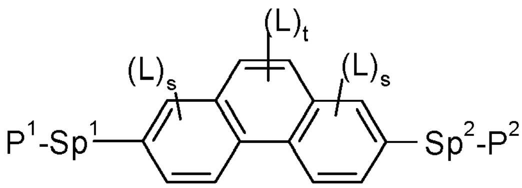
M10

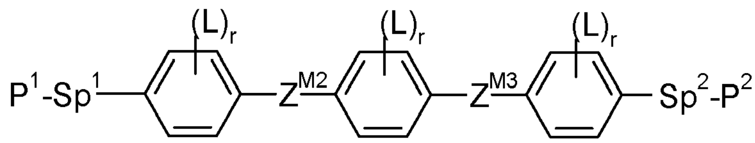
M11

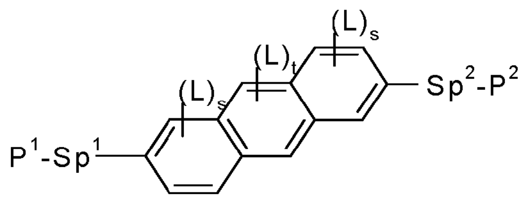
M12

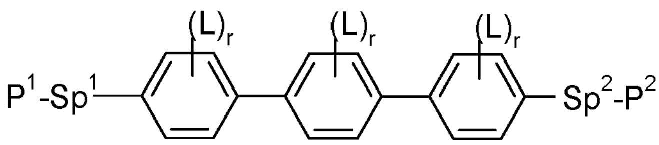
M13

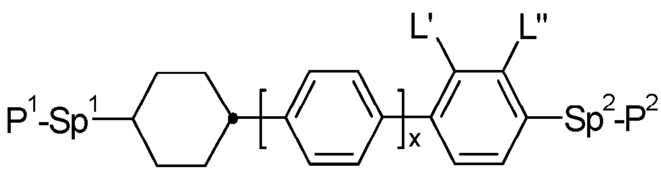
M14

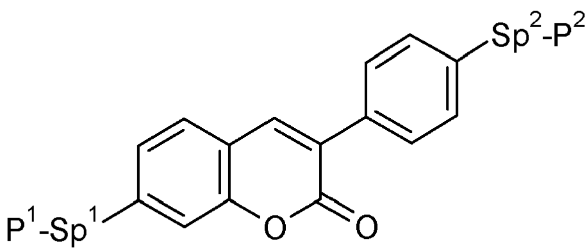
M15

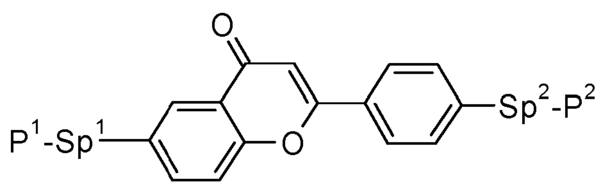
M16

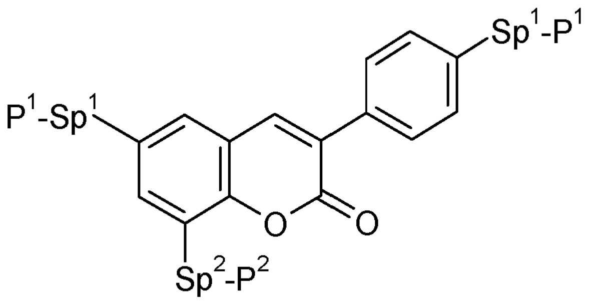

M17

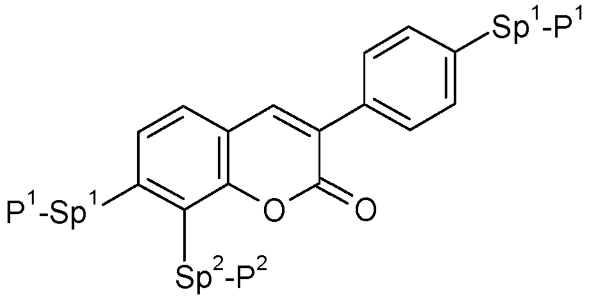

M18

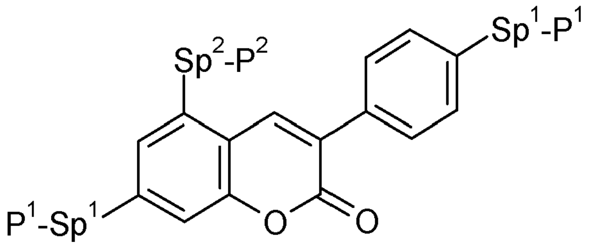

M19

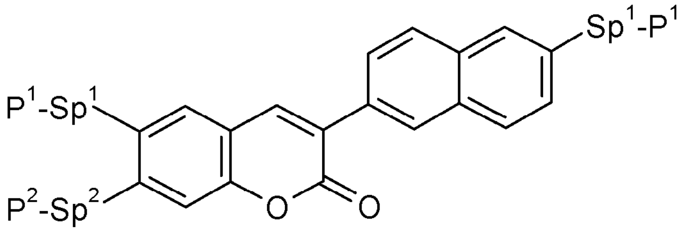

M20

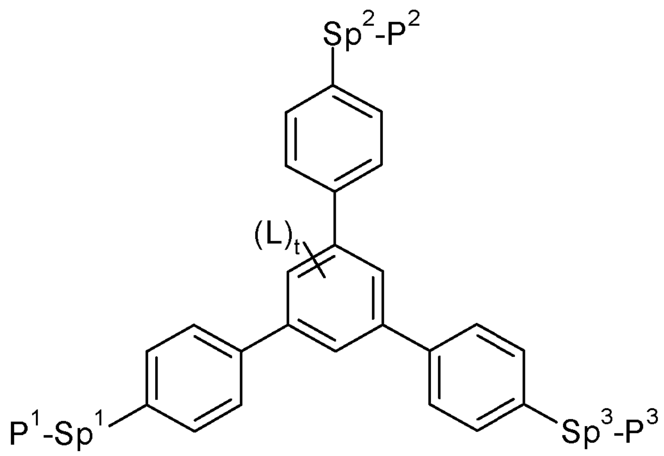

M21

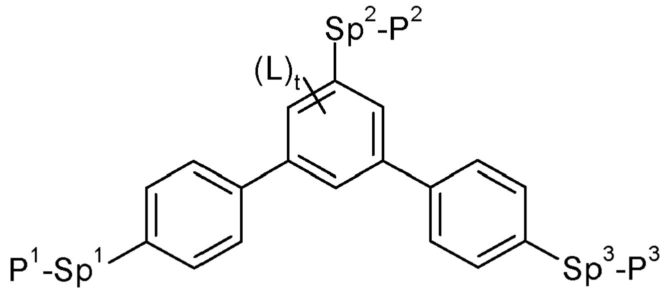

M22

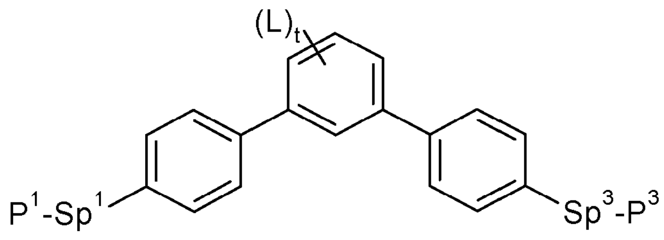

M23

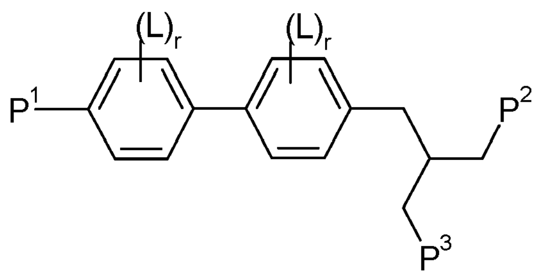

M24

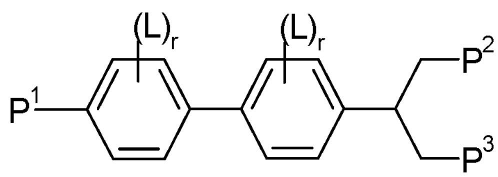

M25

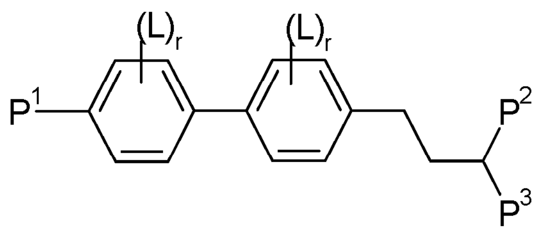

M26

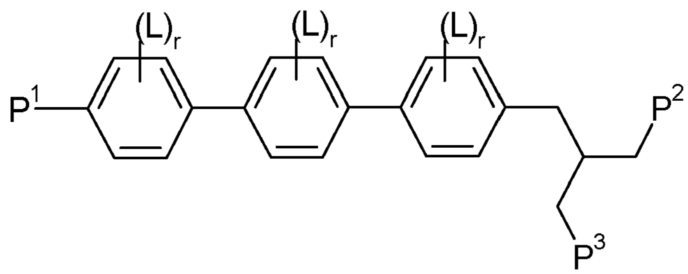

M27

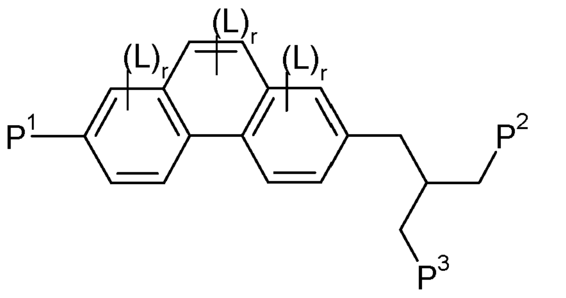

M28

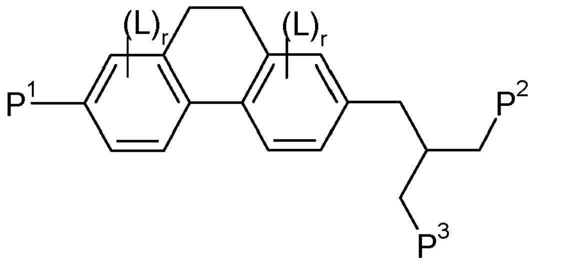

M29

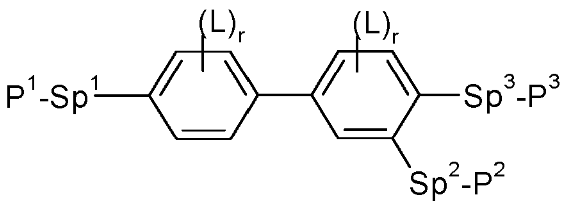

M30

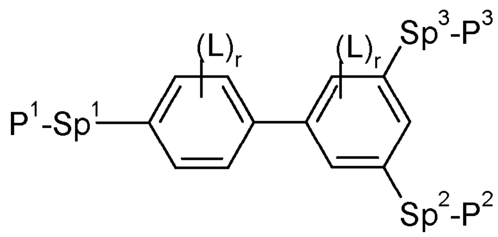

M31

in which the individual radicals, on each occurrence identically or differently, and each, independently of one another, have the following meaning:

$P^1$, $P^2$, $P^3$ a polymerisable group, preferably selected from vinyloxy, acrylate, methacrylate, fluoroacrylate, chloroacrylate, oxetane and epoxy,

$Sp^1$, $Sp^2$, $Sp^3$ a single bond or a spacer group where, in addition, one or more of the radicals $P^1$-$Sp^1$-, $P^1$-$Sp^2$- and $P^3$-$Sp^3$- may denote $R^{aa}$, with the proviso that at least one of the radicals $P^1$-$Sp^1$-, $P^2$-$Sp^2$ and $P^3$-$Sp^3$-present is different from $R^{aa}$, preferably denote $-(CH_2)_{p1}-$, $-(CH_2)_{p1}-O-$, $-(CH_2)_{p1}-CO-O-$ or $-(CH_2)_{p1}-O-CO-O-$, wherein p1 is an integer from 1 to 12,

$R^{aa}$ H, F, Cl, CN or straight-chain or branched alkyl having 1 to 25 C atoms, in which, in addition, one or more non-adjacent $CH_2$ groups may each be replaced, independently of one another, by-$C(R^0)=C(R^{00})$-, -C≡C-, -$N(R^0)$-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or $P^1$-$Sp^1$-, particularly preferably straight- chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),

$R^0$, $R^{00}$ H or alkyl having 1 to 12 C atoms,

| | |
|---|---|
| $R^y$ and $R^z$ | H, F, $CH_3$ or $CF_3$, |
| $X^1$, $X^2$, $X^3$ | -CO-O-, -O-CO- or a single bond, |
| $Z^{M1}$ | -O-, -CO-, -C($R^yR^z$)- or -$CF_2CF_2$-, |
| $Z^{M2}$, $Z^{M3}$ | -CO-O-, -O-CO-, -$CH_2O$-, -$OCH_2$-, -$CF_2O$-, -$OCF_2$- or -$(CH_2)_n$-, where n is 2, 3 or 4, |
| L | F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms, |
| L', L" | H, F or Cl, |
| r | 0, 1, 2, 3 or 4, |
| s | 0, 1, 2 or 3, |
| t | 0, 1 or 2, |
| x | 0 or 1. |

Especially preferred are compounds of formulae M2 and M13.
Further preferred are trireactive compounds M15 to M31, in particular M17, M18, M19, M22, M23, M24, M25, M30 and M31.
In the compounds of formulae M1 to M31 the group

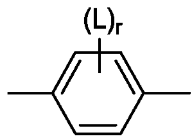

,

in which L has one of the meanings indicated above and r denotes 0, 1, 2, 3 or 4, in particular denotes

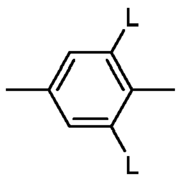

,

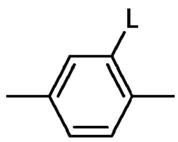

,

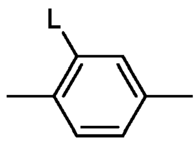

,

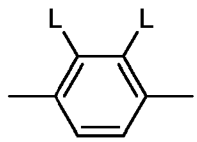

,

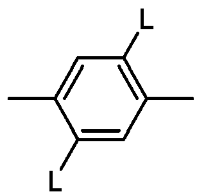

or

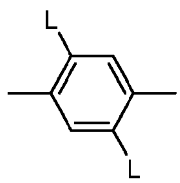

,

in which L on each occurrence, identically or differently, has one of the meanings given above or below, and is preferably F, Cl, CN, $NO_2$, $CH_3$, $C_2H_5$, $C(CH_3)_3$, $CH(CH_3)_2$, $CH_2CH(CH_3)C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$ or P-Sp-, very preferably F, Cl, CN, $CH_3$, $C_2H_5$, $OCH_3$, $COCH_3$, $OCF_3$ or P-Sp-, more preferably F, Cl, $CH_3$, $OCH_3$, $COCH_3$ oder $OCF_3$ , especially F or $CH_3$.
Preferred compounds of formulae M1 to M31 are those in which $P^1$, $P^2$ and $P^3$ denote an acrylate, methacrylate, oxetane or epoxy group, very preferably an acrylate or methacrylate group.
Further preferred compounds of formulae M1 to M31 are those in which $Sp^1$, $Sp^2$ and $Sp^3$ are a single bond.
Further preferred compounds of formulae M1 to M31 are those in which one of $Sp^1$, $Sp^2$ and $Sp^3$ is a single bond

and another one of $Sp^1$, $Sp^2$ and $Sp^3$ is different from a single bond.

Further preferred compounds of formulae M1 to M31 are those in which those groups $Sp^1$, $Sp^2$ and $Sp^3$ that are different from a single bond denote $-(CH_2)_{s1}$-X"-, wherein s1 is an integer from 1 to 6, preferably 2, 3, 4 or 5, and X" is X" is the linkage to the benzene ring and is -O-, -O-CO-, -CO-O-, -O-CO-O- or a single bond.

Particular preference is given to liquid-crystalline media comprising one, two or three polymerisable compounds of formula M, preferably selected from formulae M1 to M31.

Further preferably the liquid-crystalline media according to the present invention comprise one or more polymerisable compounds selected from Table E below.

Preferably the proportion of polymerisable compounds in the liquid-crystalline medium, preferably selected from formula M and Table E, is from 0.01 to 5%, very preferably from 0.05 to 1%, most preferably from 0.1 to 0.5%.

It was observed that the addition of one or more polymerisable compounds to the liquid-crystalline medium, like those selected from formula M and Table E, leads to advantageous properties like fast response times. Such a liquid-crystalline medium is especially suitable for use in PSA displays where it shows low image sticking, a quick and complete polymerisation, the quick generation of a low pretilt angle which is stable after UV exposure, a high reliability, high VHR value after UV exposure, and a high birefringence. By appropriate selection of the polymerisable compounds it is possible to increase the absorption of the liquid-crystalline medium at longer UV wavelengths, so that it is possible to use such longer UV wavelengths for polymerisation, which is advantageous for the display manufacturing process.

The polymerisable group P is a group which is suitable for a polymerisation reaction, such as, for example, free-radical or ionic chain polymerisation, polyaddition or polycondensation, or for a polymer-analogous reaction, for example addition or condensation onto a main polymer chain. Particular preference is given to groups for chain polymerisation, in particular those containing a C=C double bond or -C≡C- triple bond, and groups which are suitable for polymerisation with ring opening, such as, for example, oxetane or epoxide groups.

Preferred groups P are selected from the group consisting of $CH_2=CW^1$-CO-O-, $CH_2=CW^1$-CO-,

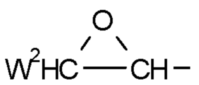 , 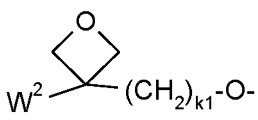 , 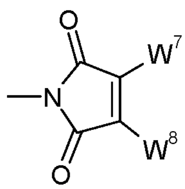 ,

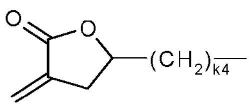 ,

$CH_2=CW^2-(O)_{k3}$-, $CW^1=CH-CO-(O)_{k3}$-, $CW^1$=CH-CO-NH-, $CH_2=CW^1$-CO-NH-, $CH_3$-CH=CH-O-, $(CH_2=CH)_2$CH-OCO-, $(CH_2=CH-CH_2)_2$CH-OCO-, $(CH_2=CH)_2$CH-O-, $(CH_2=CH-CH_2)_2$N-, $(CH_2=CH-CH_2)_2$N-CO-, HO-$CW^2W^3$-, HS-$CW^2W^3$-, $HW^2$N-, HO-$CW^2W^3$-NH-, $CH_2=CW^1$-CO-NH-, $CH_2=CH-(COO)_{k1}-Phe-(O)_{k2}$-, $CH_2=CH-(CO)_{k1}-Phe-(O)_{k2}$-, Phe-CH=CH-, HOOC-, OCN- and $W^4W^5W^6$Si-, in which $W^1$ denotes H, F, Cl, CN, $CF_3$, phenyl or alkyl having 1 to 5 C atoms, in particular H, F, Cl or $CH_3$, $W^2$ and $W^3$ each, independently of one another, denote H or alkyl having 1 to 5 C atoms, in particular H, methyl, ethyl or n-propyl, $W^4$, $W^5$ and $W^6$ each, independently of one another, denote Cl, oxaalkyl or oxacarbonylalkyl having 1 to 5 C atoms, $W^7$ and $W^8$ each, independently of one another, denote H, Cl or alkyl having 1 to 5 C atoms, Phe denotes 1,4-phenylene, which is optionally substituted by one or more radicals L as defined above which are other than P-Sp-, $k_1$, $k_2$ and $k_3$ each, independently of one another, denote 0 or 1, $k_3$ preferably denotes 1, and $k_4$ denotes an integer from 1 to 10.

Very preferred groups P are selected from the group consisting of $CH_2=CW^1$-CO-O-, $CH_2=CW^1$-CO-,

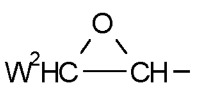 , 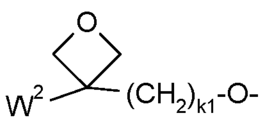 , 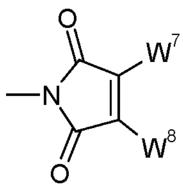 ,

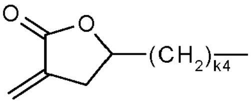

,

$CH_2=CW^2$-O-, $CH_2=CW^2$-, $CW^1$=CH-CO-$(O)_{k3}$-, $CW^1$=CH-CO-NH-, $CH_2=CW^1$-CO-NH-, $(CH_2=CH)_2$CH-OCO-, $(CH_2=CH-CH_2)_2$CH-OCO-, $(CH_2=CH)_2$CH-O-, $(CH_2=CH-CH_2)_2$N-, $(CH_2=CH-CH_2)_2$N-CO-, $CH_2=CW^1$-CO-NH-, $CH_2$=CH-$(COO)_{k1}$-Phe-$(O)_{k2}$-, $CH_2$=CH-$(CO)_{k1}$-Phe-$(O)_{k2}$-, Phe-CH=CH- and $W^4W^5W^6$Si-, in which $W^1$ denotes H, F, Cl, CN, $CF_3$, phenyl or alkyl having 1 to 5 C atoms, in particular H, F, Cl or $CH_3$, $W^2$ and $W^3$ each, independently of one another, denote H or alkyl having 1 to 5 C atoms, in particular H, methyl, ethyl or n-propyl, $W^4$, $W^5$ and $W^6$ each, independently of one another, denote Cl, oxaalkyl or oxacarbonylalkyl having 1 to 5 C atoms, $W^7$ and $W^8$ each, independently of one another, denote H, Cl or alkyl having 1 to 5 C atoms, Phe denotes 1,4-phenylene, $k_1$, $k_2$ and $k_3$ each, independently of one another, denote 0 or 1, $k_3$ preferably denotes 1, and $k_4$ denotes an integer from 1 to 10.

Very particularly preferred groups P are selected from the group consisting of $CH_2=CW^1$-CO-O-, in particular $CH_2$=CH-CO-O-, $CH_2=C(CH_3)$-CO-O- and $CH_2$=CF-COO-, furthermore $CH_2$=CH-O-, $(CH_2=CH)_2$CH-O-CO-, $(CH_2=CH)_2$CH-O-,

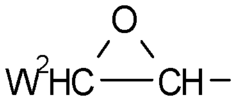 and 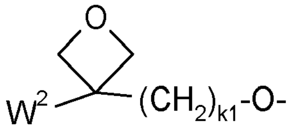 .

Further preferred polymerisable groups P are selected from the group consisting of vinyloxy, acrylate, methacrylate, fluoroacrylate, chloroacrylate, oxetane and epoxide, most preferably from acrylate and methacrylate.

If Sp is different from a single bond, it is preferably of the formula Sp"-X", so that the respective radical P-Sp- conforms to the formula P-Sp"-X"-, wherein

Sp" denotes alkylene having 1 to 20, preferably 1 to 12, C atoms, which is optionally mono- or polysubstituted by F, Cl, Br, I or CN and in which, in addition, one or more non-adjacent $CH_2$ groups may each be replaced, independently of one another, by -O-, -S-, -NH-, -N($R^0$)-, -Si($R^0R^{00}$)-,-CO-, -CO-O-, -O-CO-, -O-CO-O-, -S-CO-, -CO-S-, -N($R^{00}$)-CO-O-, -O-CO-N($R^0$)-, -N($R^0$)-CO-N($R^{00}$)-, -CH=CH- or -C≡C- in such a way that O and/or S atoms are not linked directly to one another,

X" denotes -O-, -S-, -CO-, -CO-O-, -O-CO-, -O-CO-O-, -CO-N($R^0$)-, -N($R^0$)-CO-, -N($R^0$)-CO-N($R^{00}$)-, -$OCH_2$-, -$CH_2$O-, -$SCH_2$-, -$CH_2$S-, -$CF_2$O-, - $OCF_2$-, -$CF_2$S-, -$SCF_2$-, -$CF_2CH_2$-, -$CH_2CF_2$-, -$CF_2CF_2$-, -CH=N-, -N=CH-, -N=N-, -CH=C$R^0$-, -$CY^2$=$CY^3$-, -C≡C-, -CH=CH-CO-O-, -O-CO-CH=CH- or a single bond,

$R^0$ and $R^{00}$ each, independently of one another, denote H or alkyl having 1 to 20 C atoms, and

$Y^2$ and $Y^3$ each, independently of one another, denote H, F, Cl or CN.

X" is preferably -O-, -S-, -CO-, -COO-, -OCO-, -O-COO-, -CO-N$R^0$-, -N$R^0$-CO-, -N$R^0$-CO-N$R^{00}$- or a single bond.

Typical spacer groups Sp and -Sp"-X"- are, for example, -$(CH_2)_{p1}$-, - $(CH_2CH_2O)_{q1}$-$CH_2CH_2$-, -$CH_2CH_2$-S-$CH_2CH_2$-, -$CH_2CH_2$-NH-$CH_2CH_2$- or -$(SiR^0R^{00}\text{-}O)_{p1}$-, in which p1 is an integer from 1 to 12, q1 is an integer from 1 to 3, and $R^0$ and $R^{00}$ have the meanings indicated above.

Particularly preferred groups Sp and -Sp"-X"- are -$(CH_2)_{p1}$-, -$(CH_2)_{p1}$-O-, -$(CH_2)_{p1}$-O-CO-, -$(CH_2)_{p1}$-CO-O-, -$(CH_2)_{p1}$-O-CO-O-, in which p1 and q1 have the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methyliminoethylene, 1-methylalkylene, ethenylene, propenylene and butenylene.

For the production of PSA displays, the polymerisable compounds contained in the liquid-crystalline medium are polymerised or crosslinked (if one compound contains two or more polymerisable groups) by in-situ polymerisation in the liquid-crystalline medium between the substrates of the LC display, optionally while a voltage is applied to the electrodes.

The structure of the PSA displays according to the invention corresponds to the usual geometry for PSA displays, as described in the prior art cited at the outset. Geometries without protrusions are preferred, in particular those in which, in addition, the electrode on the colour filter side is unstructured and only the electrode on the TFT side has slots. Particularly

suitable and preferred electrode structures for PS-VA displays are described, for example, in US 2006/0066793 A1.

The combination of compounds of the preferred embodiments mentioned above with the polymerised compounds described above causes low threshold voltages, low rotational viscosities and very good low-temperature stabilities in the liquid-crystalline media according to the invention at the same time as constantly high clearing points and high VHR values.

The use of liquid-crystalline media containing polymerisable compounds allows the rapid establishment of a particularly low pretilt angle in PSA displays. In particular, the liquid-crystalline media exhibit significantly shortened response times, in particular also the grey-shade response times, in PSA displays compared with the media from the prior art.

In further preferred embodiments, the medium according to the invention comprises the following compounds, where the acronyms are explained in Table D below:

- one, two or more compounds of formula I in a total concentration in the range of from 1 % to 10 %, preferably 2% to 9%, particularly preferably 3% to 8%;
- one or more compounds of formula LY in a total concentration in the range of from 2% to 10%, preferably 4% to 8%, particularly preferably 5% to 7%;
- one or more compounds of formula II, preferably of formula II-1 and/or II-3, in particular of the sub-formulae II-1a-1 and/or II-1f-1 and/or II-1g-1 and/or II-1h-1 and/or II-3d-1 in a total concentration in the range of from 3 % to 20 %, preferably from 5 % to 15 %, particularly preferably from 7 % to 11 %;
  and/or
- one or more compounds of formula III in a total concentration in the range of from 2% to 15%, preferably from 3% to 12%, more preferably from 4% to 10%, very preferably from 5% to 8%, preferably selected from the group of compounds of formula III-2, more preferably of the formulae III-2i and/or III-2l and/or III-2m, very preferably of the formulae III-2i-3 and/or III-2l-3 and/or III-2m-1, where the concentration of the compound(s) of the formula III-2m-1 is preferably 1% or less;
  and/or
- one or more compounds of formula IV-3 in a total concentration in the range of from 40 % to 50, very preferably selected from the compounds of the formulae IV-3-1 to IV-3-6, in particular the compounds of formula IV-3-2 and/or IV-3-6;
  and/or
- 2% to 7%, preferably 3% to 6% of the compound CC-3-2V1 or CC-4-V1, preferably of the compound CC-4-V1;
  and/or
- one or more compounds of formula IVb, preferably of formula VIb-2, very preferably of formula IVb-2-3, preferably in a total concentration in the range of from 0.5% to 8%, more preferably from 1% to 4%, in particular from 2% to 3%;
- in total 10% to 30% of one or more compounds of formula V, preferably selected from the group consisting of the compounds V-1, V-3, V-4, V-6, V-7, V-10, V-11, V-12, V-14, V-15, V-16 and V-17; more preferably, the medium comprises one or more compounds of the formulae V-6, V-10, V-16 and/or V-17, very preferably V-6 and V-10 and V-17; most preferably of formula CCP-V-n and/or CCP-nV-m and/or CCP-Vn-m and/or CCVC-n-Vm and/or CPGP-n-m, in particular of formula CCP-V-n and/or CCP-V2-n; and very particularly selected from the group of formulae CCP-V-1 and CCP-V2-1, in a total concentration in the range of from 10% to 30%, preferably from12% to 25%, in particular from 16% to 22% and, in addition 2% to 8% of a compound CCVC-n-Vm, preferably CCVC-3-V;

Very preferred media comprise

- One or more compounds of formula II-1g and II-1f and II-3d, preferably of formulae II-1g-1 and II-1f-1 and II-3d-1, preferably in a total concentration in the range of from 5% to 20%, more preferably from 7% to 18%, very preferably from 8% to 16% and in particular from 9% to 14%;
- the compound of formula V-17, very preferably of formula CPGP-5-2, in a total concentration in the range of from 0.1% to 5%, more preferably from 0.5% to 3% and on particular from 0.8% to 2% or to 1.5%.

The liquid-crystalline media according to the invention enable a significant broadening of the available parameter space. The achievable combinations of clearing point, viscosity at low temperature, thermal and UV stability and high optical anisotropy are far superior to previous materials from the prior art.

The liquid-crystalline media according to the invention, while retaining the nematic phase down to -20°C and preferably down to -30°C, particularly preferably down to -40°C, and the clearing point ≥ 85°C, preferably ≥ 95°C, at the same time allow rotational viscosities $\gamma_1$ of ≤ 100 mPa·s, particularly preferably ≤ 90 mPa·s, to be achieved, enabling excellent MLC displays having fast response times to be achieved. The rotational viscosities are determined at 20°C.

The dielectric anisotropy $\Delta\varepsilon$ of the liquid-crystalline media according to the invention at 20°C and 1kHz is

preferably ≥ +1.5, preferably in the range of from +1.5 to +8, more preferably from 2.0 to 7.0, very preferably from 3.0 to 5.0 and particularly preferably from 3.8 to 4.3.

The birefringence Δn of the liquid-crystalline media according to the invention at 20°C is preferably from 0.080 to 0.110, very preferably from 0.090 to 0.100, in particular from 0.092 to 0.097.

In an embodiment, the birefringence Δn of the liquid-crystalline media according to the invention at 20°C is preferably from 0.091 to 0.093.

The rotational viscosity $\gamma_1$ of the liquid-crystalline media according to the invention is preferably ≤ 100 mPa s, more preferably ≤ 90 mPa s, very preferably ≤ 85 mPa s.

The ratio $\gamma_1/K_{11}$ (in which $\gamma_1$ is the rotational viscosity $\gamma_1$ and $K_{11}$ is the elastic constant for splay deformation) of the liquid-crystalline media according to the invention is preferably ≤ 5.5 mPa·s/pN.

The nematic phase range of the liquid-crystalline media according to the invention preferably has a width of at least 90°, more preferably of at least 100 °C, in particular at least 110°. This range preferably extends at least from -25° to +80°C.

Herein, the structures of the mesogenic compounds are indicated by means of abbreviations, also referred to as acronyms. In these acronyms, the chemical formulae are abbreviated as follows using Tables A to C below. All groups $C_nH_{2n+1}$, $C_mH_{2m+1}$ and $C_lH_{2l+1}$, and $C_nH_{2n-1}$, $C_mH_{2m-1}$ and $C_lH_{2l-1}$ denote straight-chain alkyl or alkylene, respectively, in each case having n, m or l C atoms, wherein n and m, independently are 1, 2, 3, 4, 5, 6 or 7 and l is 1, 2 or 3. Table A lists the codes used for the ring elements of the core structures of the compounds, while Table B and Table C show the linking groups and end groups. Table D shows illustrative structures of compounds with their respective abbreviations.

**Table A: Ring elements**

| | | | |
|---|---|---|---|
| **C** | 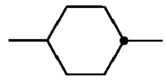 | | |
| **D** | 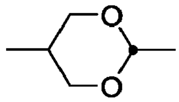 | **DI** | 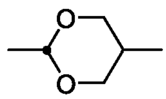 |
| **A** | 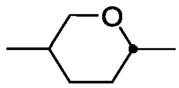 | **AI** | 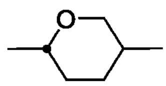 |
| **G** | 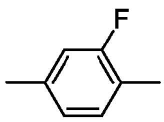 | **GI** | 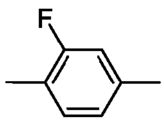 |
| **U** | 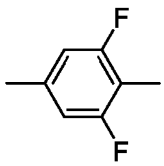 | **UI** | 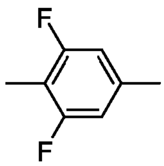 |
| **Y** | 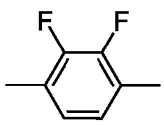 | | |
| **M** | 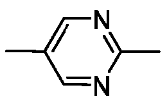 | **MI** | 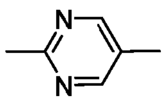 |
| **N** | 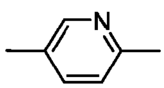 | **NI** | 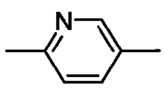 |
| **K** | 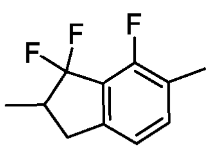 | **KI** | 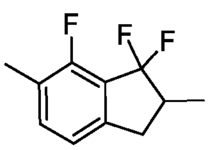 |

(continued)

| | | | |
|---|---|---|---|
| **L** | 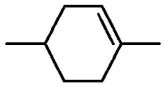 | **LI** | 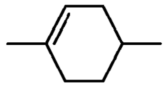 |
| **F** | 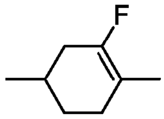 | **FI** | 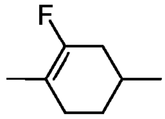 |
| **P** | 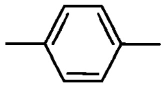 | **P(o)** | 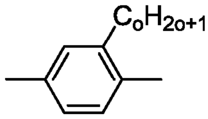 |
| **P(i3)** | 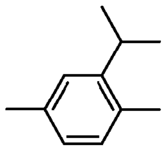 | **PI(o)** | 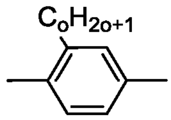 |

**Table B: Linking groups**

| | | | |
|---|---|---|---|
| **E** | $-CH_2CH_2-$ | **Z** | -CO-O- |
| **V** | -CH=CH- | **ZI** | -O-CO- |
| **X** | -CF=CH- | **O** | $-CH_2-O-$ |
| **XI** | -CH=CF- | **OI** | $-O-CH_2-$ |
| **B** | -CF=CF- | **Q** | $-CF_2-O-$ |
| **T** | -C≡C- | **QI** | $-O-CF_2-$ |
| **W** | $-CF_2CF_2-$ | | |

**Table C: End groups**

| **Left-hand side** | | **Right-hand side** | |
|---|---|---|---|
| | | **Used alone** | |
| **-n-** | $C_nH_{2n+1}-$ | **-n** | $-C_nH_{2n+1}$ |
| **-nO-** | $C_nH_{2n+1}-O-$ | **-On** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH-\ C_nH_{2n+1}-$ | **-Vn** | $-CH=CH-C_nH_{2n+1}$ |
| **-nVm-** | $C_nH_{2n+1}-CH=CH-C_mH_{2m}-$ | **-nVm** | $-C_nH_{2n}-CH=CH-C_mH_{2m+1}$ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O-$ | **-OM** | $-OCFH_2$ |
| **-DO-** | $CF_2HO-$ | **-OD** | $-OCF_2H$ |
| **-TO-** | $CF_3O-$ | **-OT** | $-OCF_3$ |
| **-FXO-** | $CF_2=CH-O-$ | **-OXF** | $-O-CH=CF_2$ |
| **-A-** | H-C≡C- | **-A** | -C≡C-H |
| **-nA-** | $C_nH_{2n+1}-C≡C-$ | **-An** | $-C≡C-C_nH_{2n+1}$ |
| **-NA-** | N≡C-C≡C- | **-AN** | -C≡C-C≡N |
| **-(cn)-** | 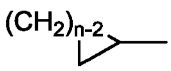 | **-(cn)** | 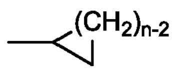 |

(continued)

| Left-hand side | | Right-hand side | |
|---|---|---|---|
| | | **Used alone** | |
| **-(cn)m-** | 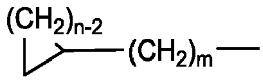 | **-m(cn)** | 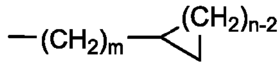 |
| **Used in combination with others** | | | |
| **-...A...-** | -C≡C- | **-...A...-** | -C≡C- |
| **-...V...-** | -CH=CH- | **-...V...-** | -CH=CH- |
| **-...Z...-** | -CO-O- | **-...Z...-** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...-** | -CF=CF- |

in which n and m each denote integers, and the three dots "..." are placeholders for other abbreviations from this table.

## Table D

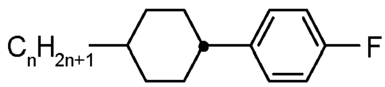

**CP-n-F**

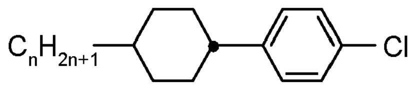

**CP-n-CL**

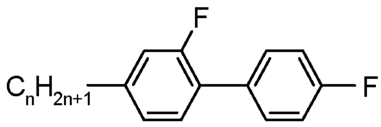

**GP-n-F**

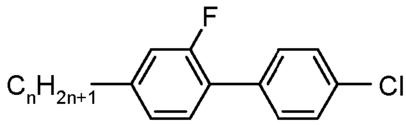

**GP-n-CL**

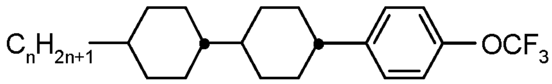

**CCP-n-OT**

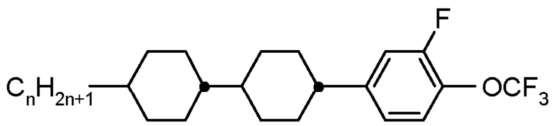

**CCG-n-OT**

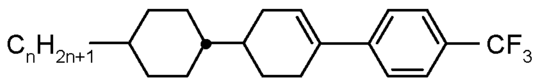

**CLP-n-T**

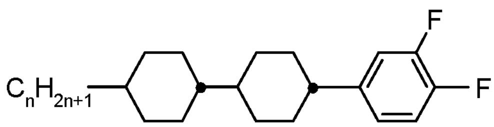

**CCG-n-F**

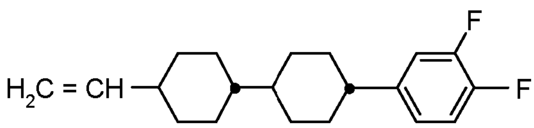

**CCG-V-F**

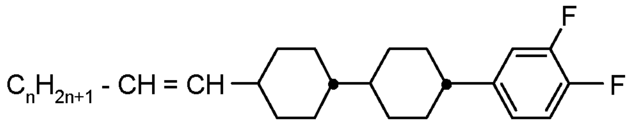

**CCG-nV-F**

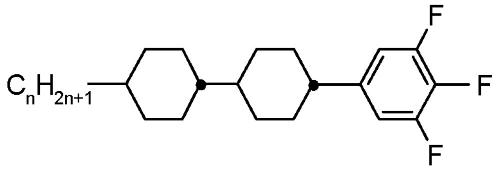

**CCU-n-F**

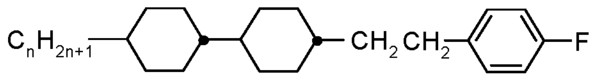

**CCEP-n-F**

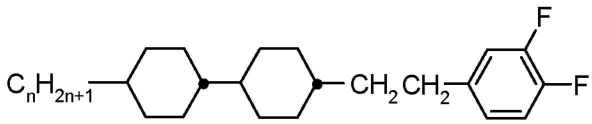

**CCEU-n-F**

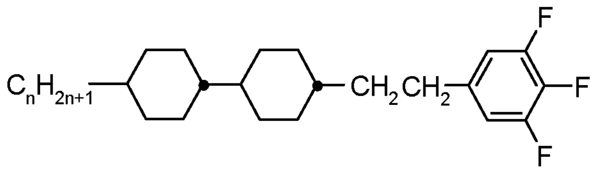

**CCEU-n-F**

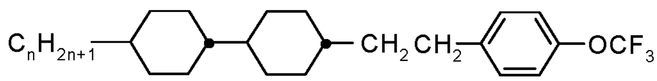

**CCEP-n-OT**

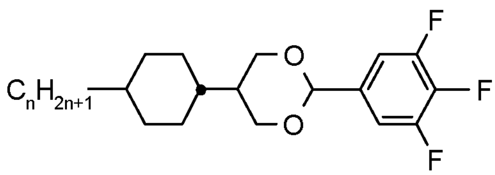

**CDU-n-F**

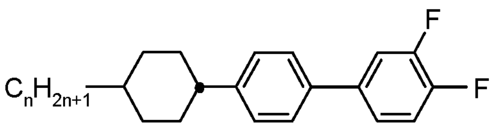

**CPG-n-F**

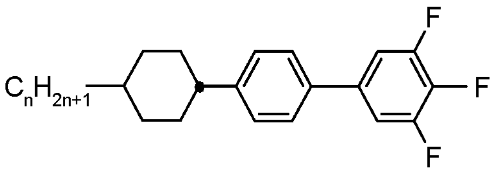

**CPU-n-F**

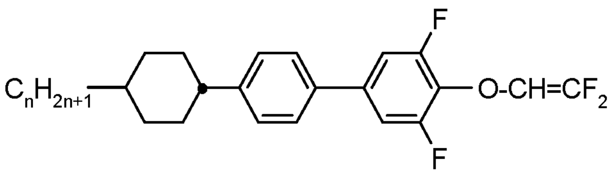

**CPU-n-OXF**

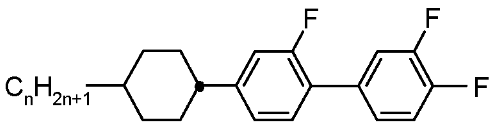

**CGG-n-F**

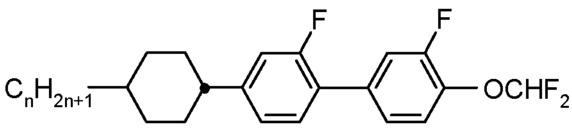

**CGG-n-OD**

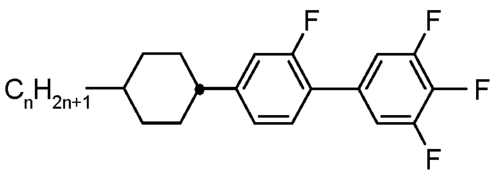

**CGU-n-F**

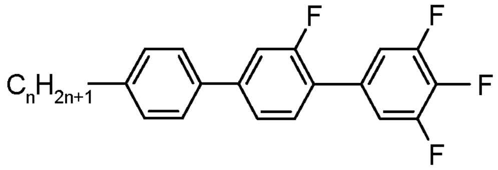

**PGU-n-F**

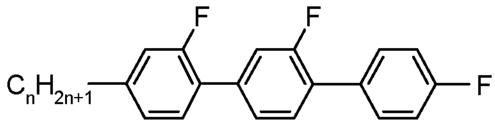

**GGP-n-F**

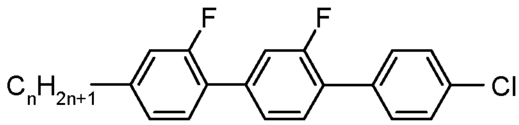

**GGP-n-Cl**

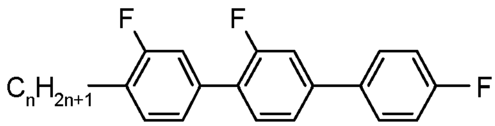

**GIGIP-n-F**

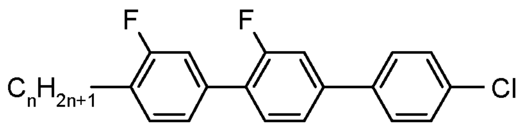

**GIGIP-n-Cl**

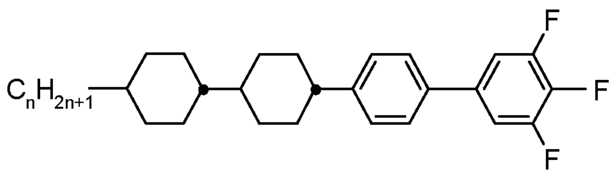

**CCPU-n-F**

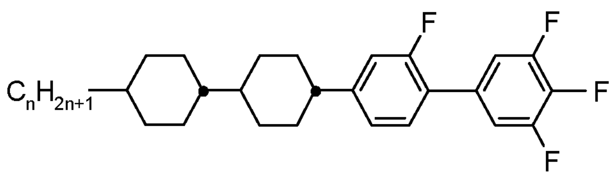

**CCGU-n-F**

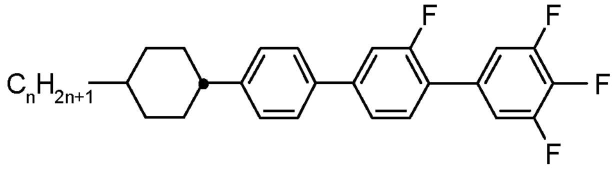

**CPGU-n-F**

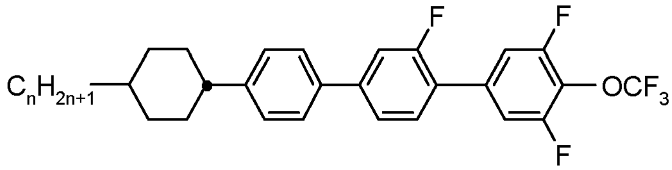

**CPGU-n-OT**

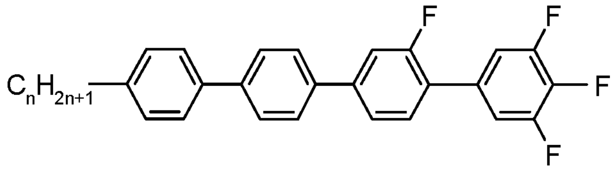

**PPGU-n-F**

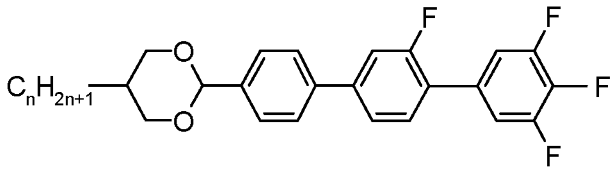

**DPGU-n-F**

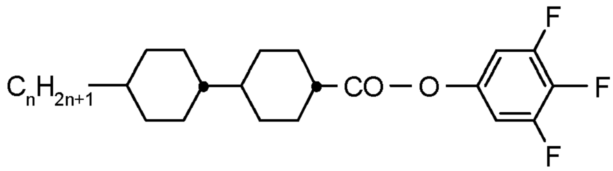

**CCZU-n-F**

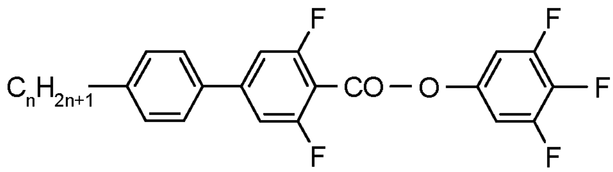

**PUZU-n-F**

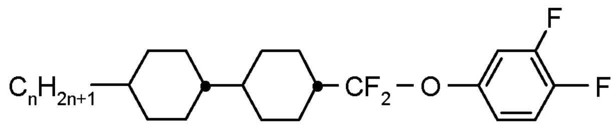

CCQG-n-F

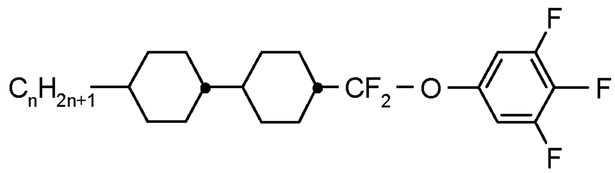

CCQU-n-F

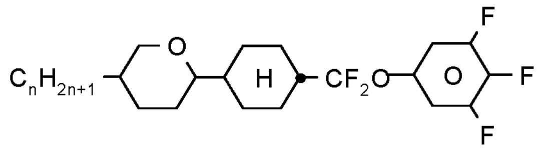

ACQU-n-F

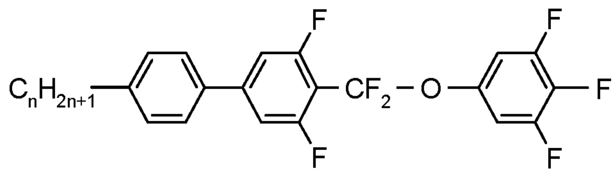

PUQU-n-F

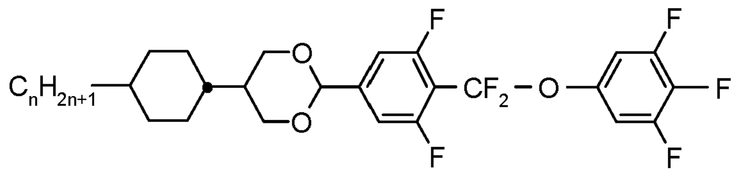

CDUQU-n-F

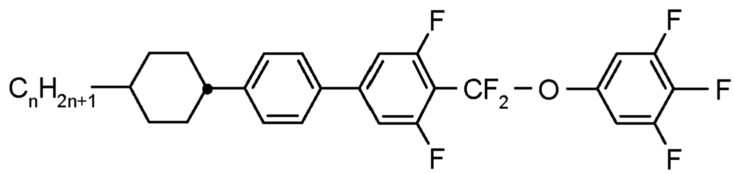

CPUQU-n-F

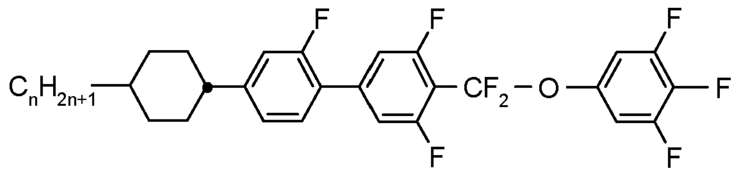

**CGUQU-n-F**

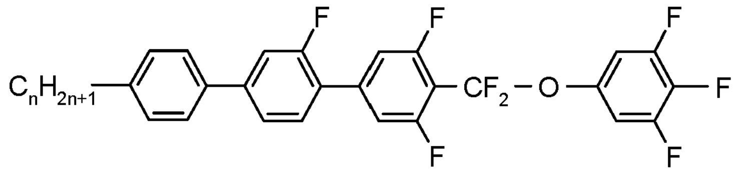

**PGUQU-n-F**

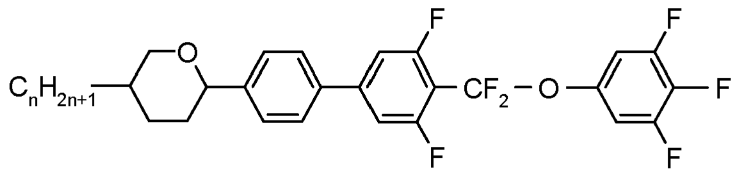

**APUQU-n-F**

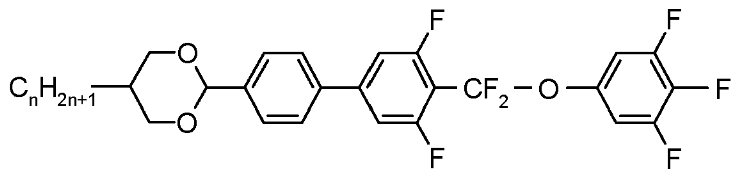

**DPUQU-n-F**

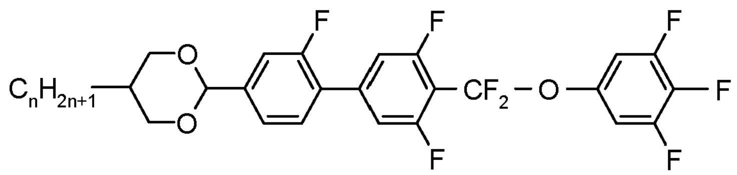

**DGUQU-n-F**

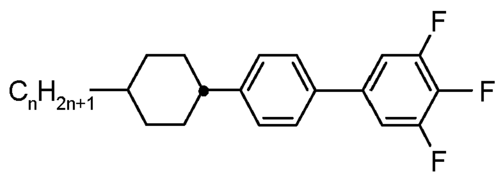

**CPU-n-F**

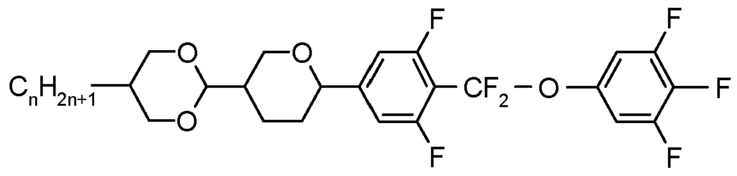

**DAUQU-n-F**

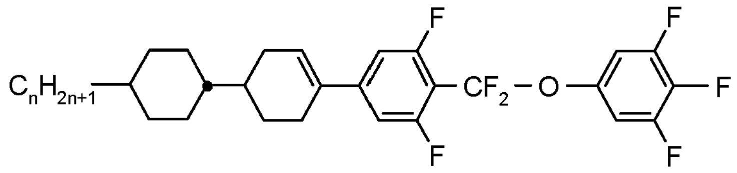

**CLUQU-n-F**

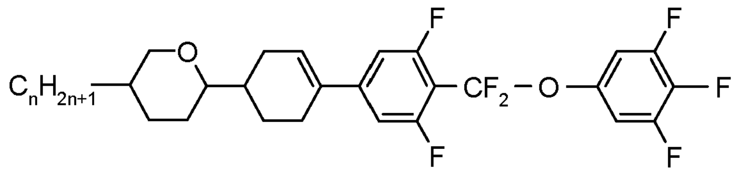

**ALUQU-n-F**

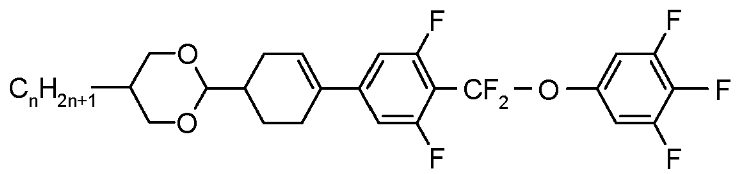

**DLUQU-n-F**

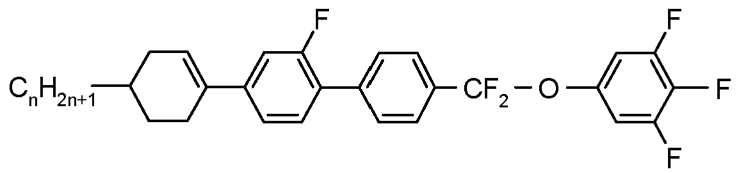

**LGPQU-n-F**

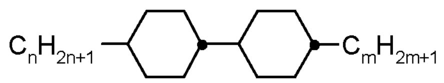

**CC-n-m**

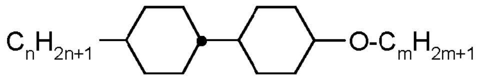

**CC-n-Om**

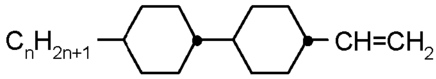

**CC-n-V**

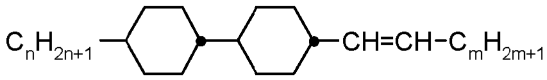

**CC-n-Vm**

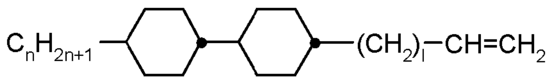

**CC-n-IV**

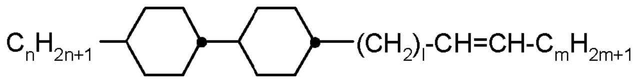

**CC-n-IVm**

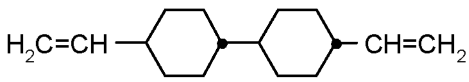

**CC-V-V**

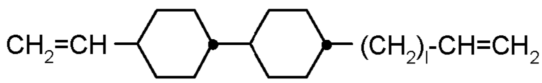

**CC-V-IV**

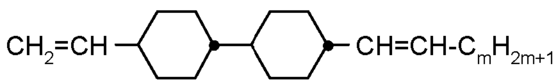

**CC-V-Vm**

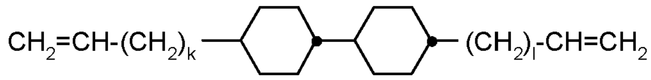

**CC-Vk-IV**

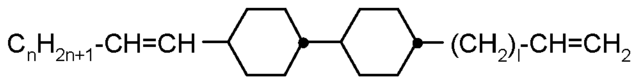

**CC-nV-IV**

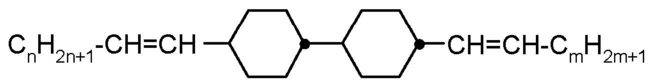

**CC-nV-Vm**

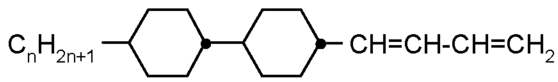

**CC-n-VV**

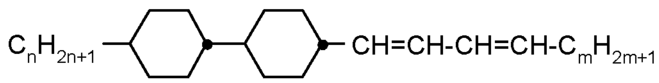

**CC-n-VVm**

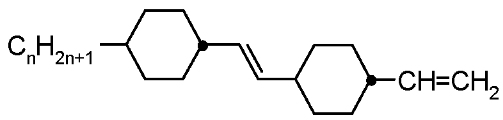

**CVC-n-V**

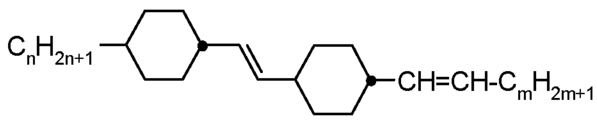

**CVC-n-Vm**

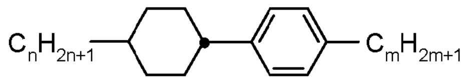

CP-n-m

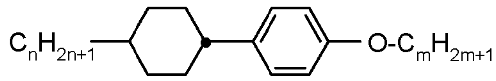

CP-n-Om

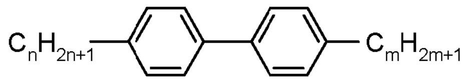

PP-n-m

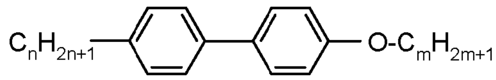

PP-n-Om

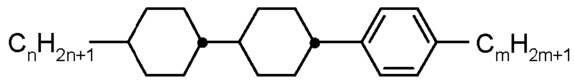

CCP-n-m

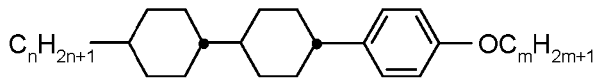

CCP-n-Om

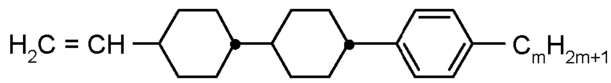

CCP-V-m

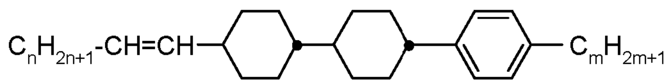

CCP-nV-m

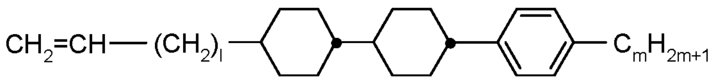

**CCP-Vl-m**

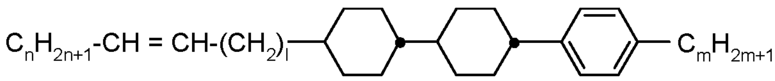

**CCP-nVl-m**

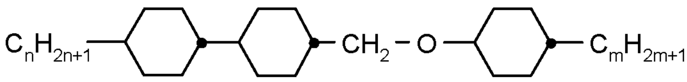

**CCOC-n-m**

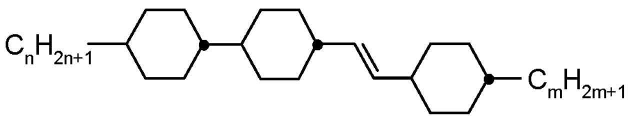

**CCVC-n-m**

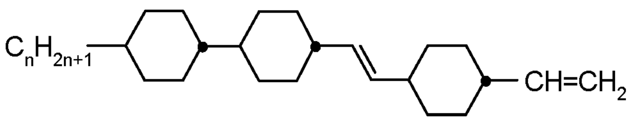

**CCVC-n-V**

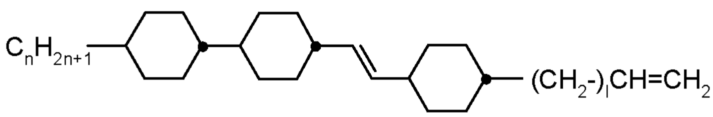

**CCVC-n-lV**

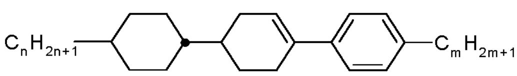

**CLP-n-m**

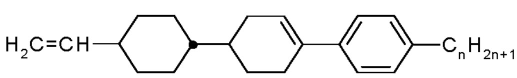

**CLP-V-n**

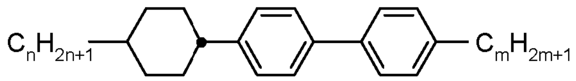

**CPP-n-m**

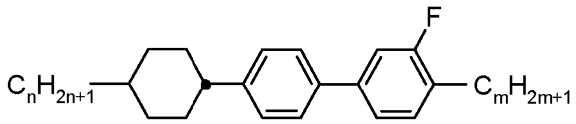

**CPG-n-m**

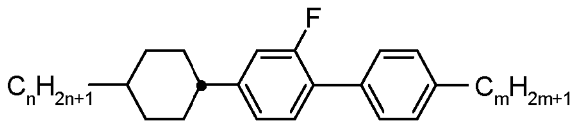

**CGP-n-m**

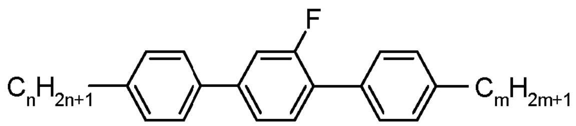

**PGP-n-m**

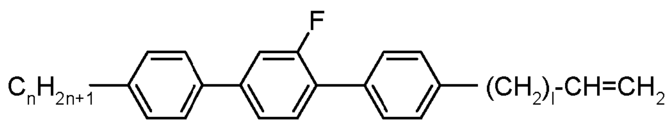

**PGP-n-IV**

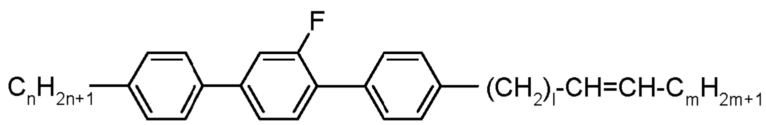

**PGP-n-IVm**

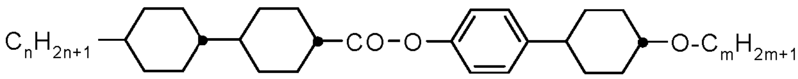

**CCZPC-n-m**

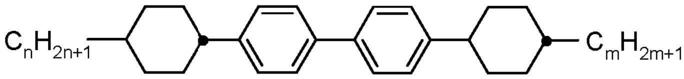

**CPPC-n-m**

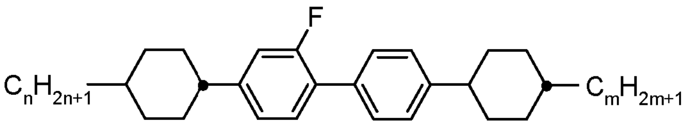

**CGPC-n-m**

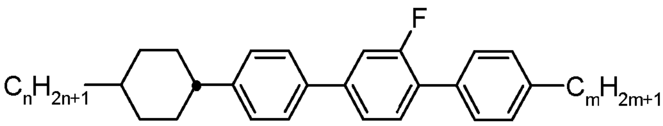

**CPGP-n-m**

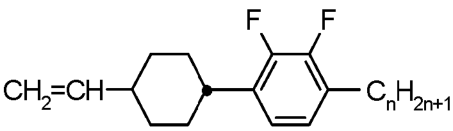

**CY-V-n**

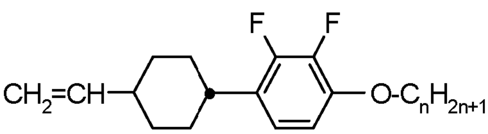

**CY-V-On**

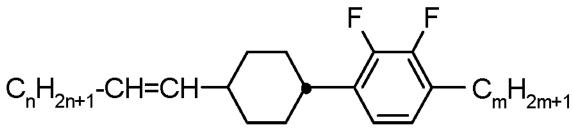

**CY-nV-m**

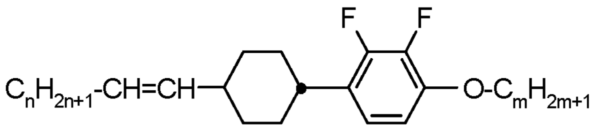

**CY-nV-Om**

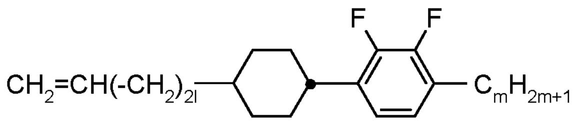

**CY-Vl-m**

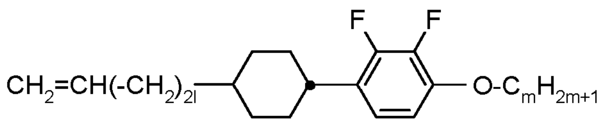

**CY-Vl-Om**

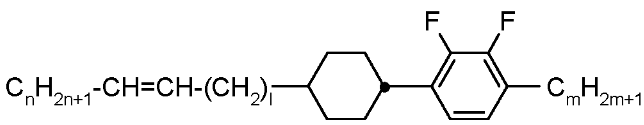

**CY-nVl-m**

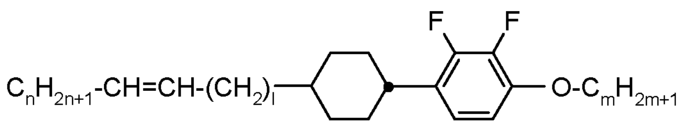

**CY-nVl-Om**

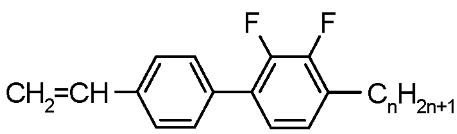

**PY-V-n**

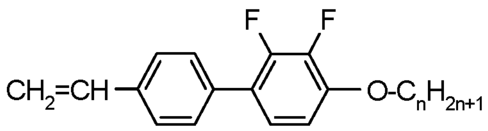

**PY-V-On**

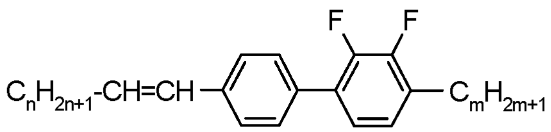

**PY-nV-m**

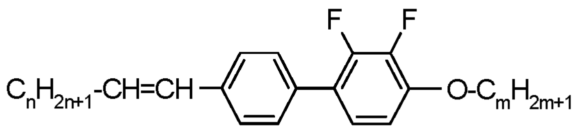

**PY-nV-Om**

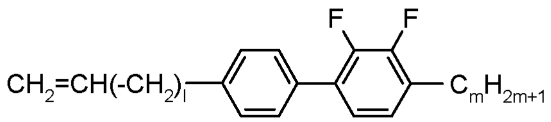

**PY-Vl-m**

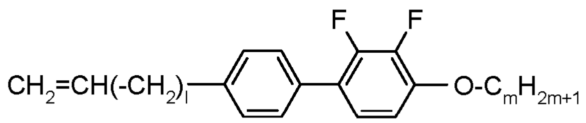

**PY-Vl-Om**

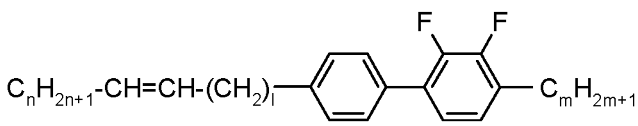

**PY-nVl-m**

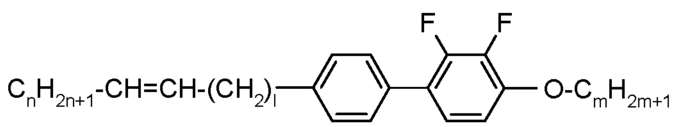

**PY-nVl-Om**

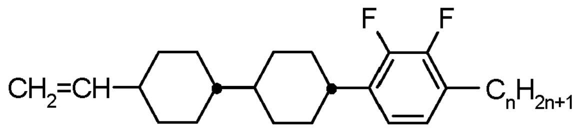

**CCY-V-n**

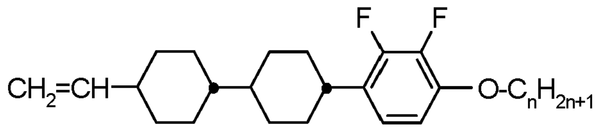

**CCY-V-On**

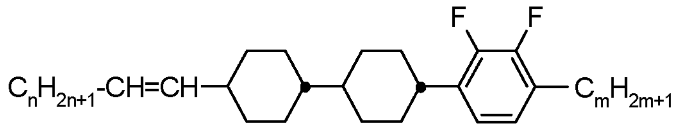

**CCY-nV-m**

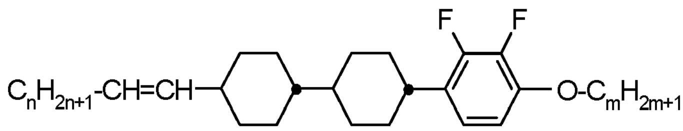

**CCY-nV-Om**

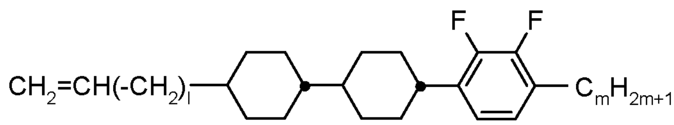

**CCY-Vl-m**

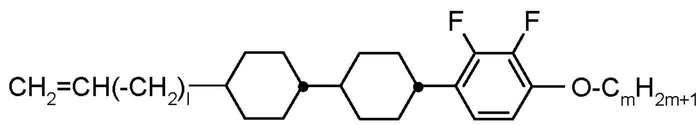

**CCY-Vl-Om**

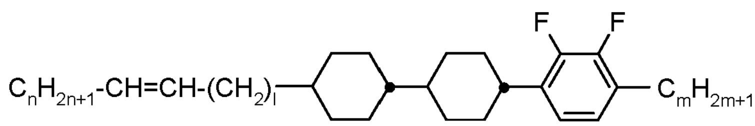

**CCY-nVl-m**

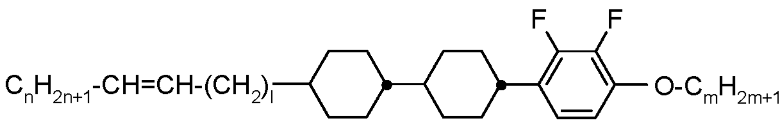

**CCY-nVl-Om**

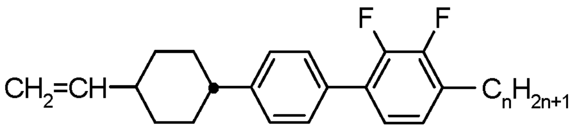

**CPY-V-n**

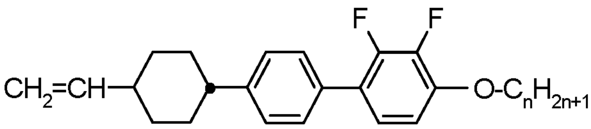

**CPY-V-On**

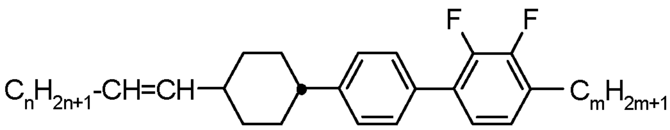

**CPY-nV-m**

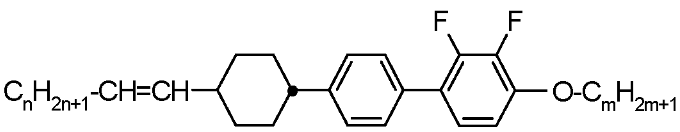

**CPY-nV-Om**

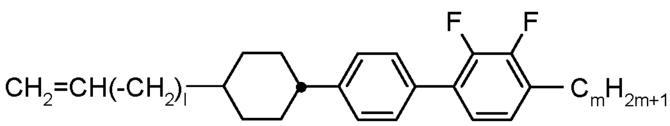

**CPY-Vl-m**

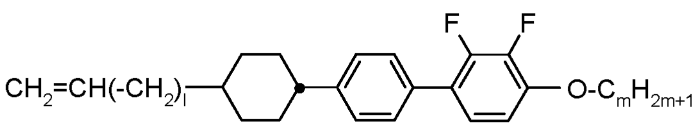

**CPY-Vl-Om**

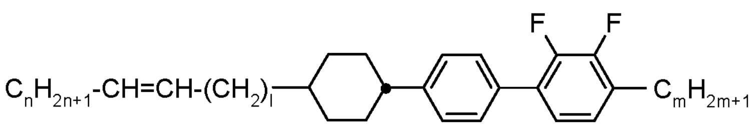

**CPY-nVl-k**

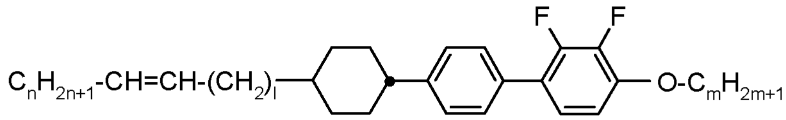

**CPY-nVl-Om**

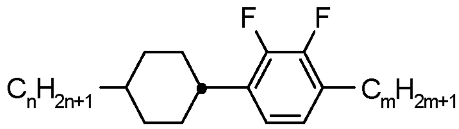

**CY-n-m**

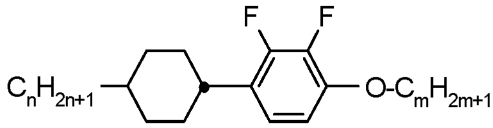

**CY-n-Om**

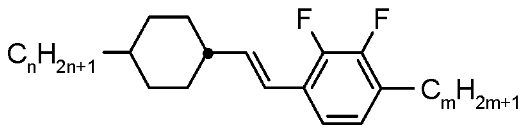

**CVY-n-m**

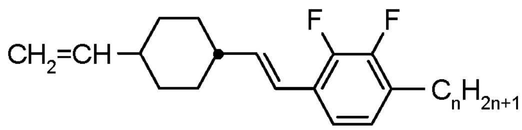

**CVY-V-n**

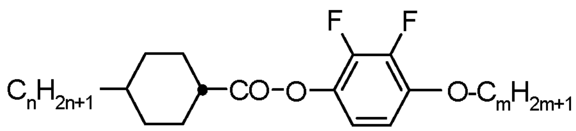

**CZY-n-Om**

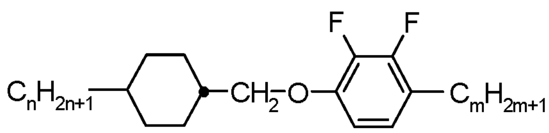

COY-n-m

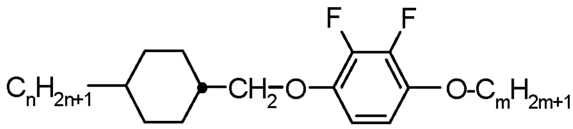

COY-n-Om

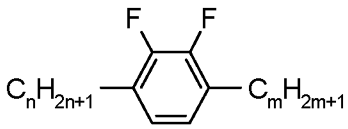

Y-n-m

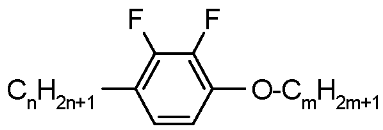

Y-n-Om

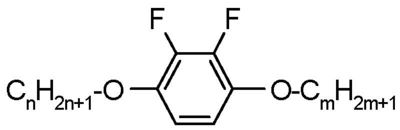

Y-nO-Om

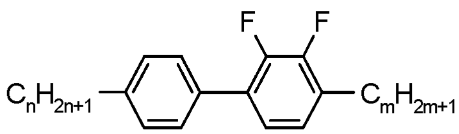

PY-n-m

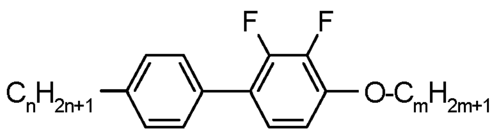

PY-n-Om

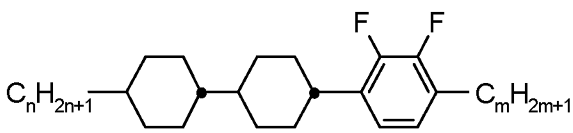

**CCY-n-m**

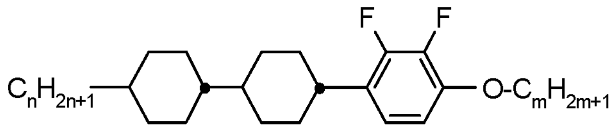

**CCY-n-Om**

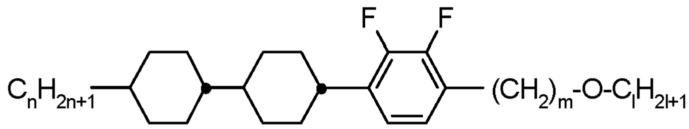

**CCY-n-mOl**

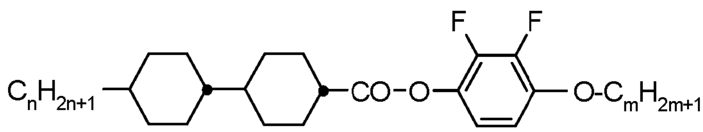

**CCZY-n-Om**

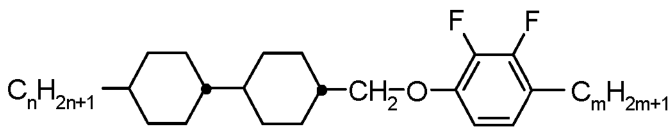

**CCOY-n-m**

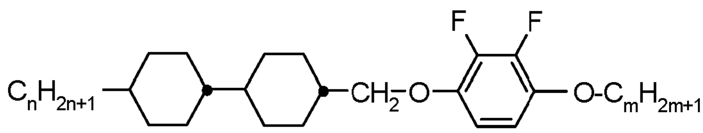

**CCOY-n-Om**

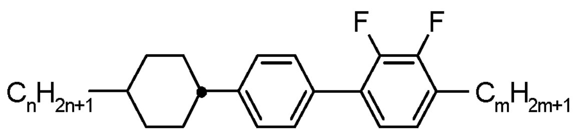

**CPY-n-m**

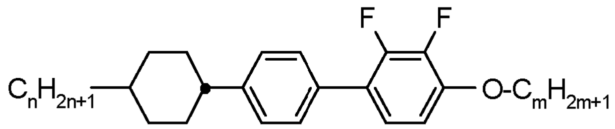

**CPY-n-Om**

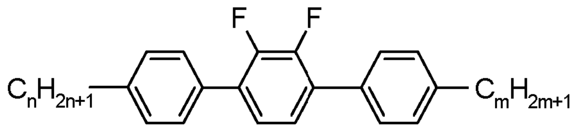

**PYP-n-m**

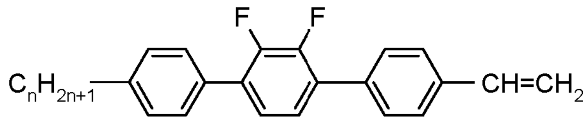

**PYP-n-V**

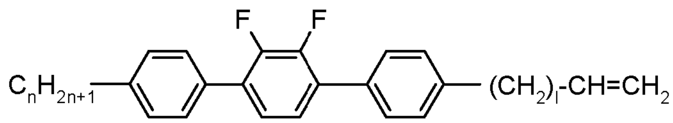

**PYP-n-lV**

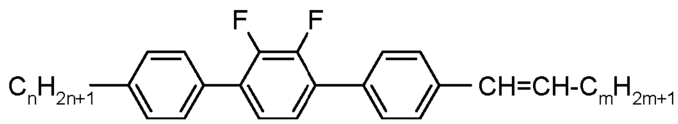

**PYP-n-Vm**

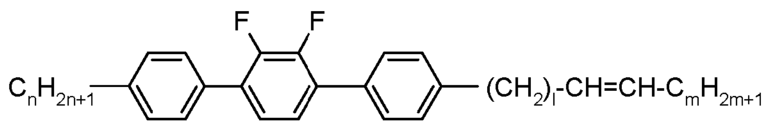

**PYP-n-lVm**

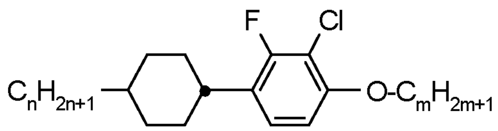

**CP(F,Cl)-n-Om**

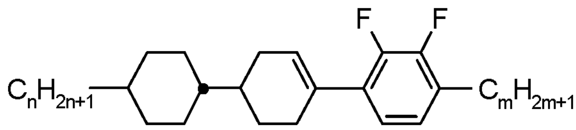

**CLY-n-m**

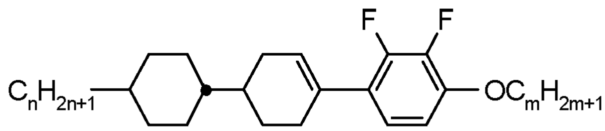

**CLY-n-Om**

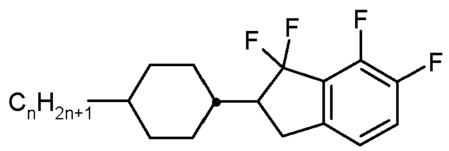

**CK-n-F**

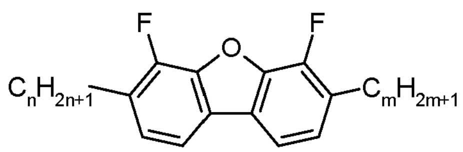

**B-n-m**

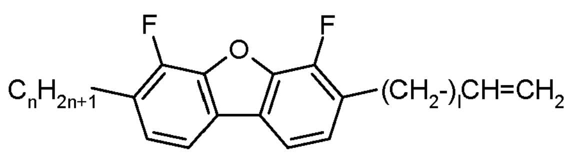

**B-n-IV**

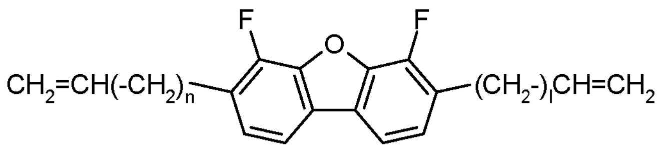

**B-Vn-IV**

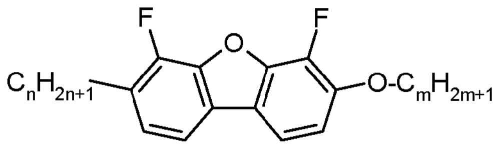

**B-n-Om**

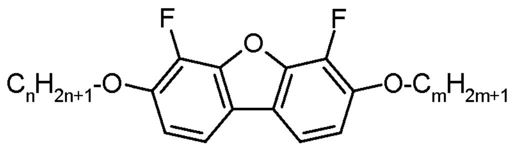

**B-nO-Om**

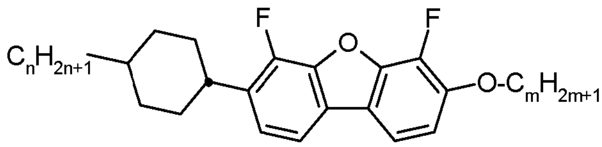

**CB-n-Om**

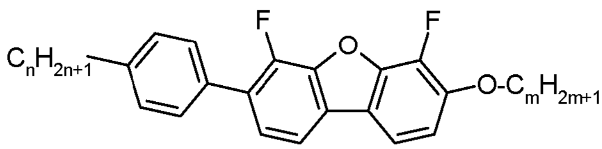

**PB-n-Om**

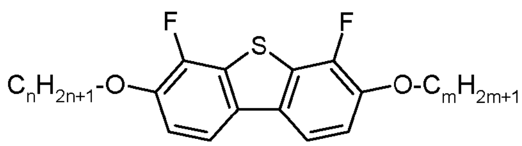

**B(S)-nO-Om**

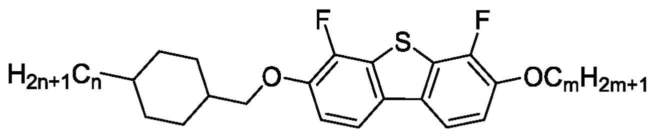

**COB(S)-n-Om**

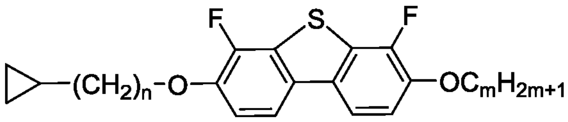

B(S)-(c3)nO-Om

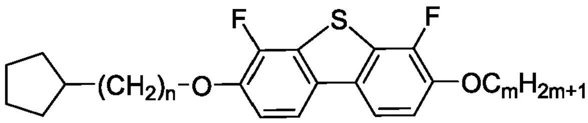

B(S)-(c5)nO-Om

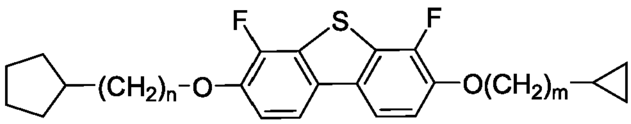

B(S)-(c5)nO-Om(c3)

In a preferred embodiment of the present invention, the media comprise one or more compounds selected from the group of the compounds of Table D.

Table E shows chiral dopants which are preferably employed in the mixtures according to the invention.

**Table E**

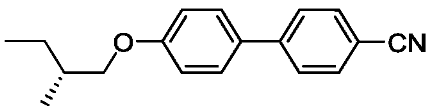

C 15

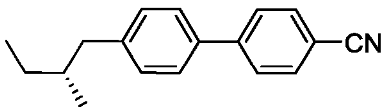

CB 15

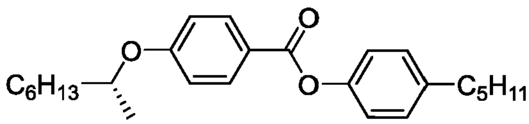

CM 21

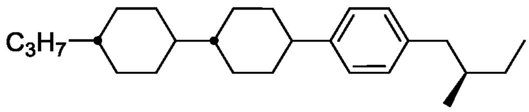

CM 44

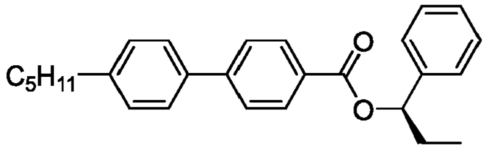

CM 45

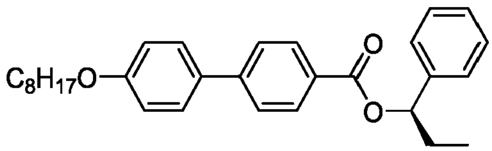

CM 47

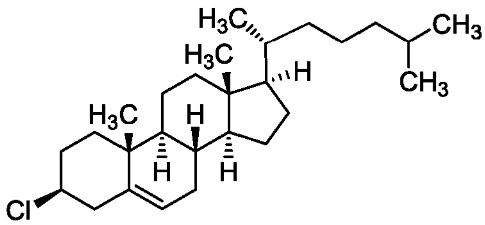

CC

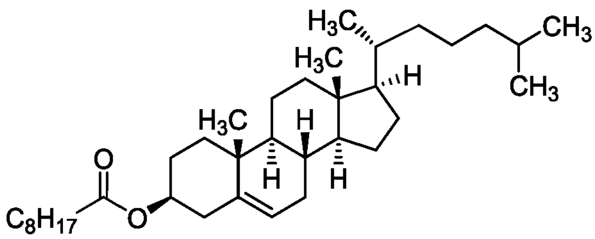

CN

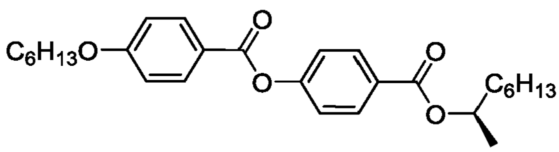

R/S-811

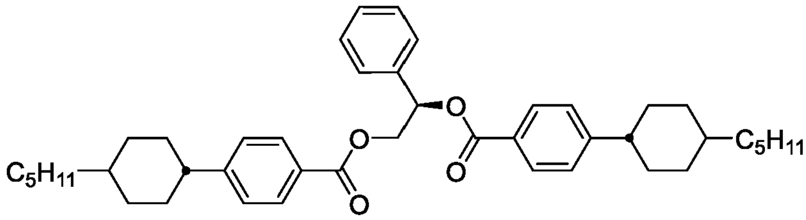

R/S-1011

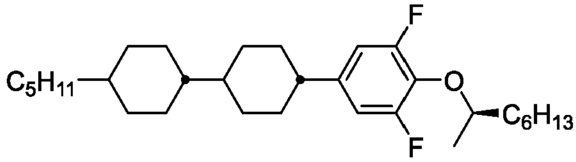

R/S-2011

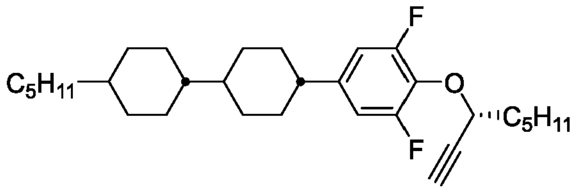

R/S-3011

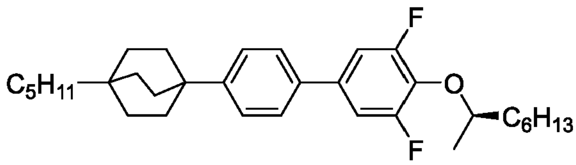

R/S-4011

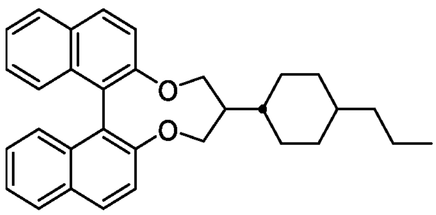

R/S-5011

Preferably, the media according to the invention comprise one or more compounds selected from the group of the compounds from Table E.

## Table F

Table F shows illustrative reactive mesogenic compounds (RM) which can be used in the LC media in accordance with the present invention.

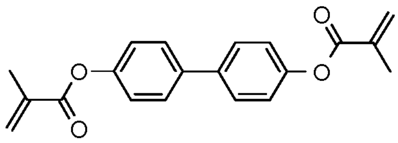

RM-1

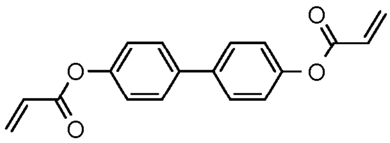

RM-2

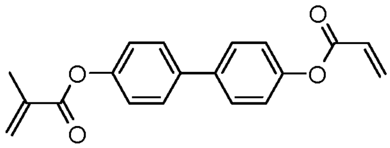

RM-3

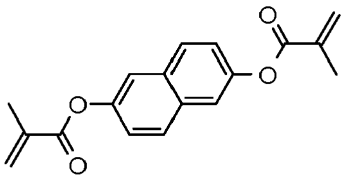

RM-4

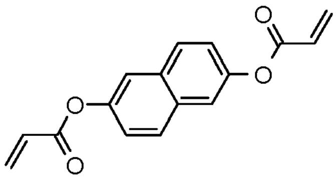

RM-5

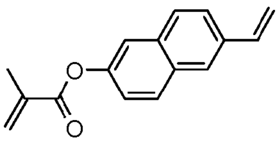

RM-6

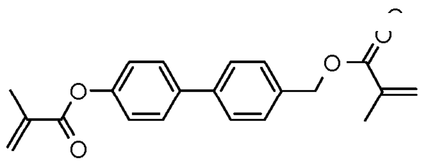

RM-7

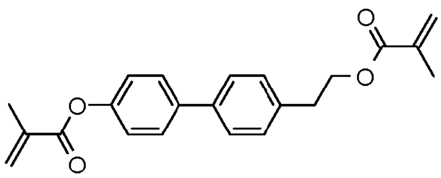

RM-8

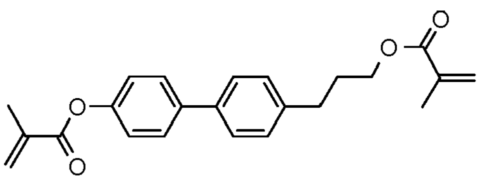

RM-9

(continued)

Table F shows illustrative reactive mesogenic compounds (RM) which can be used in the LC media in accordance with the present invention.

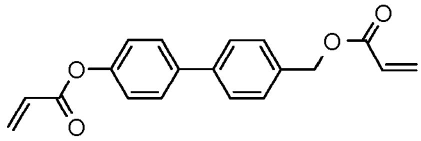

RM-10

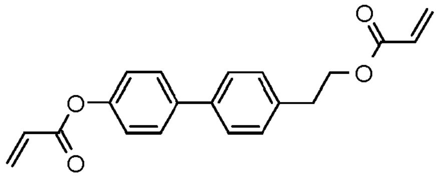

RM-11

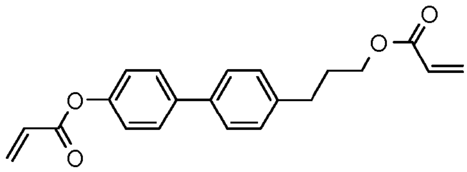

RM-12

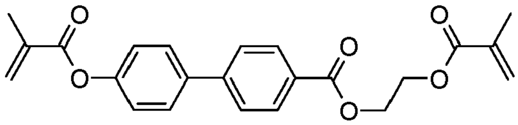

RM-13

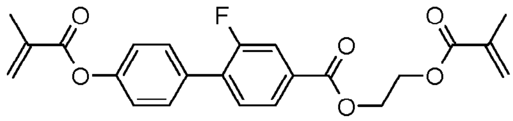

RM-14

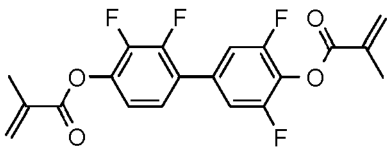

RM-15

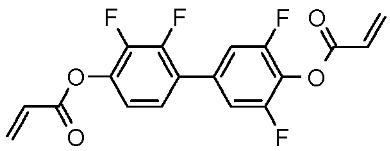

RM-16

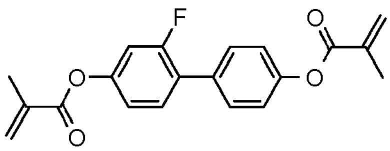

RM-17

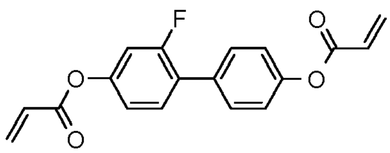

RM-18

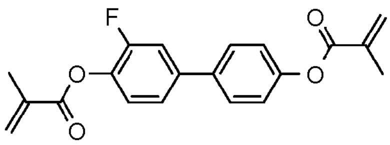

RM-19

(continued)

Table F shows illustrative reactive mesogenic compounds (RM) which can be used in the LC media in accordance with the present invention.

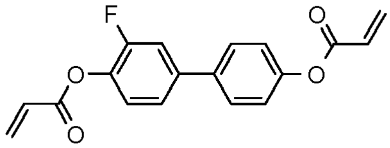

RM-20

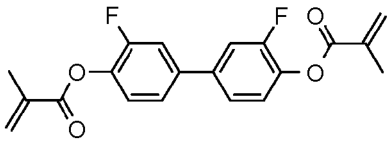

RM-21

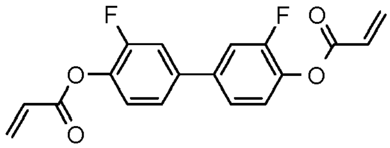

RM-22

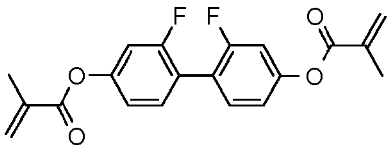

RM-23

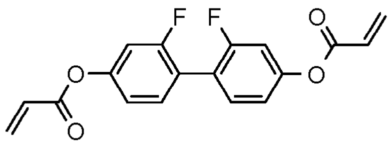

RM-24

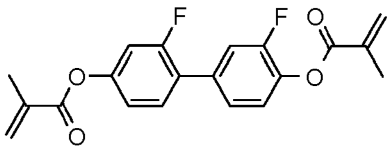

RM-25

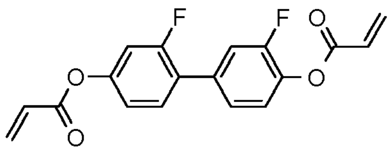

RM-26

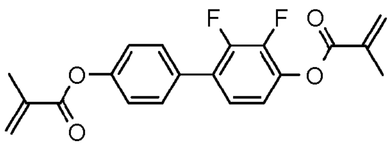

RM-27

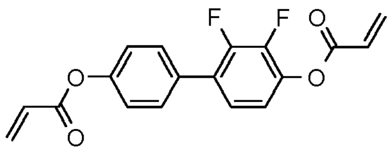

RM-28

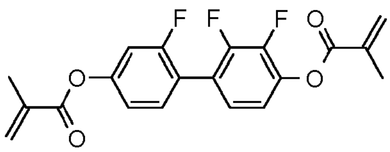

RM-29

(continued)

Table F shows illustrative reactive mesogenic compounds (RM) which can be used in the LC media in accordance with the present invention.

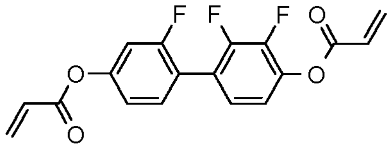

RM-30

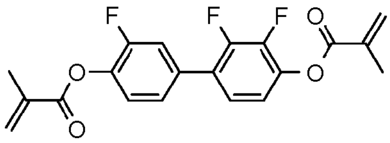

RM-31

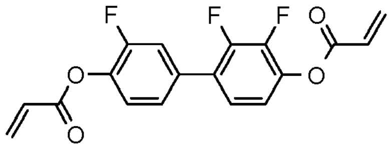

RM-32

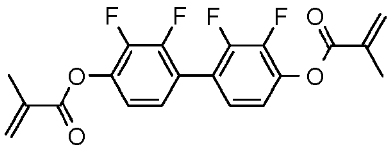

RM-33

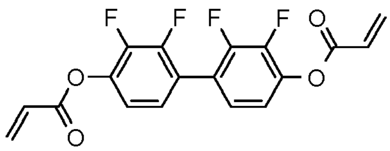

RM-34

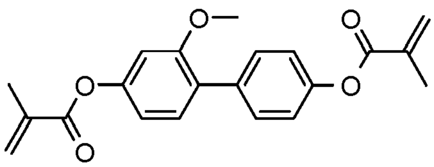

RM-35

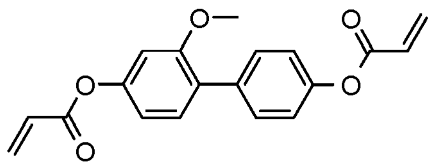

RM-36

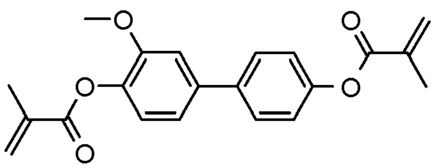

RM-37

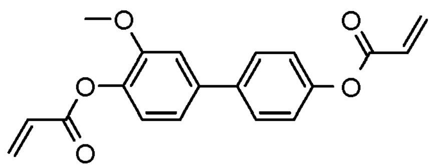

RM-38

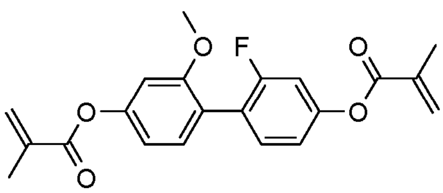

RM-39

(continued)

Table F shows illustrative reactive mesogenic compounds (RM) which can be used in the LC media in accordance with the present invention.

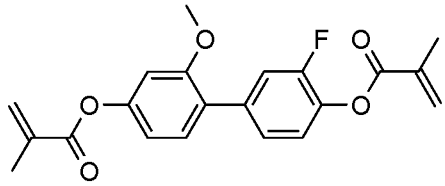

RM-40

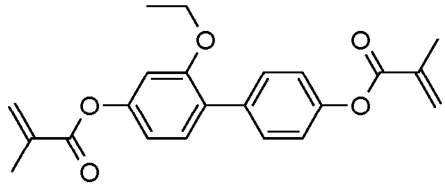

RM-41

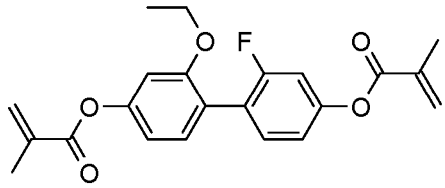

RM-42

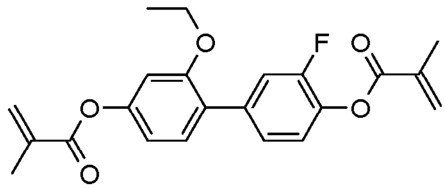

RM-43

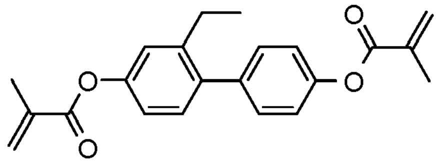

RM-44

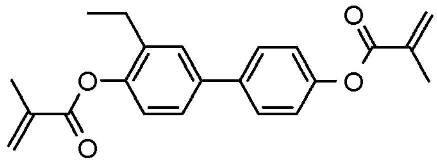

RM-45

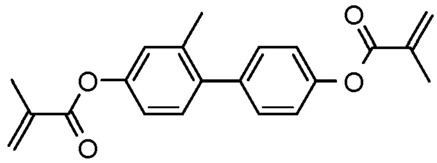

RM-46

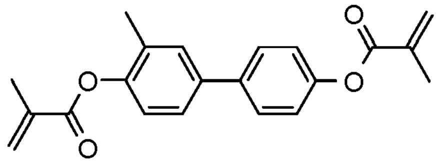

RM-47

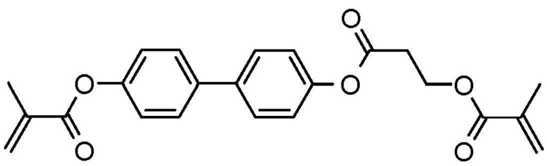

RM-48

(continued)

Table F shows illustrative reactive mesogenic compounds (RM) which can be used in the LC media in accordance with the present invention.

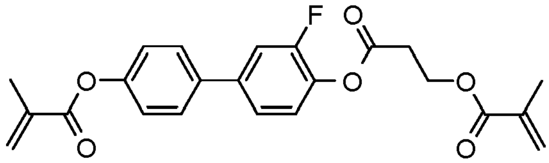

RM-49

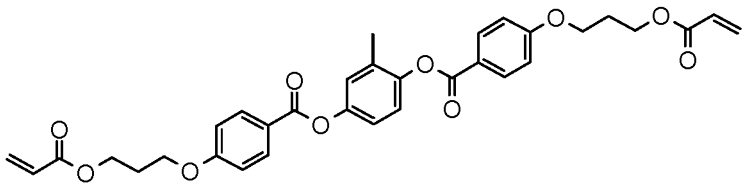

RM-50

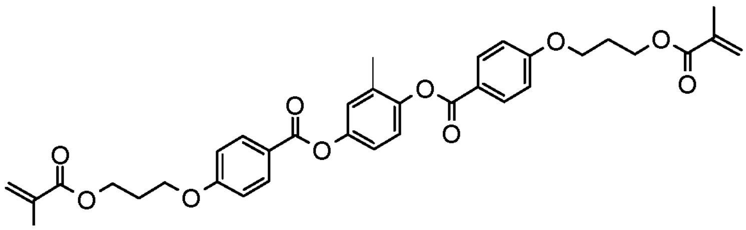

RM-51

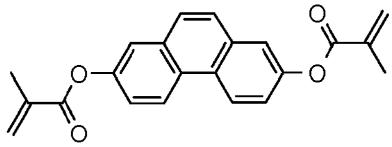

RM-52

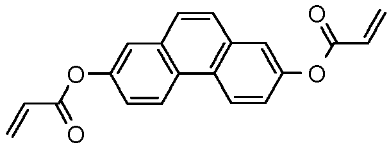

RM-53

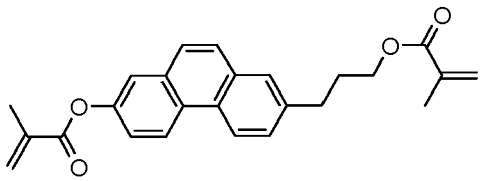

RM-54

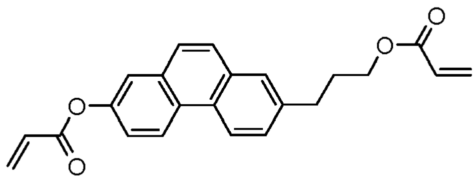

RM-55

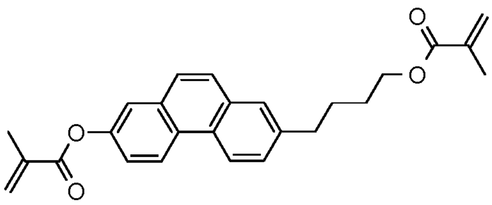

RM-56

(continued)

Table F shows illustrative reactive mesogenic compounds (RM) which can be used in the LC media in accordance with the present invention.

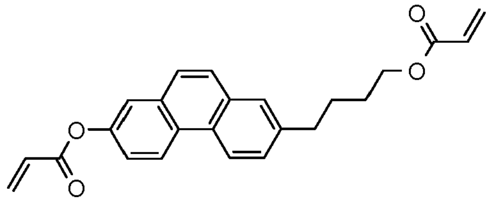

RM-57

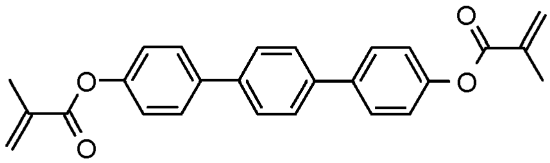

RM-58

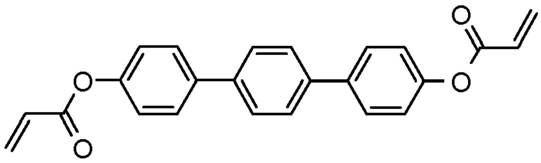

RM-59

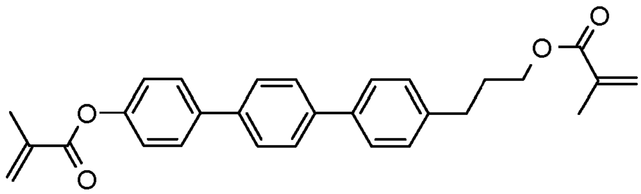

RM-60

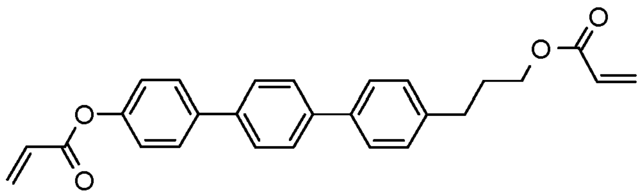

RM-61

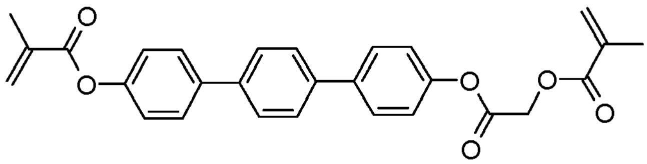

RM-62

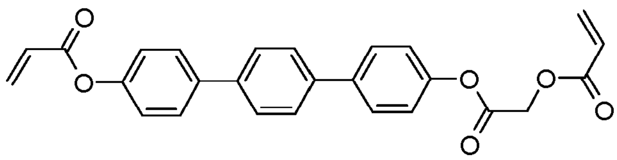

RM-63

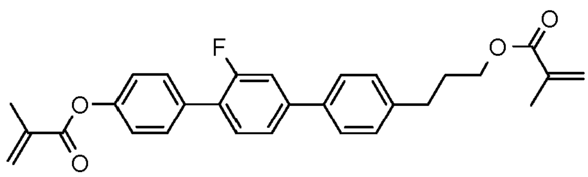

RM-64

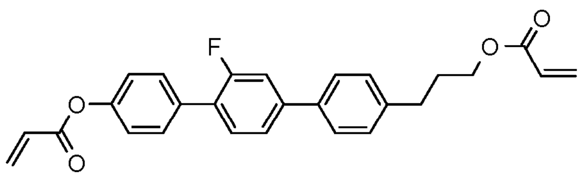

RM-65

(continued)

Table F shows illustrative reactive mesogenic compounds (RM) which can be used in the LC media in accordance with the present invention.

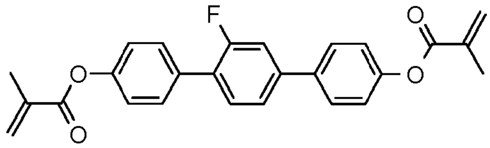

RM-66

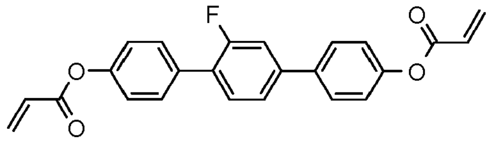

RM-67

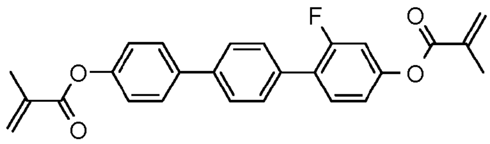

RM-68

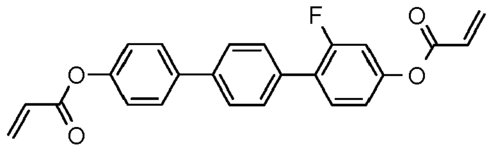

RM-69

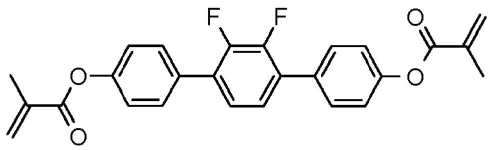

RM-70

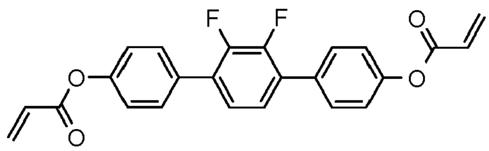

RM-71

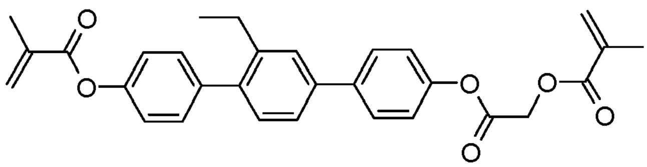

RM-72

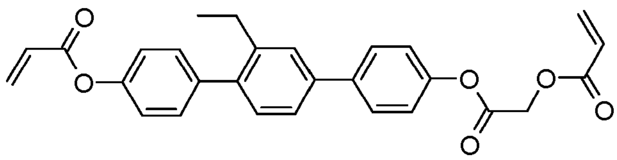

RM-73

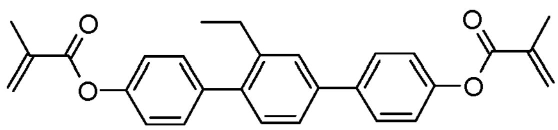

RM-74

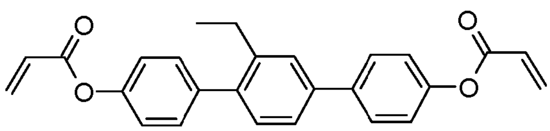

RM-75

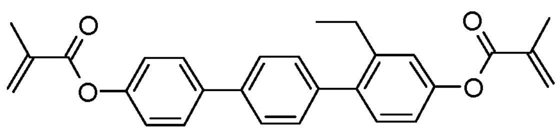

RM-76

(continued)

Table F shows illustrative reactive mesogenic compounds (RM) which can be used in the LC media in accordance with the present invention.

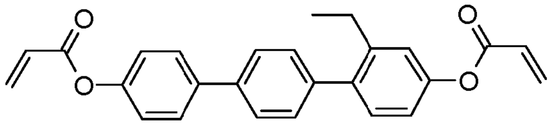

RM-77

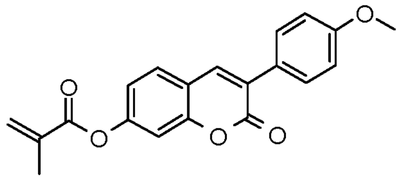

RM-78

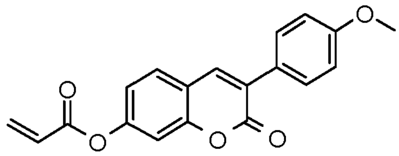

RM-79

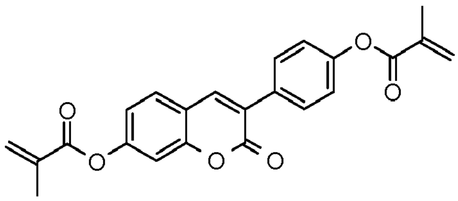

RM-80

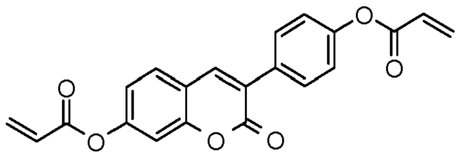

RM-81

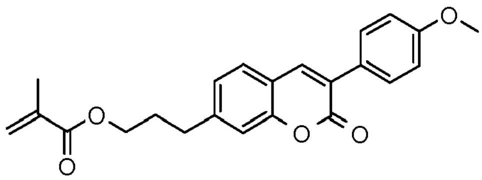

RM-82

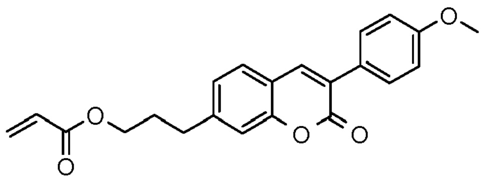

RM-83

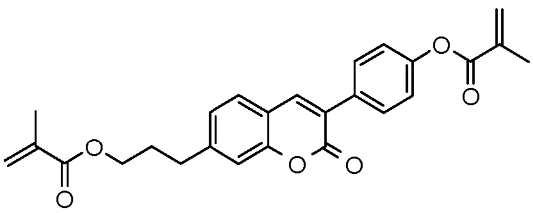

RM-84

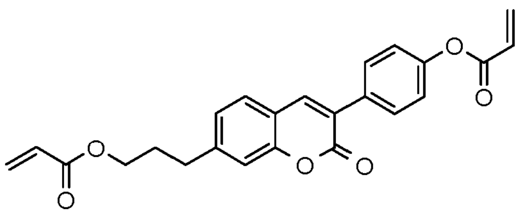

RM-85

(continued)

Table F shows illustrative reactive mesogenic compounds (RM) which can be used in the LC media in accordance with the present invention.

RM-86

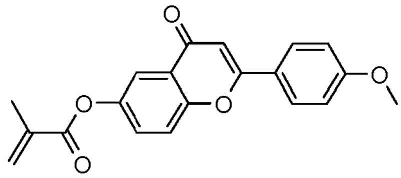

RM-87

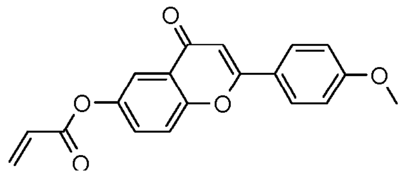

RM-88

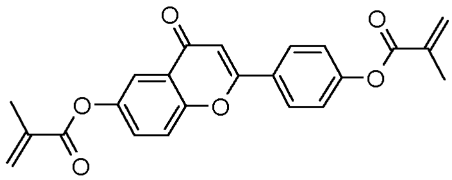

RM-89

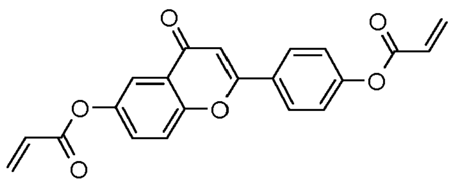

RM-90

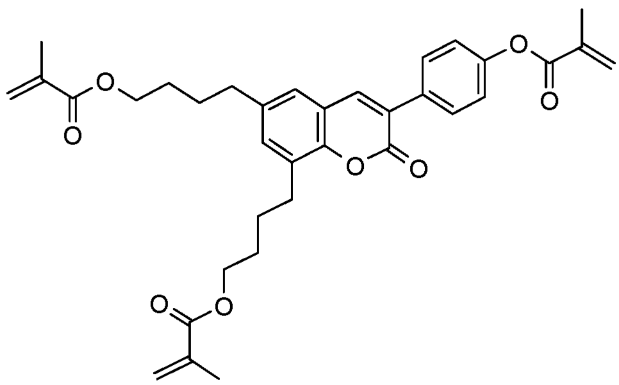

RM-91

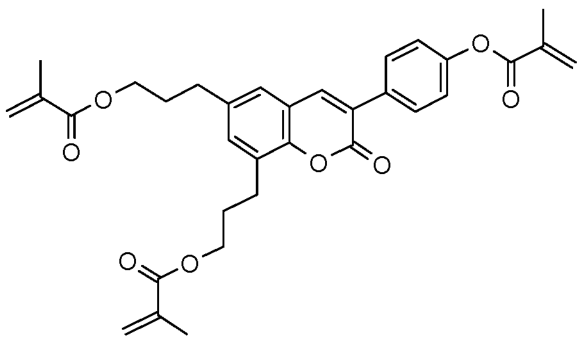

(continued)

Table F shows illustrative reactive mesogenic compounds (RM) which can be used in the LC media in accordance with the present invention.

RM-92

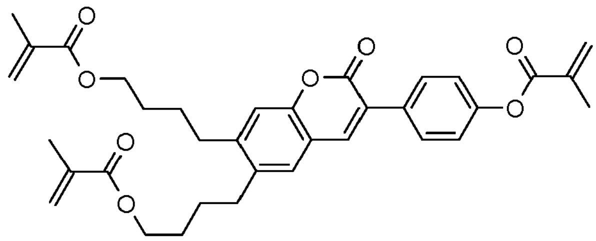

RM-93

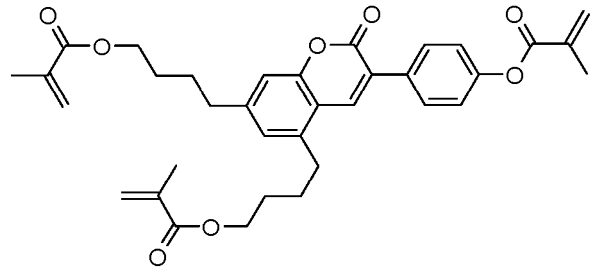

RM-94

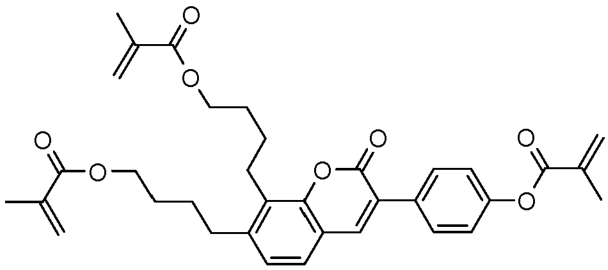

RM-95

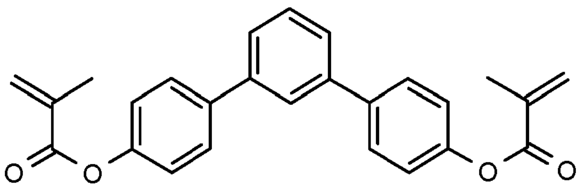

RM-96

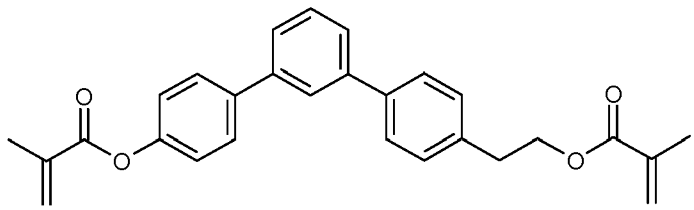

RM-97

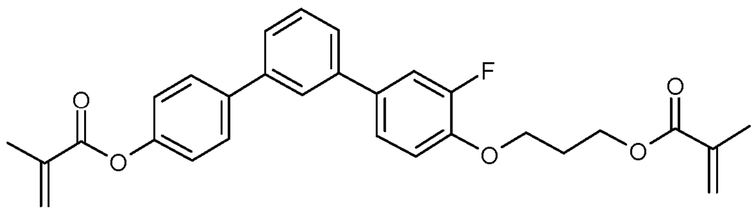

RM-98

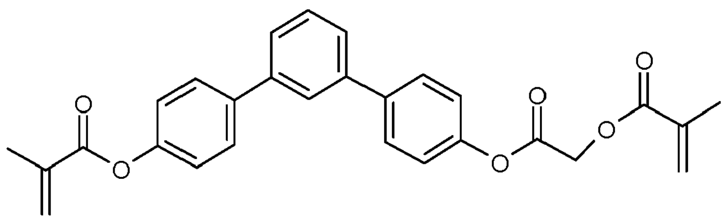

(continued)

Table F shows illustrative reactive mesogenic compounds (RM) which can be used in the LC media in accordance with the present invention.

RM-99

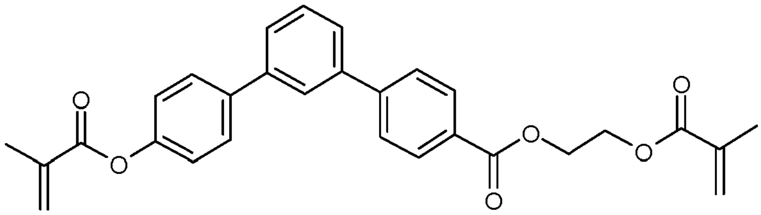

RM-100

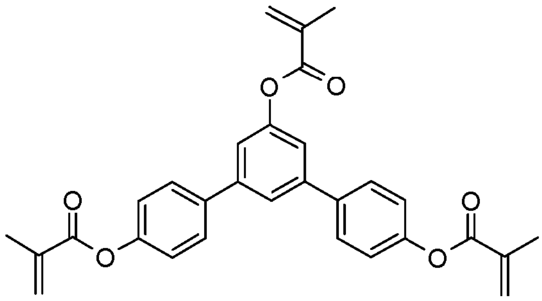

RM-101

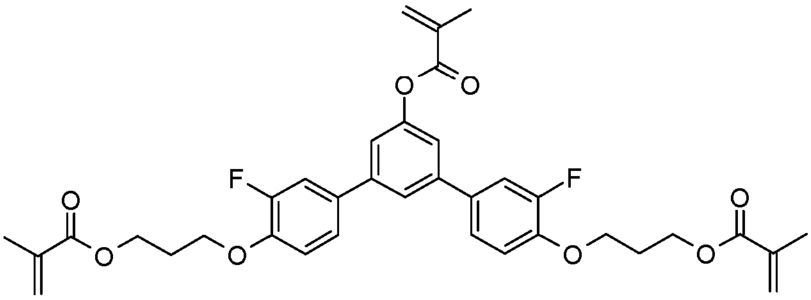

RM-102

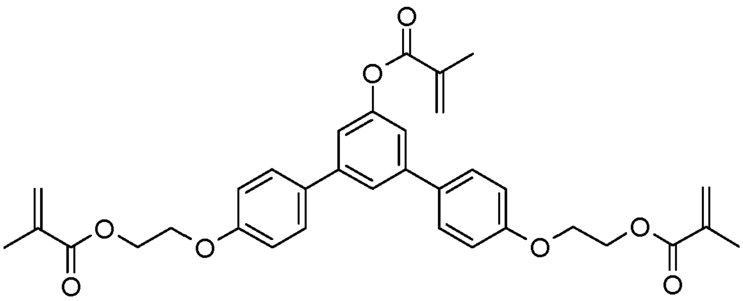

RM-103

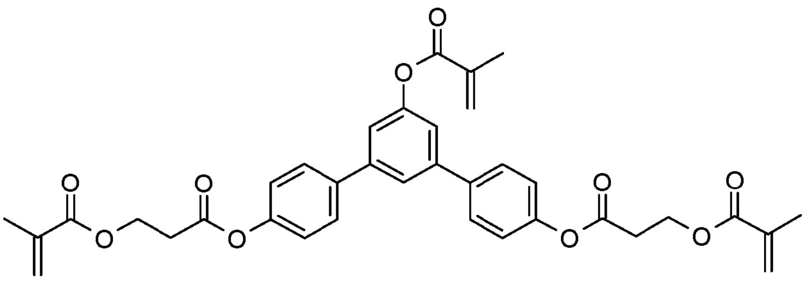

(continued)

Table F shows illustrative reactive mesogenic compounds (RM) which can be used in the LC media in accordance with the present invention.

RM-104

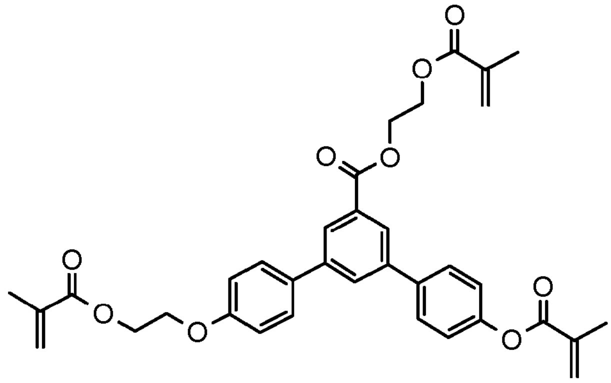

RM-105

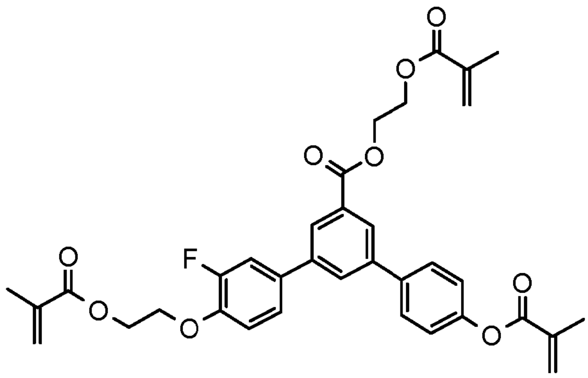

RM-106

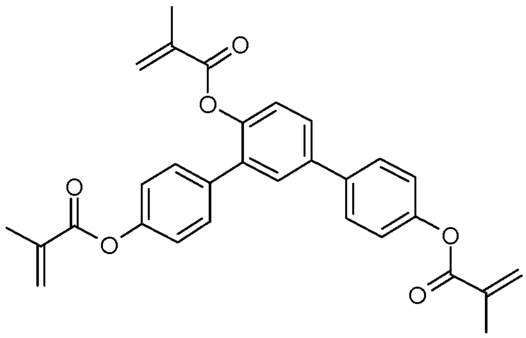

RM-107

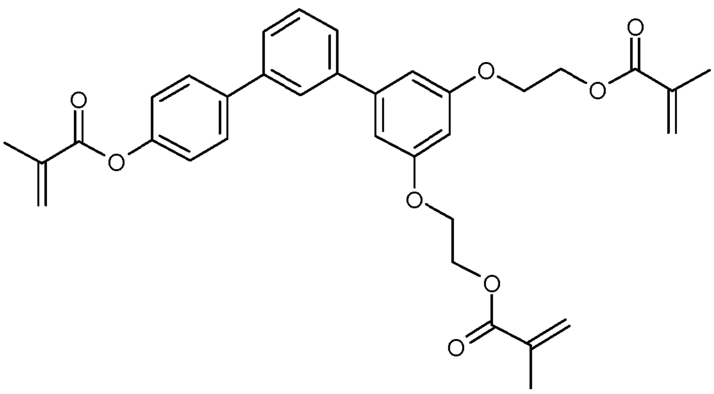

(continued)

Table F shows illustrative reactive mesogenic compounds (RM) which can be used in the LC media in accordance with the present invention.

RM-108

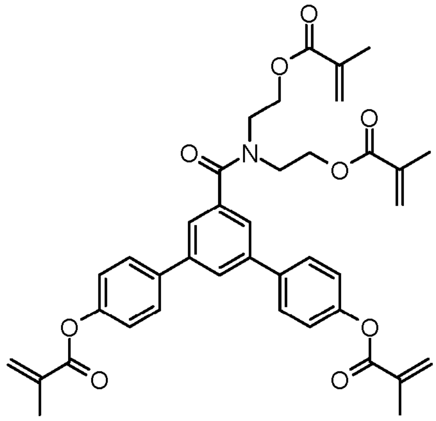

RM-109

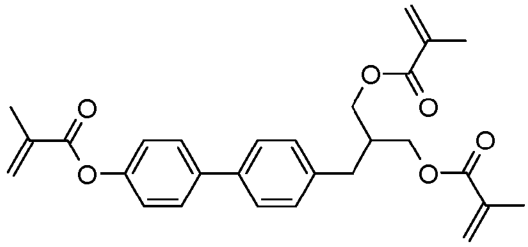

RM-110

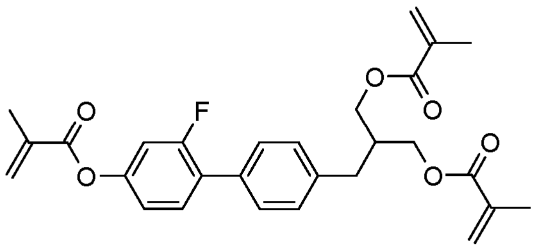

RM-111

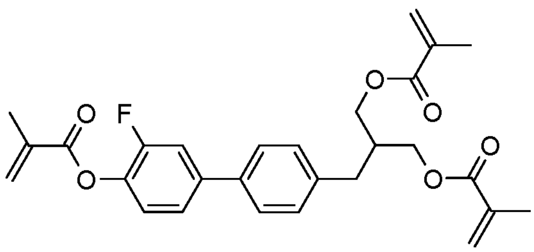

RM-112

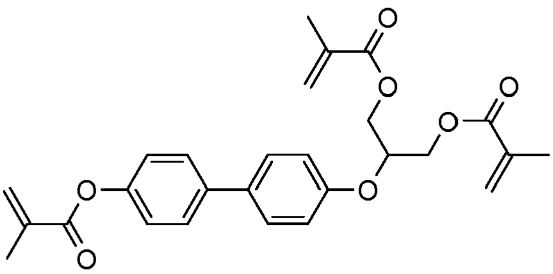

(continued)

Table F shows illustrative reactive mesogenic compounds (RM) which can be used in the LC media in accordance with the present invention.

RM-113

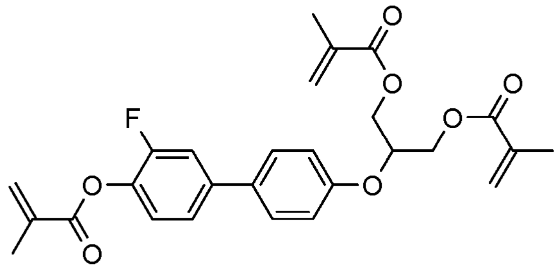

RM-114

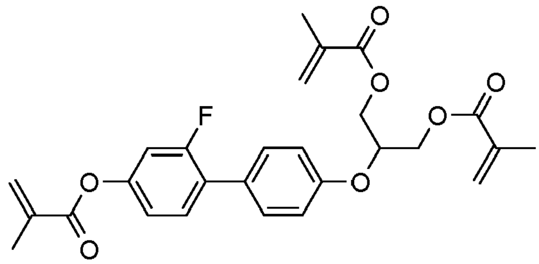

RM-115

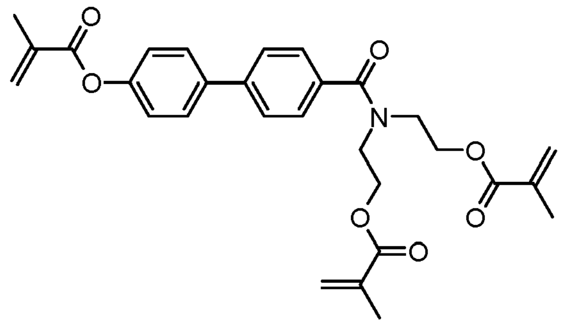

RM-116

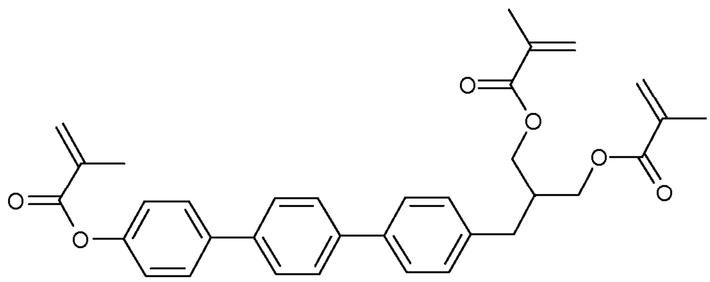

RM-117

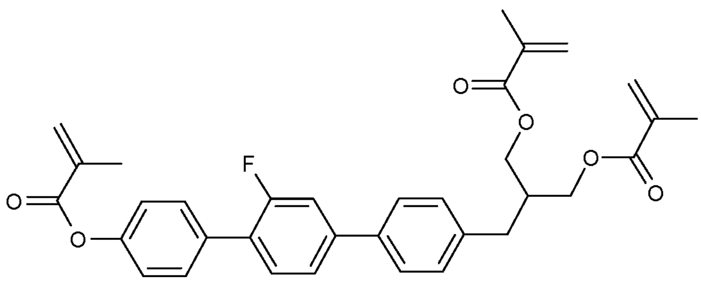

(continued)

Table F shows illustrative reactive mesogenic compounds (RM) which can be used in the LC media in accordance with the present invention.

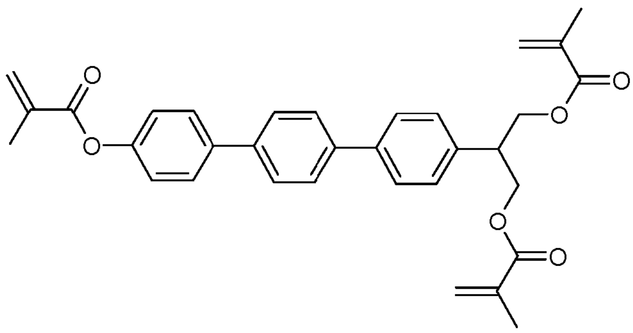

RM-118

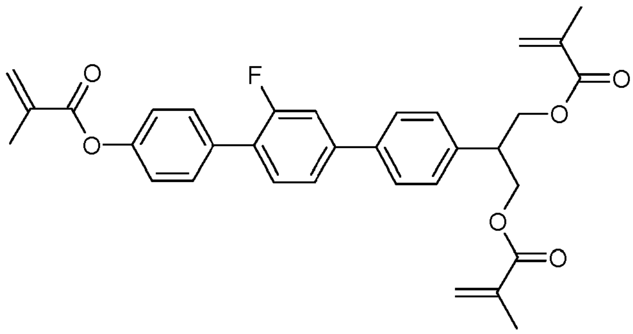

RM-119

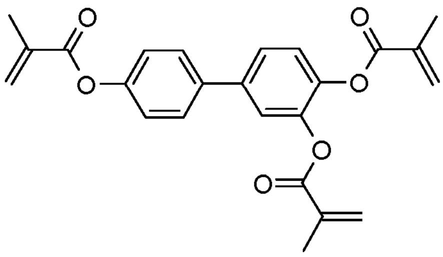

RM-120

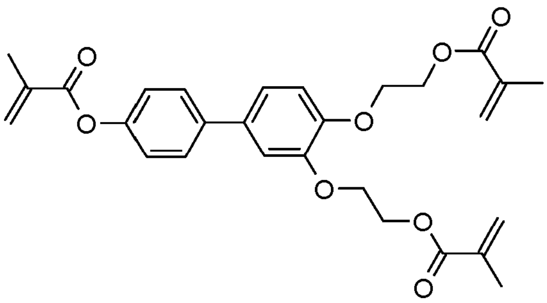

RM-121

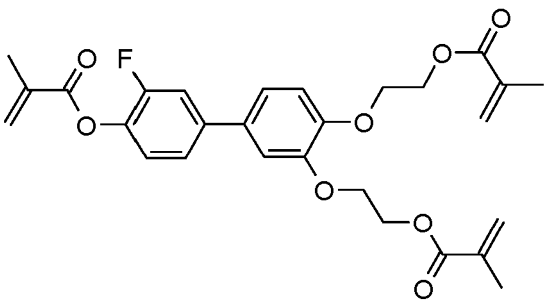

RM-122

(continued)

Table F shows illustrative reactive mesogenic compounds (RM) which can be used in the LC media in accordance with the present invention.

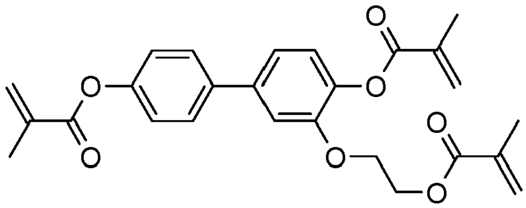

RM-123

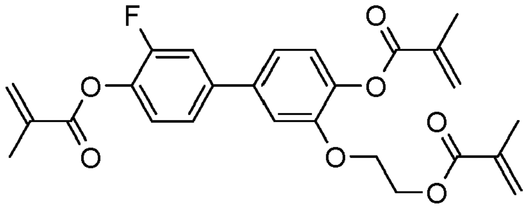

RM-124

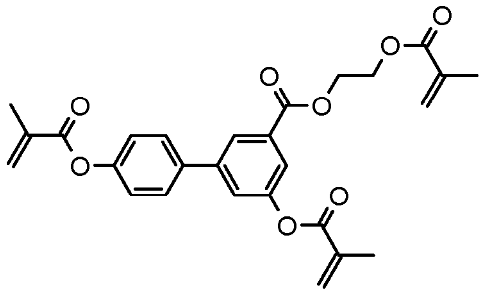

RM-125

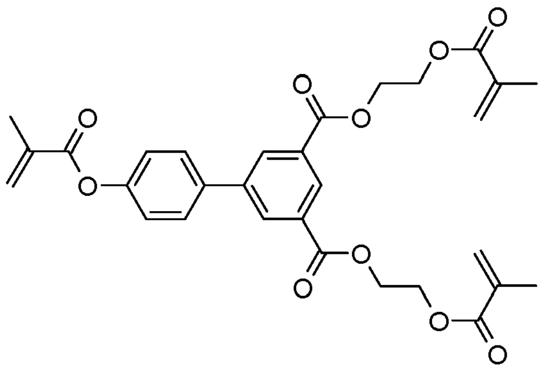

RM-126

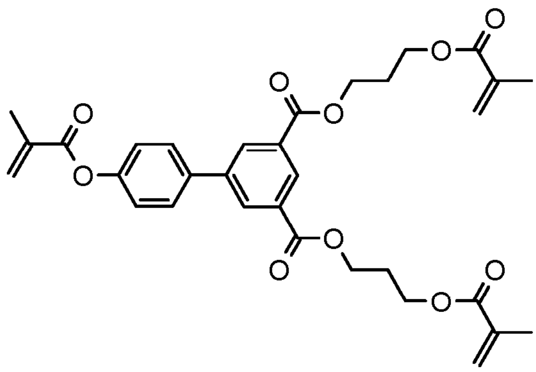

RM-127

(continued)

Table F shows illustrative reactive mesogenic compounds (RM) which can be used in the LC media in accordance with the present invention.

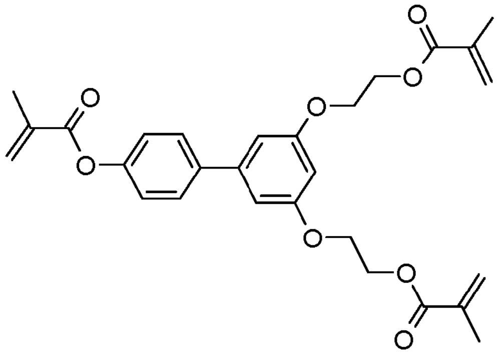

RM-128

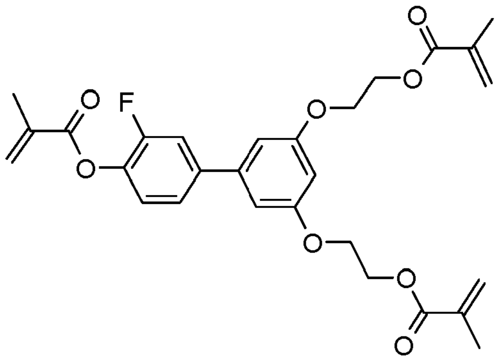

RM-129

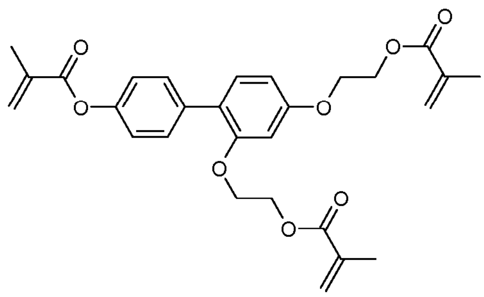

RM-130

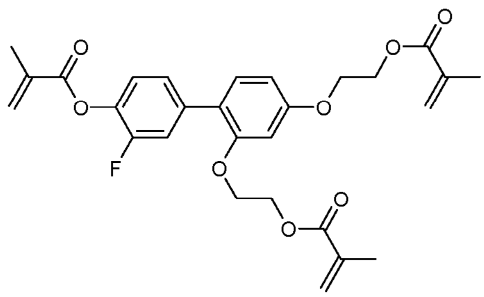

RM-131

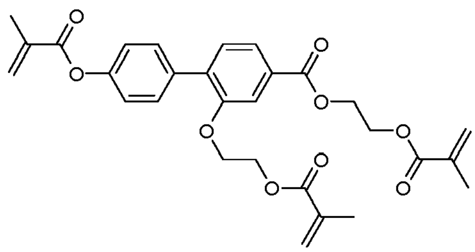

RM-132

(continued)

Table F shows illustrative reactive mesogenic compounds (RM) which can be used in the LC media in accordance with the present invention.

RM-133

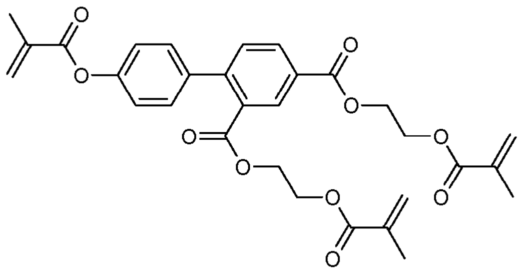

RM-134

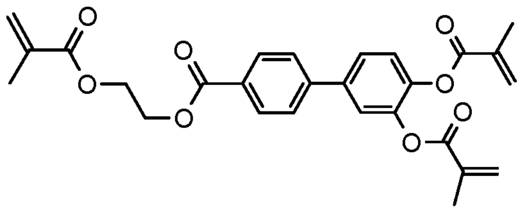

RM-135

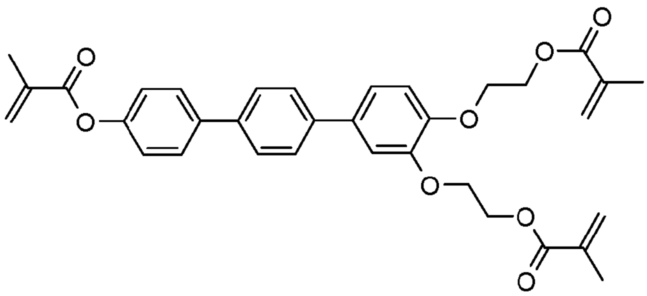

RM-136

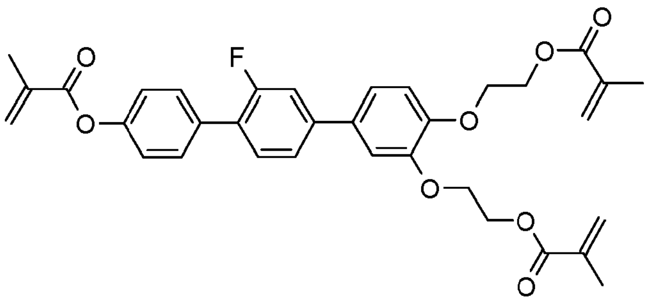

RM-137

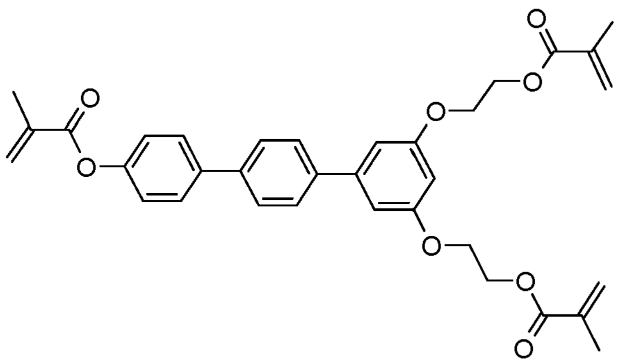

(continued)

Table F shows illustrative reactive mesogenic compounds (RM) which can be used in the LC media in accordance with the present invention.

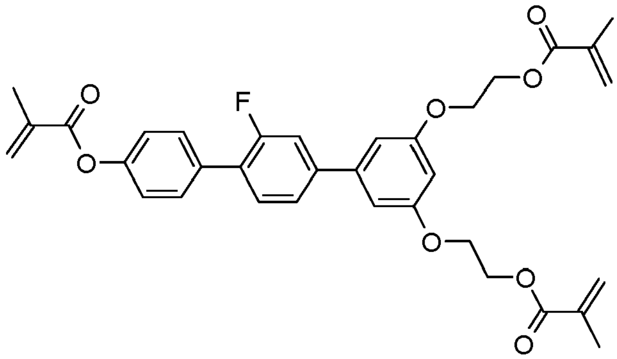

RM-138

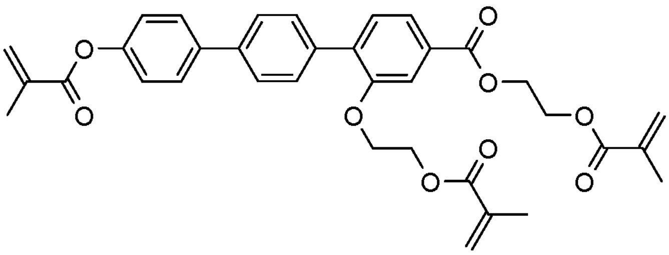

RM-139

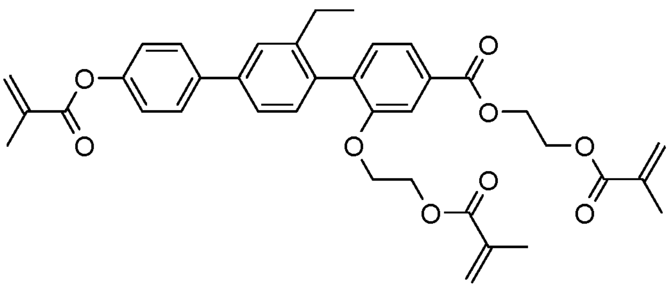

RM-140

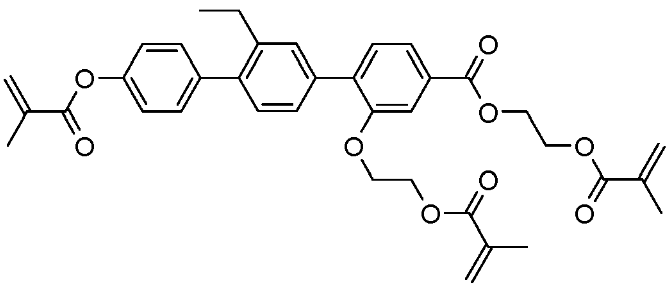

RM-141

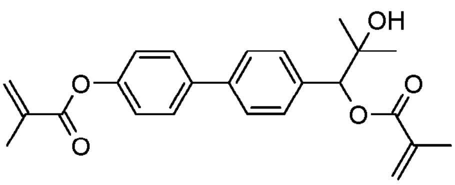

RM-142

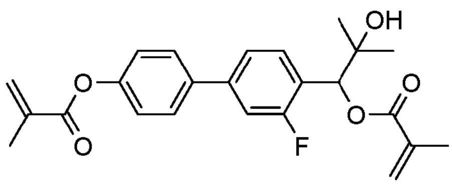

RM-143

(continued)

Table F shows illustrative reactive mesogenic compounds (RM) which can be used in the LC media in accordance with the present invention.

RM-144

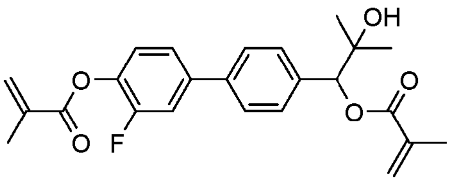

RM-145

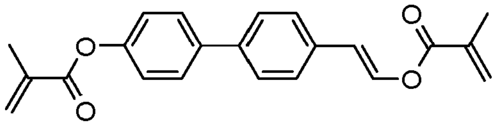

RM-146

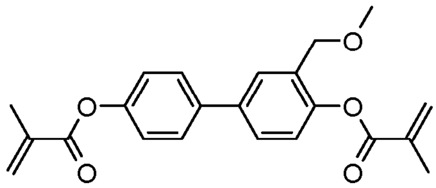

RM-147

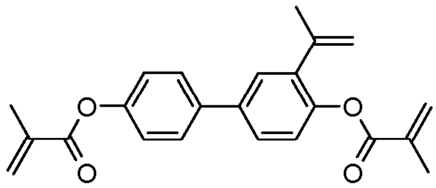

RM-148

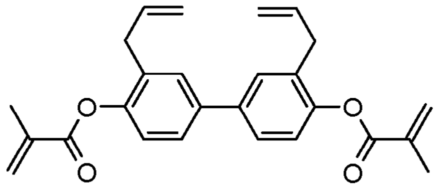

RM-149

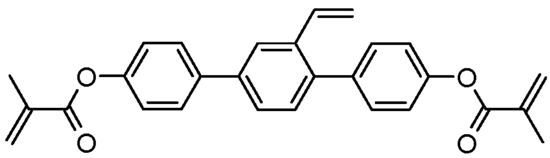

RM-150

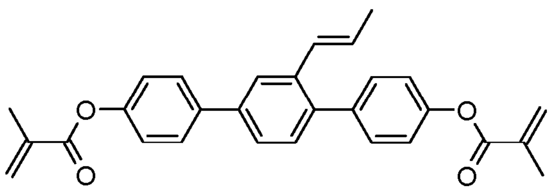

RM-151

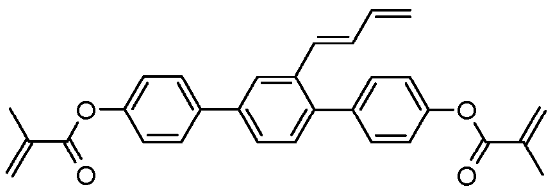

RM-152

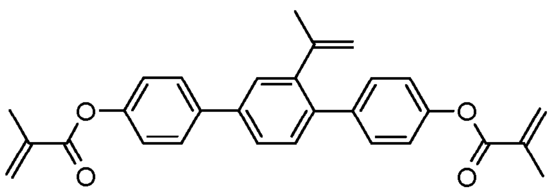

(continued)

Table F shows illustrative reactive mesogenic compounds (RM) which can be used in the LC media in accordance with the present invention.

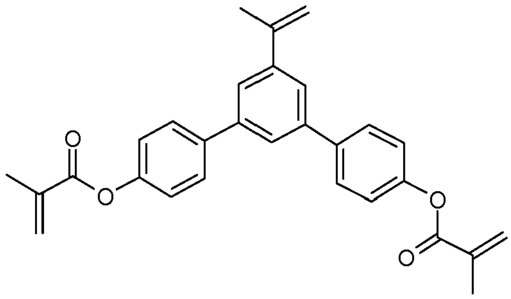

RM-153

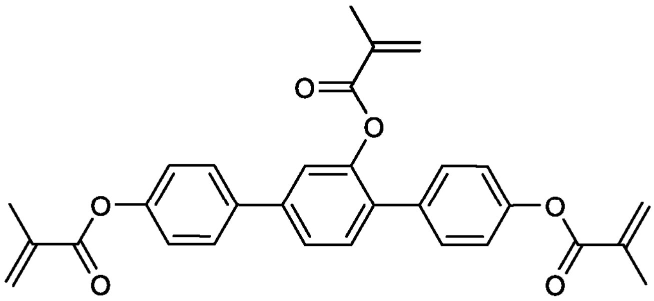

RM-154

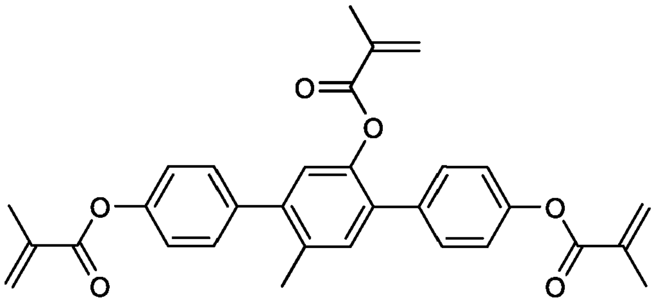

RM-155

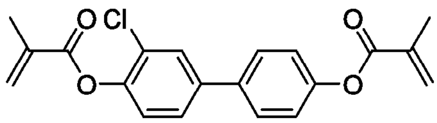

RM-156

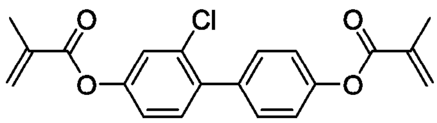

RM-157

In a preferred embodiment, the mixtures according to the invention comprise one or more polymerisable compounds, preferably selected from the polymerisable compounds of the formulae RM-1 to RM-144. Of these, compounds RM-1, RM-4, RM-8, RM-17, RM-19, RM-35, RM-37, RM-39, RM-40, RM-41, RM-48, RM-52, RM-54, RM-57, RM-64, RM-74, RM-76, RM-88, RM-102, RM-103, RM-109, RM-117, RM-120, RM-121, RM-122 and RM-145 to RM-153 are particularly preferred.

Working examples:

The following examples are intended to explain the invention without limiting it. In the examples, m.p. denotes the melting point and $T_{(N,I)}$ denotes the clearing point of a liquid-crystalline substance in degrees Celsius; Furthermore: C denotes crystalline solid state, S denotes smectic phase (the index denotes the phase type), N denotes nematic state, Ch denotes cholesteric phase, I denotes isotropic phase, $T_g$ denotes glass-transition temperature. The number between two symbols indicates the conversion temperature in degrees Celsius.

The host mixture used for determination of the optical anisotropy $\Delta n$ of single compounds is the commercial mixture ZLI-4792 (Merck KGaA). The dielectric anisotropy $\Delta\varepsilon$ is determined using commercial mixture ZLI-2857. The

physical data of the compound to be investigated are obtained from the change in the dielectric constants of the host mixture after addition of the compound to be investigated and extrapolation to 100 % of the compound employed. In general, 10 % of the compound to be investigated are dissolved in the host mixture, depending on the solubility.

Unless indicated otherwise, parts or per cent data denote parts by weight or per cent by weight.

Above and below:

| | |
|---|---|
| $V_o$ | denotes threshold voltage, capacitive [V] at 20°C, |
| $n_e$ | denotes extraordinary refractive index at 20°C and 589 nm, |
| $n_o$ | denotes ordinary refractive index at 20°C and 589 nm, |
| $\Delta n$ | denotes optical anisotropy at 20°C and 589 nm, |
| $\varepsilon_\perp$ | denotes dielectric permittivity perpendicular to the director at 20°C and 1 kHz, |
| $\varepsilon_{\|\|}$ | denotes dielectric permittivity parallel to the director at 20°C and 1 kHz, |
| $\Delta\varepsilon$ | denotes dielectric anisotropy at 20°C and 1 kHz, |
| cl.p., T(N,I) | denotes clearing point [°C], |
| $\gamma_1$ | denotes rotational viscosity measured at 20°C [mPa·s], |
| $K_1$ | denotes elastic constant, "splay" deformation at 20°C [pN], |
| $K_2$ | denotes elastic constant, "twist" deformation at 20°C [pN], |
| $K_3$ | denotes elastic constant, "bend" deformation at 20°C [pN], and |
| LTS | denotes low-temperature stability (nematic phase), determined in test cells or in the bulk, as specified. |

Unless explicitly noted otherwise, all values indicated in the present application for temperatures, such as, for example, the melting point T(C,N), the transition from the smectic (S) to the nematic (N) phase T(S,N) and the clearing point T(N,I) or cl.p., are indicated in degrees Celsius (°C).

The term "threshold voltage" for the present invention relates to the capacitive threshold ($V_0$), also called the Freedericksz threshold, unless explicitly indicated otherwise. In the examples, as is generally usual, the optical threshold can also be indicated for 10 % relative contrast ($V_{10}$).

The display used for measurement of the capacitive threshold voltage consists of two plane-parallel glass outer plates at a separation of 20 μm, which each have on the insides an electrode layer and an unrubbed polyimide alignment layer on top, which cause a homeotropic edge alignment of the liquid-crystal molecules.

The display or test cell used for measurement of the tilt angle consists of two plane-parallel glass outer plates at a separation of 4 μm, which each have on the insides an electrode layer and a polyimide alignment layer on top, where the two polyimide layers are rubbed antiparallel to one another and cause a homeotropic edge alignment of the liquid-crystal molecules.

The polymerisable compounds are polymerised in the display or test cell by irradiation with UV light of defined intensity for a prespecified time, with a voltage simultaneously being applied to the display (usually 10 V to 30 V alternating current, 1 kHz). In the examples, unless indicated otherwise, a metal halide lamp and an intensity of 100 $mW/cm^2$ is used for polymerisation. The intensity is measured using a standard meter (Hoenle UV-meter high end with UV sensor).

The tilt angle is determined using the Mueller Matrix Polarimeter "AxoScan" from Axometrics. A low value (i.e. a large deviation from the 90° angle) corresponds to a large tilt here.

Unless stated otherwise, the term "tilt angle" means the angle between the LC director and the substrate, and "LC director" means in a layer of LC molecules with uniform orientation the preferred orientation direction of the optical main axis of the LC molecules, which corresponds, in case of calamitic, uniaxially positive birefringent LC molecules, to their molecular long axis.

Unless indicated otherwise, the VHR is determined at 20°C ($VHR_{20}$) and after
5 minutes in an oven at 100°C ($VHR_{100}$) in a commercially available instrument Model LCM-1 (O0004) from TOYO Corporation, Japan. The voltage used has a frequency of in a range from 1 Hz to 60 Hz, unless indicated more precisely.

The accuracy of the VHR measurement values depends on the respective value of the VHR. The accuracy decreases with decreasing values. The deviations generally observed in the case of values in the various magnitude ranges are compiled in their order of magnitude in the following table.

| VHR range | | Deviation (relative) |
|---|---|---|
| VHR values | | $\Delta_G$VHR/VHR /% |
| from | to | Approx. |
| 99.6 % | 100 % | +/- 0.1 |

(continued)

| VHR range | | Deviation (relative) |
|---|---|---|
| VHR values | | $\Delta_G$VHR/VHR /% |
| from | to | Approx. |
| 99.0 % | 99.6 % | +/- 0.2 |
| 98 % | 99 % | +/- 0.3 |
| 95 % | 98 % | +/- 0.5 |
| 90 % | 95 % | +/- 1 |
| 80 % | 90 % | +/- 2 |
| 60 % | 80 % | +/- 4 |
| 40 % | 60 % | +/- 8 |
| 20 % | 40 % | +/- 10 |
| 10 % | 20 % | +/- 20 |

The stability to UV irradiation is investigated in a "Suntest CPS+", a commercial instrument from Heraeus, Germany, using a Xenon lamp NXE1500B. The sealed test cells are irradiated for 2.0 h, unless explicitly indicated, without additional heating. The irradiation power in the wavelength range from 300 nm to 800 nm is 765 W / $m^2$ V. A

UV "cut-off" filter having an edge wavelength of 310 nm is used in order to simulate the so-called window glass mode. In each series of experiments, at least four test cells are investigated for each condition, and the respective results are indicated as averages of the corresponding individual measurements.

The decrease in the voltage holding ratio (ΔVHR) usually caused by the exposure, for example by UV irradiation or by LCD backlighting, is determined in accordance with the following equation (1):

$$\Delta VHR(t) = VHR(t) - VHR(t=0) \qquad (1).$$

In order to investigate the low-temperature stability, also known as "LTS", i.e. the stability of the LC mixture in the bulk against spontaneous crystallisation of individual components at low temperatures or the occurrence of smectic phases, as the case may be, several sealed bottles, each containing about 1 g of the material, are stored at one or more given temperatures, typically of -10°C, -20°C, -30°C and/or -40°C and it is inspected at regular intervals visually, whether a phase transition is observed or not. As soon as the first one of the samples at a given temperature shows a change the test is discontinued and the time until the last inspection, at which no change has been observed, is noted as the respective LTS. The test is run for 1000 h. If after 1000 h no change has occurred, the result is "LTS >1000 h"

The ion density from which the resistivity is calculated is measured using the commercially available LC Material Characteristics Measurement System Model 6254 from Toyo Corporation, Japan, using VHR test cells with AL16301 Polyimide (JSR Corp., Japan) having a 3.2μm cell gap. The measurement is performed after 5 min of storage in an oven at 60 °C or 100 °C.

The so-called "HTP" denotes the helical twisting power of an optically active or chiral substance in an LC medium (in μm). Unless indicated otherwise, the HTP is measured in the commercially available nematic LC host mixture MLD-6260 (Merck KGaA) at a temperature of 20°C.

The Clearing point is measured using the Mettler Thermosystem FP900. The optical anisotropy (Δn) is measured using an Abbe-Refraktometer H005 (Natrium-spectral lamp Na10 at 589nm, 20 °C). The dielectric anisotropy (Δε) is measured using an LCR-Meter E4980A/Agilent (G005) at 20°C (ε-parallel-cells with JALS 2096-R1). The turn on voltage ($V_0$) is measured using an LCR-Meter E4980A/Agilent (G005) at 20°C (ε-parallel-cells with JALS 2096-R1). The rotational viscosity ($\gamma_1$) is measured using a TOYO LCM-2 (0002) at 20°C (gamma 1 negative cells with JALS-2096-R 1 ). The elastic constant ($K_1$, splay) is measured using an LCR-Meter E4980A/Agilent (G005) at 20°C (ε parallel-cells with JALS 2096-R1). $K_3$: The elastic constant ($K_3$, bend) is measured using an LCR-Meter E4980A/Agilent (G005) at 20°C (ε-parallel-cells with JALS 2096-R1).

Unless explicitly noted otherwise, all concentrations in the present application are indicated in per cent by weight and relate to the corresponding mixture as a whole, comprising all solid or liquid-crystalline components, without solvents. All physical properties are determined in accordance with "Merck Liquid Crystals, Physical Properties of Liquid Crystals", Status November 1997, Merck KGaA, Germany, and apply for a temperature of 20°C, unless explicitly indicated

otherwise.

The following mixture examples having negative dielectric anisotropy are suitable, in particular, for liquid-crystal displays which have at least one planar alignment layer, such as, for example, IPS and FFS displays, in particular UB-FFS ( = ultra-bright FFS), and for VA displays.

Examples

The nematic mixtures C-1 to C-3, M-1 to M-15 are prepared as follows:

Comparative Mixture C-1

| | | | |
|---|---|---|---|
| PUQU-3-F | 7.0 % | Clearing point [°C]: | 101.4 |
| PGUQU-3-F | 3.0% | Δn (589 nm, 20°C): | 0.0951 |
| DPGU-4-F | 2.0 % | $n_e$ (589 nm, 20°C): | 1.5802 |
| CCGU-3-F | 6.0 % | Δε (1 kHz, 20°C): | 4.2 |
| CC-3-V | 36.5 % | $\varepsilon_\perp$ (1 kHz, 20°C): | 3.2 |
| CC-3-V1 | 5.0 % | $K_1$ [pN], (20°C): | 16.3 |
| CC-3-2V1 | 4.0 % | $K_3$ [pN], (20°C): | 21.6 |
| CCP-V-1 | 15.0 % | $V_0$ [V], (20°C) | 2.09 |
| CCP-V2-1 | 5.0 % | LTS [bulk, -40°C] | 24 |
| CCVC-3-V | | | 5.0 % |
| PPGU-3-F | | | 0.5 % |
| CLY-3-O2 | | | 6.0 % |
| CPP-3-2 | | | 1.0 % |
| PP-1-2V1 | | | 2.0 % |
| CDUQU-3-F | | | 2.0 % |
| Σ | | | 100.0 % |

Comparative Mixture C-2

| | | | |
|---|---|---|---|
| PUQU-3-F | 5.0 % | Clearing point [°C]: | 100.2 |
| PGUQU-3-F | 3.0 % | Δn (589 nm, 20°C): | 0.0922 |
| DPGU-4-F | 2.0 % | $n_e$ (589 nm, 20°C): | 1.5761 |
| CCGU-3-F | 5.0 % | LTS (bulk, -40°C) | 120 |
| CC-3-V | 36.0 % | | |
| CC-4-V1 | 5.0 % | | |
| CC-3-V1 | 5.0 % | | |
| CCP-V-1 | 14.0 % | | |
| CCP-V2-1 | 5.5 % | | |
| CCVC-3-V | 4.0 % | | |
| PPGU-3-F | 0.5 % | | |
| CCY-3-O2 | 6.0 % | | |
| CDU-3-F | 4.0 % | | |
| CPGP-5-2 | 1.0 % | | |
| CDUQU-3-F | 1.5 % | | |
| PP-1-2V1 | 2.5 % | | |
| Σ | 100.0 % | | |

Comparative Mixture C-3

| | | | |
|---|---|---|---|
| PUQU-3-F | 5.0 % | Clearing point [°C]: | 100.0 |
| PGUQU-3-F | 2.5 % | $\Delta n$ (589 nm, 20°C): | 0.0949 |
| DPGU-4-F | 2.0 % | $n_e$ (589 nm, 20°C): | 1.5794 |
| CCGU-3-F | 5.0 % | LTS (bulk, -40°C) | 168 |
| CC-3-V | 36.0 % | | |
| CC-4-V1 | 5.0 % | | |
| CC-3-V1 | 5.5 % | | |
| CCP-V-1 | | | 14.0 % |
| CCP-V2-1 | | | 6.0 % |
| CCVC-3-V | | | 4.0 % |
| PPGU-3-F | | | 0.5 % |
| CPY-3-O2 | | | 6.0 % |
| CDU-3-F | | | 4.0 % |
| CPGP-5-2 | | | 1.0 % |
| CDUQU-3-F | | | 1.5 % |
| PP-1-2V1 | | | 2.0 % |
| Σ | | | 100.0 % |

Mixture Example M-1

| | | | |
|---|---|---|---|
| PUQU-3-F | 7.0 % | Clearing point [°C]: | 99.8 |
| PGUQU-3-F | 3.0 % | $\Delta n$ (589 nm, 20°C): | 0.0954 |
| DPGU-4-F | 2.0 % | $n_e$ (589 nm, 20°C): | 1.5807 |
| CCGU-3-F | 5.5 % | $\Delta\varepsilon$ (1 kHz, 20°C): | 3.9 |
| CC-3-V | 36.0 % | $\varepsilon_{\perp}$ (1 kHz, 20°C): | 3.2 |
| CC-3-V1 | 6.0 % | $K_1$ [pN], (20°C): | 16.4 |
| CC-3-2V1 | 4.0 % | $K_3$ [pN], (20°C): | 21.1 |
| CCP-V-1 | 14.0 % | $V_0$ [V], (20°C) | 2.17 |
| CCP-V2-1 | 4.0 % | LTS (bulk, -40°C) | 48 |
| CCVC-3-V | 5.0 % | | |
| PPGU-3-F | 0.5 % | | |
| CLY-3-O2 | 6.0 % | | |
| CPP-3-2 | 3.0 % | | |
| PP-1-2V1 | 2.0 % | | |
| CDU-3-F | 2.0 % | | |
| Σ | 100.0 % | | |

Mixture Example M-2

| | | | |
|---|---|---|---|
| PUQU-3-F | 6.0 % | Clearing point [°C]: | 100.0 |
| PGUQU-3-F | 3.0% | $\Delta n$ (589 nm, 20°C): | 0.0955 |
| DPGU-4-F | 2.0 % | $n_e$ (589 nm, 20°C): | 1.5805 |
| CCGU-3-F | 5.5 % | $\Delta\varepsilon$ (1 kHz, 20°C): | 4.0 |
| CC-3-V | 35.5 % | $\varepsilon_{\perp}$ (1 kHz, 20°C): | 3.1 |

(continued)

| | | | |
|---|---|---|---|
| CC-3-V1 | 6.0 % | $K_1$ [pN], (20°C): | 16.3 |
| CC-3-2V1 | 4.0 % | $K_3$ [pN], (20°C): | 18.6 |
| CCP-V-1 | 12.5 % | $V_0$ [V], (20°C) | 2.13 |
| CCP-V2-1 | 4.0 % | $\gamma_1$ [mPa·s] (20°C): | 85 |
| CCVC-3-V | 5.0 % | LTS (bulk, -40°C) | >1000 |
| PPGU-3-F | 0.5 % | | |
| CLY-3-O2 | 6.0 % | | |
| CPP-3-2 | 4.0 % | | |
| PP-1-2V1 | 2.0 % | | |
| CDU-2-F | 2.0 % | | |
| CDU-3-F | 2.0 % | | |
| Σ | 100.0 % | | |

Mixture Example M-3

| | | | |
|---|---|---|---|
| PUQU-3-F | 5.0 % | Clearing point [°C]: | 102.2 |
| PGUQU-3-F | 3.0 % | Δn (589 nm, 20°C): | 0.0962 |
| DPGU-4-F | 2.5 % | $n_e$ (589 nm, 20°C): | 1.5813 |
| CCGU-3-F | 5.5 % | LTS (bulk, -40°C) | >1000 |
| CC-3-V | 34.0 % | | |
| CC-3-V1 | 5.5 % | | |
| CC-3-2V1 | 4.0 % | | |
| CCP-V-1 | 14.0 % | | |
| CCP-V2-1 | 4.0 % | | |
| CCVC-3-V | 5.0 % | | |
| PPGU-3-F | 0.5 % | | |
| CLY-3-O2 | 6.0 % | | |
| CPP-3-2 | 3.0 % | | |
| PP-1-2V1 | 2.0 % | | |
| CDU-2-F | 3.0 % | | |
| CDU-3-F | 3.0 % | | |
| Σ | 100.0 % | | |

Mixture Example M-4

| | | | |
|---|---|---|---|
| PUQU-3-F | 4.0 % | Clearing point [°C]: | 101.7 |
| PGUQU-3-F | 3.0 % | Δn (589 nm, 20°C): | 0.0944 |
| DPGU-4-F | 2.5 % | $n_e$ (589 nm, 20°C): | 1.5796 |
| CCGU-3-F | 5.0 % | LTS (bulk, -40°C) | >1000 |
| CC-3-V | 34.5 % | | |
| CC-3-V1 | 5.5 % | | |
| CC-3-2V1 | 3.0 % | | |
| CCP-V-1 | 14.0 % | | |
| CCP-V2-1 | 4.0 % | | |
| CCVC-3-V | 5.0 % | | |
| PPGU-3-F | 0.5 % | | |
| CLY-3-O2 | 6.0 % | | |

(continued)

| | |
|---|---|
| CPP-3-2 | 3.0 % |
| PP-1-2V1 | 2.0 % |
| CDU-2-F | 4.0 % |
| CDU-3-F | 4.0 % |
| Σ | 100.0 % |

The compound of formula I contributes to an improvement of the LTS at -40°C: Mixture Example M-1 differs from Comparative Mixture C-1 in that it comprises 2% of the compound CDU-3-F which results in improved LTS at -40°C. Surprisingly, an increase of the amount of compounds of the formula I (CDU-2-F and CDU-3-F) to 4%, 6% or 8% in the mixture examples M-2, M-3 or M-4, respectively, result in an LTS of more than 1000 h at -40°C.

It is essential for the medium to contain both a compound of formula I and of formula LY: Replacement of the compound CLY-3-O2 in the mixture with a similar compound results in worse LTS. Comparative Examples C-2 is very similar to mixtures M-2, M-3 and M-4 but contains the compound CCY-3-O2 instead of a compound of formula Y such as for example CLY-3-O2. The LTS is reduced from 1000 h to 120h.

Comparative Example C-3 is very similar to mixtures M-2, M-3 and M-4 but contains the compound CPY-3-O2 instead of a compound of formula Y such as for example CLY-3-O2. The LTS is reduced from 1000 h to 168h.

Mixture Example M-5

| | | | |
|---|---|---|---|
| PUQU-3-F | 6.0 % | Clearing point [°C]: | 99.7 |
| PGUQU-3-F | 3.0 % | LTS (bulk, -40°C) | 240 |
| DPGU-4-F | 2.5 % | | |
| CCGU-3-F | 5.0 % | | |
| CC-3-V | 36.0 % | | |
| CC-3-V1 | 5.5 % | | |
| CC-4-V1 | 4.0 % | | |
| CCP-V-1 | 15.0 % | | |
| CCP-V2-1 | 6.5 % | | |
| CCVC-3-V | 4.0 % | | |
| PPGU-3-F | 0.5 % | | |
| CLY-3-O2 | 6.0 % | | |
| CDU-3-F | 4.0 % | | |
| PP-1-2V1 | 2.0 % | | |
| Σ | 100.0 % | | |

Mixture Example M-6

| | | | |
|---|---|---|---|
| PUQU-3-F | 6.0 % | Clearing point [°C]: | 100.1 |
| PGUQU-3-F | 3.0 % | $\Delta n$ (589 nm, 20°C): | 0.0935 |
| DPGU-4-F | 2.0 % | $n_e$ (589 nm, 20°C): | 1.5782 |
| CCGU-3-F | 5.0 % | $\Delta\varepsilon$ (1 kHz, 20°C): | 3.9 |
| CC-3-V | 36.0 % | $\varepsilon_\perp$ (1 kHz, 20°C): | 3.1 |
| CC-3-V1 | 5.0 % | $K_1$ [pN], (20°C): | 15.8 |
| CC-4-V1 | 5.0 % | $K_3$ [pN], (20°C): | 18.8 |
| CCP-V-1 | 15.0 % | $V_0$ [V], (20°C) | 2.13 |
| CCP-V2-1 | 5.5 % | $\gamma_1$ [mPa·s] (20°C): | 83 |
| CCVC-3-V | 4.0 % | LTS (bulk, -40°C) | 288 |
| PPGU-3-F | 0.5 % | | |

(continued)

| | |
|---|---|
| CLY-3-O2 | 6.0 % |
| CDU-3-F | 4.0 % |
| CPGP-5-2 | 1.0 % |
| PP-1-2V1 | 2.0 % |
| Σ | 100.0 % |

Mixture Example M-7

| | | | |
|---|---|---|---|
| PUQU-3-F | 5.0 % | Clearing point [°C]: | 100.6 |
| PGUQU-3-F | 3.0 % | Δn (589 nm, 20°C): | 0.0927 |
| DPGU-4-F | 2.0 % | $n_e$ (589 nm, 20°C): | 1.5770 |
| CCGU-3-F | 5.0 % | Δε (1 kHz, 20°C): | 3.9 |
| CC-3-V | 37.5 % | $\varepsilon_\perp$ (1 kHz, 20°C): | 3.1 |
| CC-3-V1 | 5.0 % | $K_1$ [pN], (20°C): | 15.9 |
| CC-4-V1 | 5.0 % | $K_3$ [pN], (20°C): | 19.4 |
| CCP-V-1 | 14.0 % | $V_0$ [V], (20°C) | 2.12 |
| CCP-V2-1 | 5.5 % | $\gamma_1$ [mPa·s] (20°C): | 82 |
| CCVC-3-V | 4.0 % | LTS (bulk, -40°C) | 360 |
| PPGU-3-F | 0.5 % | | |
| CLY-3-O2 | 6.0 % | | |
| CDU-3-F | 2.0 % | | |
| CPGP-5-2 | 1.0 % | | |
| CDUQU-3-F | 2.5 % | | |
| PP-1-2V1 | 2.0 % | | |
| Σ | 100.0 % | | |

Mixture Example M-8

| | | | |
|---|---|---|---|
| APUQU-3-F | 3.5 % | Clearing point [°C]: | 100.0 |
| PGUQU-3-F | 4.0 % | Δn (589 nm, 20°C): | 0.0912 |
| DGUQU-4-F | 1.5 % | $n_e$ (589 nm, 20°C): | 1.5748 |
| CCGU-3-F | 4.0 % | Δε (1 kHz, 20°C): | 4.0 |
| CC-3-V | 38.5 % | $\varepsilon_\perp$ (1 kHz, 20°C): | 3.1 |
| CC-3-V1 | 5.5 % | $K_1$ [pN], (20°C): | 16.0 |
| CC-4-V1 | 5.0 % | $K_3$ [pN], (20°C): | 19.1 |
| CCP-V-1 | 13.5 % | $V_0$ [V], (20°C) | 2.11 |
| CCP-V2-1 | 4.0 % | $\gamma_1$ [mPa·s] (20°C): | 82 |
| CCVC-3-V | 4.0 % | LTS (bulk, -40°C) | 288 |
| PPGU-3-F | 0.5 % | | |
| CLY-3-O2 | 6.0 % | | |
| CDU-3-F | 4.0 % | | |
| CPGP-5-2 | 1.0 % | | |
| PP-1-2V1 | 3.0 % | | |
| Σ | | | 100.0 % |

Mixture Example M-9

Mixture M-9 consists of 99.935% of mixture M-7, 0.015% of the compound ST-12 and 0.05% of the compound ST-3b-1

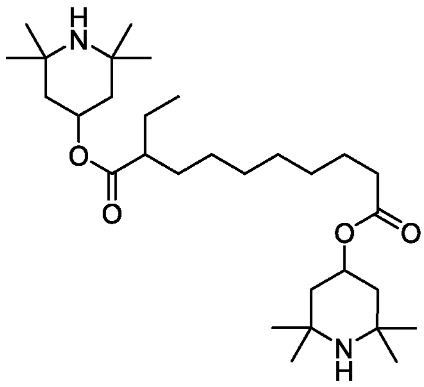

ST-12

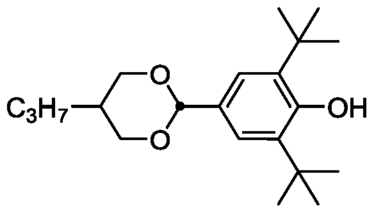

ST-3b-1.

Mixture Example M-10

Mixture M-10 consists of mixture M-7 including 250ppm of the compound ST-3a-1

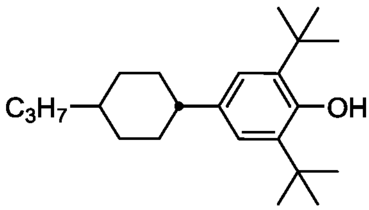

ST-3a-1

Mixture Example M-11

Mixture M-10 consists of mixture M-7 including 500ppm of the compound ST-9-1

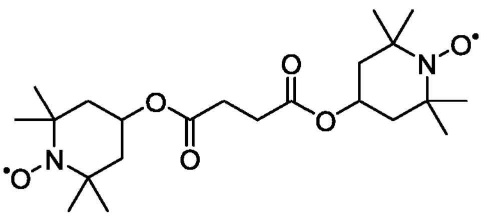

ST-9-1

Mixture Example M-12

Mixture Example M-12 contains the following compound CDU-(c3)-F:

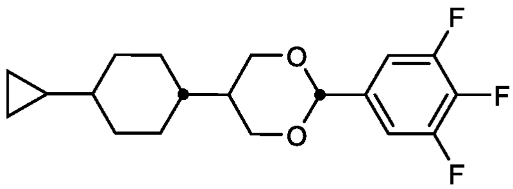

| | | | |
|---|---|---|---|
| PUQU-3-F | 5.0 % | Clearing point [°C]: | 99.1 |
| PGUQU-3-F | 3.0 % | Δn (589 nm, 20°C): | 0.0925 |
| DPGU-4-F | 2.0 % | Δε (1 kHz, 20°C): | 3.8 |
| CCGU-3-F | 5.0 % | $\gamma_1$ [mPa·s] (20°C): | 85 |
| CC-3-V | 37.5 % | | |
| CC-3-V1 | 5.0 % | | |
| CC-4-V1 | 5.0 % | | |
| CCP-V-1 | 14.0 % | | |
| CCP-V2-1 | 5.5 % | | |
| CCVC-3-V | 4.0 % | | |
| PPGU-3-F | 0.5 % | | |
| CLY-3-O2 | 6.0 % | | |
| CDU-(c3)-F | 2.0 % | | |
| CPGP-5-2 | 1.0 % | | |
| PP-1-2V1 | 2.0 % | | |
| Σ | 100.0 % | | |

Mixture Example M-13

Mixture Example M-13 contains the following compound CDU-(F3)-F:

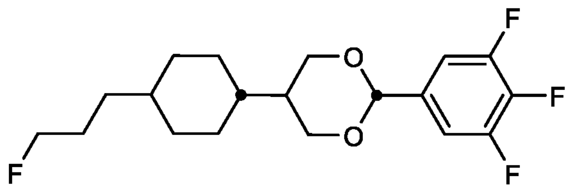

| | | | |
|---|---|---|---|
| PUQU-3-F | 5.0 % | Clearing point [°C]: | 99.6 |
| PGUQU-3-F | 3.0% | Δn (589 nm, 20°C): | 0.0927 |
| DPGU-4-F | 2.0 % | Δε (1 kHz, 20°C): | 3.7 |
| CCGU-3-F | 5.0 % | $\gamma_1$ [mPa·s] (20°C): | 84 |
| CC-3-V | 37.5 % | | |
| CC-3-V1 | 5.0 % | | |
| CC-4-V1 | 5.0 % | | |
| CCP-V-1 | 14.0 % | | |
| CCP-V2-1 | 5.5 % | | |
| CCVC-3-V | 4.0 % | | |
| PPGU-3-F | 0.5 % | | |
| CLY-3-O2 | 6.0 % | | |
| CDU-(c3)-F | 2.0 % | | |
| CPGP-5-2 | 1.0 % | | |
| PP-1-2V1 | 2.0 % | | |
| Σ | 100.0 % | | |

Mixture Example M-14

Mixture M-14 contains the following compound CLY-(c3)2-O2:

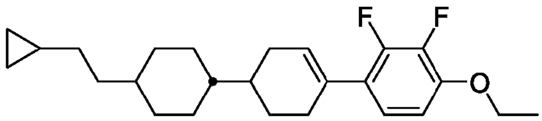

| | | | |
|---|---|---|---|
| PUQU-3-F | 5.0 % | Clearing point [°C]: | 98.4 |
| PGUQU-3-F | 3.0 % | $\Delta n$ (589 nm, 20°C): | 0.0931 |
| DPGU-4-F | 2.0 % | $\Delta\varepsilon$ (1 kHz, 20°C): | 3.8 |
| CCGU-3-F | 5.0 % | $\gamma_1$ [mPa·s] (20°C): | 86 |
| CC-3-V | 37.5 % | | |
| CC-3-V1 | 5.0 % | | |
| CC-4-V1 | 5.0 % | | |
| CCP-V-1 | 14.0 % | | |
| CCP-V2-1 | 5.5 % | | |
| CCVC-3-V | 4.0 % | | |
| PPGU-3-F | 0.5 % | | |
| CLY-(c3)2-O2 | 6.0 % | | |
| CDU-3-F | 2.0 % | | |
| CPGP-5-2 | 1.0 % | | |
| PP-1-2V1 | 2.0 % | | |
| $\Sigma$ | 100.0 % | | |

Mixture Example M-15

Mixture M10 contains the compound B(S)-2O-O1(c5)

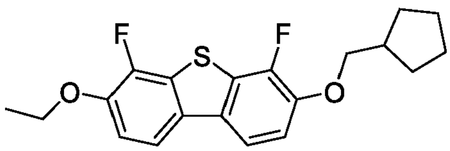

| | | | |
|---|---|---|---|
| PUQU-3-F | 5.0 % | Clearing point [°C]: | 97.6 |
| PGUQU-3-F | 3.0% | | |
| DPGU-4-F | 2.0 % | | |
| CCGU-3-F | 5.0 % | | |
| CC-3-V | 37.5 % | | |
| CC-3-V1 | 5.0 % | | |
| CC-4-V1 | 5.0 % | | |
| CCP-V-1 | 14.0 % | | |
| CCP-V2-1 | 5.5 % | | |
| CCVC-3-V | 4.0 % | | |
| PPGU-3-F | 0.5 % | | |
| CLY-(c3)2-O2 | 5.0 % | | |
| B(S)-2O-O1(c5) | 1.0 % | | |
| CDU-3-F | 2.0 % | | |
| CPGP-5-2 | 1.0 % | | |
| PP-1-2V1 | 2.0 % | | |
| $\Sigma$ | 100.0 % | | |

Polymerisable Mixture Examples

Mixture Example P1

Mixture example P1 consists of 99.595% of Mixture M-7, 0.40% of the compound RM-1

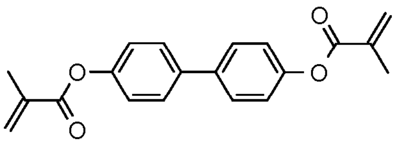

RM-1

and 0.005% of the compound ST-3a-1

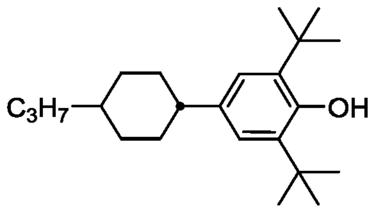

ST-3a-1

Mixture Example P2

Mixture example P2 consists of 99.595% of Mixture M-1, 0.40% of the compound RM-1 and 0.005% of the compound ST-3a-1.

Mixture Example P3

Mixture example P3 consists of 99.595% of Mixture M-2, 0.40% of the compound RM-1 and 0.005% of the compound ST-3a-1.

Mixture Example P4

Mixture example P4 consists of 99.595% of Mixture M-3, 0.40% of the compound RM-1 and 0.005% of the compound ST-3a-1.

Mixture Example P5

Mixture example P5 consists of 99.595% of Mixture M-4, 0.40% of the compound RM-1 and 0.005% of the compound ST-3a-1.

Mixture Example P6

Mixture example P6 consists of 99.595% of Mixture M-7, 0.40% of the compound RM-19 and 0.005% of the compound ST-3a-1.

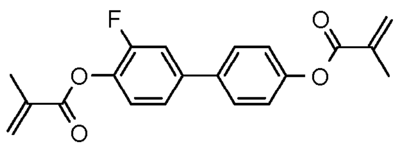

RM-19

Mixture Example P7

Mixture example P7 consists of 99.595% of Mixture M-1, 0.40% of the compound RM-19 and 0.005% of the compound ST-3b-1

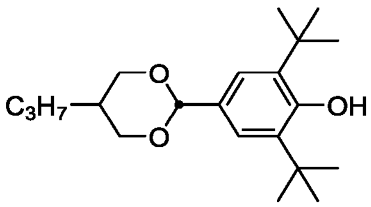

ST-3b-1

## Mixture Example P8

Mixture example P8 consists of 99.595% of Mixture M-2, 0.40% of the compound RM-35

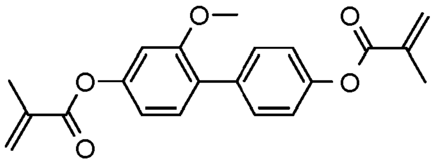

RM-35

and 0.005% of the compound ST-3a-1

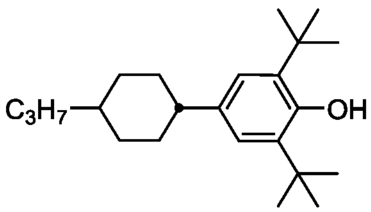

ST-3a-1

## Mixture Example P9

Mixture example P9 consists of 99.595% of Mixture M-7, 0.40% of the compound RM-156

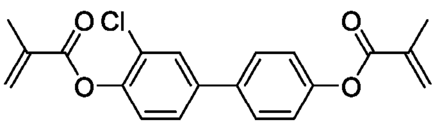

RM-156,

and 0.005% of the compound ST-3a-1.

## Mixture Example P10

Mixture example P10 consists of 99.595% of Mixture M-7, 0.40% of the compound RM-157

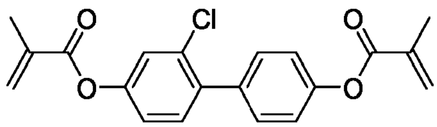

RM-157

and 0.005% of the compound ST-3b-1

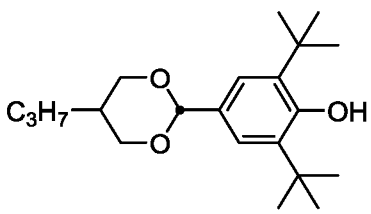

ST-3b-1.

## Claims

**1.** A liquid-crystal medium with positive dielectric anisotropy, comprising

- one or more compounds of formula I

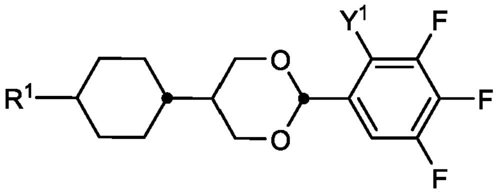

I

in which

$R^1$ denotes H, an alkyl or alkoxy radical having 1 to 12 C atoms, in which one or more $CH_2$ groups in these radicals are optionally replaced by

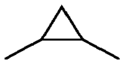,

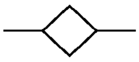, 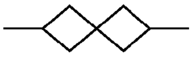, 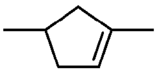, 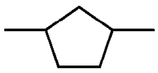,

-CH=CH-, -C≡C-, -O-, -CO-O- or -O-CO- in such a way that O atoms are not linked directly to one another, and in which one or more H atoms may be replaced by halogen, and
$Y^1$ denotes H or $CH_3$;

- one or more compounds selected from the group of compounds of the formulae II and III

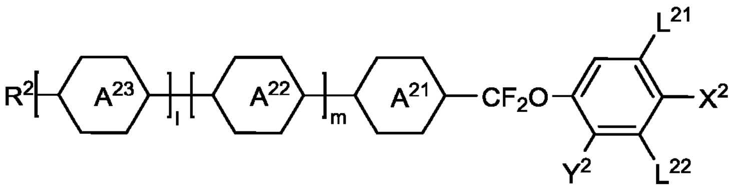

II

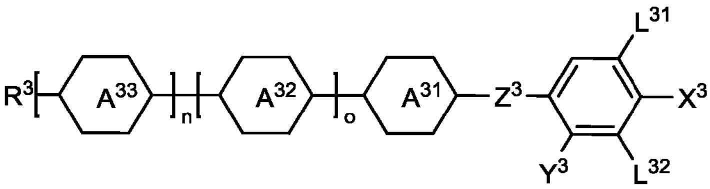

III

in which

$R^2$ and $R^3$ have the meanings given for $R^1$ under formula I,

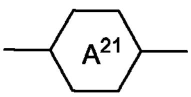, 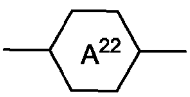, 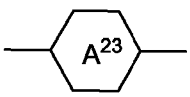, 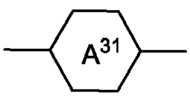,

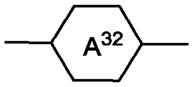 and 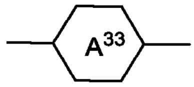,

independently of one another denote

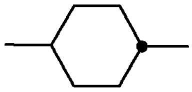, 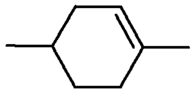, 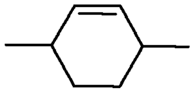, 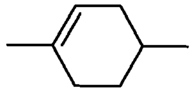,

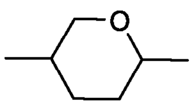, 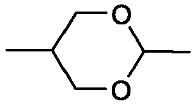, 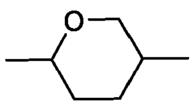, 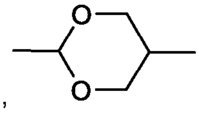,

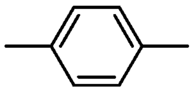, 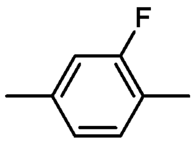, 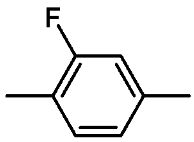, 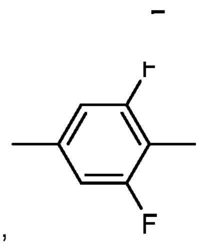 or

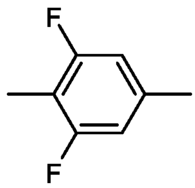,

$L^{21}$, $L^{22}$,
$L^{31}$ and $L^{32}$ independently of each other, denote H or F,
$Y^2$ and $Y^3$ identically or differently, denote H or $CH_3$,
$X^2$ and $X^3$ independently of each other, denote halogen, halogenated alkyl or halogenated alkoxy with 1 to 3 C-atoms or halogenated alkenyl or halogenated alkenyloxy with 2 or 3 C-atoms,
$Z^3$ denotes $-CH_2CH_2-$, $-CF_2CF_2-$, -COO-, *trans*- -CH=CH-, *trans*-CF=CF-, $-CH_2O-$ or a single bond, and
l, m, n and o are, independently of each other, 0 or 1,
where the compounds of formula I are excluded from formula III;

- one or more compounds selected from the group of compounds of the formulae LY-1, LY-2 and LY-3

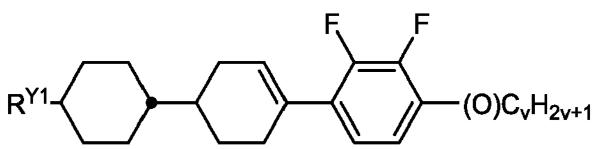 LY-1

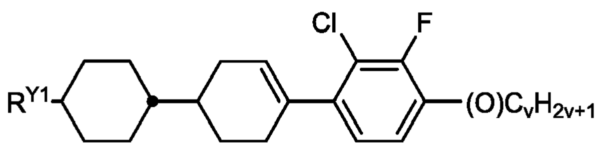 LY-2

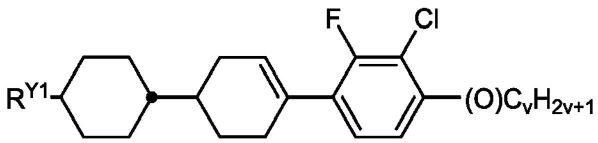

LY-3

in which

$R^{Y1}$ has the meanings given for $R^1$ under formula I, and
(O) denotes O or a single bond, and
v is 1, 2, 3, 4, 5, 6 or 7;

and
- one or more compounds of formula V

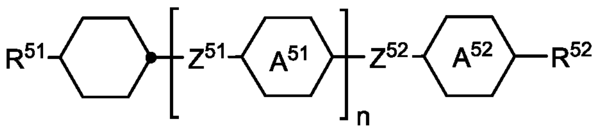

V

in which

$R^{51}$, $R^{52}$ denote alkyl having 1 to 7 C atoms, alkoxy having 1 to 7 C atoms, or alkoxyalkyl, alkenyl or alkenyloxy having 2 to 7 C atoms,

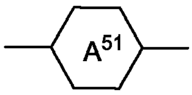 , 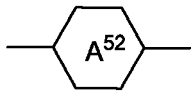 ,

identically or differently, denote

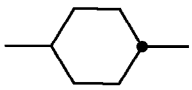 , 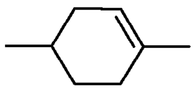 , 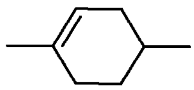 ,

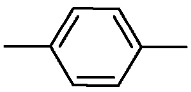 , 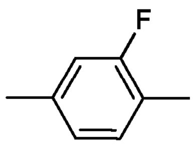 or 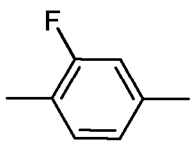 ,

$Z^{51}$, $Z^{52}$ each, independently of one another, denote $-CH_2-CH_2-$, $-CH_2-O-$, $-CH=CH-$, $-C\equiv C-$, $-COO-$ or a single bond, and
n is 1 or 2,

wherein the liquid crystal medium comprises one or more compounds of the formula V selected from the sub-formulae CCP-V-n, CCP-nV-m, CCP-Vn-m, CCVC-n-V and CPGP-n-m:

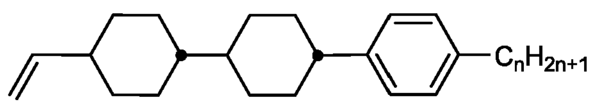

CCP-V-n

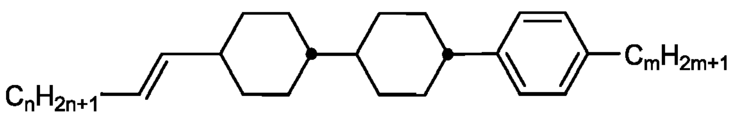

CCP-nV-m

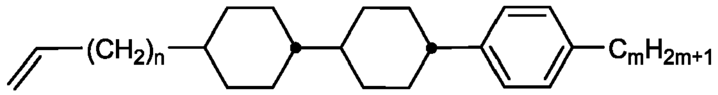

CCP-Vn-m

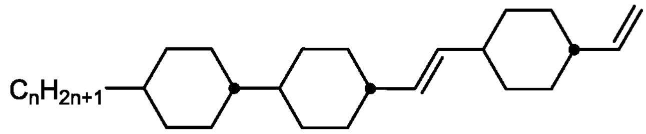

CCVC-n-V

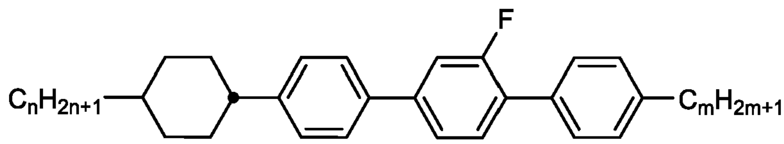

CPGP-n-m

in which n and m, independently, are 1, 2, 3, 4, 5, 6 or 7.

**2.** The medium according to claim 1, wherein the medium additionally comprises the compound of the formula IV-3-2 or IV-3-6

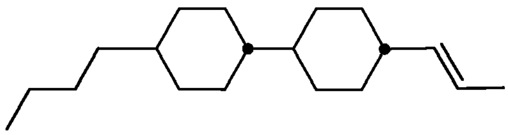

IV-3-2

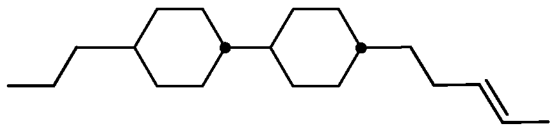

IV-3-6.

**3.** The liquid-crystal medium according to claim 1 or 2, wherein the medium has a clearing temperature of 95°C or more.

**4.** The liquid-crystal medium according to one or more of claims 1 to 3, wherein the medium comprises one or more compounds of formula II, selected from the group of compounds of the formulae II-1, II-2 and II-3

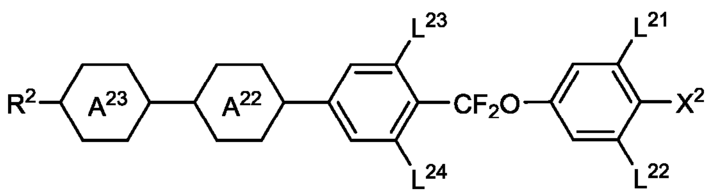

II-1

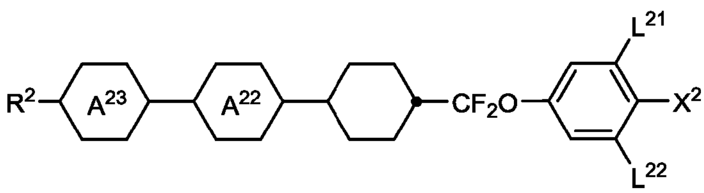

II-2

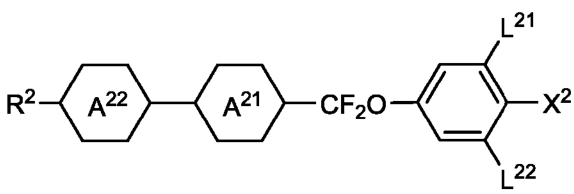

II-3

in which $L^{23}$ and $L^{24}$, identically or differently, denote H or F, and in which $R^2$, $X^2$,

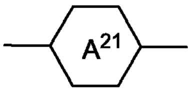 , 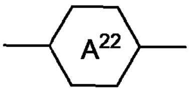 , 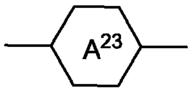 , $L^{21}$ and $L^{22}$ have the meanings defined in claim 1.

5. The liquid-crystal medium according to one or more of claims 1 to 4, wherein the medium comprises one or more compounds of formula III selected from the group of compounds of the formulae III-1 and III-2

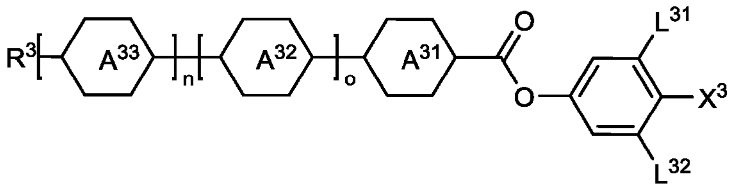

III-1

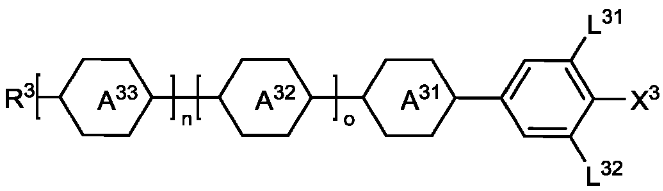

III-2

in which $R^3$, $X^3$,

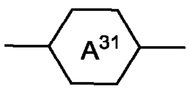 , 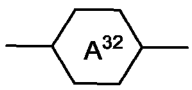 , 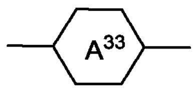 ,

$L^{31}$, $L^{32}$, n and o have the meanings defined in claim 1.

6. The liquid-crystal medium according to one or more of claims 1 to 5, wherein the medium comprises one or more compounds selected from the group of compounds of the formulae II-1a to II-1h

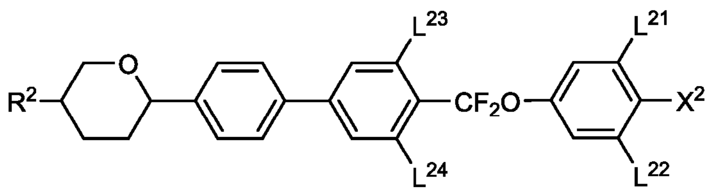

II-1a

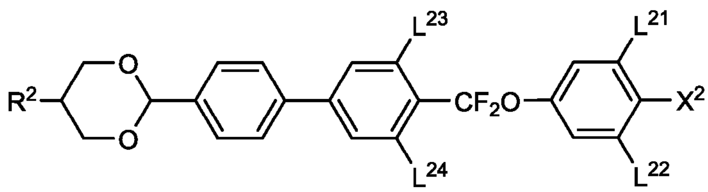

II-1b

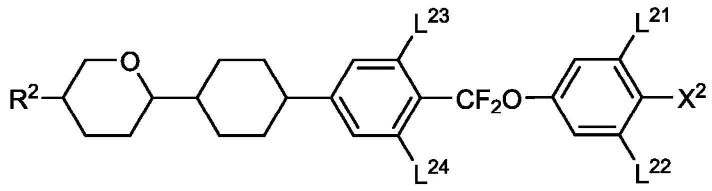

II-1c

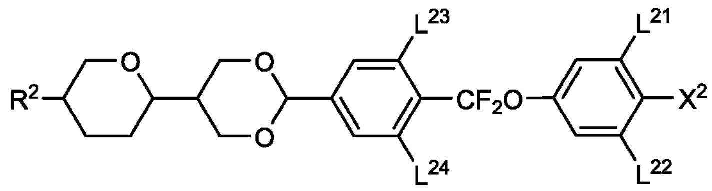

II-1d

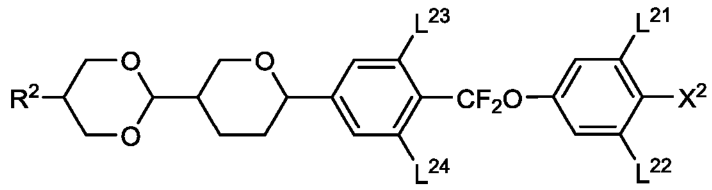

II-1e

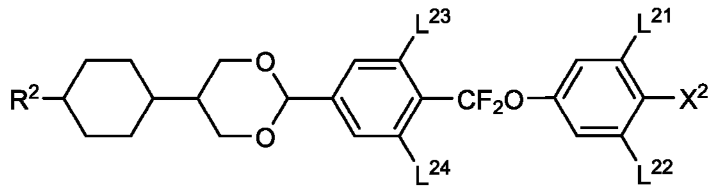

II-1f

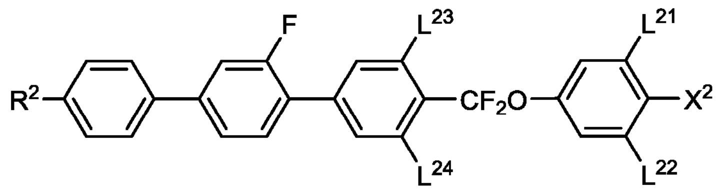

II-1g

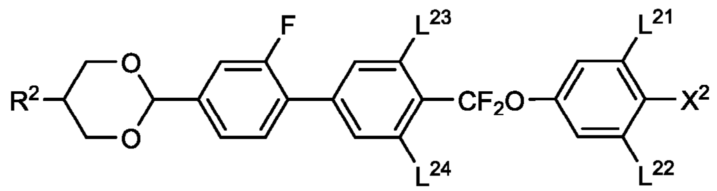

II-1h

in which $R^2$, $X^2$, $L^{21}$, $L^{22}$, $L^{23}$ and $L^{24}$ have the meanings given in claim 4.

**7.** The liquid-crystal medium according to one or more of claims 1 to 6, wherein the medium comprises one or more compounds of formula III selected from the group consisting of the formulae III-2a to III-2m

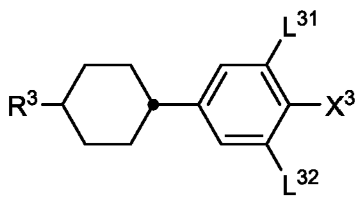

III-2a

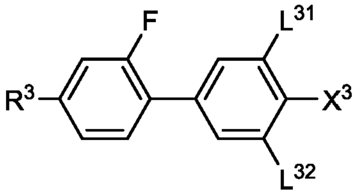

III-2b

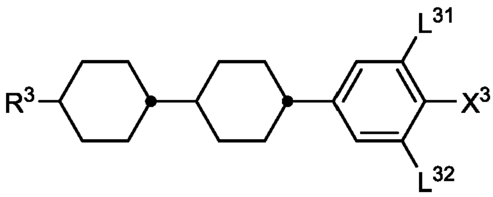

III-2c

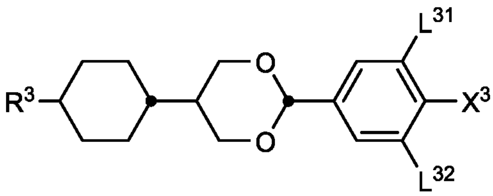

III-2d

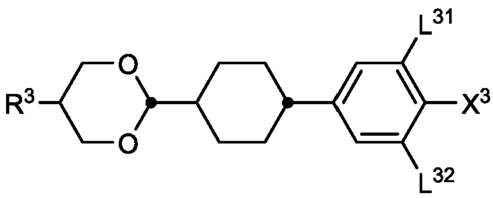

III-2e

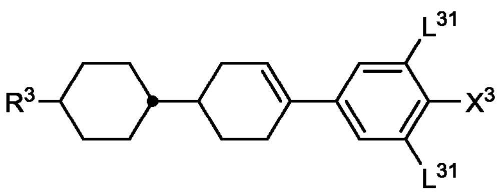

III-2f

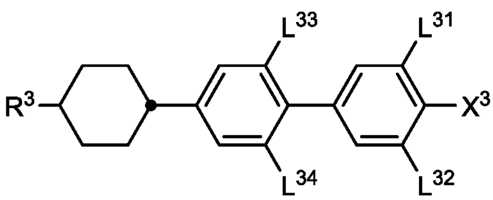

III-2g

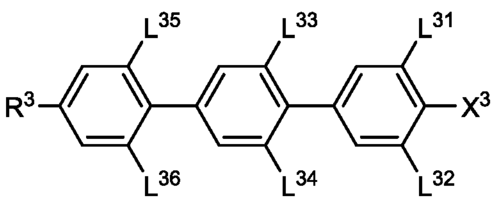

III-2h

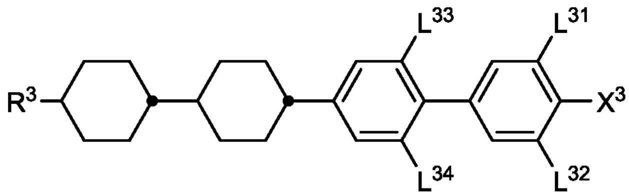

III-2i

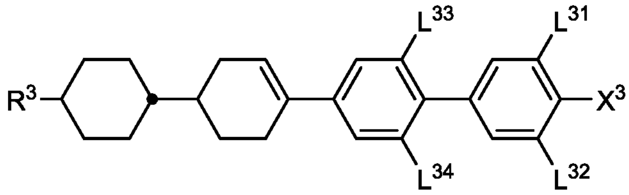

III-2j

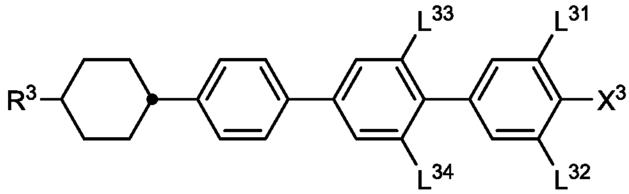

III-2k

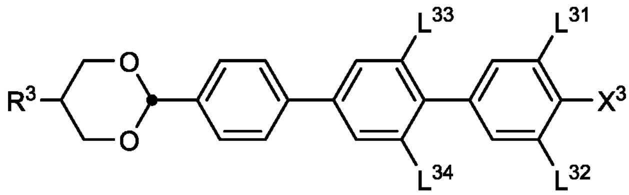

III-2l

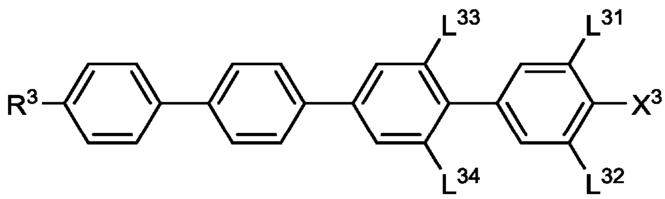

III-2m

in which $R^3$, $X^3$, $L^{31}$, $L^{32}$ , $L^{33}$ and $L^{34}$ have the meanings given in claim 1, and $L^{35}$ and $L^{36}$, independently of one another, denote H or F.

**8.** The liquid-crystal medium according to one or more of claims 1 to 7, wherein the medium comprises one or more compounds selected from the group of compounds of the formulae IVa and IVb

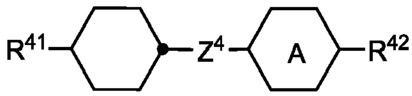

IVa

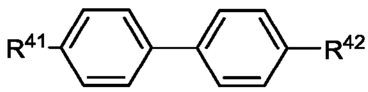

IVb

in which

$R^{41}$ and $R^{42}$ each, independently of one another, denote a straight-chain alkyl, alkoxy, alkenyl, alkoxyalkyl or alkenyloxy radical having up to 12 C atoms,

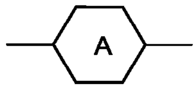

denotes

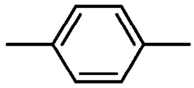 , 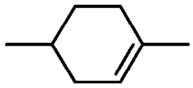 , 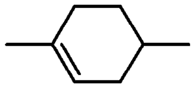 ,

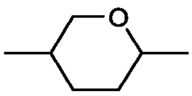 or 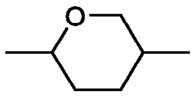 ,

and

$Z^4$ denotes a single bond, $-CH_2CH_2-$, $-CH=CH-$, $-CF_2O-$, $-OCF_2-$, $-CH_2O-$, $-OCH_2-$, $-COO-$, $-OCO-$, $-C_2F_4-$, $-C_4H_8-$, or $-CF=CF-$.

**9.** The liquid-crystal medium according to one or more of claims 1 to 8, wherein the medium comprises one or more compounds selected from the group consisting of the formulae V-1 to V-17:

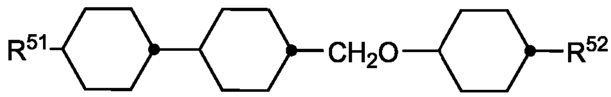

V-1

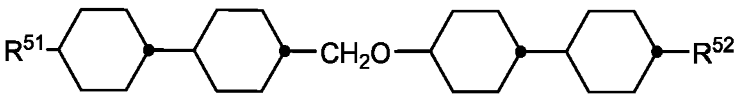

V-2

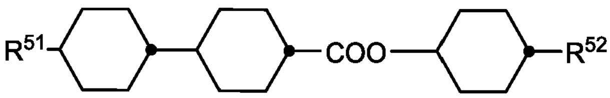

V-3

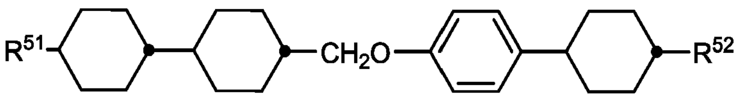

V-4

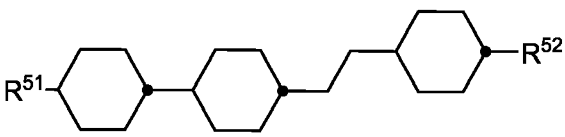

V-5

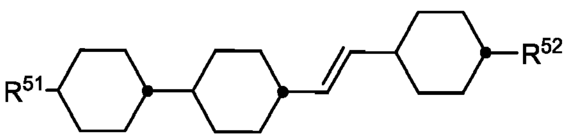

V-6

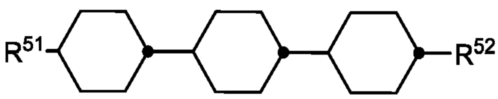

V-7

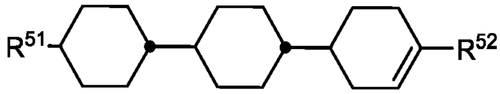

V-8

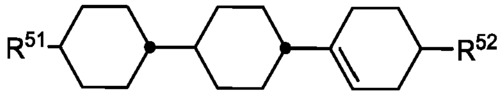

V-9

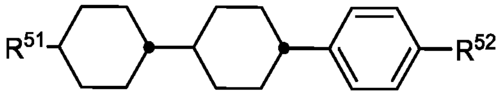

V-10

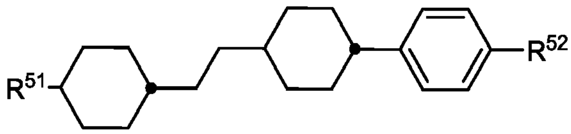

V-11

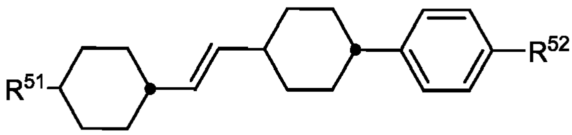

V-12

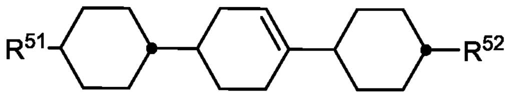

V-13

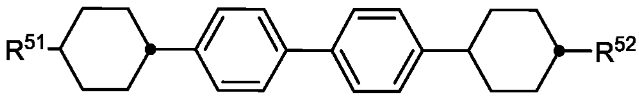

V-14

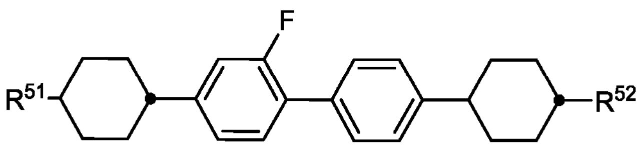

V-15

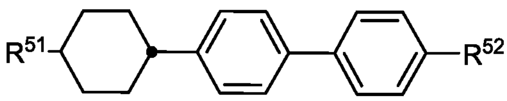

V-16

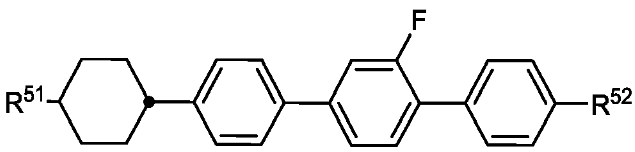

V-17

in which $R^{51}$ and $R^{52}$ have the meanings defined in claim 1.

**10.** The liquid-crystal medium according to one or more of claims 1 to 9, wherein the medium comprises one or more polymerisable compounds.

**11.** A process for the preparation of the liquid-crystalline medium according to one or more of claims 1 to 10, **characterised in that** one or more compounds of the formula I are mixed with one or more compounds of the formula II and/or III and with one or more compounds of the formulae LY-1, LY-2 and/or LY-3 as defined in claim 1.

**12.** Use of the liquid-crystalline medium according to one or more of claims 1 to 10 for electro-optical purposes.

**13.** Use according to claim 12, wherein the use is for shutter glasses, LC windows, for 3D applications, in TN, PS-TN, STN, TN-TFT, OCB, IPS, PS-IPS, FFS, HB-FFS, PS-HB-FFS, SA-HB-FFS, polymer stabilised SA-HB-FFS, positive VA and positive PS-VA displays.

**14.** A Liquid-crystal display containing a liquid-crystal medium according to one or more of claims 1 to 10.

**15.** The Liquid-crystal display according to claim 14, wherein the display is a TN, PS-TN, STN, TN-TFT, OCB, IPS, PS-IPS, FFS, HB-FFS, PS-HB-FFS, SA-HB-FFS, polymer stabilised SA-HB-FFS, positive VA or positive PS-VA display.

Europäisches Patentamt
European Patent Office
Office européen des brevets

# EUROPEAN SEARCH REPORT

Application Number
EP 25 17 2587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/048444 A1 (MERCK PATENT GMBH [DE]) 14 March 2019 (2019-03-14)<br>* claims; examples 1, 2, 38 *<br>* page 63, lines 14-19 *<br>* page 73, lines 19-25 *<br>* page 101, line 30 - page 102, line 10 *<br>----- | 1-15 | INV.<br>C09K19/30<br>C09K19/34<br>C09K19/04<br>C09K19/12 |
| A | CN 111 454 734 A (SHIJIAZHUANG CHENGZHI YONGHUA DISPLAY MATERIALS CO LTD) 28 July 2020 (2020-07-28)<br>* claims; example 7 *<br>----- | 1-15 | |

TECHNICAL FIELDS SEARCHED (IPC)

C09K

The present search report has been drawn up for all claims

1

| Place of search | Date of completion of the search | Examiner |
|---|---|---|
| The Hague | 29 August 2025 | Schoenhentz, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 17 2587

This annex lists the patent family members relating to the patent documents cited in the above-mentioned European search report. The members are as contained in the European Patent Office EDP file on
The European Patent Office is in no way liable for these particulars which are merely given for the purpose of information.

29-08-2025

| Patent document cited in search report | Publication date | Patent family member(s) | Publication date |
|---|---|---|---|
| WO 2019048444 A1 | 14-03-2019 | CN 111094512 A | 01-05-2020 |
| | | EP 3679111 A1 | 15-07-2020 |
| | | KR 20200051741 A | 13-05-2020 |
| | | TW 201920617 A | 01-06-2019 |
| | | US 2020385636 A1 | 10-12-2020 |
| | | US 2022228065 A1 | 21-07-2022 |
| | | WO 2019048444 A1 | 14-03-2019 |
| CN 111454734 A | 28-07-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9110936 A
- EP 0588568 A
- DE 19824137
- DE 19528104
- JP 7181439 A
- EP 0667555 A
- EP 0673986 A
- DE 19509410
- DE 19528106
- DE 19528107
- WO 9623851 A
- WO 9628521 A
- US 20060066793 A1


### Non-patent literature cited in the description


- **R.A. SOREF**. *Journal of Applied Physics*, 1974, vol. 45 (12), 5466-5468
- **S.H. JUNG et al.** *Jpn. J. Appl. Phys.*, 2004, vol. 43 (3), 1028
- Merck Liquid Crystals, Physical Properties of Liquid Crystals. Merck KGaA, November 1997